(19) Europäisches Patentamt
European Patent Office
Office européen des brevets

(11) EP 1 474 381 B1

(12) **EUROPÄISCHE PATENTSCHRIFT**

(45) Veröffentlichungstag und Bekanntmachung des Hinweises auf die Patenterteilung:
**28.09.2005 Patentblatt 2005/39**

(21) Anmeldenummer: **03702568.1**

(22) Anmeldetag: **30.01.2003**

(51) Int Cl.[7]: **C07C 237/22**, A01N 37/18

(86) Internationale Anmeldenummer:
**PCT/EP2003/000926**

(87) Internationale Veröffentlichungsnummer:
**WO 2003/066576 (14.08.2003 Gazette 2003/33)**

(54) **PHENYLALANINDERIVATE ALS HERBIZIDE**

PHENYLALANINE DERIVATIVES AS HERBICIDES

DERIVES DE PHENYLALANINE EN TANT QU'HERBICIDES

(84) Benannte Vertragsstaaten:
**AT BE BG CH CY CZ DE DK EE ES FI FR GB GR HU IE IT LI LU MC NL PT SE SI SK TR**

(30) Priorität: **06.02.2002 DE 10204951**

(43) Veröffentlichungstag der Anmeldung:
**10.11.2004 Patentblatt 2004/46**

(73) Patentinhaber: **BASF Aktiengesellschaft**
**67056 Ludwigshafen (DE)**

(72) Erfinder:
- **MENGES, Markus**
  **34132 Kassel (DE)**
- **PUHL, Michael**
  **68623 Lampertheim (DE)**
- **RENTZEA, Costin**
  **69123 Heidelberg (DE)**
- **HARREUS, Albrecht**
  **67063 Ludwigshafen (DE)**
- **V.D. BUSSCHE-HÜNNEFELD, Christoph**
  **34128 Kassel (DE)**
- **GYPSER, Andreas**
  **68159 Mannheim (DE)**
- **SCHWÖGLER, Anja**
  **68165 Mannheim (DE)**
- **WITSCHEL, Matthias**
  **67098 Bad Dürkheim (DE)**
- **ZAGAR, Cyrill**
  **68167 Mannheim (DE)**
- **GROSSMANN, Klaus**
  **67141 Neuhofen (DE)**
- **SCHIFFER, Helmut**
  **67483 Grossfischlingen (DE)**
- **RÖHL, Franz**
  **67105 Schifferstadt (DE)**

(56) Entgegenhaltungen:
**EP-A- 0 400 499** **EP-A- 0 854 134**
**WO-A-97/19908** **GB-A- 1 547 758**
**US-A- 4 004 008**

- **DATABASE WPI Section Ch, Week 197803 Derwent Publications Ltd., London, GB; Class C03, AN 1978-04924A XP002240619 & JP 50 135229 A (AJINOMOTO KK), 27. Oktober 1975 (1975-10-27)**
- **CHEMICAL ABSTRACTS, vol. 83, no. 5, 4. August 1975 (1975-08-04) Columbus, Ohio, US; abstract no. 43721s, MAZZOTTA, D. ET AL.: "Esters and amides of salicyloylamino acids." Seite 547; Spalte 2; XP002240618 & FARMACO, ED. SCI., Bd. 30, Nr. 5, 1975, Seiten 399-407,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 474 381 B1

## Beschreibung

Die vorliegende Erfindung betrifft Phenylalaninderivate der Formel I

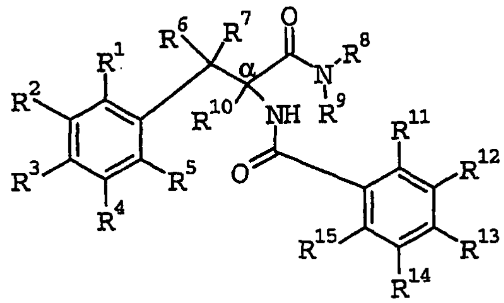

(I)

worin

$R^1$, $R^2$, $R^4$, $R^5$, $R^{13}$ und $R^{15}$ unabhängig voneinander für Wasserstoff, Halogen, Hydroxy, Mercapto, Nitro, Cyano, $C_1$-$C_6$-Alkyl, $C_2$-$C_6$-Alkenyl, $C_2$-$C_6$-Alkinyl, $C_1$-$C_6$-Alkoxy, $C_3$-$C_6$-Alkenyloxy, $C_3$-$C_6$-Alkinyloxy, $C_1$-$C_6$-Alkylthio, $C_3$-$C_6$-Alkenylthio, $C_3$-$C_6$-Alkinylthio, $C_1$-$C_6$-Alkylsulfinyl, $C_3$-$C_6$-Alkenylsulfinyl, $C_3$-$C_6$-Alkinylsulfinyl, $C_1$-$C_6$-Alkylsulfonyl, $C_3$-$C_6$-Alkenylsulfonyl, $C_3$-$C_6$-Alkinylsulfonyl, $C_1$-$C_6$-Halogenalkyl, $C_2$-$C_6$-Halogenalkenyl, $C_2$-$C_6$-Halogenalkinyl, $C_1$-$C_6$-Halogenalkoxy, $C_3$-$C_6$-Halogenalkenyloxy, $C_3$-$C_6$-Halogenalkinyloxy, $C_1$-$C_6$-Halogenalkylthio, $C_3$-$C_6$-Halogenalkenylthio, $C_3$-$C_6$-Halogenalkinylthio, $C_1$-$C_6$-Halogenalkylsulfinyl, $C_3$-$C_6$-Halogenalkenylsulfinyl, $C_3$-$C_6$-Halogenalkinylsulfinyl, $C_1$-$C_6$-Halogenalkylsulfonyl, $C_3$-$C_6$-Halogenalkenylsulfonyl, $C_3$-$C_6$-Halogenalkinylsulfonyl, Formyl, $C_1$-$C_6$-Alkylcarbonyloxy, $C_1$-$C_6$-Alkoxy-$C_1$-$C_4$-alkyl, $C_3$-$C_6$-Alkenyloxy-$C_1$-$C_4$-alkyl, $C_3$-$C_4$-Alkinyloxy-$C_1$-$C_4$-alkyl, $C_1$-$C_6$-Alkylthio-$C_1$-$C_4$-alkyl, $C_3$-$C_6$-Alkenylthio-$C_1$-$C_4$-alkyl, $C_3$-$C_4$-Alkinylthio-$C_1$-$C_4$-alkyl, $C_1$-$C_6$-Alkylcarbonyl-$C_1$-$C_4$-alkyl, $C_1$-$C_6$-Alkylcarbonyloxy-$C_1$-$C_4$-alkyl, $C_1$-$C_6$-Alkoxycarbonyl-$C_1$-$C_4$-alkyl, $C_1$-$C_6$-Alkoxy-$C_1$-$C_4$-alkoxy, $C_3$-$C_6$-Alkenyloxy-$C_1$-$C_4$-alkoxy, $C_3$-$C_4$-Alkinyloxy-$C_1$-$C_4$-alkoxy, $C_1$-$C_6$-Alkylthio-$C_1$-$C_4$-alkoxy, $C_3$-$C_6$-Alkenylthio-$C_1$-$C_4$-alkoxy, $C_3$-$C_6$-Alkinylthio-$C_1$-$C_4$-alkoxy, $C_1$-$C_6$-Alkylcarbonyl-$C_1$-$C_4$-alkoxy, $C_1$-$C_6$-Alkylcarbonyloxy-$C_1$-$C_4$-alkoxy, $C_1$-$C_6$-Alkoxycarbonyl-$C_1$-$C_4$-alkoxy oder CO-$R^{16}$;

$R^3$ für Wasserstoff, Halogen, Mercapto, $C_1$-$C_6$-Alkyl, $C_2$-$C_6$-Alkenyl, $C_2$-$C_6$-Alkinyl, $C_1$-$C_6$-Alkylthio, $C_3$-$C_6$-Alkenylthio, $C_3$-$C_6$-Alkinylthio, $C_1$-$C_6$-Alkylsulfinyl, $C_3$-$C_6$-Alkenylsulfinyl, $C_3$-$C_6$-Alkinylsulfinyl, $C_1$-$C_6$-Alkylsulfonyl, $C_3$-$C_6$-Alkenylsulfonyl, $C_3$-$C_6$-Alkinylsulfonyl, $C_1$-$C_6$-Halogenalkyl, $C_2$-$C_6$-Halogenalkenyl, $C_2$-$C_6$-Halogenalkinyl, $C_1$-$C_6$-Halogenalkylthio, $C_3$-$C_6$-Halogenalkenylthio, $C_3$-$C_6$-Halogenalkinylthio, $C_1$-$C_6$-Halogenalkylsulfinyl, $C_3$-$C_6$-Halogenalkenylsulfinyl, $C_3$-$C_6$-Halogenalkinylsulfinyl, $C_1$-$C_6$-Halogenalkylsulfonyl, $C_3$-$C_6$-Halogenalkenylsulfonyl, $C_3$-$C_6$-Halogenalkinylsulfonyl, $C_1$-$C_6$-Alkoxy-$C_1$-$C_4$-alkyl, $C_3$-$C_6$-Alkenyloxy-$C_1$-$C_4$-alkyl, $C_3$-$C_4$-Alkinyloxy-$C_1$-$C_4$-alkyl, $C_1$-$C_6$-Alkylthio-$C_1$-$C_4$-alkyl, $C_3$-$C_6$-Alkenylthio-$C_1$-$C_4$-alkyl, $C_3$-$C_6$-Alkinylthio-$C_1$-$C_4$-alkyl, $C_1$-$C_6$-Alkylcarbonyl-$C_1$-$C_4$-alkyl, $C_1$-$C_6$-Alkylcarbonyloxy-$C_1$-$C_4$-alkyl, $C_1$-$C_6$-Alkyloxycarbonyl-$C_1$-$C_4$-alkyl, oder CO-$R^{16}$;

$R^6$ für Wasserstoff, $C_2$-$C_6$-Alkenyl, $C_2$-$C_6$-Alkinyl oder $C_1$-$C_6$-Alkyl;

$R^7$ für Wasserstoff, Halogen, $C_1$-$C_6$-Alkyl, $C_2$-$C_6$-Alkenyl, $C_2$-$C_6$-Alkinyl, $C_1$-$C_6$-Halogenalkyl, $C_2$-$C_6$-Halogenalkenyl oder $C_2$-$C_6$-Halogenalkinyl;

$R^8$ für Methyl, Ethyl, $C_1$-$C_6$-Alkoxy oder Hydroxy;

$R^9$ für Wasserstoff, $C_1$-$C_6$-Alkyl;

$R^{10}$ für Wasserstoff, $C_1$-$C_6$-Alkyl, $C_1$-$C_6$-Alkoxycarbonyl oder $C_1$-$C_6$-Halogenalkoxylcarbo-

nyl;

$R^{11}$ für Halogen, Mercapto, Nitro, Cyano, $C_1$-$C_6$-Alkyl, $C_2$-$C_6$-Alkenyl, $C_2$-$C_6$-Alkinyl, $C_1$-$C_6$-Alkoxy, $C_3$-$C_6$-Alkenyloxy, $C_3$-$C_6$-Alkinyloxy, $C_1$-$C_6$-Alkylthio, $C_3$-$C_6$-Alkenylthio, $C_3$-$C_6$-Alkinylthio, $C_1$-$C_6$-Alkylsulfinyl, $C_3$-$C_6$-Alkenylsulfinyl, $C_3$-$C_6$-Alkinylsulfinyl, $C_1$-$C_6$-Alkylsulfonyl, $C_3$-$C_6$-Alkenylsulfonyl, $C_3$-$C_6$-Alkinylsulfonyl, $C_1$-$C_6$-Halogenalkyl, $C_2$-$C_6$-Halogenalkenyl, $C_2$-$C_6$-Halogenalkinyl, $C_1$-$C_6$-Halogenalkoxy, $C_3$-$C_6$-Halogenalkenyloxy, $C_3$-$C_6$-Halogenalkinyloxy, $C_1$-$C_6$-Halogenalkylthio, $C_3$-$C_6$-Halogenalkenylthio, $C_3$-$C_6$-Halogenalkinylthio, $C_1$-$C_6$-Halogenalkylsulfinyl, $C_3$-$C_6$-Halogenalkenylsulfinyl, $C_3$-$C_6$-Halogenalkinylsulfinyl, $C_1$-$C_6$-Halogenalkylsulfonyl, $C_3$-$C_6$-Halogenalkenylsulfonyl, $C_3$-$C_6$-Halogenalkinylsulfonyl, Formyl, $C_1$-$C_6$-Alkylcarbonyloxy, $C_1$-$C_6$-Alkoxy-$C_1$-$C_4$-alkyl, $C_2$-$C_6$-Alkenyloxy-$C_1$-$C_4$-alkyl, $C_3$-$C_4$-Alkinyloxy-$C_1$-$C_4$-alkyl, $C_1$-$C_6$-Alkylthio-$C_1$-$C_4$-alkyl, $C_2$-$C_6$-Alkenylthio-$C_1$-$C_4$-alkyl, $C_3$-$C_4$-Alkinylthio-$C_1$-$C_4$-alkyl, $C_1$-$C_6$-Alkylcarbonyl-$C_1$-$C_4$-alkyl, $C_1$-$C_6$-Alkylcarbonyloxy-$C_1$-$C_4$-alkyl, $C_1$-$C_6$-Alkyloxycarbonyl-$C_1$-$C_4$-alkyl, $C_1$-$C_6$-Alkoxy-$C_1$-$C_4$-alkoxy, $C_3$-$C_6$-Alkenyloxy-$C_1$-$C_4$-alkoxy, $C_3$-$C_4$-Alkinyloxy-$C_1$-$C_4$-alkoxy, $C_1$-$C_6$-Alkylthio-$C_1$-$C_4$-alkoxy, $C_3$-$C_6$-Alkenylthio-$C_1$-$C_4$-alkoxy, $C_3$-$C_6$-Alkinylthio-$C_1$-$C_4$-alkoxy, $C_1$-$C_6$-Alkylcarbonyl-$C_1$-$C_4$-alkoxy, $C_1$-$C_6$-Alkylcarbonyloxy-$C_1$-$C_4$-alkoxy, $C_1$-$C_6$-Alkyloxycarbonyl-$C_1$-$C_4$-alkoxy oder CO-$R^{16}$;

$R^{12}$ und $R^{14}$ unabhängig voneinander für Wasserstoff, Halogen, Hydroxy, Mercapto, Cyano, $C_1$-$C_6$-Alkyl, $C_2$-$C_6$-Alkenyl, $C_2$-$C_6$-Alkinyl, $C_1$-$C_6$-Alkoxy, $C_3$-$C_6$-Alkenyloxy, $C_3$-$C_6$-Alkinyloxy, $C_1$-$C_6$-Alkylthio, $C_3$-$C_6$-Alkenylthio, $C_3$-$C_6$-Alkinylthio, $C_1$-$C_6$-Alkylsulfinyl, $C_3$-$C_6$-Alkenylsulfinyl, $C_3$-$C_6$-Alkinylsulfinyl, $C_1$-$C_6$-Alkylsulfonyl, $C_3$-$C_6$-Alkenylsulfonyl, $C_3$-$C_6$-Alkinylsulfonyl, $C_1$-$C_6$-Halogenalkyl, $C_3$-$C_6$-Halogenalkenyl, $C_2$-$C_6$-Halogenalkinyl, $C_1$-$C_6$-Halogenalkoxy, $C_3$-$C_6$-Halogenalkenyloxy, $C_3$-$C_6$-Halogenalkinyloxy, $C_1$-$C_6$-Halogenalkylthio, $C_2$-$C_6$-Halogenalkenylthio, $C_3$-$C_6$-Halogenalkinyl-thio, $C_1$-$C_6$-Halogenalkylsulfinyl, $C_3$-$C_6$-Halogenalkenylsulfinyl, $C_3$-$C_6$-Halogenalkinylsulfinyl, $C_1$-$C_6$-Halogenalkylsulfonyl, $C_3$-$C_6$-Halogenalkenylsulfonyl, $C_3$-$C_6$-Halogenalkinylsulfonyl, Formyl, $C_1$-$C_6$-Alkylcarbonyloxy, $C_1$-$C_6$-Alkoxy-$C_1$-$C_4$-alkyl, $C_3$-$C_6$-Alkenyloxy-$C_1$-$C_4$-alkyl, $C_3$-$C_4$-Alkinyloxy-$C_1$-$C_4$-alkyl, $C_1$-$C_6$-Alkylthio-$C_1$-$C_4$-alkyl, $C_3$-$C_6$-Alkenylthio-$C_1$-$C_4$-alkyl, $C_3$-$C_4$-Alkinylthio-$C_1$-$C_4$-alkyl, $C_1$-$C_6$-Alkylcarbonyl-$C_1$-$C_4$-alkyl, $C_1$-$C_6$-Alkylcarbonyloxy-$C_1$-$C_4$-alkyl, $C_1$-$C_6$-Alkyloxycarbonyl-$C_1$-$C_4$-alkyl, $C_1$-$C_6$-Alkoxy-$C_1$-$C_4$-alkoxy, $C_3$-$C_6$-Alkenyloxy-$C_1$-$C_4$-alkoxy, $C_3$-$C_4$-Alkinyloxy-$C_1$-$C_4$-alkoxy, $C_1$-$C_6$-Alkylthio-$C_1$-$C_4$-alkoxy, $C_3$-$C_6$-Alkenylthio-$C_1$-$C_4$-alkoxy, $C_3$-$C_6$-Alkinylthio-$C_1$-$C_4$-alkoxy, $C_1$-$C_6$-Alkylcarbonyl-$C_1$-$C_4$-alkoxy, $C_1$-$C_6$-Alkylcarbonyloxy-$C_1$-$C_4$-alkoxy, $C_1$-$C_6$-Alkyloxycarbonyl-$C_1$-$C_4$-alkoxy oder CO-$R^{16}$; und

$R^{16}$ für Wasserstoff, Hydroxy, $C_1$-$C_6$-Alkyl, $C_2$-$C_6$-Alkenyl, $C_2$-$C_6$-Alkinyl, $C_1$-$C_6$-Halogenalkyl, $C_2$-$C_6$-Halogenalkenyl, $C_2$-$C_6$-Halogenalkinyl, $C_1$-$C_6$-Alkoxy, $C_3$-$C_6$-Alkenyloxy, $C_3$-$C_6$-Alkinyloxy, $C_1$-$C_6$-Halogenalkoxy, $C_1$-$C_6$-Alkylamino oder Di-($C_1$-$C_6$-alkyl)amino;
stehen,
oder

$R^7$ gemeinsam mit $R^{10}$ eine $C_3$-$C_4$ Alkylen- oder Alkenylenkette bildet, wobei die $C_3$-$C_4$ Alkylen- oder Alkenylenkette 1-3 Substituenten aus der Gruppe bestehend aus Halogen, Nitro oder Cyano tragen kann und/oder ein Kohlenstoffatom der $C_3$-$C_4$ Alkylenkette durch ein Heteroatom ausgewählt aus der Gruppe bestehend aus Sauerstoff, Schwefel oder Stickstoff und/oder durch eine Carbonylgruppe ersetzt sein kann.

sowie die landwirtschaftlich brauchbaren Salze der Verbindungen I.
Außerdem betrifft die Erfindung

- die Verwendung der Verbindungen I als Herbizide,
- herbizide Mittel, welche die Verbindungen I als wirksame Substanzen enthalten,

- Verfahren zur Herstellung der Verbindungen I und von herbiziden Mitteln unter Verwendung der Verbindungen I,
- Verfahren zur Bekämpfung von unerwünschtem Pflanzenwuchs von Pflanzen mit den Verbindungen I, und/oder
- zur Regulation des Wachstums von Pflanzen,
- Mittel zur Regulation des Wachstums von Pflanzen, welche die Verbindungen I als wirksame Substanzen enthalten,
- Verfahren zur Herstellung von Mitteln zur Regulation des Wachstums von Pflanzen unter Verwendung der Verbindungen I, sowie
- Verfahren zur Regulation des Wachstums von Pflanzen mit den Verbindungen I.

Aus der Literatur sind zahlreiche Aminosäurederivate bekannt, beispielsweie beschreibt WO 01/21584 Tyrosinderivate, die für die Behandlung chronischer Entzündungsreaktionen verwendet werden können.
EP-A 805 147 offenbart Aminosäurederivate, die als Calciumkanalmodulatoren eingesetzt werden können.
WO 97/19908 beschreibt Phenylalaninderivate vorzugsweise mit Fluorsubstitution im Phenylring die als Fungizide verwendet werden können.
JP-A 02088549 lehrt Derivate von Aminosäuren, die sich vorzugsweise von Prolin, Serin oder Threonin ableiten. Die beschriebenen Verbindungen haben antithrombotische Wirkung.
WO 97/05865 offenbart Aminosäurederivate vorzugsweise mit einer $SO_2$-Substitution an der Aminogruppe Gruppe als C-Proteinaseinhibitoren.
DE-A 33 326 333 offenbart zur Herstellung von Arzneimitteln geeignete Carbonsäurederivate.
Die JP 3294-253-A lehrt Aminosäurederivate als Inhibitoren von Cholecystokinin und Gastrin Rezeptoren.
Aufgabe der vorliegenden Erfindung war es, herbizid wirkende Verbindungen bereitzustellen.Die Aufgabe erstreckte sich auch auf die Bereitstellung von Verbindungen geeignet zur Regulation des Wachstums von Pflanzen.
Die Aufgabe wurde gelöst durch Bereitstellung der Eingangs definierten Phenylalaninderivate der Formel I.
Des weiteren wurde gefunden, daß die Verbindungen I auch zur Regulation des Wachstums von Pflanzen geeignet sind. Diesbezüglich wurden Mittel zur Regulation des Wachstums von Pflanzen, Verfahren zur Herstellung dieser Mittel und Verfahren zur Regulation des Wachstums von Pflanzen mit den Verbindungen I gefunden.
Diese Verbindungen liegen aufgrund des asymmetrisch substituierten $\alpha$-Kohlenstoffatoms entweder als Racemate, Enantiomerengemische, oder als reine Enantiomere vor und können, sofern sie am $\alpha$-Kohlenstoffatom chirale Substituenten tragen oder weitere Chiralitätszentren besitzen, auch als Diastereomerengemische vorliegen. Weiterhin können die Verbindungen I je nach Substitutionsmuster auch als Diastereomerengemische vorliegen. Bevorzugt werden solche Verbindungen der Formel I, worin das $\alpha$-Kohlenstoffatom S-Konfiguration aufweist. Diese Verbindungen werden im folgenden auch als S-Enantiomere bezeichnet.
Unter landwirtschaftlich brauchbaren Salzen kommen vor allem die Salze derjenigen Kationen oder die Säureadditionssalze derjenigen Säuren in Betracht, deren Kationen beziehungsweise Anionen die herbizide Wirkung der Verbindungen I nicht negativ beeinträchtigen. So kommen als Kationen insbesondere die Ionen der Alkalimetalle, vorzugsweise Natrium und Kalium, der Erdalkalimetalle, vorzugsweise Calcium, Magnesium und Barium, und der Übergangsmetalle, vorzugsweise Mangan, Kupfer, Zink und Eisen, sowie das Ammoniumion, das gewünschtenfalls ein bis vier $C_1$-$C_4$-Alkylsubstituenten und/oder einen Phenyl- oder Benzylsubstituenten tragen kann, vorzugsweise Diisopropylammonium, Tetramethylammonium, Tetrabutylammonium, Trimethylbenzylammonium, des weiteren Phosphoniumionen, Sulfoniumionen, vorzugsweise Tri($C_1$-$C_4$-alkyl)sulfonium und Sulfoxoniumionen, vorzugsweise Tri($C_1$-$C_4$-alkyl)sulfoxonium, in Betracht.
Anionen von brauchbaren Säureadditionssalzen sind in erster Linie Chlorid, Bromid, Fluorid, Hydrogensulfat, Sulfat, Dihydrogenphosphat, Hydrogenphosphat, Phosphat, Nitrat, Hydrogencarbonat, Carbonat, Hexafluorosilikat, Hexafluorophosphat, Benzoat, sowie die Anionen von $C_1$-$C_4$-Alkansäuren, vorzugsweise Formiat, Acetat, Propionat und Butyrat. Sie können durch Reaktion von I mit einer Säure des entsprechenden Anions, vorzugsweise der Chlorwasserstoffsäure, Bromwasserstoffsäure, Schwefelsäure, Phosphorsäure oder Salpetersäure, gebildet werden.
Die bei der Definition der Substituenten $R^1$ bis $R^{15}$ genannten organischen Molekülteile stellen - wie die Bedeutung Halogen - Sammelbegriffe für individuelle Aufzählungen der einzelnen Gruppenmitglieder dar. Sämtliche Kohlenstoffketten, also alle Alkyl-, Alkenyl-, Alkinyl-, Halogenalkyl-, Halogenalkenyl-, Halogenalkinyl-Teile können geradkettig oder verzweigt sein. Halogenierte Substituenten tragen vorzugsweise ein bis fünf gleiche oder verschiedene Halogenatome. Die Bedeutung Halogen steht jeweils für Fluor, Chlor, Brom oder Iod.
so stehen beispielsweise:

- Halogen für Fluor, Chlor oder Brom;

- $C_1$-$C_4$-Alkyl für Methyl, Ethyl, n-Propyl, 1-Methylethyl, n-Butyl, 1-Methylpropyl, 2-Methylpropyl oder 1,1-Dimethylethyl;

- $C_1$-$C_6$-Alkyl für einen $C_1$-$C_4$-Alkylrest wie vorstehend genannt, oder z.B. n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl oder 1-Ethyl-2-methylpropyl;

- $C_3$-$C_4$-Alkenyl für einen ein- oder zweifach ethylenisch ungesättigten Rest, der 3 bis 4 Kohlenstoffatome aufweist, wie Prop-1-en-1-yl, Allyl, 1-Methylethenyl, 1-Buten-1-yl, 1-Buten-2-yl, 1-Buten-3-yl, 2-Buten-1-yl, 1-Methyl-prop-1-en-1-yl, 2-Methyl-prop-1-en-1-yl, 1-Methyl-prop-2-en-1-yl oder 2-Methyl-prop-2-en-1-yl;

- $C_5$-$C_6$-Alkenyl für einen $C_3$-$C_4$-Alkenylrest wie vorstehend genannt, oder für einen ein- oder mehrfach ethylenisch ungesättigten Rest, der 5 bis 6 Kohlenstoffatome aufweist, wie z.B. n-Penten-1-yl, n-Penten-2-yl, n-Penten-3-yl, n-Penten-4-yl, 1-Methyl-but-1-en-1-yl, 2-Methyl-but-1-en-1-yl, 3-Methyl-but-1-en-1-yl, 1-Methyl-but-2-en-1-yl, 2-Methyl-but-2-en-1-yl, 3-Methyl-but-2-en-1-yl, 1-Methyl-but-3-en-1-yl, 2-Methyl-but-3-en-1-yl, 3-Methyl-but-3-en-1-yl, 1,1-Dimethyl-prop-2-en-1-yl, 1,2-Dimethyl-prop-1-en-1-yl, 1,2-Dimethyl-prop-2-en-1-yl, 1-Ethyl-prop-1-en-2-yl, 1-Ethyl-prop-2-en-1-yl, n-Hex-1-en-1-yl, n-Hex-2-en-1-yl, n-Hex-3-en-1-yl, n-Hex-4-en-1-yl, n-Hex-5-en-1-yl, 1-Methyl-pent-1-en-1-yl, 2-Methyl-pent-1-en-1-yl, 3-Methyl-pent-1-en-1-yl, 4-Methyl-pent-1-en-1-yl, 1-Methyl-pent-2-en-1-yl, 2-Methyl-pent-2-en-1-yl, 3-Methyl-pent-2-en-1-yl, 4-Methyl-pent-2-en-1-yl, 1-Methyl-pent-3-en-1-yl, 2-Methyl-pent-3-en-1-yl, 3-Methyl-pent-3-en-1-yl, 4-Methyl-pent-3-en-1-yl, 1-Methyl-pent-4-en-1-yl, 2-Methyl-pent-4-en-1-yl, 3-Methyl-pent-4-en-1-yl, 4-Methyl-pent-4-en-1-yl, 1,1-Dimethyl-but-2-en-1-yl, 1,1-Dimethyl-but-3-en-1-yl, 1,2-Dimethyl-but-1-en-1-yl, 1,2-Dimethyl-but-2-en-1-yl, 1,2-Dimethyl-but-3-en-1-yl, 1,3-Dimethyl-but-1-en-1-yl, 1,3-Dimethyl-but-2-en-1-yl, 1,3-Dimethyl-but-3-en-1-yl, 2,2-Dimethyl-but-3-en-1-yl, 2,3-Dimethyl-but-1-en-1-yl, 2,3-Dimethyl-but-2-en-1-yl, 2,3-Dimethyl-but-3-en-1-yl, 3,3-Dimethyl-but-1-en-1-yl, 3,3-Dimethyl-but-2-en-1-yl, 1-Ethyl-but-1-en-1-yl, 1-Ethyl-but-2-en-1-yl, 1-Ethyl-but-3-en-1-yl, 2-Ethyl-but-1-en-1-yl, 2-Ethyl-but-2-en-1-yl, 2-Ethyl-but-3-en-1-yl, 1,2,2-Trimethyl-prop-2-en-1-yl, 1-Ethyl-1-methyl-prop-2-en-1-yl, 1-Ethyl-2-methyl-prop-1-en-1-yl oder 1-Ethyl-2-methyl-prop-2-en-1-yl;

- $C_2$-$C_6$-Alkenyl einen $C_3$-$C_6$-Alenylkylrest wie vorstehend genannt, oder Ethenyl;

- $C_2$-$C_4$-Alkenyl einen $C_3$-$C_4$-Alenylkylrest wie vorstehend genannt, oder Ethenyl;

- $C_2$-$C_4$-Alkinyl für: Ethinyl, Prop-1-in-1-yl, Prop-2-in-1-yl, n-But-1-in-1-yl, n-But-1-in-3-yl, n-But-1-in-4-yl oder n-But-2-in-1-yl;

- $C_3$-$C_6$-Alkinyl für einen $C_2$-$C_4$-Alkinylrest wie vorstehend genannt oder n-Pent-1-in-1-yl, n-Pent-1-in-3-yl, n-Pent-1-in-4-yl, n-Pent-1-in-5-yl, n-Pent-2-in-1-yl, n-Pent-2-in-4-yl, n-Pent-2-in-5-yl, 3-Methyl-but-1-in-3-yl, 3-Methyl-but-1-in-4-yl, n-Hex-1-in-1-yl, n-Hex-1-in-3-yl, n-Hex-1-in-4-yl, n-Hex-1-in-5-yl, n-Hex-1-in-6-yl, n-Hex-2-in-1-yl, n-Hex-2-in-4-yl, n-Hex-2-in-5-yl, n-Hex-2-in-6-yl, n-Hex-3-in-1-yl, n-Hex-3-in-2-yl, 3-Methyl-pent-1-in-1-yl, 3-Methyl-pent-1-in-3-yl, 3-Methyl-pent-1-in-4-yl, 3-Methyl-pent-1-in-5-yl, 4-Methyl-pent-1-in-1-yl, 4-Methyl-pent-2-in-4-yl und 4-Methyl-pent-2-in-5-yl;

- $C_2$-$C_6$-Alkinyl für einen $C_3$-$C_6$-Alkinylkylrest wie vorstehend genannt, oder Ethinyl;

- $C_3$-$C_6$-Alkenyloxy für einen $C_3$-$C_6$-Alkenylrest wie vorstehend genannt, der über ein Sauerstoffatom (-O-)an das Gerüst gebunden ist;

- $C_1$-$C_4$-Alkoxy für einen $C_1$-$C_4$-Alkylrest wie vorstehend genannt, der über ein Sauerstoffatom (-O-) an das Gerüst gebunden ist;

- $C_1$-$C_6$-Alkoxy für einen $C_1$-$C_6$-Alkylrest wie vorstehend genannt, der über ein Sauerstoffatom (-O-) an das Gerüst gebunden ist;

- $C_3$-$C_6$-Alkenyloxy für einen $C_3$-$C_6$-Alkenylrest wie vorstehend genannt, der über ein Sauerstoffatom (-O-)an das Gerüst gebunden ist;

- $C_3$-$C_6$-Alkinyloxy für einen $C_3$-$C_6$-Alkinylrest wie vorstehend genannt, der über ein Sauerstoffatom (-O-) an das Gerüst gebunden ist;

- $C_1$-$C_6$-Alkylthio für einen $C_1$-$C_6$-Alkylrest wie vorstehend genannt, der über ein Schwefelatom (-S-) an das Gerüst gebunden ist;

- $C_3$-$C_6$-Alkenylthio für einen $C_3$-$C_6$-Alkenylrest wie vorstehend genannt, der über ein Schwefelatom (-S-) an das Gerüst gebunden ist;

- $C_3$-$C_6$-Alkinylthio für einen $C_3$-$C_6$-Alkinylrest wie vorstehend genannt der über ein Schwefelatom (-S-) an das Gerüst gebunden ist;

- $C_1$-$C_6$-Alkylsulfinyl für einen $C_1$-$C_6$-Alkylrest wie vorstehend genannt, der über eine Sulfinylgruppe (-SO-) an das Gerüst gebunden ist;

- $C_3$-$C_6$-Alkenylsulfinyl für einen $C_3$-$C_6$-Alkenylrest wie vorstehend genannt, der über eine Sulfinylgruppe (-SO-) an das Gerüst gebunden ist;

- $C_3$-$C_6$-Alkinylsulfinyl für einen $C_3$-$C_6$-Alkinylrest wie vorstehend genannt, der über eine Sulfinylgruppe (-SO-) an das Gerüst gebunden ist;

- $C_1$-$C_6$-Alkylsulfonyl für einen $C_1$-$C_6$-Alkylrest wie vorstehend genannt, der über eine Sulfonylgruppe (-$SO_2$-) an das Gerüst gebunden ist;

- $C_3$-$C_6$-Alkenylsulfonyl für einen $C_3$-$C_6$-Alkenylrest wie vorstehend genannt, der über eine Sulfonylgruppe (-$SO_2$-) an das Gerüst gebunden ist;

- $C_3$-$C_6$-Alkinylsulfonyl für einen $C_3$-$C_6$-Alkinylrest wie vorstehend genannt, der über eine Sulfonylgruppe (-$SO_2$-) an das Gerüst gebunden ist;

- $C_1$-$C_4$-Halogenalkyl für einen $C_1$-$C_4$-Alkylrest wie vorstehend genannt, der partiell oder vollständig durch Fluor, Chlor, Brom und/oder Iod substituiert ist, also z.B. Chlormethyl, Dichlormethyl, Trichlormethyl, Fluormethyl, Difluormethyl, Trifluormethyl, Chlorfluormethyl, Dichlorfluormethyl, Chlordifluormethyl, 2-Fluorethyl, 2-Chlorethyl, 2-Bromethyl, 2-Iodethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl, Pentafluorethyl, 2-Fluorpropyl,3-Fluorpropyl, 2,2-Difluorpropyl, 2,3-Difluorpropyl, 2-Chlorpropyl, 3-Chlorpropyl, 2,3-Dichlorpropyl, 2-Brompropyl, 3-Brompropyl, 3,3,3-Trifluorpropyl, 3,3,3-Trichlorpropyl, 2,2,3,3,3-Pentafluorpropyl, Heptafluorpropyl, 1-(Fluormethyl)-2-fluorethyl, 1-(Chlormethyl)-2-chlorethyl, 1-(Brommethyl)-2-bromethyl, 4-Fluorbutyl, 4-Chlorbutyl, 4-Brombutyl oder Nonafluorbutyl, insbesondere für Chlormethyl, Fluormethyl, Difluormethyl, Trifluormethyl, 2-Fluorethyl, 2-Chlorethyl oder 2,2,2-Trifluorethyl;

- $C_1$-$C_6$-Halogenalkyl für einen $C_1$-$C_6$-Alkylrest wie vorstehend genannt, der partiell oder vollständig durch Fluor, Chlor, Brom und/oder Iod substituiert ist, also z.B. einen der unter $C_1$-$C_4$-Halogenalkyl genannten Reste oder für 5-Fluor-1-pentyl, 5-Chlor-1-pentyl, 5-Brom-1-pentyl, 5-Iod-1-pentyl, 5,5,5-Trichlor-1-penyl, Undecafluorpentyl, 6-Fluor-1-hexyl, 6-Chlor-1-hexyl, 6-Brom-1-hexyl, 6-Iod-1-hexyl, 6,6,6-Trichlor-1-hexyl oder Dodecafluorhexyl;

- $C_2$-$C_6$-Halogenalkenyl für einen $C_2$-$C_6$-Alkenylrest wie vorstehend genannt, in dem die Wasserstoffatome teilweise oder vollständig gegen Halogenatome wie vorstehend genannt, insbesondere Fluor, Chlor und Brom, ersetzt sein können;

- $C_2$-$C_6$-Halogenalkinyl für einen $C_2$-$C_6$-Alkinylrest wie vorstehend genannt, in dem die Wasserstoffatome teilweise oder vollständig gegen Halogenatome wie vorstehend genannt, insbesondere Fluor, Chlor und Brom, ersetzt sein können;

- $C_1$-$C_6$-Halogenalkoxy für einen $C_1$-$C_6$-Halogenalkylrest wie vorstehend genannt, der über ein Sauerstoffatom (-O-) an das Gerüst gebunden ist;

- $C_3$-$C_6$-Halogenalkenyloxy für einen $C_3$-$C_6$-Alkenyloxyrest wie vorstehend genannt, der partiell oder vollständig durch Fluor, Chlor, Brom und/oder Iod substituiert ist;

- $C_3$-$C_6$-Halogenalkinyloxy für einen $C_3$-$C_6$-Alkinyloxyrest wie vorstehend genannt, der partiell oder vollständig durch Fluor, Chlor, Brom und/oder Iod substituiert ist;

- $C_1$-$C_6$-Halogenalkylthio für einen $C_1$-$C_6$-Halogenalkylrest wie vorstehend genannt, der über ein Schwefelatom (-S-) an das Gerüst gebunden ist;

- $C_3$-$C_6$-Halogenalkenylthio für einen $C_3$-$C_6$-Halogenalkenylrest wie vorstehend genannt, der über ein Schwefelatom (-S-) an das Gerüst gebunden ist;

- $C_3$-$C_6$-Halogenalkinylthio für einen $C_3$-$C_6$-Halogenalkinylrest wie vorstehend genannt der über ein Schwefelatom (-S-) an das Gerüst gebunden ist;

- $C_1$-$C_6$-Halogenalkylsulfinyl für einen $C_1$-$C_6$-Halogenalkylrest wie vorstehend genannt, der über eine Sulfinylgruppe (-SO-) an das Gerüst gebunden ist;

- $C_3$-$C_6$-Halogenalkenylsulfinyl für einen $C_3$-$C_6$-Halogenalkenylrest wie vorstehend genannt, der über eine Sulfinylgruppe (-SO-) an das Gerüst gebunden ist;

- $C_3$-$C_6$-Halogenalkinylsulfinyl für einen $C_3$-$C_6$-Halogenalkinylrest wie vorstehend genannt, der über eine Sulfinylgruppe (-SO-) an das Gerüst gebunden ist;

- $C_1$-$C_6$-Halogenalkylsulfonyl für einen $C_1$-$C_6$-Halogenalkylrest wie vorstehend genannt, der über eine Sulfonylgruppe (-$SO_2$-) an das Gerüst gebunden ist;

- $C_3$-$C_6$-Halogenalkenylsulfonyl für einen $C_3$-$C_6$-Halogenalkenylrest wie vorstehend genannt, der über eine Sulfonylgruppe (-$SO_2$-) an das Gerüst gebunden ist;

- $C_3$-$C_6$-Halogenalkinylsulfonyl für einen $C_3$-$C_6$-Halogenalkinylrest wie vorstehend genannt, der über eine Sulfonylgruppe (-$SO_2$-) an das Gerüst gebunden ist;

- $C_1$-$C_6$-Alkylcarbonyloxy für einen $C_1$-$C_6$-Alkylrest, der über eine Carbonyloxygruppe (-C(O)-O-) über den Sauerstoff an das Gerüst gebunden ist;

- $C_1$-$C_6$-Alkoxy-$C_1$-$C_4$-alkyl für einen wie vorstehend genannten $C_1$-$C_4$-Alkylrest, der durch einen wie vorstehend genannten $C_1$-$C_6$-Alkoxyrest substituiert ist z.B. Methoxymethyl, Ethoxymethyl, n-Propoxymethyl, i-Propoxymethyl, n-Butoxymethyl, (1-Methylpropoxy)methyl, (2-Methylpropoxy)methyl, t-Butoxymethyl, 2-(Methoxy)ethyl, 2-(Ethoxy)ethyl, 2-(n-Propoxy)ethyl, 2-(1-Methylethoxy)ethyl, 2-(n-Butoxy)ethyl, 2-(1-Methylpropoxy)ethyl, 2-(2-Methylpropoxy)ethyl, 2-(1,1-Dimethylethoxy) ethyl, 2-(Methoxy)propyl, 2-(Ethoxy)propyl, 2-(n-Propoxy)propyl, 2-(1-Methylethoxy)propyl, 2-(n-Butoxy)propyl, 2-(1-Methylpropoxy)propyl, 2-(2-Methylpropoxy)propyl, 2-(1,1-Dimethylethoxy)propyl, 3-(Methoxy)propyl, 3-(Ethoxy)propyl, 3-(n-Propoxy)propyl, 3-(1-Methylethoxy)propyl, 3-(n-Butoxy)propyl, 3-(1-Methylpropoxy)propyl, 3-(2-Methylpropoxy)propyl, 3-(1,1-Dimethylethoxy)propyl, 2-(Methoxy)butyl, 2-(Ethoxy)butyl, 2-(n-Propoxy)butyl, 2-(1-Methylethoxy)butyl, 2-(n-Butoxy)butyl, 2-(1-Methylpropoxy)butyl, 2-(2-Methylpropoxy)butyl, 2-(1,1-Dimethylethoxy)butyl, 3-(Methoxy)butyl, 3-(Ethoxy)butyl, 3-(n-Propoxy)butyl, 3-(1-Methylethoxy)butyl, 3-(n-Butoxy)butyl, 3-(1-Methylpropoxy)butyl, 3-(2-Methylpropoxy)butyl, 3-(1,1-Dimethylethoxy)butyl, 4-(Methoxy)butyl, 4-(Ethoxy)butyl, 4-(n-Propoxy)butyl, 4-(1-Methylethoxy)butyl, 4-(n-Butoxy)butyl, 4-(1-Methylpropoxy)butyl, 4-(2-Methylpropoxy)butyl oder 4-(1,1-Dimethylethoxy)butyl;

- $C_3$-$C_6$-Alkenyloxy-$C_1$-$C_4$-alkyl für einen wie vorstehend genannten $C_1$-$C_4$-Alkylrest, der durch einen wie vorstehend genannten $C_3$-$C_6$-Alkenyloxyrest substituiert ist;

- $C_3$-$C_4$-Alkinyloxy-$C_1$-$C_4$-alkyl für einen wie vorstehend genannten $C_1$-$C_4$-Alkylrest, der durch einen wie vorstehend genannten $C_3$-$C_4$-Alkinyloxyrest substituiert ist;

- $C_1$-$C_6$-Alkylthio-$C_1$-$C_4$-alkyl für einen wie vorstehend genannten $C_1$-$C_4$-Alkylrest, der durch einen wie vorstehend genannten $C_1$-$C_6$-Alkylthiorest substituiert ist;

- $C_3$-$C_6$-Alkenylthio-$C_1$-$C_4$-alkyl für einen wie vorstehend genannten $C_1$-$C_4$-Alkylrest, der durch einen wie vorstehend genannten $C_3$-$C_6$-Alkenylthiorest substituiert ist;

- $C_3$-$C_4$-Alkinylthio-$C_1$-$C_4$-alkyl für einen wie vorstehend genannten $C_1$-$C_4$-Alkylrest, der durch einen wie vorstehend genannten $C_3$-$C_6$-Alkinylthiorest substituiert ist;

- $C_1$-$C_6$-Alkylcarbonyl für einen $C_1$-$C_6$-Alkylrest wie vorstehend genannt, der über eine Carbonylgruppe (-CO-) an das Gerüst gebunden ist;

- $C_1$-$C_6$-Alkoxycarbonyl für einen $C_1$-$C_6$-Alkoxylrest wie vorstehend genannt, der über eine Carbonylgruppe (-CO-) an das Gerüst gebunden ist;

- $C_1$-$C_6$-Alkylcarbonyl-$C_1$-$C_4$-alkyl für einen wie vorstehend genannten $C_1$-$C_4$-Alkylrest der durch einen $C_1$-$C_6$-Alkylcarbonylrest wie vorstehend genannt, substituiert ist;

- $C_1$-$C_6$-Alkoxycarbonyl-$C_1$-$C_4$-alkyl für einen wie vorstehend genannten $C_1$-$C_4$-Alkylrest der durch einen $C_1$-$C_6$-Alkoxylcarbonylrest wie vorstehend genannt, substituiert ist;

- $C_1$-$C_6$-Alkoxy-$C_1$-$C_4$-alkyl für einen durch $C_1$-$C_6$-Alkoxy wie vorstehend genannt substituierter $C_1$-$C_4$-Alkylrest, wobei der Alkylrest wie vorstehend genannt zu definieren ist;

- $C_3$-$C_6$-Alkenyloxy-$C_1$-$C_4$-alkyl für einen durch $C_3$-$C_6$-Alkenyloxy wie vorstehend genannt substituierter $C_1$-$C_4$-Alkylrest, wobei der $C_1$-$C_4$-Alkylrest wie vorstehend genannt zu definieren ist;

- $C_3$-$C_6$-Alkinyloxy-$C_1$-$C_4$-alkyl für einen durch $C_3$-$C_6$-Alkinyloxy wie vorstehend genannt substituierter $C_1$-$C_4$-Alkylrest, wobei der $C_1$-$C_4$-Alkylrest wie vorstehend genannt zu definieren ist;

- $C_1$-$C_6$-Alkylthio-$C_1$-$C_4$-alkyl für einen durch $C_1$-$C_6$-Alkylthio wie vorstehend genannt substituierter $C_1$-$C_4$-Alkylrest, wobei der $C_1$-$C_4$-Alkylrest wie vorstehend genannt zu definieren ist;

- $C_1$-$C_6$-Alkoxy-$C_1$-$C_4$-alkoxy für einen durch $C_1$-$C_6$-Alkoxy wie vorstehend genannt substituierter $C_1$-$C_4$-Alkoxyrest, wobei der $C_1$-$C_4$-Alkoxyrest wie vorstehend genannt zu definieren ist;

- $C_3$-$C_6$-Alkenyloxy-$C_1$-$C_4$-alkoxy für einen durch $C_3$-$C_6$-Alkenyloxy wie vorstehend genannt substituierter $C_1$-$C_4$-Alkoxyrest, wobei der $C_1$-$C_4$-Alkoxyrest wie vorstehend genannt zu definieren ist;

- $C_3$-$C_4$-Alkinyloxy-$C_1$-$C_4$-alkoxy für einen durch $C_3$-$C_4$-Alkinyloxy wie vorstehend genannt substituierter $C_1$-$C_4$-Alkoxyrest, wobei der $C_1$-$C_4$-Alkoxyrest wie vorstehend genannt zu definieren ist;

- $C_1$-$C_6$-Alkylthio-$C_1$-$C_4$-alkoxy für einen durch $C_1$-$C_6$-Alkylthio wie vorstehend genannt substituierter $C_1$-$C_4$-Alkoxyrest, wobei der $C_1$-$C_4$-Alkoxyrest wie vorstehend genannt zu definieren ist;

- $C_3$-$C_6$-Alkenylthio-$C_1$-$C_4$-alkoxy für einen durch $C_3$-$C_6$-Alkenylthio wie vorstehend genannt substituierter $C_1$-$C_4$-Alkoxyrest, wobei der $C_1$-$C_4$-Alkoxyrest wie vorstehend genannt zu definieren ist;

- $C_3$-$C_6$-Alkinylthio-$C_1$-$C_4$-alkoxy für einen durch $C_3$-$C_6$-Alkinylthio wie vorstehend genannt substituierter $C_1$-$C_4$-Alkoxyrest, wobei der $C_1$-$C_4$-Alkoxyrest wie vorstehend genannt zu definieren ist;

- $C_1$-$C_6$-Alkylcarbonyl-$C_1$-$C_4$-alkoxy für einen durch $C_1$-$C_6$-Alkylcarbonyl wie vorstehend genannt substituierter $C_1$-$C_4$-Alkoxyrest, wobei der $C_1$-$C_4$-Alkoxyrest wie vorstehend genannt zu definieren ist;

- $C_1$-$C_6$-Alkylcarbonyloxy-$C_1$-$C_4$-alkoxy für einen durch $C_1$-$C_6$-Alkylcarbonyloxy wie vorstehend genannt substituierter $C_1$-$C_4$-Alkoxyrest, wobei der $C_1$-$C_4$-Alkoxyrest wie vorstehend genannt zu definieren ist;

- $C_1$-$C_6$-Alkoxycarbonyl-$C_1$-$C_4$-alkoxy für einen durch $C_1$-$C_6$-Alkoxycarbonyl wie vorstehend genannt substituierter $C_1$-$C_4$-Alkoxyrest, wobei der $C_1$-$C_4$-Alkoxyrest wie vorstehend genannt zu definieren ist;

- $C_3$-$C_4$-Alkylen für n-Propylen ($-CH_2CH_2CH_2-$) oder n-Butylen ($-CH_2CH_2CH_2CH_2-$);

- $C_3$-$C_4$-Alkenylen für eine divalente unverzweigte Ketten aus ein oder zwei CH=CH-Gruppen und/oder einer oder zwei $CH_2$ Gruppe in einer beliebiegen Position, z.B. $-CH=CHCH_2-$, $CH_2CH=CHCH_2$, $CH=CHCH_2CH_2$ oder

$CH=CH-CH=CH_2$;

- $C_1$-$C_4$-Alkylamino für $C_1$-$C_4$-Alkylreste wie vorstehend genannt, das über eine eine Aminogruppe (-NH-) an das Gerüst gebunden ist.

- $C_1$-$C_6$-Alkylamino für $C_1$-$C_6$-Alkylreste wie vorstehend genannt, das über eine eine Aminogruppe (-NH-) an das Gerüst gebunden ist.

- $C_1$-$C_4$-Dialkylamino für zwei voneinander unabhängige $C_1$-$C_4$-Alkylreste wie vorstehend genannt, welche über ein Stickstoffatom (>N-) an das Gerüst gebunden sind;

- $C_1$-$C_6$-Dialkylamino für zwei voneinander unabhängige $C_1$-$C_6$-Alkylreste wie vorstehend genannt, welche über ein Stickstoffatom (>N-) an das Gerüst gebunden sind;

Im Hinblick auf die Verwendung der substituierten Phenylalaninderivate I als Herbizide sind diejenigen Verbindungen I bevorzugt, bei denen die Substituenten folgende Bedeutungen haben, und zwar jeweils für sich allein oder in Kombination:

$R^1$ für Wasserstoff, Halogen, Nitro, Cyano, $C_1$-$C_6$-Alkyl, $C_2$-$C_6$-Alkenyl, $C_2$-$C_6$-Alkinyl, $C_1$-$C_6$-Alkoxy, $C_3$-$C_6$-Alkenyloxy, $C_3$-$C_6$-Alkinyloxy, $C_1$-$C_6$-Alkylthio, $C_3$-$C_6$-Alkenylthio, $C_3$-$C_6$-Alkinylthio, $C_1$-$C_6$-Alkylsulfinyl, $C_3$-$C_6$-Alkenylsulfinyl, $C_3$-$C_6$-Alkinylsulfinyl, $C_1$-$C_6$-Alkylsulfonyl, $C_3$-$C_6$-Alkenylsulfonyl, $C_3$-$C_6$-Alkinylsulfonyl, $C_1$-$C_6$-Halogenalkyl, $C_1$-$C_6$-Halogenalkoxy, $C_3$-$C_6$-Halogenalkenyloxy, $C_1$-$C_6$-Halogenalkylthio, $C_3$-$C_6$-Halogenalkenylthio, $C_1$-$C_6$-Halogenalkylsulfinyl, $C_3$-$C_6$-Halogenalkenylsulfinyl, $C_1$-$C_6$-Halogenalkylsulfonyl oder $C_3$-$C_6$-Halogenalkenylsulfonyl;
bevorzugt für Wasserstoff, Halogen, Cyano, $C_1$-$C_6$-Alkyl, $C_1$-$C_6$-Alkylthio, $C_1$-$C_6$-Alkylsulfinyl oder $C_1$-$C_6$-Alkylsulfonyl;
besonders bevorzugt für Wasserstoff, Cyano, Halogen oder $C_1$-$C_6$ Alkyl;

$R^2$ für Wasserstoff, Halogen, Nitro, Cyano, $C_1$-$C_6$-Alkyl, $C_2$-$C_6$-Alkinyl, $C_1$-$C_6$-Alkoxy, $C_3$-$C_6$-Alkenyloxy, $C_3$-$C_6$-Alkinyloxy, $C_1$-$C_6$-Halogenalkyl, $C_1$-$C_6$-Halogenalkoxy, $C_3$-$C_6$-Halogenalkenyloxy oder $C_3$-$C_6$-Halogenalkinyloxy;
bevorzugt für Wasserstoff, Halogen, Cyano, $C_1$-$C_6$-Halogenalkyl oder $C_1$-$C_6$-Alkyl;
besonders bevorzugt für Wasserstoff oder $C_1$-$C_6$-Halogenalkyl;
des weiteren besonders bevorzugt für Halogen oder $C_1$-$C_6$-Alkyl; ganz besonders bevorzugt für Wasserstoff, Halogen oder $C_1$-$C_6$-Alkyl;

$R^3$ für Wasserstoff, Halogen, $C_1$-$C_6$-Alkyl oder $C_1$-$C_6$-Halogenalkyl; bevorzugt für Wasserstoff oder Halogen;

$R^4$ für Wasserstoff, Halogen, Nitro, Cyano, $C_1$-$C_6$-Alkyl, $C_1$-$C_6$-Alkoxy, $C_3$-$C_6$-Alkenyloxy, $C_3$-$C_6$-Alkinyloxy, $C_1$-$C_6$-Halogenalkyl oder $C_1$-$C_6$-Halogenalkoxy;
bevorzugt für Wasserstoff, Halogen, $C_1$-$C_6$-Alkyl oder $C_1$-$C_6$-Halogenalkyl;
besonders bevorzugt für Wasserstoff oder Halogen;
ganz besonders bevorzugt für Wasserstoff;

$R^5$ für Wasserstoff, Halogen, Nitro, Cyano, $C_1$-$C_6$-Alkyl, $C_2$-$C_6$-Alkenyl, $C_2$-$C_6$-Alkinyl, $C_1$-$C_6$-Alkoxy, $C_3$-$C_6$-Alkenyloxy, $C_3$-$C_6$-Alkinyloxy, $C_1$-$C_6$-Halogenalkyl, $C_1$-$C_6$-Halogenalkoxy oder $C_3$-$C_6$-Halogenalkenyloxy bevorzugt für Wasserstoff, Halogen, $C_1$-$C_6$-Alkyl oder $C_1$-$C_6$-Halogenalkyl, besonders bevorzugt für Wasserstoff;
ebenfalls besonders bevorzugt auch für $C_1$-$C_6$-Alkyl oder Halogen;

$R^6$ für Wasserstoff oder $C_1$-$C_6$-Alkyl;

$R^7$ für Wasserstoff, Halogen, $C_1$-$C_6$-Alkyl, $C_2$-$C_6$-Alkenyl, $C_2$-$C_6$-Alkinyl oder $C_1$-$C_6$-Halogenalkyl;
bevorzugt für Wasserstoff, $C_1$-$C_6$-Alkyl, $C_2$-$C_6$-Alkinyl oder $C_2$-$C_6$-Alkenyl;
besonders bevorzugt auch für $C_1$-$C_6$-Alkyl oder Wasserstoff;

$R^8$ für Methyl oder Methoxy;

ebenfalls für Hydroxy

$R^9$ für Wasserstoff oder Methyl;
bevorzugt für Wasserstoff;
wenn $R^8$ für Hydroxy steht, vorzugsweise für Methyl;

$R^{10}$ für Wasserstoff, $C_1$-$C_6$-Alkyl, $C_1$-$C_6$-Alkoxycarbonyl, $C_1$-$C_4$-Halogenalkoxylcarbonyl;
bevorzugt für Wasserstoff;

$R^{11}$ für Halogen, Nitro, Cyano, $C_1$-$C_6$-Alkyl, $C_1$-$C_6$-Alkoxy, $C_1$-$C_6$-Alkylthio, $C_3$-$C_6$-Alkenylthio, $C_3$-$C_6$-Alkinylthio, $C_1$-$C_6$-Alkylsulfinyl, $C_3$-$C_6$-Alkenylsulfinyl, $C_3$-$C_6$-Alkinylsulfinyl, $C_1$-$C_6$-Alkylsulfonyl, $C_3$-$C_6$-Alkenylsulfonyl, $C_3$-$C_6$-Alkinylsulfonyl, $C_1$-$C_6$-Halogenalkyl, $C_1$-$C_6$-Halogenalkoxy, $C_1$-$C_6$-Halogenalkylthio, $C_3$-$C_6$-Halogenalkenylthio, $C_1$-$C_6$-Halogenalkylsulfinyl, $C_3$-$C_6$-Halogenalkenylsulfinyl, $C_1$-$C_6$-Halogenalkylsulfonyl, $C_3$-$C_6$-Halogenalkenylsulfonyl oder CO-$R^{16}$;
bevorzugt für Halogen, Cyano, $C_1$-$C_6$-Alkylthio, $C_1$-$C_6$-Alkylsulfinyl, $C_1$-$C_6$-Alkylsulfonyl, $C_1$-$C_6$-Alkyl, $C_1$-$C_6$-Halogenalkyl oder CO-$R^{16}$;
daneben bevorzugt für $C_1$-$C_6$-Halogenalkoxy, $C_1$-$C_6$-Halogenalkylthio;
besonders bevorzugt für Halogen, Cyano, $C_1$-$C_6$-Alkylthio, $C_1$-$C_6$-Alkylsulfinyl, $C_1$-$C_6$-Alkylsulfonyl, $C_1$-$C_6$-Alkyl oder $C_1$-$C_6$-Halogenalkyl;
ebenfalls besonders bevorzugt für $C_1$-$C_6$-Halogenalkoxy, $C_1$-$C_6$-Halogenalkylthio;
ganz besonders bevorzugt für Halogen oder $C_1$-$C_6$-Halogenalkyl, wobei der Halogensubstituent in $C_1$-$C_6$-Halogenalkyl vorzugsweise Fluor ist;
des weiteren ganz besonders bevorzugt für $C_1$-$C_6$-Halogenalkoxy, $C_1$-$C_6$-Halogenalkylthio, $C_1$-$C_6$-Alkylsulfonyl oder $C_1$-$C_6$-Alkylsulfinyl, wobei der Halogensubstituent in $C_1$-$C_6$-Halogenalkyl, $C_1$-$C_6$-Halogenalkylthio, $C_1$-$C_6$-Alkylsulfonyl oder $C_1$-$C_6$-Alkylsulfinyl vorzugsweise Fluor ist;

$R^{13}$ für Wasserstoff, Halogen, Nitro, Cyano, $C_1$-$C_6$-Alkyl, $C_1$-$C_6$-Al-koxy, $C_1$-$C_6$-Alkylthio, $C_3$-$C_6$-Alkenylthio, $C_3$-$C_6$-Alkinylthio, $C_1$-$C_6$-Alkylsulfinyl, $C_3$-$C_6$-Alkenylsulfinyl, $C_3$-$C_6$-Alkinylsulfinyl, $C_1$-$C_6$-Alkylsulfonyl, $C_3$-$C_6$-Alkenylsulfonyl, $C_3$-$C_6$-Alkinylsulfonyl, $C_1$-$C_6$-Halogenalkyl, $C_1$-$C_6$-Halogenalkoxy, $C_1$-$C_6$-Halogenalkylthio, $C_3$-$C_6$-Halogenalkenylthio, $C_1$-$C_6$-Halogenalkylsulfinyl, $C_3$-$C_6$-Halogenalkenylsulfinyl, $C_1$-$C_6$-Halogenalkylsulfonyl, $C_3$-$C_6$-Halogenalkenylsulfonyl oder CO-$R^{16}$;
bevorzugt für Wasserstoff, Halogen, Cyano, $C_1$-$C_6$-Alkyl, $C_1$-$C_6$-Alkoxy, $C_1$-$C_6$-Alkylthio, $C_1$-$C_6$-Alkylsulfinyl, $C_1$-$C_6$-Alkylsulfonyl, $C_1$-$C_6$-Halogenalkyl, $C_1$-$C_6$-Halogenalkoxy oder $C_1$-$C_6$-Halogenalkylthio oder CO-$R^{16}$;
besonders bevorzugt für Wasserstoff, Halogen, Cyano, $C_1$-$C_6$-Alkyl, $C_1$-$C_6$-Alkoxy, $C_1$-$C_6$-Alkylthio, $C_1$-$C_6$-Alkylsulfinyl, $C_1$-$C_6$-Alkylsulfonyl, $C_1$-$C_6$-Halogenalkyl, $C_1$-$C_6$-Halogenalkoxy oder $C_1$-$C_6$-Halogenalkylthio;
ganz besonders bevorzugt für Halogen wie beispielsweise Chlor und Fluor, $C_1$-$C_6$-Alkyl, $C_1$-$C_6$-Halogenalkyl, wobei der Halogensubstituent in $C_1$-$C_6$-Halogenalkyl vorzugsweise Fluor ist; ebenfalls ganz besonders bevorzugt für Wasserstoff;

$R^{12}$ und $R^{14}$ für Wasserstoff, Halogen, Cyano, $C_1$-$C_6$-Alkyl, $C_1$-$C_6$-Alkoxy, $C_1$-$C_6$-Alkylthio, $C_3$-$C_6$-Alkenylthio, $C_3$-$C_6$-Alkinylthio, $C_1$-$C_6$-Alkylsulfinyl, $C_3$-$C_6$-Alkenylsulfinyl, $C_3$-$C_6$-Alkinylsulfinyl, $C_1$-$C_6$-Alkylsulfonyl, $C_3$-$C_6$-Alkenylsulfonyl, $C_3$-$C_6$-Alkinylsulfonyl, $C_1$-$C_6$-Halogenalkyl, $C_1$-$C_6$-Halogenalkoxy, $C_1$-$C_6$-Halogenalkylthio, $C_3$-$C_6$-Halogenalkenylthio, $C_1$-$C_6$-Halogenalkylsulfinyl, $C_3$-$C_6$-Halogenalkenylsulfinyl, $C_1$-$C_6$-Halogenalkylsulfonyl, $C_3$-$C_6$-Halogenalkenylsulfonyl,
oder CO-$R^{16}$,
bevorzugt für Wasserstoff, Halogen, Cyano, C1-C6-Alkyl, $C_1$-$C_6$-Alkoxy, $C_1$-$C_6$-Alkylthio, $C_1$-$C_6$-Alkylsulfinyl, $C_1$-$C_6$-Alkylsulfonyl, $C_1$-$C_6$-Halogenalkyl, $C_1$-$C_6$-Halogenalkoxy, $C_1$-$C_6$-Halogenalkylthio oder CO-$R^{16}$;
besonders bevorzugt für Wasserstoff, Halogen, Cyano, C1-C6-Alkyl, $C_1$-$C_6$-Alkoxy, $C_1$-$C_6$-Alkylthio, $C_1$-$C_6$-Alkylsulfinyl, $C_1$-$C_6$-Alkylsulfonyl, $C_1$-$C_6$-Halogenalkyl, $C_1$-$C_6$-Halogenalkoxy oder $C_1$-$C_6$-Halogenalkylthio;
$R^{12}$ ganz besonders bevorzugt für Wasserstoff oder Halogen wie beispielsweise Chlor und Fluor, $C_1$-$C_6$-Alkyl, $C_1$-$C_6$-Halogenalkyl, wobei der Halogensubstituent in $C_1$-$C_6$-Halogenalkyl vorzugsweise Fluor ist;

$R^{12}$ des weiteren ganz besonders bevorzugt für Cyano, $C_1$-$C_6$-Halogenalkoxy oder $C_1$-$C_6$-Halogenal-

kylthio, wobei der Halogensubstituent in $C_1$-$C_6$-Halogenalkyl oder $C_1$-$C_6$-Halogenalkylthio vorzugsweise Fluor ist;

$R^{14}$ des weiteren ganz besonders bevorzugt für Wasserstoff;

$R^{15}$ für Wasserstoff, Halogen, $C_1$-$C_6$-Alkyl oder $C_1$-$C_6$-Halogenalkyl; bevorzugt Wasserstoff; und

$R^{16}$ für Wasserstoff, Hydroxy, $C_1$-$C_6$-Alkyl, $C_1$-$C_6$-Halogenalkyl, $C_1$-$C_6$-Alkoxy, $C_1$-$C_6$-Halogenalkoxy, $C_1$-$C_6$-Alkylamino oder Di-($C_1$-$C_6$-alkyl)amino, vorzugsweise für C1-C6-Alkyl, $C_1$-$C_6$-Halogenalkyl, $C_1$-$C_6$-Alkoxy, $C_1$-$C_6$-Halogenalkoxy, $C_1$-$C_6$-Alkylamino oder Di-($C_1$-$C_6$-alkyl)amino;
steht.

Weiterhin bevorzugt sind Phenylalaninderivate der Formel I, wobei jeweils unabhängig voneinander

$R^1$ für Wasserstoff, Halogen wie Fluor, Chlor oder Brom, Cyano, $C_1$-$C_4$-Alkyl wie Methyl, Ethyl, n-Propyl oder i-Propyl; vorzugsweise für Wasserstoff, Fluor, Methyl;
des weiteren vorzugsweise für Chlor oder Ethyl;

$R^2$ für Wasserstoff, $C_1$-$C_4$ Halogenalkyl wie Fluormethyl, Difluormethyl oder Trifluormethyl, Halogen wie Fluor, Chlor oder Brom;
ebenfalls für $C_1$-$C_4$-Alkyl wie Methyl, Ethyl, n-Propyl oder i-Propyl;
vorzugsweise für Wasserstoff oder $C_1$-$C_4$-Alkyl wie Methyl, Ethyl, n-Propyl oder i-Propyl;
daneben vorzugsweise für Fluor, Chlor oder Brom;
besonders bevorzugt für Wasserstoff, Fluor, Chlor oder Methyl;

$R^3$ für Wasserstoff, Halogen wie Fluor, Chlor oder Brom, $C_1$-$C_4$-Alkyl wie Methyl, Ethyl, n-Propyl oder i-Propyl;
vorzugsweise für Wasserstoff, Fluor, Chlor oder Brom;
des weiteren vorzugsweise für Methyl;
besonders bevorzugt für Wasserstoff, Fluor oder Chlor;

$R^4$ für Wasserstoff, $C_1$-$C_4$ Halogenalkyl wie Fluormethyl, Difluormethyl oder Trifluormethyl, Halogen wie Fluor, Chlor oder Brom, $C_1$-$C_4$-Alkyl wie Methyl, Ethyl, n-Propyl oder i-Propyl; vorzugsweise für Wasserstoff;

$R^5$ für Wasserstoff, $C_1$-$C_4$ Halogenalkyl wie Fluormethyl, Difluormethyl oder Trifluormethyl, Halogen wie Fluor, Chlor oder Brom, $C_1$-$C_4$-Alkyl wie Methyl, Ethyl, n-Propyl oder i-Propyl; vorzugsweise für Wasserstoff;
daneben vorzugsweise für Fluor, Chlor oder Methyl;
stehen.

Weiterhin bevorzugt sind Phenylalaninderivate der Formel I, wobei jeweils unabhängig voneinander

$R^7$ für Wasserstoff, Halogenalkyl wie Fluormethyl, Difluormethyl oder Trifluormethyl, Halogen wie Fluor, Chlor oder Brom, $C_1$-$C_4$-Alkyl wie Methyl, Ethyl, n-Propyl oder i-Propyl oder $C_2$-$C_4$-Alkenyl wie Ethenyl, Prop-1-en-1-yl, 1-Methylethenyl, 1-Buten-1-yl, 1-Buten-2-yl, 1-Methyl-prop-1-en-1-yl oder 2-Methyl-prop-1-en-1-yl, $C_2$-$C_4$ Alkinyl wie Ethinyl, Prop-1-in-1-yl, n-But-1-in-1-yl bevorzugt Wasserstoff, $C_1$-$C_4$-Alkyl wie Methyl oder Ethyl oder $C_2$-$C_4$-Alkenyl wie Ethenyl, Prop-1-en-1-yl, 1-Methylethenyl, 1-Buten-1-yl, 1-Buten-2-yl, 1-Methyl-prop-1-en-1-yl oder 2-Methyl-prop-1-en-1-yl;
besonders bevorzugt für Wasserstoff oder Methyl;
des weiteren besonders bevorzugt für Ethyl; und

$R^6$ für Wasserstoff
stehen.

Weiterhin bevorzugt sind Phenylalaninderivate der Formel I, wobei $R^{10}$ für Wasserstoff steht.

Weiterhin bevorzugt sind sind Phenylalaninderivate der Formel I, wobei jeweils unabhängig voneinander

$R^8$ für $C_1$-$C_6$ Alkoxy oder Hydroxy und

$R^9$ für Wasserstoff, $C_1$-$C_6$ Alkyl, bevorzugt Methyl stehen.

Ebenso bevorzugt sind Verbindungen I, worin

$R^8$ für Methyl oder Ethyl, bevorzugt Methyl und

$R^9$ für Wasserstoff oder $C_1$-$C_6$ Alkyl, bevorzugt Wasserstoff stehen.

Besonders bevorzugt sind Verbindungen I, worin

$R^8$ für $C_1$-$C_4$ Alkoxy, $C_1$-C4 Alkyl oder Hydroxy;
vorzugsweise Methoxy, Methyl oder Hydroxy;

$R^9$ für Wasserstoff, $C_1$-$C_6$ Alkyl, bevorzugt Wasserstoff oder Methyl stehen.

Hierbei steht $R^9$ vorzugsweise dann für Methyl, wenn $R^8$ für Hydroxy steht.

Ebenso bevorzugt sind Verbindungen I, worin

$R^8$ für Methyl und

$R^9$ für Wasserstoff stehen.

Weiterhin bevorzugt sind Phenylalaninderivate der Formel I, wobei jeweils unabhängig voneinander

$R^{11}$ Cyano, $C_1$-$C_4$ Alkyl wie Methyl, Ethyl, n-Propyl oder i-Propyl, $C_1$-$C_4$ Halogenalkyl wie Fluormethyl, Difluormethyl oder Trifluormethyl, Halogen wie Fluor, Chlor oder Brom, $C_1$-$C_4$ Alkylsulfonyl wie Methylsulfonyl, Ethylsulfonyl, n-Propylsulfonyl oder i-Propylsulfonyl, oder CO-$R^{16}$;
daneben für $C_1$-$C_4$-Halogenalkoxy wie Fluormethoxy, Difluormethoxy, Trifluormethoxy oder $C_1$-$C_4$-Halogenalkylthio wie Fluorthiomethyl, Difluorthiomethyl oder Trifluorthiomethyl, oder $C_1$-$C_4$ Alkylsulfinyl wie Methylsulfinyl, Ethylsulfinyl, n-Propylsulfinyl oder i-Propylsulfinyl;
bevorzugt Cyano, $C_1$-$C_4$ Alkyl wie Methyl, Ethyl, n-Propyl oder i-Propyl, $C_1$-$C_4$ Halogenalkyl wie Fluormethyl, Difluormethyl oder Trifluormethyl, Halogen wie Fluor, Chlor oder Brom, $C_1$-$C_4$ Alkylsulfonyl wie Methylsulfonyl, Ethylsulfonyl, n-Propylsulfonyl oder i-Propylsulfonyl;
ebenfalls bevorzugt für $C_1$-$C_4$-Halogenalkoxy wie Fluormethoxy, Difluormethoxy oder Trifluormethoxy oder $C_1$-$C_4$-Halogenalkylthio wie Fluorthiomethyl, Difluorthiomethyl oder Trifluorthiomethyl oder $C_1$-$C_4$ Alkylsulfinyl wie Methylsulfinyl, Ethylsulfinyl, n-Propylsulfinyl oder i-Propylsulfinyl;
besonders bevorzugt für Trifluormethyl, Chlor, Brom;
des weiteren besonders bevorzugt für Fluor, Fluormethyl, Difluormethyl, Fluormethoxy, Difluormethoxy oder Trifluormethoxy, Fluorthiomethyl, Difluorthiomethyl oder Trifluorthiomethyl Methylsulfonyl oder Methylsulfinyl;

$R^{12}$, $R^{13}$ oder $R^{14}$ für Wasserstoff, Cyano, Halogen wie Fluor, Chlor oder Brom, $C_1$-$C_4$ Halogenalkyl wie Fluormethyl, Difluormethyl oder Trifluormethyl, $C_1$-$C_4$ Alkyl wie Methyl, Ethyl, n-Propyl oder i-Propyl, $C_1$-$C_4$ Alkylsulfonyl wie Methylsulfonyl, Ethylsulfonyl, n-Propylsulfonyl oder i-Propylsulfonyl, $C_1$-$C_4$ Alkoxy wie Methoxy, Ethoxy, n-Propoxy oder i-Propoxy, Halogenmethoxy wie Fluormethoxy, Difluormethoxy, Trifluormethoxy oder CO-$R^{16}$;
des weiteren für Halogenmethylthio wie Fluorthiomethyl, Difluorthiomethyl oder Trifluorthiomethyl;
bevorzugt für Wasserstoff, Cyano, Halogen wie Fluor, Chlor oder Brom, $C_1$-$C_4$ Halogenalkyl wie Fluormethyl, Difluormethyl oder Trifluormethyl, $C_1$-$C_4$ Alkyl wie Methyl, Ethyl, n-Propyl oder i-Propyl, $C_1$-$C_4$ Alkylsulfonyl wie Methylsulfonyl, Ethylsulfonyl, n-Propylsulfonyl oder i-Propylsulfonyl, $C_1$-$C_4$ Alkoxy wie Methoxy, Ethoxy, n-Propoxy oder i-Propoxy, Halogenmethoxy wie Fluormethoxy, Difluormethoxy oder Trifluormethoxy;
des weiteren für Halogenmethylthio wie Fluorthiomethyl, Difluorthiomethyl oder Trifluorthiomethyl;
besonders bevorzugt Wasserstoff, Halogen wie Fluor oder Chlor, $C_1$-$C_4$ Halogenalkyl wie Fluormethyl, Difluormethyl, Trifluormethyl, $C_1$-$C_4$ Alkyl wie Methyl, Ethyl, n-Propyl oder i-Propyl;
ebenfalls besonders bevorzugt für Halogenmethoxy wie Fluormethoxy, Difluormethoxy oder Trifluormethoxy, Halogenmethylthio wie Fluorthiomethyl, Difluorthiomethyl oder Trifluorthiomethyl;

$R^{12}$ ganz besonders bevorzugt für Wasserstoff, Cyano, Fluor, Chlor, Methyl, Fluormethyl, Difluormethyl oder Trifluormethyl, Fluormethoxy, Difluormethoxy, Trifluormethoxy, Fluorthiomethyl, Difluorthiomethyl, Trifluorthiomethyl,

$R^{13}$ ganz besonders bevorzugt für Wasserstoff, Fluor oder Chlor;

$R^{14}$ ganz besonders bevorzugt für Wasserstoff;

$R^{15}$ für Wasserstoff; und

$R^{16}$ für $C_1$-$C_4$ Alkoxy wie Methoxy, Ethoxy, n-Propoxy, i-Propoxy, n-Butoxy oder t-Butoxy, $C_1$-$C_4$ Alkyl wie Methyl, Ethyl, n-Propyl oder i-Propyl, $C_1$-Alkyl wie Fluormethyl, Difluormethyl oder Trifluormethyl, $C_1$ Haloalkoxy wie Fluormethoxy, Difluormethoxy oder Trifluormethoxy stehen.

Bevorzugt sind auch Phenylalaninderivate der Formel I, in denen die Reste

$R^1$, $R^2$, $R^4$ und $R^5$ für Wasserstoff, Halogen, Hydroxy, Mercapto, Nitro, Cyano, $C_1$-$C_6$-Alkyl, $C_2$-$C_6$-Alkenyl, $C_2$-$C_6$-Alkinyl, $C_1$-$C_6$-Alkoxy, $C_3$-$C_6$-Alkenyloxy, $C_3$-$C_6$-Alkinyloxy, $C_1$-$C_6$-Alkylthio, $C_3$-$C_6$-Alkenylthio, $C_3$-$C_6$-Alkinylthio, $C_1$-$C_6$-Alkylsulfinyl, $C_3$-$C_6$-Alkenylsulfinyl, $C_3$-$C_6$-Alkinylsulfinyl, $C_1$-$C_6$-Alkylsulfonyl, $C_3$-$C_6$-Alkenylsulfonyl, $C_3$-$C_6$-Alkinylsulfonyl, $C_1$-$C_6$-Halogenalkyl, $C_2$-$C_6$-Halogenalkenyl, $C_2$-$C_6$-Halogenalkinyl, $C_1$-$C_6$-Halogenalkoxy, $C_3$-$C_6$-Halogenalkenyloxy, $C_3$-$C_6$-Halogenalkinyloxy, $C_1$-$C_6$-Halogenalkylthio, $C_3$-$C_6$-Halogenalkenylthio, $C_3$-$C_6$-Halogenalkinylthio, $C_1$-$C_6$-Halogenalkylsulfinyl, $C_3$-$C_6$-Halogenalkenylsulfinyl, $C_3$-$C_6$-Halogenalkinylsulfinyl, $C_1$-$C_6$-Halogenalkylsulfonyl, $C_3$-$C_6$-Halogenalkenylsulfonyl, $C_3$-$C_6$-Halogenalkinylsulfonyl, Formyl, $C_1$-$C_6$-Alkylcarbonyloxy, $C_1$-$C_6$-Alkoxy-$C_1$-$C_4$-alkyl, $C_3$-$C_6$-Alkenyloxy-$C_1$-$C_4$-alkyl, $C_3$-$C_4$-Alkinyloxy-$C_1$-$C_4$-alkyl, $C_1$-$C_6$-Alkylthio-$C_1$-$C_4$-alkyl, $C_3$-$C_6$-Alkenylthio-$C_1$-$C_4$-alkyl, $C_3$-$C_4$-Alkinylthio-$C_1$-$C_4$-alkyl, $C_1$-$C_6$-Alkylcarbonyl-$C_1$-$C_4$-alkyl, $C_1$-$C_6$-Alkylcarbonyloxy-$C_1$-$C_4$-alkyl, $C_1$-$C_6$-Alkoxycarbonyl-$C_1$-$C_4$-alkyl, $C_1$-$C_6$-Alkoxy-$C_1$-$C_4$-alkoxy, $C_3$-$C_6$-Alkenyloxy-$C_1$-$C_4$-alkoxy, $C_3$-$C_4$-Alkinyloxy-$C_1$-$C_4$-alkoxy, $C_1$-$C_6$-Alkylthio-$C_1$-$C_4$-alkoxy, $C_3$-$C_6$-Alkenylthio-$C_1$-$C_4$-alkoxy, $C_3$-$C_6$-Alkinylthio-$C_1$-$C_4$-alkoxy, $C_1$-$C_6$-Alkylcarbonyl-$C_1$-$C_4$-alkoxy, $C_1$-$C_6$-Alkylcarbonyloxy-$C_1$-$C_4$-alkoxy, $C_1$-$C_6$-Alkoxycarbonyl-$C_1$-$C_4$-alkoxy oder CO-$R^{16}$;

$R^3$ für Wasserstoff, Mercapto, $C_1$-$C_6$-Alkyl, $C_2$-$C_6$-Alkenyl, $C_2$-$C_6$-Alkinyl, $C_1$-$C_6$-Alkylthio, $C_3$-$C_6$-Alkenylthio, $C_3$-$C_6$-Alkinylthio, $C_1$-$C_6$-Alkylsulfinyl, $C_3$-$C_6$-Alkenylsulfinyl, $C_3$-$C_6$-Alkinylsulfinyl, $C_1$-$C_6$-Alkylsulfonyl, $C_3$-$C_6$-Alkenylsulfonyl, $C_3$-$C_6$-Alkinylsulfonyl, $C_1$-$C_6$-Halogenalkyl, $C_2$-$C_6$-Halogenalkenyl, $C_2$-$C_6$-Halogenalkinyl, $C_1$-$C_6$-Halogenalkylthio, $C_3$-$C_6$-Halogenalkenylthio, $C_3$-$C_6$-Halogenalkinylthio, $C_1$-$C_6$-Halogenalkylsulfinyl, $C_3$-$C_6$-Halogenalkenylsulfinyl, $C_3$-$C_6$-Halogenalkinylsulfinyl, $C_1$-$C_6$-Halogenalkylsulfonyl, $C_3$-$C_6$-Halogenalkenylsulfonyl, $C_3$-$C_6$-Halogenalkinylsulfonyl, $C_1$-$C_6$-Alkoxy-$C_1$-$C_4$-alkyl, $C_3$-$C_6$-Alkenyloxy-$C_1$-$C_4$-alkyl, $C_3$-$C_4$-Alkinyloxy-$C_1$-$C_4$-alkyl, $C_1$-$C_6$-Alkylthio-$C_1$-$C_4$-alkyl, $C_3$-$C_6$-Alkenylthio-$C_1$-$C_4$-alkyl, $C_3$-$C_6$-Alkinylthio-$C_1$-$C_4$-alkyl, $C_1$-$C_6$-Alkylcarbonyl-$C_1$-$C_4$-alkyl, $C_1$-$C_6$-Alkylcarbonyloxy-$C_1$-$C_4$-alkyl, $C_1$-$C_6$-Alkyloxycarbonyl-$C_1$-$C_4$-alkyl, oder CO-$R^{16}$;

Bevorzugt sind auch Phenylalaninderivate der Formel I, in denen die Reste $R^1$, $R^2$, $R^3$, $R^4$ und $R^5$ für Wasserstoff stehen.

Ebenfalls bevorzugt sind Phenylalaninderivate der Formel I, worin $R^1$, $R^2$ und $R^3$ jeweils unabhängig voneinander für Wasserstoff, Fluor, Chlor, Methyl oder Trifluormethyl;
$R^4$, $R^5$, $R^6$, $R^9$, $R^{10}$ und $R^{15}$ für Wasserstoff;
$R^7$ für Wasserstoff oder Methyl,
$R^8$ für Methyl,

$R^{12}$, $R^{13}$ und $R^{14}$ jeweils unabhängig voneinander Wasserstoff, Brom, Methylsulfonyl, Fluor, Chlor, Methyl, Trifluormethyl, Difluormethyl, Methoxy, Cyano bevorzugt für H, Fluor, Chlor, Methyl, Trifluormethyl, Difluormethyl, Methoxy, Cyano stehen.

Besonders bevorzugt sind auch Phenylalaninderivate der Formel I' ($R^4$, $R^6$, $R^{10}$, $R^{14}$ und $R^{15}$ stehen für Wasserstoff), worin

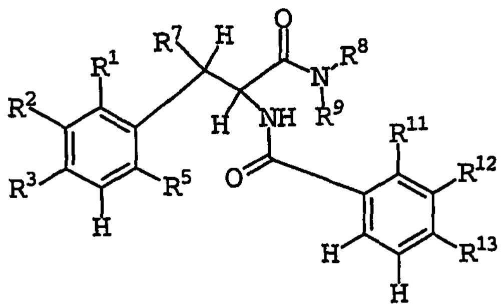

I'

| | |
|---|---|
| $R^1$, $R^2$, $R^3$ , $R^5$ | jeweils unabhängig voneinander für Wasserstoff, Fluor, Chlor, Methyl oder Ethyl; |
| $R^7$ | für Wasserstoff, Methyl oder Ethyl; |
| $R^8$ | für Methoxy, Methyl oder Hydroxy; |
| $R^9$ | für Wasserstoff;<br>für Methyl, wenn $R^8$ für Hydroxy steht; |
| $R^{11}$ | Fluor, Chlor, Halogenmethyl wie Fluormethyl, Difluormethyl, Trifluormethyl, Halogenmethoxy wie Fluormethoxy, Difluormethoxy, Trifluormethoxy, Halothioalkyl wie Fluorthiomethyl, Difluorthiomethyl, Trifluorthiomethyl, Methylsulfinyl oder Methylsulfonyl; |
| $R^{12}$ | für Wasserstoff, Cyano, Methyl, Fluor, Chlor, Halogenmethyl wie Fluormethyl, Difluormethyl, Trifluormethyl, Halogenmethoxy wie Fluormethoxy, Difluormethoxy, Trifluormethoxy, Halogenthioalkyl wie Fluorthiomethyl, Difluorthiomethyl, Trifluorthiomethyl; |
| $R^{13}$ | für Wasserstoff, Fluor, Chlor<br>stehen. |

Insbesondere sind im Hinblick auf ihre Verwendung sind auch die in den folgenden Tabellen zusammengestellten Verbindungen I' bevorzugt.

Tabelle 1:

Verbindungen der allgemeinen Formel I' ($R^4$, $R^6$, $R^{10}$, $R^{14}$ und $R^{15}$ gleich Wasserstoff) in denen $R^3$ für H, $R^5$ für H, $R^7$ für H, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 2:

Verbindungen der allgemeinen Formel I', in denen $R^3$ für H, $R^5$ für H, $R^7$ für H, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 3:

Verbindungen der allgemeinen Formel I', in denen $R^3$ für H, $R^5$ für H, $R^7$ für H, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 4:

Verbindungen der allgemeinen Formel I', in denen $R^3$ für H, $R^5$ für H, $R^7$ für H, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 5:

Verbindungen der allgemeinen Formel I', in denen $R^3$ für H, $R^5$ für H, $R^7$ für $CH_3$, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 6:

Verbindungen der allgemeinen Formel I', in denen $R^3$ für H, $R^5$ für H, $R^7$ für $CH_3$, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 7:

Verbindungen der allgemeinen Formel I', in denen $R^3$ für H, $R^5$ für H, $R^7$ für $CH_3$, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 8:

Verbindungen der allgemeinen Formel I', in denen $R^3$ für H, $R^5$ für H, $R^7$ für $CH_3$, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 9:

Verbindungen der allgemeinen Formel I', in denen $R^3$ für H, $R^5$ für H, $R^7$ für $CH_2CH_3$, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 10:

Verbindungen der allgemeinen Formel I', in denen $R^3$ für H, $R^5$ für H, $R^7$ für $CH_2CH_3$, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 11:

Verbindungen der allgemeinen Formel I', in denen $R^3$ für H, $R^5$ für H, $R^7$ für $CH_2CH_3$, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 12:

Verbindungen der allgemeinen Formel I', in denen $R^3$ für H, $R^5$ für H, $R^7$ für $CH_2CH_3$, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 13:

Verbindungen der allgemeinen Formel I', in denen $R^3$ für H, $R^5$ für F, $R^7$ für H, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 14:

Verbindungen der allgemeinen Formel I', in denen $R^3$ für H, $R^5$ für F, $R^7$ für H, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der

Tabelle A entspricht.

Tabelle 15:

Verbindungen der allgemeinen Formel I', in denen $R^3$ für H, $R^5$ für F, $R^7$ für H, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 16:

Verbindungen der allgemeinen Formel I', in denen $R^3$ für H, $R^5$ für F, $R^7$ für H, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 17:

Verbindungen der allgemeinen Formel I', in denen $R^3$ für H, $R^5$ für F, $R^7$ für $CH_3$, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 18:

Verbindungen der allgemeinen Formel I', in denen $R^3$ für H, $R^5$ für F, $R^7$ für $CH_3$, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 19:

Verbindungen der allgemeinen Formel I', in denen $R^3$ für H, $R^5$ für F, $R^7$ für $CH_3$, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 20:

Verbindungen der allgemeinen Formel I', in denen $R^3$ für H, $R^5$ für F, $R^7$ für $CH_3$, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 21:

Verbindungen der allgemeinen Formel I', in denen $R^3$ für H, $R^5$ für F, $R^7$ für $CH_2CH_3$, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 22:

Verbindungen der allgemeinen Formel I', in denen $R^3$ für H, $R^5$ für F, $R^7$ für $CH_2CH_3$, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 23:

Verbindungen der allgemeinen Formel I', in denen $R^3$ für H, $R^5$ für F, $R^7$ für $CH_2CH_3$, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 24:

Verbindungen der allgemeinen Formel I', in denen $R^3$ für H, $R^5$ für F, $R^7$ für $CH_2CH_3$, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 25:

Verbindungen der allgemeinen Formel I', in denen $R^3$ für H, $R^5$ für Cl, $R^7$ für H, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 26:

Verbindungen der allgemeinen Formel I', in denen $R^3$ für H, $R^5$ für Cl, $R^7$ für H, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 27:

Verbindungen der allgemeinen Formel I', in denen $R^3$ für H, $R^5$ für Cl, $R^7$ für H, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 28:

Verbindungen der allgemeinen Formel I', in denen $R^3$ für H, $R^5$ für Cl, $R^7$ für H, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 29:

Verbindungen der allgemeinen Formel I', in denen $R^3$ für H, $R^5$ für Cl, $R^7$ für $CH_3$, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 30:

Verbindungen der allgemeinen Formel I', in denen $R^3$ für H, $R^5$ für Cl, $R^7$ für $CH_3$, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 31:

Verbindungen der allgemeinen Formel I', in denen $R^3$ für H, $R^5$ für Cl, $R^7$ für $CH_3$, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 32:

Verbindungen der allgemeinen Formel I', in denen $R^3$ für H, $R^5$ für Cl, $R^7$ für $CH_3$, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 33:

Verbindungen der allgemeinen Formel I', in denen $R^3$ für H, $R^5$ für Cl, $R^7$ für $CH_2CH_3$, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile

der Tabelle A entspricht.

Tabelle 34:

Verbindungen der allgemeinen Formel I', in denen $R^3$ für H, $R^5$ für Cl, $R^7$ für $CH_2CH_3$, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 35:

Verbindungen der allgemeinen Formel I', in denen $R^3$ für H, $R^5$ für Cl, $R^7$ für $CH_2CH_3$, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 36:

Verbindungen der allgemeinen Formel I', in denen $R^3$ für H, $R^5$ für Cl, $R^7$ für $CH_2CH_3$, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 37:

Verbindungen der allgemeinen Formel I', in denen $R^3$ für H, $R^5$ für $CH_3$, $R^7$ für H, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 38:

Verbindungen der allgemeinen Formel I', in denen $R^3$ für H, $R^5$ für $CH_3$, $R^7$ für H, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 39:

Verbindungen der allgemeinen Formel I', in denen $R^3$ für H, $R^5$ für $CH_3$, $R^7$ für H, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 40:

Verbindungen der allgemeinen Formel I', in denen $R^3$ für H, $R^5$ für $CH_3$, $R^7$ für H, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 41:

Verbindungen der allgemeinen Formel I', in denen $R^3$ für H, $R^5$ für $CH_3$, $R^7$ für $CH_3$, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 42:

Verbindungen der allgemeinen Formel I', in denen $R^3$ für H, $R^5$ für $CH_3$, $R^7$ für $CH_3$, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 43:

Verbindungen der allgemeinen Formel I', in denen $R^3$ für H, $R^5$ für $CH_3$, $R^7$ für $CH_3$, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 44:

Verbindungen der allgemeinen Formel I', in denen $R^3$ für H, $R^5$ für $CH_3$, $R^7$ für $CH_3$, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 45:

Verbindungen der allgemeinen Formel I', in denen $R^3$ für H, $R^5$ für $CH_3$, $R^7$ für $CH_2CH_3$, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 46:

Verbindungen der allgemeinen Formel I', in denen $R^3$ für H, $R^5$ für $CH_3$, $R^7$ für $CH_2CH_3$, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 47:

Verbindungen der allgemeinen Formel I', in denen $R^3$ für H, $R^5$ für $CH_3$, $R^7$ für $CH_2CH_3$, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 48:

Verbindungen der allgemeinen Formel I', in denen $R^3$ für H, $R^5$ für $CH_3$, $R^7$ für $CH_2CH_3$, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 49:

Verbindungen der allgemeinen Formel I', in denen $R^3$ für F, $R^5$ für H, $R^7$ für H, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 50:

Verbindungen der allgemeinen Formel I', in denen $R^3$ für F, $R^5$ für H, $R^7$ für H, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 51:

Verbindungen der allgemeinen Formel I', in denen $R^3$ für F, $R^5$ für H, $R^7$ für H, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 52:

Verbindungen der allgemeinen Formel I', in denen $R^3$ für F, $R^5$ für H, $R^7$ für H, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der

Tabelle A entspricht.

Tabelle 53:

Verbindungen der allgemeinen Formel I', in denen $R^3$ für F, $R^5$ für H, $R^7$ für $CH_3$, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 54:

Verbindungen der allgemeinen Formel I', in denen $R^3$ für F, $R^5$ für H, $R^7$ für $CH_3$, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 55:

Verbindungen der allgemeinen Formel I', in denen $R^3$ für F, $R^5$ für H, $R^7$ für $CH_3$, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 56:

Verbindungen der allgemeinen Formel I', in denen $R^3$ für F, $R^5$ für H, $R^7$ für $CH_3$, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 57:

Verbindungen der allgemeinen Formel I', in denen $R^3$ für F, $R^5$ für H, $R^7$ für $CH_2CH_3$, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 58:

Verbindungen der allgemeinen Formel I', in denen $R^3$ für F, $R^5$ für H, $R^7$ für $CH_2CH_3$, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 59:

Verbindungen der allgemeinen Formel I', in denen $R^3$ für F, $R^5$ für H, $R^7$ für $CH_2CH_3$, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 60:

Verbindungen der allgemeinen Formel I', in denen $R^3$ für F, $R^5$ für H, $R^7$ für $CH_2CH_3$, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 61:

Verbindungen der allgemeinen Formel I', in denen $R^3$ für F, $R^5$ für F, $R^7$ für H, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 62:

Verbindungen der allgemeinen Formel I', in denen $R^3$ für F, $R^5$ für F, $R^7$ für H, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 63:

Verbindungen der allgemeinen Formel I', in denen $R^3$ für F, $R^5$ für F, $R^7$ für H, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 64:

Verbindungen der allgemeinen Formel I', in denen $R^3$ für F, $R^5$ für F, $R^7$ für H, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 65:

Verbindungen der allgemeinen Formel I', in denen $R^3$ für F, $R^5$ für F, $R^7$ für $CH_3$, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 66:

Verbindungen der allgemeinen Formel I', in denen $R^3$ für F, $R^5$ für F, $R^7$ für $CH_3$, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 67:

Verbindungen der allgemeinen Formel I', in denen $R^3$ für F, $R^5$ für F, $R^7$ für $CH_3$, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 68:

Verbindungen der allgemeinen Formel I', in denen $R^3$ für F, $R^5$ für F, $R^7$ für $CH_3$, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 69:

Verbindungen der allgemeinen Formel I', in denen $R^3$ für F, $R^5$ für F, $R^7$ für $CH_2CH_3$, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 70:

Verbindungen der allgemeinen Formel I', in denen $R^3$ für F, $R^5$ für F, $R^7$ für $CH_2CH_3$, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 71:

Verbindungen der allgemeinen Formel I', in denen $R^3$ für F, $R^5$ für F, $R^7$ für $CH_2CH_3$, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der

Tabelle A entspricht.

Tabelle 72:

Verbindungen der allgemeinen Formel I', in denen $R^3$ für F, $R^5$ für F, $R^7$ für $CH_2CH_3$, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 73:

Verbindungen der allgemeinen Formel I', in denen $R^3$ für F, $R^5$ für Cl, $R^7$ für H, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 74:

Verbindungen der allgemeinen Formel I', in denen $R^3$ für F, $R^5$ für Cl, $R^7$ für H, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 75:

Verbindungen der allgemeinen Formel I', in denen $R^3$ für F, $R^5$ für Cl, $R^7$ für H, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 76:

Verbindungen der allgemeinen Formel I', in denen $R^3$ für F, $R^5$ für Cl, $R^7$ für H, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 77:

Verbindungen der allgemeinen Formel I', in denen $R^3$ für F, $R^5$ für C1, $R^7$ für $CH_3$, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 78:

Verbindungen der allgemeinen Formel I', in denen $R^3$ für F, $R^5$ für Cl, $R^7$ für $CH_3$, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 79:

Verbindungen der allgemeinen Formel I', in denen $R^3$ für F, $R^5$ für Cl, $R^7$ für $CH_3$, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 80:

Verbindungen der allgemeinen Formel I', in denen $R^3$ für F, $R^5$ für Cl, $R^7$ für $CH_3$, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 81:

Verbindungen der allgemeinen Formel I', in denen $R^3$ für F, $R^5$ für Cl, $R^7$ für $CH_2CH_3$, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 82:

Verbindungen der allgemeinen Formel I', in denen $R^3$ für F, $R^5$ für Cl, $R^7$ für $CH_2CH_3$, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 83:

Verbindungen der allgemeinen Formel I', in denen $R^3$ für F, $R^5$ für Cl, $R^7$ für $CH_2CH_3$, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 84:

Verbindungen der allgemeinen Formel I', in denen $R^3$ für F, $R^5$ für Cl, $R^7$ für $CH_2CH_3$, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 85:

Verbindungen der allgemeinen Formel I', in denen $R^3$ für F, $R^5$ für $CH_3$, $R^7$ für H, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 86:

Verbindungen der allgemeinen Formel I', in denen $R^3$ für F, $R^5$ für $CH_3$, $R^7$ für H, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 87:

Verbindungen der allgemeinen Formel I', in denen $R^3$ für F, $R^5$ für $CH_3$, $R^7$ für H, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 88:

Verbindungen der allgemeinen Formel I', in denen $R^3$ für F, $R^5$ für $CH_3$, $R^7$ für H, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 89:

Verbindungen der allgemeinen Formel I', in denen $R^3$ für F, $R^5$ für $CH_3$, $R^7$ für $CH_3$, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 90:

Verbindungen der allgemeinen Formel I', in denen $R^3$ für F, $R^5$ für $CH_3$, $R^7$ für $CH_3$, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der

Tabelle A entspricht.

Tabelle 91:

Verbindungen der allgemeinen Formel I', in denen $R^3$ für F, $R^5$ für $CH_3$, $R^7$ für $CH_3$, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 92:

Verbindungen der allgemeinen Formel I', in denen $R^3$ für F, $R^5$ für $CH_3$, $R^7$ für $CH_3$, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 93:

Verbindungen der allgemeinen Formel I', in denen $R^3$ für F, $R^5$ für $CH_3$, $R^7$ für $CH_2CH_3$, $R^9$ für H und $R^8$ für $CH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 94:

Verbindungen der allgemeinen Formel I', in denen $R^3$ für F, $R^5$ für $CH_3$, $R^7$ für $CH_2CH_3$, $R^9$ für H und $R^8$ für $OCH_3$ stehen und die Kombination der Substituenten $R^1$, $R^2$, $R^{11}$, $R^{12}$ und $R^{13}$ für eine Verbindung jeweils einer Zeile der Tabelle A entspricht.

Tabelle 95:

Verbindungen der allgemeinen Formel I', in denen $R^3$ für F, $R^5$ für $CH_3$, $R^7$ für $CH_2CH_3$, $R^9$ für H und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle 96:

Verbindungen der allgemeinen Formel I', in denen $R^3$ für F, $R^5$ für $CH_3$, $R^7$ für $CH_2CH_3$, $R^9$ für $CH_3$ und $R^8$ für OH stehen und die Kombination der Substituenten $R^1$, $R^2$, $R^{11}$, $R^{12}$ und $R^{13}$ für eine Verbindung jeweils einer Zeile der Tabelle A entspricht.

Tabelle A

| Nr. | $R^1$ | $R^2$ | $R^{11}$ | $R^{12}$ | $R^{13}$ |
|---|---|---|---|---|---|
| A-1 | H | H | F | H | H |
| A-2 | F | H | F | H | H |
| A-3 | Cl | H | F | H | H |
| A-4 | $CH_3$ | H | F | H | H |
| A-5 | $CH_2CH_3$ | H | F | H | H |
| A-6 | H | H | Cl | H | H |
| A-7 | F | H | Cl | H | H |
| A-8 | Cl | H | Cl | H | H |
| A-9 | $CH_3$ | H | Cl | H | H |
| A-10 | $CH_2CH_3$ | H | Cl | H | H |
| A-11 | H | H | $CHF_2$ | H | H |
| A-12 | F | H | $CHF_2$ | H | H |

Tabelle A (fortgesetzt)

| Nr. | $R^1$ | $R^2$ | $R^{11}$ | $R^{12}$ | $R^{13}$ |
|---|---|---|---|---|---|
| A-13 | Cl | H | $CHF_2$ | H | H |
| A-14 | $CH_3$ | H | $CHF_2$ | H | H |
| A-15 | $CH_2CH_3$ | H | $CHF_2$ | H | H |
| A-16 | H | H | $CF_3$ | H | H |
| A-17 | F | H | $CF_3$ | H | H |
| A-18 | Cl | H | $CF_3$ | H | H |
| A-19 | $CH_3$ | H | $CF_3$ | H | H |
| A-20 | $CH_2CH_3$ | H | $CF_3$ | H | H |
| A-21 | H | H | $SCHF_2$ | H | H |
| A-22 | F | H | $SCHF_2$ | H | H |
| A-23 | Cl | H | $SCHF_2$ | H | H |
| A-24 | $CH_3$ | H | $SCHF_2$ | H | H |
| A-25 | $CH_2CH_3$ | H | $SCHF_2$ | H | H |
| A-26 | H | H | $SCF_3$ | H | H |
| A-27 | F | H | $SCF_3$ | H | H |
| A-28 | Cl | H | $SCF_3$ | H | H |
| A-29 | $CH_3$ | H | $SCF_3$ | H | H |
| A-30 | $CH_2CH_3$ | H | $SCF_3$ | H | H |
| A-31 | H | H | $OCHF_2$ | H | H |
| A-32 | F | H | $OCHF_2$ | H | H |
| A-33 | Cl | H | $OCHF_2$ | H | H |
| A-34 | $CH_3$ | H | $OCHF_2$ | H | H |
| A-35 | $CH_2CH_3$ | H | $OCHF_2$ | H | H |
| A-36 | H | H | $OCF_3$ | H | H |
| A-37 | F | H | $OCF_3$ | H | H |
| A-38 | Cl | H | $OCF_3$ | H | H |
| A-39 | $CH_3$ | H | $OCF_3$ | H | H |
| A-40 | $CH_2CH_3$ | H | $OCF_3$ | H | H |
| A-41 | H | H | F | F | H |
| A-42 | F | H | F | F | H |
| A-43 | Cl | H | F | F | H |
| A-44 | $CH_3$ | H | F | F | H |
| A-45 | $CH_2CH_3$ | H | F | F | H |
| A-46 | H | H | Cl | F | H |
| A-47 | F | H | Cl | F | H |
| A-48 | Cl | H | Cl | F | H |
| A-49 | $CH_3$ | H | Cl | F | H |
| A-50 | $CH_2CH_3$ | H | Cl | F | H |

Tabelle A (fortgesetzt)

| Nr. | $R^1$ | $R^2$ | $R^{11}$ | $R^{12}$ | $R^{13}$ |
|---|---|---|---|---|---|
| A-51 | H | H | $CHF_2$ | F | H |
| A-52 | F | H | $CHF_2$ | F | H |
| A-53 | Cl | H | $CHF_2$ | F | H |
| A-54 | $CH_3$ | H | $CHF_2$ | F | H |
| A-55 | $CH_2CH_3$ | H | $CHF_2$ | F | H |
| A-56 | H | H | $CF_3$ | F | H |
| A-57 | F | H | $CF_3$ | F | H |
| A-58 | Cl | H | $CF_3$ | F | H |
| A-59 | $CH_3$ | H | $CF_3$ | F | H |
| A-60 | $CH_2CH_3$ | H | $CF_3$ | F | H |
| A-61 | H | H | $SCHF_2$ | F | H |
| A-62 | F | H | $SCHF_2$ | F | H |
| A-63 | Cl | H | $SCHF_2$ | F | H |
| A-64 | $CH_3$ | H | $SCHF_2$ | F | H |
| A-65 | $CH_2CH_3$ | H | $SCHF_2$ | F | H |
| A-66 | H | H | $SCF_3$ | F | H |
| A-67 | F | H | $SCF_3$ | F | H |
| A-68 | Cl | H | $SCF_3$ | F | H |
| A-69 | $CH_3$ | H | $SCF_3$ | F | H |
| A-70 | $CH_2CH_3$ | H | $SCF_3$ | F | H |
| A-71 | H | H | $OCHF_2$ | F | H |
| A-72 | F | H | $OCHF_2$ | F | H |
| A-73 | Cl | H | $OCHF_2$ | F | H |
| A-74 | $CH_3$ | H | $OCHF_2$ | F | H |
| A-75 | $CH_2CH_3$ | H | $OCHF_2$ | F | H |
| A-76 | H | H | $OCF_3$ | F | H |
| A-77 | F | H | $OCF_3$ | F | H |
| A-78 | Cl | H | $OCF_3$ | F | H |
| A-79 | $CH_3$ | H | $OCF_3$ | F | H |
| A-80 | $CH_2CH_3$ | H | $OCF_3$ | F | H |
| A-81 | H | H | F | Cl | H |
| A-82 | F | H | F | Cl | H |
| A-83 | Cl | H | F | Cl | H |
| A-84 | $CH_3$ | H | F | Cl | H |
| A-85 | $CH_2CH_3$ | H | F | Cl | H |
| A-86 | H | H | Cl | Cl | H |
| A-87 | F | H | Cl | Cl | H |
| A-88 | Cl | H | Cl | Cl | H |

Tabelle A (fortgesetzt)

| Nr. | $R^1$ | $R^2$ | $R^{11}$ | $R^{12}$ | $R^{13}$ |
|---|---|---|---|---|---|
| A-89 | $CH_3$ | H | Cl | Cl | H |
| A-90 | $CH_2CH_3$ | H | Cl | Cl | H |
| A-91 | H | H | $CHF_2$ | Cl | H |
| A-92 | F | H | $CHF_2$ | Cl | H |
| A-93 | Cl | H | $CHF_2$ | Cl | H |
| A-94 | $CH_3$ | H | $CHF_2$ | Cl | H |
| A-95 | $CH_2CH_3$ | H | $CHF_2$ | Cl | H |
| A-96 | H | H | $CF_3$ | Cl | H |
| A-97 | F | H | $CF_3$ | Cl | H |
| A-98 | Cl | H | $CF_3$ | Cl | H |
| A-99 | $CH_3$ | H | $CF_3$ | Cl | H |
| A-100 | $CH_2CH_3$ | H | $CF_3$ | Cl | H |
| A-101 | H | H | $SCHF_2$ | Cl | H |
| A-102 | F | H | $SCHF_2$ | Cl | H |
| A-103 | Cl | H | $SCHF_2$ | Cl | H |
| A-104 | $CH_3$ | H | $SCHF_2$ | Cl | H |
| A-105 | $CH_2CH_3$ | H | $SCHF_2$ | Cl | H |
| A-106 | H | H | $SCF_3$ | Cl | H |
| A-107 | F | H | $SCF_3$ | Cl | H |
| A-108 | Cl | H | $SCF_3$ | Cl | H |
| A-109 | $CH_3$ | H | $SCF_3$ | Cl | H |
| A-110 | $CH_2CH_3$ | H | $SCF_3$ | Cl | H |
| A-111 | H | H | $OCHF_2$ | Cl | H |
| A-112 | F | H | $OCHF_2$ | Cl | H |
| A-113 | Cl | H | $OCHF_2$ | Cl | H |
| A-114 | $CH_3$ | H | $OCHF_2$ | Cl | H |
| A-115 | $CH_2CH_3$ | H | $OCHF_2$ | Cl | H |
| A-116 | H | H | $OCF_3$ | Cl | H |
| A-117 | F | H | $OCF_3$ | Cl | H |
| A-118 | Cl | H | $OCF_3$ | Cl | H |
| A-119 | $CH_3$ | H | $OCF_3$ | Cl | H |
| A-120 | $CH_2CH_3$ | H | $OCF_3$ | Cl | H |
| A-121 | H | H | F | $CHF_2$ | H |
| A-122 | F | H | F | $CHF_2$ | H |
| A-123 | Cl | H | F | $CHF_2$ | H |
| A-124 | $CH_3$ | H | F | $CHF_2$ | H |
| A-125 | $CH_2CH_3$ | H | F | $CHF_2$ | H |
| A-126 | H | H | Cl | $CHF_2$ | H |

Tabelle A (fortgesetzt)

| Nr. | $R^1$ | $R^2$ | $R^{11}$ | $R^{12}$ | $R^{13}$ |
|---|---|---|---|---|---|
| A-127 | F | H | Cl | $CHF_2$ | H |
| A-128 | Cl | H | Cl | $CHF_2$ | H |
| A-129 | $CH_3$ | H | Cl | $CHF_2$ | H |
| A-130 | $CH_2CH_3$ | H | Cl | $CHF_2$ | H |
| A-131 | H | H | CHF2 | $CHF_2$ | H |
| A-132 | F | H | CHF2 | $CHF_2$ | H |
| A-133 | Cl | H | CHF2 | $CHF_2$ | H |
| A-134 | $CH_3$ | H | CHF2 | $CHF_2$ | H |
| A-135 | $CH_2CH_3$ | H | CHF2 | $CHF_2$ | H |
| A-136 | H | H | $CF_3$ | $CHF_2$ | H |
| A-137 | F | H | $CF_3$ | $CHF_2$ | H |
| A-138 | Cl | H | $CF_3$ | $CHF_2$ | H |
| A-139 | $CH_3$ | H | $CF_3$ | $CHF_2$ | H |
| A-140 | $CH_2CH_3$ | H | $CF_3$ | $CHF_2$ | H |
| A-141 | H | H | $SCHF_2$ | $CHF_2$ | H |
| A-142 | F | H | $SCHF_2$ | $CHF_2$ | H |
| A-143 | Cl | H | $SCHF_2$ | $CHF_2$ | H |
| A-144 | $CH_3$ | H | $SCHF_2$ | $CHF_2$ | H |
| A-145 | $CH_2CH_3$ | H | $SCHF_2$ | $CHF_2$ | H |
| A-146 | H | H | $SCF_3$ | $CHF_2$ | H |
| A-147 | F | H | $SCF_3$ | $CHF_2$ | H |
| A-148 | Cl | H | $SCF_3$ | $CHF_2$ | H |
| A-149 | $CH_3$ | H | $SCF_3$ | $CHF_2$ | H |
| A-150 | $CH_2CH_3$ | H | $SCF_3$ | $CHF_2$ | H |
| A-151 | H | H | $OCHF_2$ | $CHF_2$ | H |
| A-152 | F | H | $OCHF_2$ | $CHF_2$ | H |
| A-153 | Cl | H | $OCHF_2$ | $CHF_2$ | H |
| A-154 | $CH_3$ | H | $OCHF_2$ | $CHF_2$ | H |
| A-155 | $CH_2CH_3$ | H | $OCHF_2$ | $CHF_2$ | H |
| A-156 | H | H | $OCF_3$ | $CHF_2$ | H |
| A-157 | F | H | $OCF_3$ | $CHF_2$ | H |
| A-158 | Cl | H | $OCF_3$ | $CHF_2$ | H |
| A-159 | $CH_3$ | H | $OCF_3$ | $CHF_2$ | H |
| A-160 | $CH_2CH_3$ | H | $OCF_3$ | $CHF_2$ | H |
| A-161 | H | H | F | $CF_3$ | H |
| A-162 | F | H | F | $CF_3$ | H |
| A-163 | Cl | H | F | $CF_3$ | H |
| A-164 | $CH_3$ | H | F | $CF_3$ | H |

Tabelle A (fortgesetzt)

| Nr. | $R^1$ | $R^2$ | $R^{11}$ | $R^{12}$ | $R^{13}$ |
|---|---|---|---|---|---|
| A-165 | $CH_2CH_3$ | H | F | $CF_3$ | H |
| A-166 | H | H | Cl | $CF_3$ | H |
| A-167 | F | H | Cl | $CF_3$ | H |
| A-168 | Cl | H | Cl | $CF_3$ | H |
| A-169 | $CH_3$ | H | Cl | $CF_3$ | H |
| A-170 | $CH_2CH_3$ | H | Cl | $CF_3$ | H |
| A-171 | H | H | CHF2 | $CF_3$ | H |
| A-172 | F | H | CHF2 | $CF_3$ | H |
| A-173 | Cl | H | CHF2 | $CF_3$ | H |
| A-174 | $CH_3$ | H | CHF2 | $CF_3$ | H |
| A-175 | $CH_2CH_3$ | H | CHF2 | $CF_3$ | H |
| A-176 | H | H | $CF_3$ | $CF_3$ | H |
| A-177 | F | H | $CF_3$ | $CF_3$ | H |
| A-178 | Cl | H | $CF_3$ | $CF_3$ | H |
| A-179 | $CH_3$ | H | $CF_3$ | $CF_3$ | H |
| A-180 | $CH_2CH_3$ | H | $CF_3$ | $CF_3$ | H |
| A-181 | H | H | $SCHF_2$ | $CF_3$ | H |
| A-182 | F | H | $SCHF_2$ | $CF_3$ | H |
| A-183 | Cl | H | $SCHF_2$ | $CF_3$ | H |
| A-184 | $CH_3$ | H | $SCHF_2$ | $CF_3$ | H |
| A-185 | $CH_2CH_3$ | H | $SCHF_2$ | $CF_3$ | H |
| A-186 | H | H | $SCF_3$ | $CF_3$ | H |
| A-187 | F | H | $SCF_3$ | $CF_3$ | H |
| A-188 | Cl | H | $SCF_3$ | $CF_3$ | H |
| A-189 | $CH_3$ | H | $SCF_3$ | $CF_3$ | H |
| A-190 | $CH_2CH_3$ | H | $SCF_3$ | $CF_3$ | H |
| A-191 | H | H | $OCHF_2$ | $CF_3$ | H |
| A-192 | F | H | $OCHF_2$ | $CF_3$ | H |
| A-193 | Cl | H | $OCHF_2$ | $CF_3$ | H |
| A-194 | $CH_3$ | H | $OCHF_2$ | $CF_3$ | H |
| A-195 | $CH_2CH_3$ | H | $OCHF_2$ | $CF_3$ | H |
| A-196 | H | H | $OCF_3$ | $CF_3$ | H |
| A-197 | F | H | $OCF_3$ | $CF_3$ | H |
| A-198 | Cl | H | $OCF_3$ | $CF_3$ | H |
| A-199 | $CH_3$ | H | $OCF_3$ | $CF_3$ | H |
| A-200 | $CH_2CH_3$ | H | $OCF_3$ | $CF_3$ | H |
| A-201 | H | H | F | H | F |
| A-202 | F | H | F | H | F |

Tabelle A (fortgesetzt)

| Nr. | $R^1$ | $R^2$ | $R^{11}$ | $R^{12}$ | $R^{13}$ |
|---|---|---|---|---|---|
| A-203 | Cl | H | F | H | F |
| A-204 | $CH_3$ | H | F | H | F |
| A-205 | $CH_2CH_3$ | H | F | H | F |
| A-206 | H | H | Cl | H | F |
| A-207 | F | H | Cl | H | F |
| A-208 | Cl | H | Cl | H | F |
| A-209 | $CH_3$ | H | Cl | H | F |
| A-210 | $CH_2CH_3$ | H | Cl | H | F |
| A-211 | H | H | CHF2 | H | F |
| A-212 | F | H | CHF2 | H | F |
| A-213 | Cl | H | CHF2 | H | F |
| A-214 | $CH_3$ | H | CHF2 | H | F |
| A-215 | $CH_2CH_3$ | H | CHF2 | H | F |
| A-216 | H | H | $CF_3$ | H | F |
| A-217 | F | H | $CF_3$ | H | F |
| A-218 | Cl | H | $CF_3$ | H | F |
| A-219 | $CH_3$ | H | $CF_3$ | H | F |
| A-220 | $CH_2CH_3$ | H | $CF_3$ | H | F |
| A-221 | H | H | $SCHF_2$ | H | F |
| A-222 | F | H | $SCHF_2$ | H | F |
| A-223 | Cl | H | $SCHF_2$ | H | F |
| A-224 | $CH_3$ | H | $SCHF_2$ | H | F |
| A-225 | $CH_2CH_3$ | H | $SCHF_2$ | H | F |
| A-226 | H | H | $SCF_3$ | H | F |
| A-227 | F | H | $SCF_3$ | H | F |
| A-228 | Cl | H | $SCF_3$ | H | F |
| A-229 | $CH_3$ | H | $SCF_3$ | H | F |
| A-230 | $CH_2CH_3$ | H | $SCF_3$ | H | F |
| A-231 | H | H | $OCHF_2$ | H | F |
| A-232 | F | H | $OCHF_2$ | H | F |
| A-233 | Cl | H | $OCHF_2$ | H | F |
| A-234 | $CH_3$ | H | $OCHF_2$ | H | F |
| A-235 | $CH_2CH_3$ | H | $OCHF_2$ | H | F |
| A-236 | H | H | $OCF_3$ | H | F |
| A-237 | F | H | $OCF_3$ | H | F |
| A-238 | Cl | H | $OCF_3$ | H | F |
| A-239 | $CH_3$ | H | $OCF_3$ | H | F |
| A-240 | $CH_2CH_3$ | H | $OCF_3$ | H | F |

Tabelle A (fortgesetzt)

| Nr. | $R^1$ | $R^2$ | $R^{11}$ | $R^{12}$ | $R^{13}$ |
|---|---|---|---|---|---|
| A-241 | H | H | F | F | F |
| A-242 | F | H | F | F | F |
| A-243 | Cl | H | F | F | F |
| A-244 | $CH_3$ | H | F | F | F |
| A-245 | $CH_2CH_3$ | H | F | F | F |
| A-246 | H | H | Cl | F | F |
| A-247 | F | H | Cl | F | F |
| A-248 | Cl | H | Cl | F | F |
| A-249 | $CH_3$ | H | Cl | F | F |
| A-250 | $CH_2CH_3$ | H | Cl | F | F |
| A-251 | H | H | CHF2 | F | F |
| A-252 | F | H | CHF2 | F | F |
| A-253 | Cl | H | CHF2 | F | F |
| A-254 | $CH_3$ | H | CHF2 | F | F |
| A-255 | $CH_2CH_3$ | H | CHF2 | F | F |
| A-256 | H | H | $CF_3$ | F | F |
| A-257 | F | H | $CF_3$ | F | F |
| A-258 | Cl | H | $CF_3$ | F | F |
| A-259 | $CH_3$ | H | $CF_3$ | F | F |
| A-260 | $CH_2CH_3$ | H | $CF_3$ | F | F |
| A-261 | H | H | $SCHF_2$ | F | F |
| A-262 | F | H | $SCHF_2$ | F | F |
| A-263 | Cl | H | $SCHF_2$ | F | F |
| A-264 | $CH_3$ | H | $SCHF_2$ | F | F |
| A-265 | $CH_2CH_3$ | H | $SCHF_2$ | F | F |
| A-266 | H | H | $SCF_3$ | F | F |
| A-267 | F | H | $SCF_3$ | F | F |
| A-268 | Cl | H | $SCF_3$ | F | F |
| A-269 | $CH_3$ | H | $SCF_3$ | F | F |
| A-270 | $CH_2CH_3$ | H | $SCF_3$ | F | F |
| A-271 | H | H | $OCHF_2$ | F | F |
| A-272 | F | H | $OCHF_2$ | F | F |
| A-273 | Cl | H | $OCHF_2$ | F | F |
| A-274 | $CH_3$ | H | $OCHF_2$ | F | F |
| A-275 | $CH_2CH_3$ | H | $OCHF_2$ | F | F |
| A-276 | H | H | $OCF_3$ | F | F |
| A-277 | F | H | $OCF_3$ | F | F |
| A-278 | Cl | H | $OCF_3$ | F | F |

Tabelle A (fortgesetzt)

| Nr. | $R^1$ | $R^2$ | $R^{11}$ | $R^{12}$ | $R^{13}$ |
|---|---|---|---|---|---|
| A-279 | $CH_3$ | H | $OCF_3$ | F | F |
| A-280 | $CH_2CH_3$ | H | $OCF_3$ | F | F |
| A-281 | H | H | F | Cl | F |
| A-282 | F | H | F | Cl | F |
| A-283 | Cl | H | F | Cl | F |
| A-284 | $CH_3$ | H | F | Cl | F |
| A-285 | $CH_2CH_3$ | H | F | Cl | F |
| A-286 | H | H | Cl | Cl | F |
| A-287 | F | H | Cl | Cl | F |
| A-288 | Cl | H | Cl | Cl | F |
| A-289 | $CH_3$ | H | Cl | Cl | F |
| A-290 | $CH_2CH_3$ | H | Cl | Cl | F |
| A-291 | H | H | CHF2 | Cl | F |
| A-292 | F | H | CHF2 | Cl | F |
| A-293 | Cl | H | CHF2 | Cl | F |
| A-294 | $CH_3$ | H | CHF2 | Cl | F |
| A-295 | $CH_2CH_3$ | H | CHF2 | Cl | F |
| A-296 | H | H | $CF_3$ | Cl | F |
| A-297 | F | H | $CF_3$ | Cl | F |
| A-298 | Cl | H | $CF_3$ | Cl | F |
| A-299 | $CH_3$ | H | $CF_3$ | Cl | F |
| A-300 | $CH_2CH_3$ | H | $CF_3$ | Cl | F |
| A-301 | H | H | $SCHF_2$ | Cl | F |
| A-302 | F | H | $SCHF_2$ | Cl | F |
| A-303 | Cl | H | $SCHF_2$ | Cl | F |
| A-304 | $CH_3$ | H | $SCHF_2$ | Cl | F |
| A-305 | $CH_2CH_3$ | H | $SCHF_2$ | Cl | F |
| A-306 | H | H | $SCF_3$ | Cl | F |
| A-307 | F | H | $SCF_3$ | Cl | F |
| A-308 | Cl | H | $SCF_3$ | Cl | F |
| A-309 | $CH_3$ | H | $SCF_3$ | Cl | F |
| A-310 | $CH_2CH_3$ | H | $SCF_3$ | Cl | F |
| A-311 | H | H | $OCHF_2$ | Cl | F |
| A-312 | F | H | $OCHF_2$ | Cl | F |
| A-313 | Cl | H | $OCHF_2$ | Cl | F |
| A-314 | $CH_3$ | H | $OCHF_2$ | Cl | F |
| A-315 | $CH_2CH_3$ | H | $OCHF_2$ | Cl | F |
| A-316 | H | H | $OCF_3$ | Cl | F |

Tabelle A (fortgesetzt)

| Nr. | $R^1$ | $R^2$ | $R^{11}$ | $R^{12}$ | $R^{13}$ |
|---|---|---|---|---|---|
| A-317 | F | H | $OCF_3$ | Cl | F |
| A-318 | Cl | H | $OCF_3$ | Cl | F |
| A-319 | $CH_3$ | H | $OCF_3$ | Cl | F |
| A-320 | $CH_2CH_3$ | H | $OCF_3$ | Cl | F |
| A-321 | H | H | F | $CHF_2$ | F |
| A-322 | F | H | F | $CHF_2$ | F |
| A-323 | Cl | H | F | $CHF_2$ | F |
| A-324 | $CH_3$ | H | F | $CHF_2$ | F |
| A-325 | $CH_2CH_3$ | H | F | $CHF_2$ | F |
| A-326 | H | H | Cl | $CHF_2$ | F |
| A-327 | F | H | Cl | $CHF_2$ | F |
| A-328 | Cl | H | Cl | $CHF_2$ | F |
| A-329 | $CH_3$ | H | Cl | $CHF_2$ | F |
| A-330 | $CH_2CH_3$ | H | Cl | $CHF_2$ | F |
| A-331 | H | H | CHF2 | $CHF_2$ | F |
| A-332 | F | H | CHF2 | $CHF_2$ | F |
| A-333 | Cl | H | CHF2 | $CHF_2$ | F |
| A-334 | $CH_3$ | H | CHF2 | $CHF_2$ | F |
| A-335 | $CH_2CH_3$ | H | CHF2 | $CHF_2$ | F |
| A-336 | H | H | $CF_3$ | $CHF_2$ | F |
| A-337 | F | H | $CF_3$ | $CHF_2$ | F |
| A-338 | Cl | H | $CF_3$ | $CHF_2$ | F |
| A-339 | $CH_3$ | H | $CF_3$ | $CHF_2$ | F |
| A-340 | $CH_2CH_3$ | H | $CF_3$ | $CHF_2$ | F |
| A-341 | H | H | $SCHF_2$ | $CHF_2$ | F |
| A-342 | F | H | $SCHF_2$ | $CHF_2$ | F |
| A-343 | Cl | H | $SCHF_2$ | $CHF_2$ | F |
| A-344 | $CH_3$ | H | $SCHF_2$ | $CHF_2$ | F |
| A-345 | $CH_2CH_3$ | H | $SCHF_2$ | $CHF_2$ | F |
| A-346 | H | H | $SCF_3$ | $CHF_2$ | F |
| A-347 | F | H | $SCF_3$ | $CHF_2$ | F |
| A-348 | Cl | H | $SCF_3$ | $CHF_2$ | F |
| A-349 | $CH_3$ | H | $SCF_3$ | $CHF_2$ | F |
| A-350 | $CH_2CH_3$ | H | $SCF_3$ | $CHF_2$ | F |
| A-351 | H | H | $OCHF_2$ | $CHF_2$ | F |
| A-352 | F | H | $OCHF_2$ | $CHF_2$ | F |
| A-353 | Cl | H | $OCHF_2$ | $CHF_2$ | F |
| A-354 | $CH_3$ | H | $OCHF_2$ | $CHF_2$ | F |

Tabelle A (fortgesetzt)

| Nr. | $R^1$ | $R^2$ | $R^{11}$ | $R^{12}$ | $R^{13}$ |
|---|---|---|---|---|---|
| A-355 | $CH_2CH_3$ | H | $OCHF_2$ | $CHF_2$ | F |
| A-356 | H | H | $OCF_3$ | $CHF_2$ | F |
| A-357 | F | H | $OCF_3$ | $CHF_2$ | F |
| A-358 | Cl | H | $OCF_3$ | $CHF_2$ | F |
| A-359 | $CH_3$ | H | $OCF_3$ | $CHF_2$ | F |
| A-360 | $CH_2CH_3$ | H | $OCF_3$ | $CHF_2$ | F |
| A-361 | H | H | F | $CF_3$ | F |
| A-362 | F | H | F | $CF_3$ | F |
| A-363 | Cl | H | F | $CF_3$ | F |
| A-364 | $CH_3$ | H | F | $CF_3$ | F |
| A-365 | $CH_2CH_3$ | H | F | $CF_3$ | F |
| A-366 | H | H | Cl | $CF_3$ | F |
| A-367 | F | H | Cl | $CF_3$ | F |
| A-368 | Cl | H | Cl | $CF_3$ | F |
| A-369 | $CH_3$ | H | Cl | $CF_3$ | F |
| A-370 | $CH_2CH_3$ | H | Cl | $CF_3$ | F |
| A-371 | H | H | CHF2 | $CF_3$ | F |
| A-372 | F | H | CHF2 | $CF_3$ | F |
| A-373 | Cl | H | CHF2 | $CF_3$ | F |
| A-374 | $CH_3$ | H | CHF2 | $CF_3$ | F |
| A-375 | $CH_2CH_3$ | H | CHF2 | $CF_3$ | F |
| A-376 | H | H | $CF_3$ | $CF_3$ | F |
| A-377 | F | H | $CF_3$ | $CF_3$ | F |
| A-378 | Cl | H | $CF_3$ | $CF_3$ | F |
| A-379 | $CH_3$ | H | $CF_3$ | $CF_3$ | F |
| A-380 | $CH_2CH_3$ | H | $CF_3$ | $CF_3$ | F |
| A-381 | H | H | $SCHF_2$ | $CF_3$ | F |
| A-382 | F | H | $SCHF_2$ | $CF_3$ | F |
| A-383 | Cl | H | $SCHF_2$ | $CF_3$ | F |
| A-384 | $CH_3$ | H | $SCHF_2$ | $CF_3$ | F |
| A-385 | $CH_2CH_3$ | H | $SCHF_2$ | $CF_3$ | F |
| A-386 | H | H | $SCF_3$ | $CF_3$ | F |
| A-387 | F | H | $SCF_3$ | $CF_3$ | F |
| A-388 | Cl | H | $SCF_3$ | $CF_3$ | F |
| A-389 | $CH_3$ | H | $SCF_3$ | $CF_3$ | F |
| A-390 | $CH_2CH_3$ | H | $SCF_3$ | $CF_3$ | F |
| A-391 | H | H | $OCHF_2$ | $CF_3$ | F |
| A-392 | F | H | $OCHF_2$ | $CF_3$ | F |

Tabelle A (fortgesetzt)

| Nr. | $R^1$ | $R^2$ | $R^{11}$ | $R^{12}$ | $R^{13}$ |
|---|---|---|---|---|---|
| A-393 | Cl | H | $OCHF_2$ | $CF_3$ | F |
| A-394 | $CH_3$ | H | $OCHF_2$ | $CF_3$ | F |
| A-395 | $CH_2CH_3$ | H | $OCHF_2$ | $CF_3$ | F |
| A-396 | H | H | $OCF_3$ | $CF_3$ | F |
| A-397 | F | H | $OCF_3$ | $CF_3$ | F |
| A-398 | Cl | H | $OCF_3$ | $CF_3$ | F |
| A-399 | $CH_3$ | H | $OCF_3$ | $CF_3$ | F |
| A-400 | $CH_2CH_3$ | H | $OCF_3$ | $CF_3$ | F |
| A-401 | H | H | F | H | Cl |
| A-402 | F | H | F | H | Cl |
| A-403 | Cl | H | F | H | Cl |
| A-404 | $CH_3$ | H | F | H | Cl |
| A-405 | $CH_2CH_3$ | H | F | H | Cl |
| A-406 | H | H | Cl | H | Cl |
| A-407 | F | H | Cl | H | Cl |
| A-408 | Cl | H | Cl | H | Cl |
| A-409 | $CH_3$ | H | Cl | H | Cl |
| A-410 | $CH_2CH_3$ | H | Cl | H | Cl |
| A-411 | H | H | CHF2 | H | Cl |
| A-412 | F | H | CHF2 | H | Cl |
| A-413 | Cl | H | CHF2 | H | Cl |
| A-414 | $CH_3$ | H | CHF2 | H | Cl |
| A-415 | $CH_2CH_3$ | H | CHF2 | H | Cl |
| A-416 | H | H | $CF_3$ | H | Cl |
| A-417 | F | H | $CF_3$ | H | Cl |
| A-418 | Cl | H | $CF_3$ | H | Cl |
| A-419 | $CH_3$ | H | $CF_3$ | H | Cl |
| A-420 | $CH_2CH_3$ | H | $CF_3$ | H | Cl |
| A-421 | H | H | $SCHF_2$ | H | Cl |
| A-422 | F | H | $SCHF_2$ | H | Cl |
| A-423 | Cl | H | $SCHF_2$ | H | Cl |
| A-424 | $CH_3$ | H | $SCHF_2$ | H | Cl |
| A-425 | $CH_2CH_3$ | H | $SCHF_2$ | H | Cl |
| A-426 | H | H | $SCF_3$ | H | Cl |
| A-427 | F | H | $SCF_3$ | H | Cl |
| A-428 | Cl | H | $SCF_3$ | H | Cl |
| A-429 | $CH_3$ | H | $SCF_3$ | H | Cl |
| A-430 | $CH_2CH_3$ | H | $SCF_3$ | H | Cl |

Tabelle A (fortgesetzt)

| Nr. | $R^1$ | $R^2$ | $R^{11}$ | $R^{12}$ | $R^{13}$ |
|---|---|---|---|---|---|
| A-431 | H | H | $OCHF_2$ | H | Cl |
| A-432 | F | H | $OCHF_2$ | H | Cl |
| A-433 | Cl | H | $OCHF_2$ | H | Cl |
| A-434 | $CH_3$ | H | $OCHF_2$ | H | Cl |
| A-435 | $CH_2CH_3$ | H | $OCHF_2$ | H | Cl |
| A-436 | H | H | $OCF_3$ | H | Cl |
| A-437 | F | H | $OCF_3$ | H | Cl |
| A-438 | Cl | H | $OCF_3$ | H | Cl |
| A-439 | $CH_3$ | H | $OCF_3$ | H | Cl |
| A-440 | $CH_2CH_3$ | H | $OCF_3$ | H | Cl |
| A-441 | H | H | F | F | Cl |
| A-442 | F | H | F | F | Cl |
| A-443 | Cl | H | F | F | Cl |
| A-444 | $CH_3$ | H | F | F | Cl |
| A-445 | $CH_2CH_3$ | H | F | F | Cl |
| A-446 | H | H | Cl | F | Cl |
| A-447 | F | H | Cl | F | Cl |
| A-448 | Cl | H | Cl | F | Cl |
| A-449 | $CH_3$ | H | Cl | F | Cl |
| A-450 | $CH_2CH_3$ | H | Cl | F | Cl |
| A-451 | H | H | CHF2 | F | Cl |
| A-452 | F | H | CHF2 | F | Cl |
| A-453 | Cl | H | CHF2 | F | Cl |
| A-454 | $CH_3$ | H | CHF2 | F | Cl |
| A-455 | $CH_2CH_3$ | H | CHF2 | F | Cl |
| A-456 | H | H | $CF_3$ | F | Cl |
| A-457 | F | H | $CF_3$ | F | Cl |
| A-458 | Cl | H | $CF_3$ | F | Cl |
| A-459 | $CH_3$ | H | $CF_3$ | F | Cl |
| A-460 | $CH_2CH_3$ | H | $CF_3$ | F | Cl |
| A-461 | H | H | $SCHF_2$ | F | Cl |
| A-462 | F | H | $SCHF_2$ | F | Cl |
| A-463 | Cl | H | $SCHF_2$ | F | Cl |
| A-464 | $CH_3$ | H | $SCHF_2$ | F | Cl |
| A-465 | $CH_2CH_3$ | H | $SCHF_2$ | F | Cl |
| A-466 | H | H | $SCF_3$ | F | Cl |
| A-467 | F | H | $SCF_3$ | F | Cl |
| A-468 | Cl | H | $SCF_3$ | F | Cl |

Tabelle A (fortgesetzt)

| Nr. | $R^1$ | $R^2$ | $R^{11}$ | $R^{12}$ | $R^{13}$ |
|---|---|---|---|---|---|
| A-469 | $CH_3$ | H | $SCF_3$ | F | Cl |
| A-470 | $CH_2CH_3$ | H | $SCF_3$ | F | Cl |
| A-471 | H | H | $OCHF_2$ | F | Cl |
| A-472 | F | H | $OCHF_2$ | F | Cl |
| A-473 | Cl | H | $OCHF_2$ | F | Cl |
| A-474 | $CH_3$ | H | $OCHF_2$ | F | Cl |
| A-475 | $CH_2CH_3$ | H | $OCHF_2$ | F | Cl |
| A-476 | H | H | $OCF_3$ | F | Cl |
| A-477 | F | H | $OCF_3$ | F | Cl |
| A-478 | Cl | H | $OCF_3$ | F | Cl |
| A-479 | $CH_3$ | H | $OCF_3$ | F | Cl |
| A-480 | $CH_2CH_3$ | H | $OCF_3$ | F | Cl |
| A-481 | H | H | F | Cl | Cl |
| A-482 | F | H | F | Cl | Cl |
| A-483 | Cl | H | F | Cl | Cl |
| A-484 | $CH_3$ | H | F | Cl | Cl |
| A-485 | $CH_2CH_3$ | H | F | Cl | Cl |
| A-486 | H | H | Cl | Cl | Cl |
| A-487 | F | H | Cl | Cl | Cl |
| A-488 | Cl | H | Cl | Cl | Cl |
| A-489 | $CH_3$ | H | Cl | Cl | Cl |
| A-490 | $CH_2CH_3$ | H | Cl | Cl | Cl |
| A-491 | H | H | CHF2 | Cl | Cl |
| A-492 | F | H | CHF2 | Cl | Cl |
| A-493 | Cl | H | CHF2 | Cl | Cl |
| A-494 | $CH_3$ | H | CHF2 | Cl | Cl |
| A-495 | $CH_2CH_3$ | H | CHF2 | Cl | Cl |
| A-496 | H | H | $CF_3$ | Cl | Cl |
| A-497 | F | H | $CF_3$ | Cl | Cl |
| A-498 | Cl | H | $CF_3$ | Cl | Cl |
| A-499 | $CH_3$ | H | $CF_3$ | Cl | Cl |
| A-500 | $CH_2CH_3$ | H | $CF_3$ | Cl | Cl |
| A-501 | H | H | $SCHF_2$ | Cl | Cl |
| A-502 | F | H | $SCHF_2$ | Cl | Cl |
| A-503 | Cl | H | $SCHF_2$ | Cl | Cl |
| A-504 | $CH_3$ | H | $SCHF_2$ | Cl | Cl |
| A-505 | $CH_2CH_3$ | H | $SCHF_2$ | Cl | Cl |
| A-506 | H | H | $SCF_3$ | Cl | Cl |

Tabelle A (fortgesetzt)

| Nr. | $R^1$ | $R^2$ | $R^{11}$ | $R^{12}$ | $R^{13}$ |
|---|---|---|---|---|---|
| A-507 | F | H | $SCF_3$ | Cl | Cl |
| A-508 | Cl | H | $SCF_3$ | Cl | Cl |
| A-509 | $CH_3$ | H | $SCF_3$ | Cl | Cl |
| A-510 | $CH_2CH_3$ | H | $SCF_3$ | Cl | Cl |
| A-511 | H | H | $OCHF_2$ | Cl | Cl |
| A-512 | F | H | $OCHF_2$ | Cl | Cl |
| A-513 | Cl | H | $OCHF_2$ | Cl | Cl |
| A-514 | $CH_3$ | H | $OCHF_2$ | Cl | Cl |
| A-515 | $CH_2CH_3$ | H | $OCHF_2$ | Cl | Cl |
| A-516 | H | H | $OCF_3$ | Cl | Cl |
| A-517 | F | H | $OCF_3$ | Cl | Cl |
| A-518 | Cl | H | $OCF_3$ | Cl | Cl |
| A-519 | $CH_3$ | H | $OCF_3$ | Cl | Cl |
| A-520 | $CH_2CH_3$ | H | $OCF_3$ | Cl | Cl |
| A-521 | H | H | F | $CHF_2$ | Cl |
| A-522 | F | H | F | $CHF_2$ | Cl |
| A-523 | Cl | H | F | $CHF_2$ | Cl |
| A-524 | $CH_3$ | H | F | $CHF_2$ | Cl |
| A-525 | $CH_2CH_3$ | H | F | $CHF_2$ | Cl |
| A-526 | H | H | Cl | $CHF_2$ | Cl |
| A-527 | F | H | Cl | $CHF_2$ | Cl |
| A-528 | Cl | H | Cl | $CHF_2$ | Cl |
| A-529 | $CH_3$ | H | Cl | $CHF_2$ | Cl |
| A-530 | $CH_2CH_3$ | H | Cl | $CHF_2$ | Cl |
| A-531 | H | H | CHF2 | $CHF_2$ | Cl |
| A-532 | F | H | CHF2 | $CHF_2$ | Cl |
| A-533 | Cl | H | CHF2 | $CHF_2$ | Cl |
| A-534 | $CH_3$ | H | CHF2 | $CHF_2$ | Cl |
| A-535 | $CH_2CH_3$ | H | CHF2 | $CHF_2$ | Cl |
| A-536 | H | H | $CF_3$ | $CHF_2$ | Cl |
| A-537 | F | H | $CF_3$ | $CHF_2$ | Cl |
| A-538 | Cl | H | $CF_3$ | $CHF_2$ | Cl |
| A-539 | $CH_3$ | H | $CF_3$ | $CHF_2$ | Cl |
| A-540 | $CH_2CH_3$ | H | $CF_3$ | $CHF_2$ | Cl |
| A-541 | H | H | $SCHF_2$ | $CHF_2$ | Cl |
| A-542 | F | H | $SCHF_2$ | $CHF_2$ | Cl |
| A-543 | Cl | H | $SCHF_2$ | $CHF_2$ | Cl |
| A-544 | $CH_3$ | H | $SCHF_2$ | $CHF_2$ | Cl |

Tabelle A (fortgesetzt)

| Nr. | $R^1$ | $R^2$ | $R^{11}$ | $R^{12}$ | $R^{13}$ |
|---|---|---|---|---|---|
| A-545 | $CH_2CH_3$ | H | $SCHF_2$ | $CHF_2$ | Cl |
| A-546 | H | H | $SCF_3$ | $CHF_2$ | Cl |
| A-547 | F | H | $SCF_3$ | $CHF_2$ | Cl |
| A-548 | Cl | H | $SCF_3$ | $CHF_2$ | Cl |
| A-549 | $CH_3$ | H | $SCF_3$ | $CHF_2$ | Cl |
| A-550 | $CH_2CH_3$ | H | $SCF_3$ | $CHF_2$ | Cl |
| A-551 | H | H | $OCHF_2$ | $CHF_2$ | Cl |
| A-552 | F | H | $OCHF_2$ | $CHF_2$ | Cl |
| A-553 | Cl | H | $OCHF_2$ | $CHF_2$ | Cl |
| A-554 | $CH_3$ | H | $OCHF_2$ | $CHF_2$ | Cl |
| A-555 | $CH_2CH_3$ | H | $OCHF_2$ | $CHF_2$ | Cl |
| A-556 | H | H | $OCF_3$ | $CHF_2$ | Cl |
| A-557 | F | H | $OCF_3$ | $CHF_2$ | Cl |
| A-558 | Cl | H | $OCF_3$ | $CHF_2$ | Cl |
| A-559 | $CH_3$ | H | $OCF_3$ | $CHF_2$ | Cl |
| A-560 | $CH_2CH_3$ | H | $OCF_3$ | $CHF_2$ | Cl |
| A-561 | H | H | F | $CF_3$ | Cl |
| A-562 | F | H | F | $CF_3$ | Cl |
| A-563 | Cl | H | F | $CF_3$ | Cl |
| A-564 | $CH_3$ | H | F | $CF_3$ | Cl |
| A-565 | $CH_2CH_3$ | H | F | $CF_3$ | Cl |
| A-566 | H | H | Cl | $CF_3$ | Cl |
| A-567 | F | H | Cl | $CF_3$ | Cl |
| A-568 | Cl | H | Cl | $CF_3$ | Cl |
| A-569 | $CH_3$ | H | Cl | $CF_3$ | Cl |
| A-570 | $CH_2CH_3$ | H | Cl | $CF_3$ | Cl |
| A-571 | H | H | CHF2 | $CF_3$ | Cl |
| A-572 | F | H | CHF2 | $CF_3$ | Cl |
| A-573 | Cl | H | CHF2 | $CF_3$ | Cl |
| A-574 | $CH_3$ | H | CHF2 | $CF_3$ | Cl |
| A-575 | $CH_2CH_3$ | H | CHF2 | $CF_3$ | Cl |
| A-576 | H | H | $CF_3$ | $CF_3$ | Cl |
| A-577 | F | H | $CF_3$ | $CF_3$ | Cl |
| A-578 | Cl | H | $CF_3$ | $CF_3$ | Cl |
| A-579 | $CH_3$ | H | $CF_3$ | $CF_3$ | Cl |
| A-580 | $CH_2CH_3$ | H | $CF_3$ | $CF_3$ | Cl |
| A-581 | H | H | $SCHF_2$ | $CF_3$ | Cl |
| A-582 | F | H | $SCHF_2$ | $CF_3$ | Cl |

Tabelle A (fortgesetzt)

| Nr. | $R^1$ | $R^2$ | $R^{11}$ | $R^{12}$ | $R^{13}$ |
|---|---|---|---|---|---|
| A-583 | Cl | H | $SCHF_2$ | $CF_3$ | Cl |
| A-584 | $CH_3$ | H | $SCHF_2$ | $CF_3$ | Cl |
| A-585 | $CH_2CH_3$ | H | $SCHF_2$ | $CF_3$ | Cl |
| A-586 | H | H | $SCF_3$ | $CF_3$ | Cl |
| A-587 | F | H | $SCF_3$ | $CF_3$ | Cl |
| A-588 | Cl | H | $SCF_3$ | $CF_3$ | Cl |
| A-589 | $CH_3$ | H | $SCF_3$ | $CF_3$ | Cl |
| A-590 | $CH_2CH_3$ | H | $SCF_3$ | $CF_3$ | Cl |
| A-591 | H | H | $OCHF_2$ | $CF_3$ | Cl |
| A-592 | F | H | $OCHF_2$ | $CF_3$ | Cl |
| A-593 | Cl | H | $OCHF_2$ | $CF_3$ | Cl |
| A-594 | $CH_3$ | H | $OCHF_2$ | $CF_3$ | Cl |
| A-595 | $CH_2CH_3$ | H | $OCHF_2$ | $CF_3$ | Cl |
| A-596 | H | H | $OCF_3$ | $CF_3$ | Cl |
| A-597 | F | H | $OCF_3$ | $CF_3$ | Cl |
| A-598 | Cl | H | $OCF_3$ | $CF_3$ | Cl |
| A-599 | $CH_3$ | H | $OCF_3$ | $CF_3$ | Cl |
| A-600 | $CH_2CH_3$ | H | $OCF_3$ | $CF_3$ | Cl |
| A-601 | H | F | F | H | H |
| A-602 | F | F | F | H | H |
| A-603 | Cl | F | F | H | H |
| A-604 | $CH_3$ | F | F | H | H |
| A-605 | $CH_2CH_3$ | F | F | H | H |
| A-606 | H | F | Cl | H | H |
| A-607 | F | F | Cl | H | H |
| A-608 | Cl | F | Cl | H | H |
| A-609 | $CH_3$ | F | Cl | H | H |
| A-610 | $CH_2CH_3$ | F | Cl | H | H |
| A-611 | H | F | CHF2 | H | H |
| A-612 | F | F | CHF2 | H | H |
| A-613 | Cl | F | CHF2 | H | H |
| A-614 | $CH_3$ | F | CHF2 | H | H |
| A-615 | $CH_2CH_3$ | F | CHF2 | H | H |
| A-616 | H | F | $CF_3$ | H | H |
| A-617 | F | F | $CF_3$ | H | H |
| A-618 | Cl | F | $CF_3$ | H | H |
| A-619 | $CH_3$ | F | $CF_3$ | H | H |
| A-620 | $CH_2CH_3$ | F | $CF_3$ | H | H |

Tabelle A (fortgesetzt)

| Nr. | $R^1$ | $R^2$ | $R^{11}$ | $R^{12}$ | $R^{13}$ |
|---|---|---|---|---|---|
| A-621 | H | F | $SCHF_2$ | H | H |
| A-622 | F | F | $SCHF_2$ | H | H |
| A-623 | Cl | F | $SCHF_2$ | H | H |
| A-624 | $CH_3$ | F | $SCHF_2$ | H | H |
| A-625 | $CH_2CH_3$ | F | $SCHF_2$ | H | H |
| A-626 | H | F | $SCF_3$ | H | H |
| A-627 | F | F | $SCF_3$ | H | H |
| A-628 | Cl | F | $SCF_3$ | H | H |
| A-629 | $CH_3$ | F | $SCF_3$ | H | H |
| A-630 | $CH_2CH_3$ | F | $SCF_3$ | H | H |
| A-631 | H | F | $OCHF_2$ | H | H |
| A-632 | F | F | $OCHF_2$ | H | H |
| A-633 | Cl | F | $OCHF_2$ | H | H |
| A-634 | $CH_3$ | F | $OCHF_2$ | H | H |
| A-635 | $CH_2CH_3$ | F | $OCHF_2$ | H | H |
| A-636 | H | F | $OCF_3$ | H | H |
| A-637 | F | F | $OCF_3$ | H | H |
| A-638 | Cl | F | $OCF_3$ | H | H |
| A-639 | $CH_3$ | F | $OCF_3$ | H | H |
| A-640 | $CH_2CH_3$ | F | $OCF_3$ | H | H |
| A-641 | H | F | F | F | H |
| A-642 | F | F | F | F | H |
| A-643 | Cl | F | F | F | H |
| A-644 | $CH_3$ | F | F | F | H |
| A-645 | $CH_2CH_3$ | F | F | F | H |
| A-646 | H | F | Cl | F | H |
| A-647 | F | F | Cl | F | H |
| A-648 | Cl | F | Cl | F | H |
| A-649 | $CH_3$ | F | Cl | F | H |
| A-650 | $CH_2CH_3$ | F | Cl | F | H |
| A-651 | H | F | CHF2 | F | H |
| A-652 | F | F | CHF2 | F | H |
| A-653 | Cl | F | CHF2 | F | H |
| A-654 | $CH_3$ | F | CHF2 | F | H |
| A-655 | $CH_2CH_3$ | F | CHF2 | F | H |
| A-656 | H | F | $CF_3$ | F | H |
| A-657 | F | F | $CF_3$ | F | H |
| A-658 | Cl | F | $CF_3$ | F | H |

Tabelle A (fortgesetzt)

| Nr. | $R^1$ | $R^2$ | $R^{11}$ | $R^{12}$ | $R^{13}$ |
|---|---|---|---|---|---|
| A-659 | $CH_3$ | F | $CF_3$ | F | H |
| A-660 | $CH_2CH_3$ | F | $CF_3$ | F | H |
| A-661 | H | F | $SCHF_2$ | F | H |
| A-662 | F | F | $SCHF_2$ | F | H |
| A-663 | Cl | F | $SCHF_2$ | F | H |
| A-664 | $CH_3$ | F | $SCHF_2$ | F | H |
| A-665 | $CH_2CH_3$ | F | $SCHF_2$ | F | H |
| A-666 | H | F | $SCF_3$ | F | H |
| A-667 | F | F | $SCF_3$ | F | H |
| A-668 | Cl | F | $SCF_3$ | F | H |
| A-669 | $CH_3$ | F | $SCF_3$ | F | H |
| A-670 | $CH_2CH_3$ | F | $SCF_3$ | F | H |
| A-671 | H | F | $OCHF_2$ | F | H |
| A-672 | F | F | $OCHF_2$ | F | H |
| A-673 | Cl | F | $OCHF_2$ | F | H |
| A-674 | $CH_3$ | F | $OCHF_2$ | F | H |
| A-675 | $CH_2CH_3$ | F | $OCHF_2$ | F | H |
| A-676 | H | F | $OCF_3$ | F | H |
| A-677 | F | F | $OCF_3$ | F | H |
| A-678 | Cl | F | $OCF_3$ | F | H |
| A-679 | $CH_3$ | F | $OCF_3$ | F | H |
| A-680 | $CH_2CH_3$ | F | $OCF_3$ | F | H |
| A-681 | H | F | F | Cl | H |
| A-682 | F | F | F | Cl | H |
| A-683 | Cl | F | F | Cl | H |
| A-684 | $CH_3$ | F | F | Cl | H |
| A-685 | $CH_2CH_3$ | F | F | Cl | H |
| A-686 | H | F | Cl | Cl | H |
| A-687 | F | F | Cl | Cl | H |
| A-688 | Cl | F | Cl | Cl | H |
| A-689 | $CH_3$ | F | Cl | Cl | H |
| A-690 | $CH_2CH_3$ | F | Cl | Cl | H |
| A-691 | H | F | CHF2 | Cl | H |
| A-692 | F | F | CHF2 | Cl | H |
| A-693 | Cl | F | CHF2 | Cl | H |
| A-694 | $CH_3$ | F | CHF2 | Cl | H |
| A-695 | $CH_2CH_3$ | F | CHF2 | Cl | H |
| A-696 | H | F | $CF_3$ | Cl | H |

Tabelle A (fortgesetzt)

| Nr. | $R^1$ | $R^2$ | $R^{11}$ | $R^{12}$ | $R^{13}$ |
|---|---|---|---|---|---|
| A-697 | F | F | $CF_3$ | Cl | H |
| A-698 | Cl | F | $CF_3$ | Cl | H |
| A-699 | $CH_3$ | F | $CF_3$ | Cl | H |
| A-700 | $CH_2CH_3$ | F | $CF_3$ | Cl | H |
| A-701 | H | F | $SCHF_2$ | Cl | H |
| A-702 | F | F | $SCHF_2$ | Cl | H |
| A-703 | Cl | F | $SCHF_2$ | Cl | H |
| A-704 | $CH_3$ | F | $SCHF_2$ | Cl | H |
| A-705 | $CH_2CH_3$ | F | $SCHF_2$ | Cl | H |
| A-706 | H | F | $SCF_3$ | Cl | H |
| A-707 | F | F | $SCF_3$ | Cl | H |
| A-708 | Cl | F | $SCF_3$ | Cl | H |
| A-709 | $CH_3$ | F | $SCF_3$ | Cl | H |
| A-710 | $CH_2CH_3$ | F | $SCF_3$ | Cl | H |
| A-711 | H | F | $OCHF_2$ | Cl | H |
| A-712 | F | F | $OCHF_2$ | Cl | H |
| A-713 | Cl | F | $OCHF_2$ | Cl | H |
| A-714 | $CH_3$ | F | $OCHF_2$ | Cl | H |
| A-715 | $CH_2CH_3$ | F | $OCHF_2$ | Cl | H |
| A-716 | H | F | $OCF_3$ | Cl | H |
| A-717 | F | F | $OCF_3$ | Cl | H |
| A-718 | Cl | F | $OCF_3$ | Cl | H |
| A-719 | $CH_3$ | F | $OCF_3$ | Cl | H |
| A-720 | $CH_2CH_3$ | F | $OCF_3$ | Cl | H |
| A-721 | H | F | F | $CHF_2$ | H |
| A-722 | F | F | F | $CHF_2$ | H |
| A-723 | Cl | F | F | $CHF_2$ | H |
| A-724 | $CH_3$ | F | F | $CHF_2$ | H |
| A-725 | $CH_2CH_3$ | F | F | $CHF_2$ | H |
| A-726 | H | F | Cl | $CHF_2$ | H |
| A-727 | F | F | Cl | $CHF_2$ | H |
| A-728 | Cl | F | Cl | $CHF_2$ | H |
| A-729 | $CH_3$ | F | Cl | $CHF_2$ | H |
| A-730 | $CH_2CH_3$ | F | Cl | $CHF_2$ | H |
| A-731 | H | F | CHF2 | $CHF_2$ | H |
| A-732 | F | F | CHF2 | $CHF_2$ | H |
| A-733 | Cl | F | CHF2 | $CHF_2$ | H |
| A-734 | $CH_3$ | F | CHF2 | $CHF_2$ | H |

Tabelle A (fortgesetzt)

| Nr. | $R^1$ | $R^2$ | $R^{11}$ | $R^{12}$ | $R^{13}$ |
|---|---|---|---|---|---|
| A-735 | $CH_2CH_3$ | F | CHF2 | $CHF_2$ | H |
| A-736 | H | F | $CF_3$ | $CHF_2$ | H |
| A-737 | F | F | $CF_3$ | $CHF_2$ | H |
| A-738 | Cl | F | $CF_3$ | $CHF_2$ | H |
| A-739 | $CH_3$ | F | $CF_3$ | $CHF_2$ | H |
| A-740 | $CH_2CH_3$ | F | $CF_3$ | $CHF_2$ | H |
| A-741 | H | F | $SCHF_2$ | $CHF_2$ | H |
| A-742 | F | F | $SCHF_2$ | $CHF_2$ | H |
| A-743 | Cl | F | $SCHF_2$ | $CHF_2$ | H |
| A-744 | $CH_3$ | F | $SCHF_2$ | $CHF_2$ | H |
| A-745 | $CH_2CH_3$ | F | $SCHF_2$ | $CHF_2$ | H |
| A-746 | H | F | $SCF_3$ | $CHF_2$ | H |
| A-747 | F | F | $SCF_3$ | $CHF_2$ | H |
| A-748 | Cl | F | $SCF_3$ | $CHF_2$ | H |
| A-749 | $CH_3$ | F | $SCF_3$ | $CHF_2$ | H |
| A-750 | $CH_2CH_3$ | F | $SCF_3$ | $CHF_2$ | H |
| A-751 | H | F | $OCHF_2$ | $CHF_2$ | H |
| A-752 | F | F | $OCHF_2$ | $CHF_2$ | H |
| A-753 | Cl | F | $OCHF_2$ | $CHF_2$ | H |
| A-754 | $CH_3$ | F | $OCHF_2$ | $CHF_2$ | H |
| A-755 | $CH_2CH_3$ | F | $OCHF_2$ | $CHF_2$ | H |
| A-756 | H | F | $OCF_3$ | $CHF_2$ | H |
| A-757 | F | F | $OCF_3$ | $CHF_2$ | H |
| A-758 | Cl | F | $OCF_3$ | $CHF_2$ | H |
| A-759 | $CH_3$ | F | $OCF_3$ | $CHF_2$ | H |
| A-760 | $CH_2CH_3$ | F | $OCF_3$ | $CHF_2$ | H |
| A-761 | H | F | F | $CF_3$ | H |
| A-762 | F | F | F | $CF_3$ | H |
| A-763 | Cl | F | F | $CF_3$ | H |
| A-764 | $CH_3$ | F | F | $CF_3$ | H |
| A-765 | $CH_2CH_3$ | F | F | $CF_3$ | H |
| A-766 | H | F | Cl | $CF_3$ | H |
| A-767 | F | F | Cl | $CF_3$ | H |
| A-768 | Cl | F | Cl | $CF_3$ | H |
| A-769 | $CH_3$ | F | Cl | $CF_3$ | H |
| A-770 | $CH_2CH_3$ | F | Cl | $CF_3$ | H |
| A-771 | H | F | CHF2 | $CF_3$ | H |
| A-772 | F | F | CHF2 | $CF_3$ | H |

Tabelle A (fortgesetzt)

| Nr. | $R^1$ | $R^2$ | $R^{11}$ | $R^{12}$ | $R^{13}$ |
|---|---|---|---|---|---|
| A-773 | Cl | F | CHF2 | $CF_3$ | H |
| A-774 | $CH_3$ | F | CHF2 | $CF_3$ | H |
| A-775 | $CH_2CH_3$ | F | CHF2 | $CF_3$ | H |
| A-776 | H | F | $CF_3$ | $CF_3$ | H |
| A-777 | F | F | $CF_3$ | $CF_3$ | H |
| A-778 | Cl | F | $CF_3$ | $CF_3$ | H |
| A-779 | $CH_3$ | F | $CF_3$ | $CF_3$ | H |
| A-780 | $CH_2CH_3$ | F | $CF_3$ | $CF_3$ | H |
| A-781 | H | F | $SCHF_2$ | $CF_3$ | H |
| A-782 | F | F | $SCHF_2$ | $CF_3$ | H |
| A-783 | Cl | F | $SCHF_2$ | $CF_3$ | H |
| A-784 | $CH_3$ | F | $SCHF_2$ | $CF_3$ | H |
| A-785 | $CH_2CH_3$ | F | $SCHF_2$ | $CF_3$ | H |
| A-786 | H | F | $SCF_3$ | $CF_3$ | H |
| A-787 | F | F | $SCF_3$ | $CF_3$ | H |
| A-788 | Cl | F | $SCF_3$ | $CF_3$ | H |
| A-789 | $CH_3$ | F | $SCF_3$ | $CF_3$ | H |
| A-790 | $CH_2CH_3$ | F | $SCF_3$ | $CF_3$ | H |
| A-791 | H | F | $OCHF_2$ | $CF_3$ | H |
| A-792 | F | F | $OCHF_2$ | $CF_3$ | H |
| A-793 | Cl | F | $OCHF_2$ | $CF_3$ | H |
| A-794 | $CH_3$ | F | $OCHF_2$ | $CF_3$ | H |
| A-795 | $CH_2CH_3$ | F | $OCHF_2$ | $CF_3$ | H |
| A-796 | H | F | $OCF_3$ | $CF_3$ | H |
| A-797 | F | F | $OCF_3$ | $CF_3$ | H |
| A-798 | Cl | F | $OCF_3$ | $CF_3$ | H |
| A-799 | $CH_3$ | F | $OCF_3$ | $CF_3$ | H |
| A-800 | $CH_2CH_3$ | F | $OCF_3$ | $CF_3$ | H |
| A-801 | H | F | F | H | F |
| A-802 | F | F | F | H | F |
| A-803 | Cl | F | F | H | F |
| A-804 | $CH_3$ | F | F | H | F |
| A-805 | $CH_2CH_3$ | F | F | H | F |
| A-806 | H | F | Cl | H | F |
| A-807 | F | F | Cl | H | F |
| A-808 | Cl | F | Cl | H | F |
| A-809 | $CH_3$ | F | Cl | H | F |
| A-810 | $CH_2CH_3$ | F | Cl | H | F |

Tabelle A (fortgesetzt)

| Nr. | $R^1$ | $R^2$ | $R^{11}$ | $R^{12}$ | $R^{13}$ |
|---|---|---|---|---|---|
| A-811 | H | F | CHF2 | H | F |
| A-812 | F | F | CHF2 | H | F |
| A-813 | Cl | F | CHF2 | H | F |
| A-814 | $CH_3$ | F | CHF2 | H | F |
| A-815 | $CH_2CH_3$ | F | CHF2 | H | F |
| A-816 | H | F | $CF_3$ | H | F |
| A-817 | F | F | $CF_3$ | H | F |
| A-818 | Cl | F | $CF_3$ | H | F |
| A-819 | $CH_3$ | F | $CF_3$ | H | F |
| A-820 | $CH_2CH_3$ | F | $CF_3$ | H | F |
| A-821 | H | F | $SCHF_2$ | H | F |
| A-822 | F | F | $SCHF_2$ | H | F |
| A-823 | Cl | F | $SCHF_2$ | H | F |
| A-824 | $CH_3$ | F | $SCHF_2$ | H | F |
| A-825 | $CH_2CH_3$ | F | $SCHF_2$ | H | F |
| A-826 | H | F | $SCF_3$ | H | F |
| A-827 | F | F | $SCF_3$ | H | F |
| A-828 | Cl | F | $SCF_3$ | H | F |
| A-829 | $CH_3$ | F | $SCF_3$ | H | F |
| A-830 | $CH_2CH_3$ | F | $SCF_3$ 3 | H | F |
| A-831 | H | F | $OCHF_2$ | H | F |
| A-832 | F | F | $OCHF_2$ | H | F |
| A-833 | Cl | F | $OCHF_2$ | H | F |
| A-834 | $CH_3$ | F | $OCHF_2$ | H | F |
| A-835 | $CH_2CH_3$ | F | $OCHF_2$ | H | F |
| A-836 | H | F | $OCF_3$ | H | F |
| A-837 | F | F | $OCF_3$ | H | F |
| A-838 | Cl | F | $OCF_3$ | H | F |
| A-839 | $CH_3$ | F | $OCF_3$ | H | F |
| A-840 | $CH_2CH_3$ | F | $OCF_3$ | H | F |
| A-841 | H | F | F | F | F |
| A-842 | F | F | F | F | F |
| A-843 | Cl | F | F | F | F |
| A-844 | $CH_3$ | F | F | F | F |
| A-845 | $CH_2CH_3$ | F | F | F | F |
| A-846 | H | F | Cl | F | F |
| A-847 | F | F | Cl | F | F |
| A-848 | Cl | F | Cl | F | F |

Tabelle A (fortgesetzt)

| Nr. | $R^1$ | $R^2$ | $R^{11}$ | $R^{12}$ | $R^{13}$ |
|---|---|---|---|---|---|
| A-849 | $CH_3$ | F | Cl | F | F |
| A-850 | $CH_2CH_3$ | F | Cl | F | F |
| A-851 | H | F | CHF2 | F | F |
| A-852 | F | F | CHF2 | F | F |
| A-853 | Cl | F | CHF2 | F | F |
| A-854 | $CH_3$ | F | CHF2 | F | F |
| A-855 | $CH_2CH_3$ | F | CHF2 | F | F |
| A-856 | H | F | $CF_3$ | F | F |
| A-857 | F | F | $CF_3$ | F | F |
| A-858 | Cl | F | $CF_3$ | F | F |
| A-859 | $CH_3$ | F | $CF_3$ | F | F |
| A-860 | $CH_2CH_3$ | F | $CF_3$ | F | F |
| A-861 | H | F | $SCHF_2$ | F | F |
| A-862 | F | F | $SCHF_2$ | F | F |
| A-863 | Cl | F | $SCHF_2$ | F | F |
| A-864 | $CH_3$ | F | $SCHF_2$ | F | F |
| A-865 | $CH_2CH_3$ | F | $SCHF_2$ | F | F |
| A-866 | H | F | $SCF_3$ | F | F |
| A-867 | F | F | $SCF_3$ | F | F |
| A-868 | Cl | F | $SCF_3$ | F | F |
| A-869 | $CH_3$ | F | $SCF_3$ | F | F |
| A-870 | $CH_2CH_3$ | F | $SCF_3$ | F | F |
| A-871 | H | F | $OCHF_2$ | F | F |
| A-872 | F | F | $OCHF_2$ | F | F |
| A-873 | Cl | F | $OCHF_2$ | F | F |
| A-874 | $CH_3$ | F | $OCHF_2$ | F | F |
| A-875 | $CH_2CH_3$ | F | $OCHF_2$ | F | F |
| A-876 | H | F | $OCF_3$ | F | F |
| A-877 | F | F | $OCF_3$ | F | F |
| A-878 | Cl | F | $OCF_3$ | F | F |
| A-879 | $CH_3$ | F | $OCF_3$ | F | F |
| A-880 | $CH_2CH_3$ | F | $OCF_3$ | F | F |
| A-881 | H | F | F | Cl | F |
| A-882 | F | F | F | Cl | F |
| A-883 | Cl | F | F | Cl | F |
| A-884 | $CH_3$ | F | F | Cl | F |
| A-885 | $CH_2CH_3$ | F | F | Cl | F |
| A-886 | H | F | Cl | Cl | F |

Tabelle A (fortgesetzt)

| Nr. | $R^1$ | $R^2$ | $R^{11}$ | $R^{12}$ | $R^{13}$ |
|---|---|---|---|---|---|
| A-887 | F | F | Cl | Cl | F |
| A-888 | Cl | F | Cl | Cl | F |
| A-889 | $CH_3$ | F | Cl | Cl | F |
| A-890 | $CH_2CH_3$ | F | Cl | Cl | F |
| A-891 | H | F | CHF2 | Cl | F |
| A-892 | F | F | CHF2 | Cl | F |
| A-893 | Cl | F | CHF2 | Cl | F |
| A-894 | $CH_3$ | F | CHF2 | Cl | F |
| A-895 | $CH_2CH_3$ | F | CHF2 | Cl | F |
| A-896 | H | F | $CF_3$ | Cl | F |
| A-897 | F | F | $CF_3$ | Cl | F |
| A-898 | Cl | F | $CF_3$ | Cl | F |
| A-899 | $CH_3$ | F | $CF_3$ | Cl | F |
| A-900 | $CH_2CH_3$ | F | $CF_3$ | Cl | F |
| A-901 | H | F | $SCHF_2$ | Cl | F |
| A-902 | F | F | $SCHF_2$ | Cl | F |
| A-903 | Cl | F | $SCHF_2$ | Cl | F |
| A-904 | $CH_3$ | F | $SCHF_2$ | Cl | F |
| A-905 | $CH_2CH_3$ | F | $SCHF_2$ | Cl | F |
| A-906 | H | F | $SCF_3$ | Cl | F |
| A-907 | F | F | $SCF_3$ | Cl | F |
| A-908 | Cl | F | $SCF_3$ | Cl | F |
| A-909 | $CH_3$ | F | $SCF_3$ | Cl | F |
| A-910 | $CH_2CH_3$ | F | $SCF_3$ | Cl | F |
| A-911 | H | F | $OCHF_2$ | Cl | F |
| A-912 | F | F | $OCHF_2$ | Cl | F |
| A-913 | Cl | F | $OCHF_2$ | Cl | F |
| A-914 | $CH_3$ | F | $OCHF_2$ | Cl | F |
| A-915 | $CH_2CH_3$ | F | $OCHF_2$ | Cl | F |
| A-916 | H | F | $OCF_3$ | Cl | F |
| A-917 | F | F | $OCF_3$ | Cl | F |
| A-918 | Cl | F | $OCF_3$ | Cl | F |
| A-919 | $CH_3$ | F | $OCF_3$ | Cl | F |
| A-920 | $CH_2CH_3$ | F | $OCF_3$ | Cl | F |
| A-921 | H | F | F | $CHF_2$ | F |
| A-922 | F | F | F | $CHF_2$ | F |
| A-923 | Cl | F | F | $CHF_2$ | F |
| A-924 | $CH_3$ | F | F | $CHF_2$ | F |

Tabelle A (fortgesetzt)

| Nr. | $R^1$ | $R^2$ | $R^{11}$ | $R^{12}$ | $R^{13}$ |
|---|---|---|---|---|---|
| A-925 | $CH_2CH_3$ | F | F | $CHF_2$ | F |
| A-926 | H | F | Cl | $CHF_2$ | F |
| A-927 | F | F | Cl | $CHF_2$ | F |
| A-928 | Cl | F | Cl | $CHF_2$ | F |
| A-929 | $CH_3$ | F | Cl | $CHF_2$ | F |
| A-930 | $CH_2CH_3$ | F | Cl | $CHF_2$ | F |
| A-931 | H | F | CHF2 | $CHF_2$ | F |
| A-932 | F | F | CHF2 | $CHF_2$ | F |
| A-933 | Cl | F | CHF2 | $CHF_2$ | F |
| A-934 | $CH_3$ | F | CHF2 | $CHF_2$ | F |
| A-935 | $CH_2CH_3$ | F | CHF2 | $CHF_2$ | F |
| A-936 | H | F | $CF_3$ | $CHF_2$ | F |
| A-937 | F | F | $CF_3$ | $CHF_2$ | F |
| A-938 | Cl | F | $CF_3$ | $CHF_2$ | F |
| A-939 | $CH_3$ | F | $CF_3$ | $CHF_2$ | F |
| A-940 | $CH_2CH_3$ | F | $CF_3$ | $CHF_2$ | F |
| A-941 | H | F | $SCHF_2$ | $CHF_2$ | F |
| A-942 | F | F | $SCHF_2$ | $CHF_2$ | F |
| A-943 | Cl | F | $SCHF_2$ | $CHF_2$ | F |
| A-944 | $CH_3$ | F | $SCHF_2$ | $CHF_2$ | F |
| A-945 | $CH_2CH_3$ | F | $SCHF_2$ | $CHF_2$ | F |
| A-946 | H | F | $SCF_3$ | $CHF_2$ | F |
| A-947 | F | F | $SCF_3$ | $CHF_2$ | F |
| A-948 | Cl | F | $SCF_3$ | $CHF_2$ | F |
| A-949 | $CH_3$ | F | $SCF_3$ | $CHF_2$ | F |
| A-950 | $CH_2CH_3$ | F | $SCF_3$ | $CHF_2$ | F |
| A-951 | H | F | $OCHF_2$ | $CHF_2$ | F |
| A-952 | F | F | $OCHF_2$ | $CHF_2$ | F |
| A-953 | Cl | F | $OCHF_2$ | $CHF_2$ | F |
| A-954 | $CH_3$ | F | $OCHF_2$ | $CHF_2$ | F |
| A-955 | $CH_2CH_3$ | F | $OCHF_2$ | $CHF_2$ | F |
| A-956 | H | F | $OCF_3$ | $CHF_2$ | F |
| A-957 | F | F | $OCF_3$ | $CHF_2$ | F |
| A-958 | Cl | F | $OCF_3$ | $CHF_2$ | F |
| A-959 | $CH_3$ | F | $OCF_3$ | $CHF_2$ | F |
| A-960 | $CH_2CH_3$ | F | $OCF_3$ | $CHF_2$ | F |
| A-961 | H | F | F | $CF_3$ | F |
| A-962 | F | F | F | $CF_3$ | F |

Tabelle A (fortgesetzt)

| Nr. | $R^1$ | $R^2$ | $R^{11}$ | $R^{12}$ | $R^{13}$ |
|---|---|---|---|---|---|
| A-963 | Cl | F | F | $CF_3$ | F |
| A-964 | $CH_3$ | F | F | $CF_3$ | F |
| A-965 | $CH_2CH_3$ | F | F | $CF_3$ | F |
| A-966 | H | F | Cl | $CF_3$ | F |
| A-967 | F | F | Cl | $CF_3$ | F |
| A-968 | Cl | F | Cl | $CF_3$ | F |
| A-969 | $CH_3$ | F | Cl | $CF_3$ | F |
| A-970 | $CH_2CH_3$ | F | Cl | $CF_3$ | F |
| A-971 | H | F | CHF2 | $CF_3$ | F |
| A-972 | F | F | CHF2 | $CF_3$ | F |
| A-973 | Cl | F | CHF2 | $CF_3$ | F |
| A-974 | $CH_3$ | F | CHF2 | $CF_3$ | F |
| A-975 | $CH_2CH_3$ | F | CHF2 | $CF_3$ | F |
| A-976 | H | F | $CF_3$ | $CF_3$ | F |
| A-977 | F | F | $CF_3$ | $CF_3$ | F |
| A-978 | Cl | F | $CF_3$ | $CF_3$ | F |
| A-979 | $CH_3$ | F | $CF_3$ | $CF_3$ | F |
| A-980 | $CH_2CH_3$ | F | $CF_3$ | $CF_3$ | F |
| A-981 | H | F | $SCHF_2$ | $CF_3$ | F |
| A-982 | F | F | $SCHF_2$ | $CF_3$ | F |
| A-983 | Cl | F | $SCHF_2$ | $CF_3$ | F |
| A-984 | $CH_3$ | F | $SCHF_2$ | $CF_3$ | F |
| A-985 | $CH_2CH_3$ | F | $SCHF_2$ | $CF_3$ | F |
| A-986 | H | F | $SCF_3$ | $CF_3$ | F |
| A-987 | F | F | $SCF_3$ | $CF_3$ | F |
| A-988 | Cl | F | $SCF_3$ | $CF_3$ | F |
| A-989 | $CH_3$ | F | $SCF_3$ | $CF_3$ | F |
| A-990 | $CH_2CH_3$ | F | $SCF_3$ | $CF_3$ | F |
| A-991 | H | F | $OCHF_2$ | $CF_3$ | F |
| A-992 | F | F | $OCHF_2$ | $CF_3$ | F |
| A-993 | Cl | F | $OCHF_2$ | $CF_3$ | F |
| A-994 | $CH_3$ | F | $OCHF_2$ | $CF_3$ | F |
| A-995 | $CH_2CH_3$ | F | $OCHF_2$ | $CF_3$ | F |
| A-996 | H | F | $OCF_3$ | $CF_3$ | F |
| A-997 | F | F | $OCF_3$ | $CF_3$ | F |
| A-998 | Cl | F | $OCF_3$ | $CF_3$ | F |
| A-999 | $CH_3$ | F | $OCF_3$ | $CF_3$ | F |
| A-1000 | $CH_2CH_3$ | F | $OCF_3$ | $CF_3$ | F |

Tabelle A (fortgesetzt)

| Nr. | $R^1$ | $R^2$ | $R^{11}$ | $R^{12}$ | $R^{13}$ |
|---|---|---|---|---|---|
| A-1001 | H | F | F | H | Cl |
| A-1002 | F | F | F | H | Cl |
| A-1003 | Cl | F | F | H | Cl |
| A-1004 | $CH_3$ | F | F | H | Cl |
| A-1005 | $CH_2CH_3$ | F | F | H | Cl |
| A-1006 | H | F | Cl | H | Cl |
| A-1007 | F | F | Cl | H | Cl |
| A-1008 | Cl | F | Cl | H | Cl |
| A-1009 | $CH_3$ | F | Cl | H | Cl |
| A-1010 | $CH_2CH_3$ | F | Cl | H | Cl |
| A-1011 | H | F | CHF2 | H | Cl |
| A-1012 | F | F | CHF2 | H | Cl |
| A-1013 | Cl | F | CHF2 | H | Cl |
| A-1014 | $CH_3$ | F | CHF2 | H | Cl |
| A-1015 | $CH_2CH_3$ | F | CHF2 | H | Cl |
| A-1016 | H | F | $CF_3$ | H | Cl |
| A-1017 | F | F | $CF_3$ | H | Cl |
| A-1018 | Cl | F | $CF_3$ | H | Cl |
| A-1019 | $CH_3$ | F | $CF_3$ | H | Cl |
| A-1020 | $CH_2CH_3$ | F | $CF_3$ | H | Cl |
| A-1021 | H | F | $SCHF_2$ | H | Cl |
| A-1022 | F | F | $SCHF_2$ | H | Cl |
| A-1023 | Cl | F | $SCHF_2$ | H | Cl |
| A-1024 | $CH_3$ | F | $SCHF_2$ | H | Cl |
| A-1025 | $CH_2CH_3$ | F | $SCHF_2$ | H | Cl |
| A-1026 | H | F | $SCF_3$ | H | Cl |
| A-1027 | F | F | $SCF_3$ | H | Cl |
| A-1028 | Cl | F | $SCF_3$ | H | Cl |
| A-1029 | $CH_3$ | F | $SCF_3$ | H | Cl |
| A-1030 | $CH_2CH_3$ | F | $SCF_3$ | H | Cl |
| A-1031 | H | F | $OCHF_2$ | H | Cl |
| A-1032 | F | F | $OCHF_2$ | H | Cl |
| A-1033 | Cl | F | $OCHF_2$ | H | Cl |
| A-1034 | $CH_3$ | F | $OCHF_2$ | H | Cl |
| A-1035 | $CH_2CH_3$ | F | $OCHF_2$ | H | Cl |
| A-1036 | H | F | $OCF_3$ | H | Cl |
| A-1037 | F | F | $OCF_3$ | H | Cl |
| A-1038 | Cl | F | $OCF_3$ | H | Cl |

Tabelle A (fortgesetzt)

| Nr. | $R^1$ | $R^2$ | $R^{11}$ | $R^{12}$ | $R^{13}$ |
|---|---|---|---|---|---|
| A-1039 | $CH_3$ | F | $OCF_3$ | H | Cl |
| A-1040 | $CH_2CH_3$ | F | $OCF_3$ | H | Cl |
| A-1041 | H | F | F | F | Cl |
| A-1042 | F | F | F | F | Cl |
| A-1043 | Cl | F | F | F | Cl |
| A-1044 | $CH_3$ | F | F | F | Cl |
| A-1045 | $CH_2CH_3$ | F | F | F | Cl |
| A-1046 | H | F | Cl | F | Cl |
| A-1047 | F | F | Cl | F | Cl |
| A-1048 | Cl | F | Cl | F | Cl |
| A-1049 | $CH_3$ | F | Cl | F | Cl |
| A-1050 | $CH_2CH_3$ | F | Cl | F | Cl |
| A-1051 | H | F | CHF2 | F | Cl |
| A-1052 | F | F | CHF2 | F | Cl |
| A-1053 | Cl | F | CHF2 | F | Cl |
| A-1054 | $CH_3$ | F | CHF2 | F | Cl |
| A-1055 | $CH_2CH_3$ | F | CHF2 | F | Cl |
| A-1056 | H | F | $CF_3$ | F | Cl |
| A-1057 | F | F | $CF_3$ | F | Cl |
| A-1058 | Cl | F | $CF_3$ | F | Cl |
| A-1059 | $CH_3$ | F | $CF_3$ | F | Cl |
| A-1060 | $CH_2CH_3$ | F | $CF_3$ | F | Cl |
| A-1061 | H | F | $SCHF_2$ | F | Cl |
| A-1062 | F | F | $SCHF_2$ | F | Cl |
| A-1063 | Cl | F | $SCHF_2$ | F | Cl |
| A-1064 | $CH_3$ | F | $SCHF_2$ | F | Cl |
| A-1065 | $CH_2CH_3$ | F | $SCHF_2$ | F | Cl |
| A-1066 | H | F | $SCF_3$ | F | Cl |
| A-1067 | F | F | $SCF_3$ | F | Cl |
| A-1068 | Cl | F | $SCF_3$ | F | Cl |
| A-1069 | $CH_3$ | F | $SCF_3$ | F | Cl |
| A-1070 | $CH_2CH_3$ | F | $SCF_3$ | F | Cl |
| A-1071 | H | F | $OCHF_2$ | F | Cl |
| A-1072 | F | F | $OCHF_2$ | F | Cl |
| A-1073 | Cl | F | $OCHF_2$ | F | Cl |
| A-1074 | $CH_3$ | F | $OCHF_2$ | F | Cl |
| A-1075 | $CH_2CH_3$ | F | $OCHF_2$ | F | Cl |
| A-1076 | H | F | $OCF_3$ | F | Cl |

Tabelle A (fortgesetzt)

| Nr. | $R^1$ | $R^2$ | $R^{11}$ | $R^{12}$ | $R^{13}$ |
|---|---|---|---|---|---|
| A-1077 | F | F | $OCF_3$ | F | Cl |
| A-1078 | Cl | F | $OCF_3$ | F | Cl |
| A-1079 | $CH_3$ | F | $OCF_3$ | F | Cl |
| A-1080 | $CH_2CH_3$ | F | $OCF_3$ | F | Cl |
| A-1081 | H | F | F | Cl | Cl |
| A-1082 | F | F | F | Cl | Cl |
| A-1083 | Cl | F | F | Cl | Cl |
| A-1084 | $CH_3$ | F | F | Cl | Cl |
| A-1085 | $CH_2CH_3$ | F | F | Cl | Cl |
| A-1086 | H | F | Cl | Cl | Cl |
| A-1087 | F | F | Cl | Cl | Cl |
| A-1088 | Cl | F | Cl | Cl | Cl |
| A-1089 | $CH_3$ | F | Cl | Cl | Cl |
| A-1090 | $CH_2CH_3$ | F | Cl | Cl | Cl |
| A-1091 | H | F | CHF2 | Cl | Cl |
| A-1092 | F | F | CHF2 | Cl | Cl |
| A-1093 | Cl | F | CHF2 | Cl | Cl |
| A-1094 | $CH_3$ | F | CHF2 | Cl | Cl |
| A-1095 | $CH_2CH_3$ | F | CHF2 | Cl | Cl |
| A-1096 | H | F | $CF_3$ | Cl | Cl |
| A-1097 | F | F | $CF_3$ | Cl | Cl |
| A-1098 | Cl | F | $CF_3$ | Cl | Cl |
| A-1099 | $CH_3$ | F | $CF_3$ | Cl | Cl |
| A-1100 | $CH_2CH_3$ | F | $CF_3$ | Cl | Cl |
| A-1101 | H | F | $SCHF_2$ | Cl | Cl |
| A-1102 | F | F | $SCHF_2$ | Cl | Cl |
| A-1103 | Cl | F | $SCHF_2$ | Cl | Cl |
| A-1104 | $CH_3$ | F | $SCHF_2$ | Cl | Cl |
| A-1105 | $CH_2CH_3$ | F | $SCHF_2$ | Cl | Cl |
| A-1106 | H | F | $SCF_3$ | Cl | Cl |
| A-1107 | F | F | $SCF_3$ | Cl | Cl |
| A-1108 | Cl | F | $SCF_3$ | Cl | Cl |
| A-1109 | $CH_3$ | F | $SCF_3$ | Cl | Cl |
| A-1110 | $CH_2CH_3$ | F | $SCF_3$ | Cl | Cl |
| A-1111 | H | F | $OCHF_2$ | Cl | Cl |
| A-1112 | F | F | $OCHF_2$ | Cl | Cl |
| A-1113 | Cl | F | $OCHF_2$ | Cl | Cl |
| A-1114 | $CH_3$ | F | $OCHF_2$ | Cl | Cl |

Tabelle A (fortgesetzt)

| Nr. | $R^1$ | $R^2$ | $R^{11}$ | $R^{12}$ | $R^{13}$ |
|---|---|---|---|---|---|
| A-1115 | $CH_2CH_3$ | F | $OCHF_2$ | Cl | Cl |
| A-1116 | H | F | $OCF_3$ | Cl | Cl |
| A-1117 | F | F | $OCF_3$ | Cl | Cl |
| A-1118 | Cl | F | $OCF_3$ | Cl | Cl |
| A-1119 | $CH_3$ | F | $OCF_3$ | Cl | Cl |
| A-1120 | $CH_2CH_3$ | F | $OCF_3$ | Cl | Cl |
| A-1121 | H | F | F | $CHF_2$ | Cl |
| A-1122 | F | F | F | $CHF_2$ | Cl |
| A-1123 | Cl | F | F | $CHF_2$ | Cl |
| A-1124 | $CH_3$ | F | F | $CHF_2$ | Cl |
| A-1125 | $CH_2CH_3$ | F | F | $CHF_2$ | Cl |
| A-1126 | H | F | Cl | $CHF_2$ | Cl |
| A-1127 | F | F | Cl | $CHF_2$ | Cl |
| A-1128 | Cl | F | Cl | $CHF_2$ | Cl |
| A-1129 | $CH_3$ | F | Cl | $CHF_2$ | Cl |
| A-1130 | $CH_2CH_3$ | F | Cl | $CHF_2$ | Cl |
| A-1131 | H | F | CHF2 | $CHF_2$ | Cl |
| A-1132 | F | F | CHF2 | $CHF_2$ | Cl |
| A-1133 | Cl | F | CHF2 | $CHF_2$ | Cl |
| A-1134 | $CH_3$ | F | CHF2 | $CHF_2$ | Cl |
| A-1135 | $CH_2CH_3$ | F | CHF2 | $CHF_2$ | Cl |
| A-1136 | H | F | $CF_3$ | $CHF_2$ | Cl |
| A-1137 | F | F | $CF_3$ | $CHF_2$ | Cl |
| A-1138 | Cl | F | $CF_3$ | $CHF_2$ | Cl |
| A-1139 | $CH_3$ | F | $CF_3$ | $CHF_2$ | Cl |
| A-1140 | $CH_2CH_3$ | F | $CF_3$ | $CHF_2$ | Cl |
| A-1141 | H | F | $SCHF_2$ | $CHF_2$ | Cl |
| A-1142 | F | F | $SCHF_2$ | $CHF_2$ | Cl |
| A-1143 | Cl | F | $SCHF_2$ | $CHF_2$ | Cl |
| A-1144 | $CH_3$ | F | $SCHF_2$ | $CHF_2$ | Cl |
| A-1145 | $CH_2CH_3$ | F | $SCHF_2$ | $CHF_2$ | Cl |
| A-1146 | H | F | $SCF_3$ | $CHF_2$ | Cl |
| A-1147 | F | F | $SCF_3$ | $CHF_2$ | Cl |
| A-1148 | Cl | F | $SCF_3$ | $CHF_2$ | Cl |
| A-1149 | $CH_3$ | F | $SCF_3$ | $CHF_2$ | Cl |
| A-1150 | $CH_2CH_3$ | F | $SCF_3$ | $CHF_2$ | Cl |
| A-1151 | H | F | $OCHF_2$ | $CHF_2$ | Cl |
| A-1152 | F | F | $OCHF_2$ | $CHF_2$ | Cl |

Tabelle A (fortgesetzt)

| Nr. | $R^1$ | $R^2$ | $R^{11}$ | $R^{12}$ | $R^{13}$ |
|---|---|---|---|---|---|
| A-1153 | Cl | F | $OCHF_2$ | $CHF_2$ | Cl |
| A-1154 | $CH_3$ | F | $OCHF_2$ | $CHF_2$ | Cl |
| A-1155 | $CH_2CH_3$ | F | $OCHF_2$ | $CHF_2$ | Cl |
| A-1156 | H | F | $OCF_3$ | $CHF_2$ | Cl |
| A-1157 | F | F | $OCF_3$ | $CHF_2$ | Cl |
| A-1158 | Cl | F | $OCF_3$ | $CHF_2$ | Cl |
| A-1159 | $CH_3$ | F | $OCF_3$ | $CHF_2$ | Cl |
| A-1160 | $CH_2CH_3$ | F | $OCF_3$ | $CHF_2$ | Cl |
| A-1161 | H | F | F | $CF_3$ | Cl |
| A-1162 | F | F | F | $CF_3$ | Cl |
| A-1163 | Cl | F | F | $CF_3$ | Cl |
| A-1164 | $CH_3$ | F | F | $CF_3$ | Cl |
| A-1165 | $CH_2CH_3$ | F | F | $CF_3$ | Cl |
| A-1166 | H | F | Cl | $CF_3$ | Cl |
| A-1167 | F | F | Cl | $CF_3$ | Cl |
| A-1168 | Cl | F | Cl | $CF_3$ | Cl |
| A-1169 | $CH_3$ | F | Cl | $CF_3$ | Cl |
| A-1170 | $CH_2CH_3$ | F | Cl | $CF_3$ | Cl |
| A-1171 | H | F | CHF2 | $CF_3$ | Cl |
| A-1172 | F | F | CHF2 | $CF_3$ | Cl |
| A-1173 | Cl | F | CHF2 | $CF_3$ | Cl |
| A-1174 | $CH_3$ | F | CHF2 | $CF_3$ | Cl |
| A-1175 | $CH_2CH_3$ | F | CHF2 | $CF_3$ | Cl |
| A-1176 | H | F | $CF_3$ | $CF_3$ | Cl |
| A-1177 | F | F | $CF_3$ | $CF_3$ | Cl |
| A-1178 | C1 | F | $CF_3$ | $CF_3$ | Cl |
| A-1179 | $CH_3$ | F | $CF_3$ | $CF_3$ | Cl |
| A-1180 | $CH_2CH_3$ | F | $CF_3$ | $CF_3$ | Cl |
| A-1181 | H | F | $SCHF_2$ | $CF_3$ | Cl |
| A-1182 | F | F | $SCHF_2$ | $CF_3$ | Cl |
| A-1183 | Cl | F | $SCHF_2$ | $CF_3$ | Cl |
| A-1184 | $CH_3$ | F | $SCHF_2$ | $CF_3$ | Cl |
| A-1185 | $CH_2CH_3$ | F | $SCHF_2$ | $CF_3$ | Cl |
| A-1186 | H | F | $SCF_3$ | $CF_3$ | Cl |
| A-1187 | F | F | $SCF_3$ | $CF_3$ | Cl |
| A-1188 | Cl | F | $SCF_3$ | $CF_3$ | Cl |
| A-1189 | $CH_3$ | F | $SCF_3$ | $CF_3$ | Cl |
| A-1190 | $CH_2CH_3$ | F | $SCF_3$ | $CF_3$ | Cl |

Tabelle A (fortgesetzt)

| Nr. | $R^1$ | $R^2$ | $R^{11}$ | $R^{12}$ | $R^{13}$ |
|---|---|---|---|---|---|
| A-1191 | H | F | $OCHF_2$ | $CF_3$ | Cl |
| A-1192 | F | F | $OCHF_2$ | $CF_3$ | Cl |
| A-1193 | Cl | F | $OCHF_2$ | $CF_3$ | Cl |
| A-1194 | $CH_3$ | F | $OCHF_2$ | $CF_3$ | Cl |
| A-1195 | $CH_2CH_3$ | F | $OCHF_2$ | $CF_3$ | Cl |
| A-1196 | H | F | $OCF_3$ | $CF_3$ | Cl |
| A-1197 | F | F | $OCF_3$ | $CF_3$ | Cl |
| A-1198 | C1 | F | $OCF_3$ | $CF_3$ | Cl |
| A-1199 | $CH_3$ | F | $OCF_3$ | $CF_3$ | Cl |
| A-1200 | $CH_2CH_3$ | F | $OCF_3$ | $CF_3$ | Cl |
| A-1201 | H | Cl | F | H | H |
| A-1202 | F | Cl | F | H | H |
| A-1203 | Cl | Cl | F | H | H |
| A-1204 | $CH_3$ | Cl | F | H | H |
| A-1205 | $CH_2CH_3$ | Cl | F | H | H |
| A-1206 | H | Cl | Cl | H | H |
| A-1207 | F | Cl | Cl | H | H |
| A-1208 | Cl | Cl | Cl | H | H |
| A-1209 | $CH_3$ | Cl | Cl | H | H |
| A-1210 | $CH_2CH_3$ | Cl | Cl | H | H |
| A-1211 | H | Cl | CHF2 | H | H |
| A-1212 | F | Cl | CHF2 | H | H |
| A-1213 | Cl | Cl | CHF2 | H | H |
| A-1214 | $CH_3$ | Cl | CHF2 | H | H |
| A-1215 | $CH_2CH_3$ | Cl | CHF2 | H | H |
| A-1216 | H | Cl | $CF_3$ | H | H |
| A-1217 | F | Cl | $CF_3$ | H | H |
| A-1218 | Cl | Cl | $CF_3$ | H | H |
| A-1219 | $CH_3$ | Cl | $CF_3$ | H | H |
| A-1220 | $CH_2CH_3$ | Cl | $CF_3$ | H | H |
| A-1221 | H | Cl | $SCHF_2$ | H | H |
| A-1222 | F | Cl | $SCHF_2$ | H | H |
| A-1223 | Cl | Cl | $SCHF_2$ | H | H |
| A-1224 | $CH_3$ | Cl | $SCHF_2$ | H | H |
| A-1225 | $CH_2CH_3$ | Cl | $SCHF_2$ | H | H |
| A-1226 | H | Cl | $SCF_3$ | H | H |
| A-1227 | F | Cl | $SCF_3$ | H | H |
| A-1228 | Cl | Cl | $SCF_3$ | H | H |

Tabelle A (fortgesetzt)

| Nr. | $R^1$ | $R^2$ | $R^{11}$ | $R^{12}$ | $R^{13}$ |
|---|---|---|---|---|---|
| A-1229 | $CH_3$ | Cl | $SCF_3$ | H | H |
| A-1230 | $CH_2CH_3$ | Cl | $SCF_3$ | H | H |
| A-1231 | H | Cl | $OCHF_2$ | H | H |
| A-1232 | F | Cl | $OCHF_2$ | H | H |
| A-1233 | Cl | Cl | $OCHF_2$ | H | H |
| A-1234 | $CH_3$ | Cl | $OCHF_2$ | H | H |
| A-1235 | $CH_2CH_3$ | Cl | $OCHF_2$ | H | H |
| A-1236 | H | Cl | $OCF_3$ | H | H |
| A-1237 | F | Cl | $OCF_3$ | H | H |
| A-1238 | Cl | Cl | $OCF_3$ | H | H |
| A-1239 | $CH_3$ | Cl | $OCF_3$ | H | H |
| A-1240 | $CH_2CH_3$ | Cl | $OCF_3$ | H | H |
| A-1241 | H | Cl | F | F | H |
| A-1242 | F | Cl | F | F | H |
| A-1243 | Cl | Cl | F | F | H |
| A-1244 | $CH_3$ | Cl | F | F | H |
| A-1245 | $CH_2CH_3$ | Cl | F | F | H |
| A-1246 | H | Cl | Cl | F | H |
| A-1247 | F | Cl | Cl | F | H |
| A-1248 | Cl | Cl | Cl | F | H |
| A-1249 | $CH_3$ | Cl | Cl | F | H |
| A-1250 | $CH_2CH_3$ | Cl | Cl | F | H |
| A-1251 | H | Cl | CHF2 | F | H |
| A-1252 | F | Cl | CHF2 | F | H |
| A-1253 | Cl | Cl | CHF2 | F | H |
| A-1254 | $CH_3$ | Cl | CHF2 | F | H |
| A-1255 | $CH_2CH_3$ | Cl | CHF2 | F | H |
| A-1256 | H | Cl | $CF_3$ | F | H |
| A-1257 | F | Cl | $CF_3$ | F | H |
| A-1258 | Cl | Cl | $CF_3$ | F | H |
| A-1259 | $CH_3$ | Cl | $CF_3$ | F | H |
| A-1260 | $CH_2CH_3$ | Cl | $CF_3$ | F | H |
| A-1261 | H | Cl | $SCHF_2$ | F | H |
| A-1262 | F | Cl | $SCHF_2$ | F | H |
| A-1263 | Cl | Cl | $SCHF_2$ | F | H |
| A-1264 | $CH_3$ | Cl | $SCHF_2$ | F | H |
| A-1265 | $CH_2CH_3$ | Cl | $SCHF_2$ | F | H |
| A-1266 | H | Cl | $SCF_3$ | F | H |

Tabelle A (fortgesetzt)

| Nr. | $R^1$ | $R^2$ | $R^{11}$ | $R^{12}$ | $R^{13}$ |
|---|---|---|---|---|---|
| A-1267 | F | Cl | $SCF_3$ | F | H |
| A-1268 | Cl | Cl | $SCF_3$ | F | H |
| A-1269 | $CH_3$ | Cl | $SCF_3$ | F | H |
| A-1270 | $CH_2CH_3$ | Cl | $SCF_3$ | F | H |
| A-1271 | H | Cl | $OCHF_2$ | F | H |
| A-1272 | F | Cl | $OCHF_2$ | F | H |
| A-1273 | Cl | Cl | $OCHF_2$ | F | H |
| A-1274 | $CH_3$ | Cl | $OCHF_2$ | F | H |
| A-1275 | $CH_2CH_3$ | Cl | $OCHF_2$ | F | H |
| A-1276 | H | Cl | $OCF_3$ | F | H |
| A-1277 | F | Cl | $OCF_3$ | F | H |
| A-1278 | Cl | Cl | $OCF_3$ | F | H |
| A-1279 | $CH_3$ | Cl | $OCF_3$ | F | H |
| A-1280 | $CH_2CH_3$ | Cl | $OCF_3$ | F | H |
| A-1281 | H | Cl | F | Cl | H |
| A-1282 | F | Cl | F | Cl | H |
| A-1283 | Cl | Cl | F | Cl | H |
| A-1284 | $CH_3$ | Cl | F | Cl | H |
| A-1285 | $CH_2CH_3$ | Cl | F | Cl | H |
| A-1286 | H | Cl | Cl | Cl | H |
| A-1287 | F | Cl | Cl | Cl | H |
| A-1288 | Cl | Cl | Cl | Cl | H |
| A-2289 | $CH_3$ | Cl | Cl | Cl | H |
| A-1290 | $CH_2CH_3$ | Cl | Cl | Cl | H |
| A-1291 | H | Cl | CHF2 | Cl | H |
| A-1292 | F | Cl | CHF2 | Cl | H |
| A-1293 | Cl | Cl | CHF2 | Cl | H |
| A-1294 | $CH_3$ | Cl | CHF2 | Cl | H |
| A-1295 | $CH_2CH_3$ | Cl | CHF2 | Cl | H |
| A-1296 | H | Cl | $CF_3$ | Cl | H |
| A-1297 | F | Cl | $CF_3$ | Cl | H |
| A-1298 | Cl | Cl | $CF_3$ | Cl | H |
| A-1299 | $CH_3$ | Cl | $CF_3$ | Cl | H |
| A-1300 | $CH_2CH_3$ | Cl | $CF_3$ | Cl | H |
| A-1301 | H | Cl | $SCHF_2$ | Cl | H |
| A-1302 | F | Cl | $SCHF_2$ | Cl | H |
| A-1303 | Cl | Cl | $SCHF_2$ | Cl | H |
| A-1304 | $CH_3$ | Cl | $SCHF_2$ | Cl | H |

Tabelle A (fortgesetzt)

| Nr. | $R^1$ | $R^2$ | $R^{11}$ | $R^{12}$ | $R^{13}$ |
|---|---|---|---|---|---|
| A-1305 | $CH_2CH_3$ | Cl | $SCHF_2$ | Cl | H |
| A-1306 | H | Cl | $SCF_3$ | Cl | H |
| A-1307 | F | Cl | $SCF_3$ | Cl | H |
| A-1308 | Cl | Cl | $SCF_3$ | Cl | H |
| A-1309 | $CH_3$ | Cl | $SCF_3$ | Cl | H |
| A-1310 | $CH_2CH_3$ | Cl | $SCF_3$ | Cl | H |
| A-1311 | H | Cl | $OCHF_2$ | Cl | H |
| A-1312 | F | Cl | $OCHF_2$ | Cl | H |
| A-1313 | Cl | Cl | $OCHF_2$ | Cl | H |
| A-1314 | $CH_3$ | Cl | $OCHF_2$ | Cl | H |
| A-1315 | $CH_2CH_3$ | Cl | $OCHF_2$ | Cl | H |
| A-1326 | H | Cl | $OCF_3$ | Cl | H |
| A-1317 | F | Cl | $OCF_3$ | Cl | H |
| A-1318 | Cl | Cl | $OCF_3$ | Cl | H |
| A-1319 | $CH_3$ | Cl | $OCF_3$ | Cl | H |
| A-1320 | $CH_2CH_3$ | Cl | $OCF_3$ | Cl | H |
| A-1321 | H | Cl | F | $CHF_2$ | H |
| A-1322 | F | Cl | F | $CHF_2$ | H |
| A-1323 | Cl | Cl | F | $CHF_2$ | H |
| A-1324 | $CH_3$ |  | F | $CHF_2$ | H |
| A-1325 | $CH_2CH_3$ | Cl | F | $CHF_2$ | H |
| A-1326 | H | Cl | Cl | $CHF_2$ | H |
| A-1327 | F | Cl | Cl | $CHF_2$ | H |
| A-1328 | Cl | Cl | Cl | $CHF_2$ | H |
| A-1329 | $CH_3$ | Cl | Cl | $CHF_2$ | H |
| A-1330 | $CH_2CH_3$ | Cl | Cl | $CHF_2$ | H |
| A-1331 | H | Cl | CHF2 | $CHF_2$ | H |
| A-1332 | F | Cl | CHF2 | $CHF_2$ | H |
| A-1333 | Cl | Cl | CHF2 | $CHF_2$ | H |
| A-1334 | $CH_3$ | Cl | CHF2 | $CHF_2$ | H |
| A-1335 | $CH_2CH_3$ | Cl | CHF2 | $CHF_2$ | H |
| A-1336 | H | Cl | $CF_3$ | $CHF_2$ | H |
| A-1337 | F | Cl | $CF_3$ | $CHF_2$ | H |
| A-1338 | Cl | Cl | $CF_3$ | $CHF_2$ | H |
| A-1339 | $CH_3$ | Cl | $CF_3$ | $CHF_2$ | H |
| A-1340 | $CH_2CH_3$ | Cl | $CF_3$ | $CHF_2$ | H |
| A-1341 | H | Cl | $SCHF_2$ | $CHF_2$ | H |
| A-1342 | F | Cl | $SCHF_2$ | $CHF_2$ | H |

Tabelle A (fortgesetzt)

| Nr. | $R^1$ | $R^2$ | $R^{11}$ | $R^{12}$ | $R^{13}$ |
|---|---|---|---|---|---|
| A-1343 | Cl | Cl | $SCHF_2$ | $CHF_2$ | H |
| A-1344 | $CH_3$ | Cl | $SCHF_2$ | $CHF_2$ | H |
| A-1345 | $CH_2CH_3$ | Cl | $SCHF_2$ | $CHF_2$ | H |
| A-1346 | H | Cl | $SCF_3$ | $CHF_2$ | H |
| A-1347 | F | Cl | $SCF_3$ | $CHF_2$ | H |
| A-1348 | Cl | Cl | $SCF_3$ | $CHF_2$ | H |
| A-1349 | $CH_3$ | Cl | $SCF_3$ | $CHF_2$ | H |
| A-1350 | $CH_2CH_3$ | Cl | $SCF_3$ | $CHF_2$ | H |
| A-1351 | H | Cl | $OCHF_2$ | $CHF_2$ | H |
| A-1352 | F | Cl | $OCHF_2$ | $CHF_2$ | H |
| A-1353 | Cl | Cl | $OCHF_2$ | $CHF_2$ | H |
| A-1354 | $CH_3$ | Cl | $OCHF_2$ | $CHF_2$ | H |
| A-1355 | $CH_2CH_3$ | Cl | $OCHF_2$ | $CHF_2$ | H |
| A-1356 | H | Cl | $OCF_3$ | $CHF_2$ | H |
| A-1357 | F | Cl | $OCF_3$ | $CHF_2$ | H |
| A-1358 | Cl | Cl | $OCF_3$ | $CHF_2$ | H |
| A-1359 | $CH_3$ | Cl | $OCF_3$ | $CHF_2$ | H |
| A-1360 | $CH_2CH_3$ | Cl | $OCF_3$ | $CHF_2$ | H |
| A-1361 | H | Cl | F | $CF_3$ | H |
| A-1362 | F | Cl | F | $CF_3$ | H |
| A-1363 | Cl | Cl | F | $CF_3$ | H |
| A-1364 | $CH_3$ | Cl | F | $CF_3$ | H |
| A-1365 | $CH_2CH_3$ | Cl | F | $CF_3$ | H |
| A-1366 | H | Cl | Cl | $CF_3$ | H |
| A-1367 | F | Cl | Cl | $CF_3$ | H |
| A-1368 | Cl | Cl | Cl | $CF_3$ | H |
| A-1369 | $CH_3$ | Cl | Cl | $CF_3$ | H |
| A-1370 | $CH_2CH_3$ | Cl | Cl | $CF_3$ | H |
| A-1371 | H | Cl | CHF2 | $CF_3$ | H |
| A-1372 | F | Cl | CHF2 | $CF_3$ | H |
| A-1373 | Cl | Cl | CHF2 | $CF_3$ | H |
| A-1374 | $CH_3$ | Cl | CHF2 | $CF_3$ | H |
| A-1375 | $CH_2CH_3$ | Cl | CHF2 | $CF_3$ | H |
| A-1376 | H | Cl | $CF_3$ | $CF_3$ | H |
| A-1377 | F | Cl | $CF_3$ | $CF_3$ | H |
| A-1378 | Cl | Cl | $CF_3$ | $CF_3$ | H |
| A-1379 | $CH_3$ | Cl | $CF_3$ | $CF_3$ | H |
| A-1380 | $CH_2CH_3$ | Cl | $CF_3$ | $CF_3$ | H |

Tabelle A (fortgesetzt)

| Nr. | $R^1$ | $R^2$ | $R^{11}$ | $R^{12}$ | $R^{13}$ |
|---|---|---|---|---|---|
| A-1381 | H | Cl | $SCHF_2$ | $CF_3$ | H |
| A-1382 | F | Cl | $SCHF_2$ | $CF_3$ | H |
| A-1383 | Cl | Cl | $SCHF_2$ | $CF_3$ | H |
| A-1384 | $CH_3$ | Cl | $SCHF_2$ | $CF_3$ | H |
| A-1385 | $CH_2CH_3$ | Cl | $SCHF_2$ | $CF_3$ | H |
| A-1386 | H | Cl | $SCF_3$ | $CF_3$ | H |
| A-1387 | F | Cl | $SCF_3$ | $CF_3$ | H |
| A-1388 | Cl | Cl | $SCF_3$ | $CF_3$ | H |
| A-1389 | $CH_3$ | Cl | $SCF_3$ | $CF_3$ | H |
| A-1390 | $CH_2CH_3$ | Cl | $SCF_3$ | $CF_3$ | H |
| A-1391 | H | Cl | $OCHF_2$ | $CF_3$ | H |
| A-1392 | F | Cl | $OCHF_2$ | $CF_3$ | H |
| A-1393 | Cl | Cl | $OCHF_2$ | $CF_3$ | H |
| A-1394 | $CH_3$ | Cl | $OCHF_2$ | $CF_3$ | H |
| A-1395 | $CH_2CH_3$ | Cl | $OCHF_2$ | $CF_3$ | H |
| A-1396 | H | Cl | $OCF_3$ | $CF_3$ | H |
| A-1397 | F | Cl | $OCF_3$ | $CF_3$ | H |
| A-1398 | Cl | Cl | $OCF_3$ | $CF_3$ | H |
| A-1399 | $CH_3$ | Cl | $OCF_3$ | $CF_3$ | H |
| A-1400 | $CH_2CH_3$ | Cl | $OCF_3$ | $CF_3$ | H |
| A-1401 | H | Cl | F | H | F |
| A-1402 | F |  | F | H | F |
| A-1403 | Cl | Cl | F | H | F |
| A-1404 | $CH_3$ | Cl | F | H | F |
| A-1405 | $CH_2CH_3$ | Cl | F | H | F |
| A-1406 | H | Cl | Cl | H | F |
| A-1407 | F | Cl | Cl | H | F |
| A-1408 | Cl | Cl | Cl | H | F |
| A-1409 | $CH_3$ | Cl | Cl | H | F |
| A-1410 | $CH_2CH_3$ | Cl | Cl | H | F |
| A-1411 | H | Cl | CHF2 | H | F |
| A-1412 | F | Cl | CHF2 | H | F |
| A-1413 | Cl | Cl | CHF2 | H | F |
| A-1414 | $CH_3$ | Cl | CHF2 | H | F |
| A-1415 | $CH_2CH_3$ | Cl | CHF2 | H | F |
| A-1416 | H | Cl | $CF_3$ | H | F |
| A-1417 | F | Cl | $CF_3$ | H | F |
| A-1418 | Cl | Cl | $CF_3$ | H | F |

Tabelle A (fortgesetzt)

| Nr. | $R^1$ | $R^2$ | $R^{11}$ | $R^{12}$ | $R^{13}$ |
|---|---|---|---|---|---|
| A-1419 | $CH_3$ | Cl | $CF_3$ | H | F |
| A-1420 | $CH_2CH_3$ | Cl | $CF_3$ | H | F |
| A-1421 | H | Cl | $SCHF_2$ | H | F |
| A-1422 | F | Cl | $SCHF_2$ | H | F |
| A-1423 | Cl | Cl | $SCHF_2$ | H | F |
| A-1424 | $CH_3$ | Cl | $SCHF_2$ | H | F |
| A-1425 | $CH_2CH_3$ | Cl | $SCHF_2$ | H | F |
| A-1426 | H | Cl | $SCF_3$ | H | F |
| A-1427 | F | Cl | $SCF_3$ | H | F |
| A-1428 | Cl | Cl | $SCF_3$ | H | F |
| A-1429 | $CH_3$ | Cl | $SCF_3$ | H | F |
| A-1430 | $CH_2CH_3$ | Cl | $SCF_3$ | H | F |
| A-1431 | H | Cl | $OCHF_2$ | H | F |
| A-1432 | F | Cl | $OCHF_2$ | H | F |
| A-1433 | Cl | Cl | $OCHF_2$ | H | F |
| A-1434 | $CH_3$ | Cl | $OCHF_2$ | H | F |
| A-1435 | $CH_2CH_3$ | Cl | $OCHF_2$ | H | F |
| A-1436 | H | Cl | $OCF_3$ | H | F |
| A-1437 | F | Cl | $OCF_3$ | H | F |
| A-1438 | Cl | Cl | $OCF_3$ | H | F |
| A-1439 | $CH_3$ | Cl | $OCF_3$ | H | F |
| A-1440 | $CH_2CH_3$ | Cl | $OCF_3$ | H | F |
| A-1441 | H | Cl | F | F | F |
| A-1442 | F | Cl | F | F | F |
| A-1443 | Cl | Cl | F | F | F |
| A-1444 | $CH_3$ | Cl | F | F | F |
| A-1445 | $CH_2CH_3$ | Cl | F | F | F |
| A-1446 | H | Cl | Cl | F | F |
| A-1447 | F | Cl | Cl | F | F |
| A-1448 | Cl | Cl | Cl | F | F |
| A-1449 | $CH_3$ | Cl | Cl | F | F |
| A-1450 | $CH_2CH_3$ | Cl | Cl | F | F |
| A-1451 | H | Cl | CHF2 | F | F |
| A-1452 | F | Cl | CHF2 | F | F |
| A-1453 | Cl | Cl | CHF2 | F | F |
| A-1454 | $CH_3$ | Cl | CHF2 | F | F |
| A-1455 | $CH_2CH_3$ | Cl | CHF2 | F | F |
| A-1456 | H | Cl | $CF_3$ | F | F |

Tabelle A (fortgesetzt)

| Nr. | $R^1$ | $R^2$ | $R^{11}$ | $R^{12}$ | $R^{13}$ |
|---|---|---|---|---|---|
| A-1457 | F | Cl | $CF_3$ | F | F |
| A-1458 | Cl | Cl | $CF_3$ | F | F |
| A-1459 | $CH_3$ | Cl | $CF_3$ | F | F |
| A-1460 | $CH_2CH_3$ | Cl | $CF_3$ | F | F |
| A-1461 | H | Cl | $SCHF_2$ | F | F |
| A-1462 | F | Cl | $SCHF_2$ | F | F |
| A-1463 | Cl | Cl | $SCHF_2$ | F | F |
| A-1464 | $CH_3$ | Cl | $SCHF_2$ | F | F |
| A-1465 | $CH_2CH_3$ | Cl | $SCHF_2$ | F | F |
| A-1466 | H | Cl | $SCF_3$ | F | F |
| A-1467 | F | Cl | $SCF_3$ | F | F |
| A-1468 | Cl | Cl | $SCF_3$ | F | F |
| A-1469 | $CH_3$ | Cl | $SCF_3$ | F | F |
| A-1470 | $CH_2CH_3$ | Cl | $SCF_3$ | F | F |
| A-1471 | H | Cl | $OCHF_2$ | F | F |
| A-1472 | F | Cl | $OCHF_2$ | F | F |
| A-1473 | Cl | Cl | $OCHF_2$ | F | F |
| A-1474 | $CH_3$ | Cl | $OCHF_2$ | F | F |
| A-1475 | $CH_2CH_3$ | Cl | $OCHF_2$ | F | F |
| A-2476 | H | Cl | $OCF_3$ | F | F |
| A-1477 | F | Cl | $OCF_3$ | F | F |
| A-1478 | Cl | Cl | $OCF_3$ | F | F |
| A-1479 | $CH_3$ | Cl | $OCF_3$ | F | F |
| A-1480 | $CH_2CH_3$ | Cl | $OCF_3$ | F | F |
| A-1481 | H | Cl | F | Cl | F |
| A-1482 | F | Cl | F | Cl | F |
| A-1483 | Cl | Cl | F | Cl | F |
| A-1484 | $CH_3$ | Cl | F | Cl | F |
| A-1485 | $CH_2CH_3$ | Cl | F | Cl | F |
| A-1486 | H | Cl | Cl | Cl | F |
| A-1487 | F | Cl | Cl | Cl | F |
| A-1488 | Cl | Cl | Cl | Cl | F |
| A-1489 | $CH_3$ | Cl | Cl | Cl | F |
| A-1490 | $CH_2CH_3$ | Cl | Cl | Cl | F |
| A-1491 | H | Cl | $CHF_2$ | Cl | F |
| A-1492 | F | Cl | $CHF_2$ | Cl | F |
| A-1493 | Cl | Cl | $CHF_2$ | Cl | F |
| A-1494 | $CH_3$ | Cl | $CHF_2$ | Cl | F |

Tabelle A (fortgesetzt)

| Nr. | $R^1$ | $R^2$ | $R^{11}$ | $R^{12}$ | $R^{13}$ |
|---|---|---|---|---|---|
| A-1495 | $CH_2CH_3$ | Cl | $CHF_2$ | Cl | F |
| A-1496 | H | Cl | $CF_3$ | Cl | F |
| A-1497 | F | Cl | $CF_3$ | Cl | F |
| A-1498 | Cl | Cl | $CF_3$ | Cl | F |
| A-1499 | $CH_3$ | Cl | $CF_3$ | Cl | F |
| A-1500 | $CH_2CH_3$ | Cl | $CF_3$ | Cl | F |
| A-1501 | H | Cl | $SCHF_2$ | Cl | F |
| A-1502 | F | Cl | $SCHF_2$ | Cl | F |
| A-1503 | Cl | Cl | $SCHF_2$ | Cl | F |
| A-1504 | $CH_3$ | Cl | $SCHF_2$ | Cl | F |
| A-1505 | $CH_2CH_3$ | Cl | $SCHF_2$ | Cl | F |
| A-1506 | H | Cl | $SCF_3$ | Cl | F |
| A-1507 | F | Cl | $SCF_3$ | Cl | F |
| A-1508 | Cl | Cl | $SCF_3$ | Cl | F |
| A-1509 | $CH_3$ | Cl | $SCF_3$ | Cl | F |
| A-1510 | $CH_2CH_3$ | Cl | $SCF_3$ | Cl | F |
| A-1511 | H | Cl | $OCHF_2$ | Cl | F |
| A-1512 | F | Cl | $OCHF_2$ | Cl | F |
| A-1513 | Cl | Cl | $OCHF_2$ | Cl | F |
| A-1514 | $CH_3$ | Cl | $OCHF_2$ | Cl | F |
| A-1515 | $CH_2CH_3$ | Cl | $OCHF_2$ | Cl | F |
| A-1516 | H | Cl | $OCF_3$ | Cl | F |
| A-1517 | F | Cl | $OCF_3$ | Cl | F |
| A-1518 | Cl | Cl | $OCF_3$ | Cl | F |
| A-1519 | $CH_3$ | Cl | $OCF_3$ | Cl | F |
| A-1520 | $CH_2CH_3$ | Cl | $OCF_3$ | Cl | F |
| A-1521 | H | Cl | F | $CHF_2$ | F |
| A-1522 | F | Cl | F | $CHF_2$ | F |
| A-1523 | Cl | Cl | F | $CHF_2$ | F |
| A-1524 | $CH_3$ | Cl | F | $CHF_2$ | F |
| A-1525 | $CH_2CH_3$ | Cl | F | $CHF_2$ | F |
| A-1526 | H | Cl | Cl | $CHF_2$ | F |
| A-1527 | F | Cl | Cl | $CHF_2$ | F |
| A-1528 | Cl | Cl | Cl | $CHF_2$ | F |
| A-1529 | $CH_3$ | Cl | Cl | $CHF_2$ | F |
| A-1530 | $CH_2CH_3$ | Cl | Cl | $CHF_2$ | F |
| A-1531 | H | Cl | $CHF_2$ | $CHF_2$ | F |
| A-1532 | F | Cl | $CHF_2$ | $CHF_2$ | F |

Tabelle A (fortgesetzt)

| Nr. | $R^1$ | $R^2$ | $R^{11}$ | $R^{12}$ | $R^{13}$ |
|---|---|---|---|---|---|
| A-1533 | Cl | Cl | $CHF_2$ | $CHF_2$ | F |
| A-1534 | $CH_3$ | Cl | $CHF_2$ | $CHF_2$ | F |
| A-1535 | $CH_2CH_3$ | Cl | $CHF_2$ | $CHF_2$ | F |
| A-1536 | H | Cl | $CF_3$ | $CHF_2$ | F |
| A-1537 | F | Cl | $CF_3$ | $CHF_2$ | F |
| A-1538 | Cl | Cl | $CF_3$ | $CHF_2$ | F |
| A-1539 | $CH_3$ | Cl | $CF_3$ | $CHF_2$ | F |
| A-1540 | $CH_2CH_3$ | Cl | $CF_3$ | $CHF_2$ | F |
| A-1541 | H | Cl | $SCHF_2$ | $CHF_2$ | F |
| A-1542 | F | Cl | $SCHF_2$ | $CHF_2$ | F |
| A-1543 | Cl | Cl | $SCHF_2$ | $CHF_2$ | F |
| A-1544 | $CH_3$ | Cl | $SCHF_2$ | $CHF_2$ | F |
| A-1545 | $CH_2CH_3$ | Cl | $SCHF_2$ | $CHF_2$ | F |
| A-1546 | H | Cl | $SCF_3$ | $CHF_2$ | F |
| A-1547 | F | Cl | $SCF_3$ | $CHF_2$ | F |
| A-1548 | Cl | Cl | $SCF_3$ | $CHF_2$ | F |
| A-1549 | $CH_3$ | Cl | $SCF_3$ | $CHF_2$ | F |
| A-1550 | $CH_2CH_3$ | Cl | $SCF_3$ | $CHF_2$ | F |
| A-1551 | H | Cl | $OCHF_2$ | $CHF_2$ | F |
| A-1552 | F | Cl | $OCHF_2$ | $CHF_2$ | F |
| A-1553 | Cl | Cl | $OCHF_2$ | $CHF_2$ | F |
| A-1554 | $CH_3$ | Cl | $OCHF_2$ | $CHF_2$ | F |
| A-1555 | $CH_2CH_3$ | Cl | $OCHF_2$ | $CHF_2$ | F |
| A-1556 | H | Cl | $OCF_3$ | $CHF_2$ | F |
| A-1557 | F | Cl | $OCF_3$ | $CHF_2$ | F |
| A-1558 | Cl | Cl | $OCF_3$ | $CHF_2$ | F |
| A-1559 | $CH_3$ | Cl | $OCF_3$ | $CHF_2$ | F |
| A-1560 | $CH_2CH_3$ | Cl | $OCF_3$ | $CHF_2$ | F |
| A-1561 | H | Cl | F | $CF_3$ | F |
| A-1562 | F | Cl | F | $CF_3$ | F |
| A-1563 | Cl | Cl | F | $CF_3$ | F |
| A-1564 | $CH_3$ | Cl | F | $CF_3$ | F |
| A-1565 | $CH_2CH_3$ | Cl | F | $CF_3$ | F |
| A-1566 | H | Cl | Cl | $CF_3$ | F |
| A-1567 | F | Cl | Cl | $CF_3$ | F |
| A-1568 | Cl | Cl | Cl | $CF_3$ | F |
| A-1569 | $CH_3$ | Cl | Cl | $CF_3$ | F |
| A-1570 | $CH_2CH_3$ | Cl | Cl | $CF_3$ | F |

Tabelle A (fortgesetzt)

| Nr. | $R^1$ | $R^2$ | $R^{11}$ | $R^{12}$ | $R^{13}$ |
|---|---|---|---|---|---|
| A-1571 | H | Cl | $CHF_2$ | $CF_3$ | F |
| A-1572 | F | Cl | $CHF_2$ | $CF_3$ | F |
| A-1573 | Cl | Cl | $CHF_2$ | $CF_3$ | F |
| A-1574 | $CH_3$ | Cl | $CHF_2$ | $CF_3$ | F |
| A-1575 | $CH_2CH_3$ | Cl | $CHF_2$ | $CF_3$ | F |
| A-1576 | H | Cl | $CF_3$ | $CF_3$ | F |
| A-1577 | F | Cl | $CF_3$ | $CF_3$ | F |
| A-1578 | Cl | Cl | $CF_3$ | $CF_3$ | F |
| A-1579 | $CH_3$ | Cl | $CF_3$ | $CF_3$ | F |
| A-1580 | $CH_2CH_3$ | Cl | $CF_3$ | $CF_3$ | F |
| A-1581 | H | Cl | $SCHF_2$ | $CF_3$ | F |
| A-1582 | F | Cl | $SCHF_2$ | $CF_3$ | F |
| A-1583 | Cl | Cl | $SCHF_2$ | $CF_3$ | F |
| A-1584 | $CH_3$ | Cl | $SCHF_2$ | $CF_3$ | F |
| A-1585 | $CH_2CH_3$ | Cl | $SCHF_2$ | $CF_3$ | F |
| A-1586 | H | Cl | $SCF_3$ | $CF_3$ | F |
| A-1587 | F | Cl | $SCF_3$ | $CF_3$ | F |
| A-1588 | Cl | Cl | $SCF_3$ | $CF_3$ | F |
| A-1589 | $CH_3$ | Cl | $SCF_3$ | $CF_3$ | F |
| A-1590 | $CH_2CH_3$ | Cl | $SCF_3$ | $CF_3$ | F |
| A-1591 | H | Cl | $OCHF_2$ | $CF_3$ | F |
| A-1592 | F | Cl | $OCHF_2$ | $CF_3$ | F |
| A-1593 | Cl | Cl | $OCHF_2$ | $CF_3$ | F |
| A-1594 | $CH_3$ | Cl | $OCHF_2$ | $CF_3$ | F |
| A-1595 | $CH_2CH_3$ | Cl | $OCHF_2$ | $CF_3$ | F |
| A-1596 | H | Cl | $OCF_3$ | $CF_3$ | F |
| A-1597 | F | Cl | $OCF_3$ | $CF_3$ | F |
| A-1598 | Cl | Cl | $OCF_3$ | $CF_3$ | F |
| A-1599 | $CH_3$ | Cl | $OCF_3$ | $CF_3$ | F |
| A-1600 | $CH_2CH_3$ | Cl | $OCF_3$ | $CF_3$ | F |
| A-1601 | H | Cl | F | H | Cl |
| A-1602 | F | Cl | F | H | Cl |
| A-1603 | Cl | Cl | F | H | Cl |
| A-1604 | $CH_3$ | Cl | F | H | Cl |
| A-1605 | $CH_2CH_3$ | Cl | F | H | Cl |
| A-1606 | H | Cl | Cl | H | Cl |
| A-1607 | F | Cl | Cl | H | Cl |
| A-1608 | Cl | Cl | Cl | H | Cl |

Tabelle A (fortgesetzt)

| Nr. | $R^1$ | $R^2$ | $R^{11}$ | $R^{12}$ | $R^{13}$ |
|---|---|---|---|---|---|
| A-1609 | $CH_3$ | Cl | Cl | H | Cl |
| A-1610 | $CH_2CH_3$ | Cl | Cl | H | Cl |
| A-1611 | H | Cl | $CHF_2$ | H | Cl |
| A-2612 | F | Cl | $CHF_2$ | H | Cl |
| A-1613 | Cl | Cl | $CHF_2$ | H | Cl |
| A-1614 | $CH_3$ | Cl | $CHF_2$ | H | Cl |
| A-1615 | $CH_2CH_3$ | Cl | $CHF_2$ | H | Cl |
| A-1616 | H | Cl | $CF_3$ | H | Cl |
| A-1617 | F | Cl | $CF_3$ | H | Cl |
| A-1618 | Cl | Cl | $CF_3$ | H | Cl |
| A-1619 | $CH_3$ | Cl | $CF_3$ | H | Cl |
| A-1620 | $CH_2CH_3$ | Cl | $CF_3$ | H | Cl |
| A-1621 | H | Cl | $SCHF_2$ | H | Cl |
| A-1622 | F | Cl | $SCHF_2$ | H | Cl |
| A-1623 | Cl | Cl | $SCHF_2$ | H | Cl |
| A-1624 | $CH_3$ | Cl | $SCHF_2$ | H | Cl |
| A-1625 | $CH_2CH_3$ | Cl | $SCHF_2$ | H | Cl |
| A-1626 | H | Cl | $SCF_3$ | H | Cl |
| A-1627 | F | Cl | $SCF_3$ | H | Cl |
| A-1628 | Cl | Cl | $SCF_3$ | H | Cl |
| A-1629 | $CH_3$ | Cl | $SCF_3$ | H | Cl |
| A-1630 | $CH_2CH_3$ | Cl | $SCF_3$ | H | Cl |
| A-1631 | H | Cl | $OCHF_2$ | H | Cl |
| A-1632 | F | Cl | $OCHF_2$ | H | Cl |
| A-1633 | Cl | Cl | $OCHF_2$ | H | Cl |
| A-1634 | $CH_3$ | Cl | $OCHF_2$ | H | Cl |
| A-1635 | $CH_2CH_3$ | Cl | $OCHF_2$ | H | Cl |
| A-1636 | H | Cl | $OCF_3$ | H | Cl |
| A-1637 | F | Cl | $OCF_3$ | H | Cl |
| A-1638 | Cl | Cl | $OCF_3$ | H | Cl |
| A-1639 | $CH_3$ | Cl | $OCF_3$ | H | Cl |
| A-1640 | $CH_2CH_3$ | Cl | $OCF_3$ | H | Cl |
| A-1641 | H | Cl | F | F | Cl |
| A-1642 | F | Cl | F | F | Cl |
| A-1643 | Cl | Cl | F | F | Cl |
| A-1644 | $CH_3$ | Cl | F | F | Cl |
| A-1645 | $CH_2CH_3$ | Cl | F | F | Cl |
| A-1646 | H | Cl | Cl | F | Cl |

Tabelle A (fortgesetzt)

| Nr. | $R^1$ | $R^2$ | $R^{11}$ | $R^{12}$ | $R^{13}$ |
|---|---|---|---|---|---|
| A-1647 | F | Cl | Cl | F | Cl |
| A-1648 | Cl | Cl | Cl | F | Cl |
| A-1649 | $CH_3$ | Cl | Cl | F | Cl |
| A-1650 | $CH_2CH_3$ | Cl | Cl | F | Cl |
| A-1651 | H | Cl | $CHF_2$ | F | Cl |
| A-1652 | F | Cl | $CHF_2$ | F | Cl |
| A-1653 | Cl | Cl | $CHF_2$ | F | Cl |
| A-1654 | $CH_3$ | Cl | $CHF_2$ | F | Cl |
| A-1655 | $CH_2CH_3$ | Cl | $CHF_2$ | F | Cl |
| A-1656 | H | Cl | $CF_3$ | F | Cl |
| A-1657 | F | Cl | $CF_3$ | F | Cl |
| A-1658 | Cl | Cl | $CF_3$ | F | Cl |
| A-1659 | $CH_3$ | Cl | $CF_3$ | F | Cl |
| A-1660 | $CH_2CH_3$ | Cl | $CF_3$ | F | Cl |
| A-1661 | H | Cl | $SCHF_2$ | F | Cl |
| A-1662 | F | Cl | $SCHF_2$ | F | Cl |
| A-1663 | Cl | Cl | $SCHF_2$ | F | Cl |
| A-1664 | $CH_3$ | Cl | $SCHF_2$ | F | Cl |
| A-1665 | $CH_2CH_3$ | Cl | $SCHF_2$ | F | Cl |
| A-1666 | H | Cl | $SCF_3$ | F | Cl |
| A-1667 | F | Cl | $SCF_3$ | F | Cl |
| A-1668 | Cl | Cl | $SCF_3$ | F | Cl |
| A-1669 | $CH_3$ | Cl | $SCF_3$ | F | Cl |
| A-1670 | $CH_2CH_3$ | Cl | $SCF_3$ | F | Cl |
| A-1671 | H | Cl | $OCHF_2$ | F | Cl |
| A-1672 | F | Cl | $OCHF_2$ | F | Cl |
| A-1673 | Cl | Cl | $OCHF_2$ | F | Cl |
| A-1674 | $CH_3$ | Cl | $OCHF_2$ | F | Cl |
| A-1675 | $CH_2CH_3$ | Cl | $OCHF_2$ | F | Cl |
| A-1676 | H | Cl | $OCF_3$ | F | Cl |
| A-1677 | F | Cl | $OCF_3$ | F | Cl |
| A-1678 | Cl | Cl | $OCF_3$ | F | Cl |
| A-1679 | $CH_3$ | Cl | $OCF_3$ | F | Cl |
| A-1680 | $CH_2CH_3$ | Cl | $OCF_3$ | F | Cl |
| A-1681 | H | Cl | F | Cl | Cl |
| A-1682 | F | Cl | F | Cl | Cl |
| A-1683 | Cl | Cl | F | Cl | Cl |
| A-1684 | $CH_3$ | Cl | F | Cl | Cl |

Tabelle A (fortgesetzt)

| Nr. | $R^1$ | $R^2$ | $R^{11}$ | $R^{12}$ | $R^{13}$ |
|---|---|---|---|---|---|
| A-1685 | $CH_2CH_3$ | Cl | F | Cl | Cl |
| A-1686 | H | Cl | Cl | Cl | Cl |
| A-1687 | F | Cl | Cl | Cl | Cl |
| A-1688 | Cl | Cl | Cl | Cl | Cl |
| A-1689 | $CH_3$ | Cl | Cl | Cl | Cl |
| A-1690 | $CH_2CH_3$ | Cl | Cl | Cl | Cl |
| A-1691 | H | Cl | $CHF_2$ | Cl | Cl |
| A-1692 | F | Cl | $CHF_2$ | Cl | Cl |
| A-1693 | Cl | Cl | $CHF_2$ | Cl | Cl |
| A-1694 | $CH_3$ | Cl | $CHF_2$ | Cl | Cl |
| A-1695 | $CH_2CH_3$ | Cl | $CHF_2$ | Cl | Cl |
| A-1696 | H | Cl | $CF_3$ | Cl | Cl |
| A-1697 | F | Cl | $CF_3$ | Cl | Cl |
| A-1698 | Cl | Cl | $CF_3$ | Cl | Cl |
| A-1699 | $CH_3$ | Cl | $CF_3$ | Cl | Cl |
| A-1700 | $CH_2CH_3$ | Cl | $CF_3$ | Cl | Cl |
| A-1701 | H | Cl | $SCHF_2$ | Cl | Cl |
| A-1702 | F | Cl | $SCHF_2$ | Cl | Cl |
| A-1703 | Cl | Cl | $SCHF_2$ | Cl | Cl |
| A-1704 | $CH_3$ | Cl | $SCHF_2$ | Cl | Cl |
| A-1705 | $CH_2CH_3$ | Cl | $SCHF_2$ | Cl | Cl |
| A-1706 | H | Cl | $SCF_3$ | Cl | Cl |
| A-1707 | F | Cl | $SCF_3$ | Cl | Cl |
| A-1708 | Cl | Cl | $SCF_3$ | Cl | Cl |
| A-1709 | $CH_3$ | Cl | $SCF_3$ | Cl | Cl |
| A-1710 | $CH_2CH_3$ | Cl | $SCF_3$ | Cl | Cl |
| A-1711 | H | Cl | $OCHF_2$ | Cl | Cl |
| A-1712 | F | Cl | $OCHF_2$ | Cl | Cl |
| A-1713 | Cl | Cl | $OCHF_2$ | Cl | Cl |
| A-1714 | $CH_3$ | Cl | $OCHF_2$ | Cl | Cl |
| A-1715 | $CH_2CH_3$ | Cl | $OCHF_2$ | Cl | Cl |
| A-1716 | H | Cl | $OCF_3$ | Cl | Cl |
| A-1717 | F | Cl | $OCF_3$ | Cl | Cl |
| A-1718 | Cl | Cl | $OCF_3$ | Cl | Cl |
| A-1719 | $CH_3$ | Cl | $OCF_3$ | Cl | Cl |
| A-1720 | $CH_2CH_3$ | Cl | $OCF_3$ | Cl | Cl |
| A-1721 | H | Cl | F | $CHF_2$ | Cl |
| A-1722 | F | Cl | F | $CHF_2$ | Cl |

Tabelle A (fortgesetzt)

| Nr. | $R^1$ | $R^2$ | $R^{11}$ | $R^{12}$ | $R^{13}$ |
|---|---|---|---|---|---|
| A-1723 | Cl | Cl | F | $CHF_2$ | Cl |
| A-1724 | $CH_3$ | Cl | F | $CHF_2$ | Cl |
| A-1725 | $CH_2CH_3$ | Cl | F | $CHF_2$ | Cl |
| A-1726 | H | Cl | Cl | $CHF_2$ | Cl |
| A-1727 | F | Cl | Cl | $CHF_2$ | Cl |
| A-1728 | Cl | Cl | Cl | $CHF_2$ | Cl |
| A-1729 | $CH_3$ | Cl | Cl | $CHF_2$ | Cl |
| A-1730 | $CH_2CH_3$ | Cl | Cl | $CHF_2$ | Cl |
| A-1731 | H | Cl | $CHF_2$ | $CHF_2$ | Cl |
| A-1732 | F | Cl | $CHF_2$ | $CHF_2$ | Cl |
| A-1733 | Cl | Cl | $CHF_2$ | $CHF_2$ | Cl |
| A-1734 | $CH_3$ | Cl | $CHF_2$ | $CHF_2$ | Cl |
| A-1735 | $CH_2CH_3$ | Cl | $CHF_2$ | $CHF_2$ | Cl |
| A-1736 | H | Cl | $CF_3$ | $CHF_2$ | Cl |
| A-1737 | F | Cl | $CF_3$ | $CHF_2$ | Cl |
| A-1738 | Cl | Cl | $CF_3$ | $CHF_2$ | Cl |
| A-1739 | $CH_3$ | Cl | $CF_3$ | $CHF_2$ | Cl |
| A-1740 | $CH_2CH_3$ | Cl | $CF_3$ | $CHF_2$ | Cl |
| A-1741 | H | Cl | $SCHF_2$ | $CHF_2$ | Cl |
| A-1742 | F | Cl | $SCHF_2$ | $CHF_2$ | Cl |
| A-1743 | Cl | Cl | $SCHF_2$ | $CHF_2$ | Cl |
| A-1744 | $CH_3$ | Cl | $SCHF_2$ | $CHF_2$ | Cl |
| A-1745 | $CH_2CH_3$ | Cl | $SCHF_2$ | $CHF_2$ | Cl |
| A-1746 | H | Cl | $SCF_3$ | $CHF_2$ | Cl |
| A-1747 | F | Cl | $SCF_3$ | $CHF_2$ | Cl |
| A-1748 | Cl | Cl | $SCF_3$ | $CHF_2$ | Cl |
| A-1749 | $CH_3$ | Cl | $SCF_3$ | $CHF_2$ | Cl |
| A-1750 | $CH_2CH_3$ | Cl | $SCF_3$ | $CHF_2$ | Cl |
| A-1751 | H | Cl | $OCHF_2$ | $CHF_2$ | Cl |
| A-1752 | F | Cl | $OCHF_2$ | $CHF_2$ | Cl |
| A-1753 | Cl | Cl | $OCHF_2$ | $CHF_2$ | Cl |
| A-1754 | $CH_3$ | Cl | $OCHF_2$ | $CHF_2$ | Cl |
| A-1755 | $CH_2CH_3$ | Cl | $OCHF_2$ | $CHF_2$ | Cl |
| A-1756 | H | Cl | $OCF_3$ | $CHF_2$ | Cl |
| A-1757 | F | Cl | $OCF_3$ | $CHF_2$ | Cl |
| A-1758 | Cl | Cl | $OCF_3$ | $CHF_2$ | Cl |
| A-1759 | $CH_3$ | Cl | $OCF_3$ | $CHF_2$ | Cl |
| A-1760 | $CH_2CH_3$ | Cl | $OCF_3$ | $CHF_2$ | Cl |

Tabelle A (fortgesetzt)

| Nr. | $R^1$ | $R^2$ | $R^{11}$ | $R^{12}$ | $R^{13}$ |
|---|---|---|---|---|---|
| A-1761 | H | Cl | F | $CF_3$ | Cl |
| A-1762 | F | Cl | F | $CF_3$ | Cl |
| A-1763 | Cl | Cl | F | $CF_3$ | Cl |
| A-1764 | $CH_3$ | Cl | F | $CF_3$ | Cl |
| A-1765 | $CH_2CH_3$ | Cl | F | $CF_3$ | Cl |
| A-1766 | H | Cl | Cl | $CF_3$ | Cl |
| A-1767 | F | Cl | Cl | $CF_3$ | Cl |
| A-1768 | Cl | Cl | Cl | $CF_3$ | Cl |
| A-1769 | $CH_3$ | Cl | Cl | $CF_3$ | Cl |
| A-1770 | $CH_2CH_3$ | Cl | Cl | $CF_3$ | Cl |
| A-1771 | H | Cl | $CHF_2$ | $CF_3$ | Cl |
| A-1772 | F | Cl | $CHF_2$ | $CF_3$ | Cl |
| A-1773 | Cl | Cl | $CHF_2$ | $CF_3$ | Cl |
| A-1774 | $CH_3$ | Cl | $CHF_2$ | $CF_3$ | Cl |
| A-1775 | $CH_2CH_3$ | Cl | $CHF_2$ | $CF_3$ | Cl |
| A-1776 | H | Cl | $CF_3$ | $CF_3$ | Cl |
| A-1777 | F | Cl | $CF_3$ | $CF_3$ | Cl |
| A-1778 | Cl | Cl | $CF_3$ | $CF_3$ | Cl |
| A-1779 | $CH_3$ | Cl | $CF_3$ | $CF_3$ | Cl |
| A-1780 | $CH_2CH_3$ | Cl | $CF_3$ | $CF_3$ | Cl |
| A-1781 | H | Cl | $SCHF_2$ | $CF_3$ | Cl |
| A-1782 | F | Cl | $SCHF_2$ | $CF_3$ | Cl |
| A-1783 | Cl | Cl | $SCHF_2$ | $CF_3$ | Cl |
| A-1784 | $CH_3$ | Cl | $SCHF_2$ | $CF_3$ | Cl |
| A-1785 | $CH_2CH_3$ | Cl | $SCHF_2$ | $CF_3$ | Cl |
| A-1786 | H | Cl | $SCF_3$ | $CF_3$ | Cl |
| A-1787 | F | Cl | $SCF_3$ | $CF_3$ | Cl |
| A-1788 | Cl | Cl | $SCF_3$ | $CF_3$ | Cl |
| A-1789 | $CH_3$ | Cl | $SCF_3$ | $CF_3$ | Cl |
| A-1790 | $CH_2CH_3$ | Cl | $SCF_3$ | $CF_3$ | Cl |
| A-1791 | H | Cl | $OCHF_2$ | $CF_3$ | Cl |
| A-1792 | F | Cl | $OCHF_2$ | $CF_3$ | Cl |
| A-1793 | Cl | Cl | $OCHF_2$ | $CF_3$ | Cl |
| A-1794 | $CH_3$ | Cl | $OCHF_2$ | $CF_3$ | Cl |
| A-1795 | $CH_2CH_3$ | Cl | $OCHF_2$ | $CF_3$ | Cl |
| A-1796 | H | Cl | $OCF_3$ | $CF_3$ | Cl |
| A-1797 | F | Cl | $OCF_3$ | $CF_3$ | Cl |
| A-1798 | Cl | Cl | $OCF_3$ | $CF_3$ | Cl |

Tabelle A (fortgesetzt)

| Nr. | $R^1$ | $R^2$ | $R^{11}$ | $R^{12}$ | $R^{13}$ |
|---|---|---|---|---|---|
| A-1799 | $CH_3$ | Cl | $OCF_3$ | $CF_3$ | Cl |
| A-1800 | $CH_2CH_3$ | Cl | $OCF_3$ | $CF_3$ | Cl |
| A-1801 | H | $CH_3$ | F | H | H |
| A-2802 | F | $CH_3$ | F | H | H |
| A-1803 | Cl | $CH_3$ | F | H | H |
| A-1804 | $CH_3$ | $CH_3$ | F | H | H |
| A-1805 | $CH_2CH_3$ | $CH_3$ | F | H | H |
| A-1806 | H | $CH_3$ | Cl | H | H |
| A-1807 | F | $CH_3$ | Cl | H | H |
| A-1808 | Cl | $CH_3$ | Cl | H | H |
| A-1809 | $CH_3$ | $CH_3$ | Cl | H | H |
| A-1810 | $CH_2CH_3$ | $CH_3$ | Cl | H | H |
| A-1811 | H | $CH_3$ | $CHF_2$ | H | H |
| A-1812 | F | $CH_3$ | $CHF_2$ | H | H |
| A-1813 | Cl | $CH_3$ | $CHF_2$ | H | H |
| A-1814 | $CH_3$ | $CH_3$ | $CHF_2$ | H | H |
| A-1815 | $CH_2CH_3$ | $CH_3$ | $CHF_2$ | H | H |
| A-1816 | H | $CH_3$ | $CF_3$ | H | H |
| A-1817 | F | $CH_3$ | $CF_3$ | H | H |
| A-1818 | Cl | $CH_3$ | $CF_3$ | H | H |
| A-1819 | $CH_3$ | $CH_3$ | $CF_3$ | H | H |
| A-1820 | $CH_2CH_3$ | $CH_3$ | $CF_3$ | H | H |
| A-1822 | H | $CH_3$ | $SCHF_2$ | H | H |
| A-1822 | F | $CH_3$ | $SCHF_2$ | H | H |
| A-1823 | Cl | $CH_3$ | $SCHF_2$ | H | H |
| A-1824 | $CH_3$ | $CH_3$ | $SCHF_2$ | H | H |
| A-1825 | $CH_2CH_3$ | $CH_3$ | $SCHF_2$ | H | H |
| A-1826 | H | $CH_3$ | $SCF_3$ | H | H |
| A-1827 | F | $CH_3$ | $SCF_3$ | H | H |
| A-1828 | Cl | $CH_3$ | $SCF_3$ | H | H |
| A-1829 | $CH_3$ | $CH_3$ | $SCF_3$ 3 | H | H |
| A-1830 | $CH_2CH_3$ | $CH_3$ | $SCF_3$ | H | H |
| A-1831 | H | $CH_3$ | $OCHF_2$ | H | H |
| A-1832 | F | $CH_3$ | $OCHF_2$ | H | H |
| A-1833 | Cl | $CH_3$ | $OCHF_2$ | H | H |
| A-1834 | $CH_3$ | $CH_3$ | $OCHF_2$ | H | H |
| A-1835 | $CH_2CH_3$ | $CH_3$ | $OCHF_2$ | H | H |
| A-1836 | H | $CH_3$ | $OCF_3$ | H | H |

Tabelle A (fortgesetzt)

| Nr. | $R^1$ | $R^2$ | $R^{11}$ | $R^{12}$ | $R^{13}$ |
|---|---|---|---|---|---|
| A-1837 | F | $CH_3$ | $OCF_3$ | H | H |
| A-1838 | Cl | $CH_3$ | $OCF_3$ | H | H |
| A-1839 | $CH_3$ | $CH_3$ | $OCF_3$ | H | H |
| A-1840 | $CH_2CH_3$ | $CH_3$ | $OCF_3$ | H | H |
| A-1841 | H | $CH_3$ | F | F | H |
| A-1842 | F | $CH_3$ | F | F | H |
| A-1843 | Cl | $CH_3$ | F | F | H |
| A-1844 | $CH_3$ | $CH_3$ | F | F | H |
| A-1845 | $CH_2CH_3$ | $CH_3$ | F | F | H |
| A-1846 | H | $CH_3$ | Cl | F | H |
| A-1847 | F | $CH_3$ | Cl | F | H |
| A-1848 | Cl | $CH_3$ | Cl | F | H |
| A-1849 | $CH_3$ | $CH_3$ | Cl | F | H |
| A-1850 | $CH_2CH_3$ | $CH_3$ | Cl | F | H |
| A-1851 | H | $CH_3$ | $CHF_2$ | F | H |
| A-1852 | F | $CH_3$ | $CHF_2$ | F | H |
| A-1853 | Cl | $CH_3$ | $CHF_2$ | F | H |
| A-1854 | $CH_3$ | $CH_3$ | $CHF_2$ | F | H |
| A-1855 | $CH_2CH_3$ | $CH_3$ | $CHF_2$ | F | H |
| A-1856 | H | $CH_3$ | $CF_3$ | F | H |
| A-2857 | F | $CH_3$ | $CF_3$ | F | H |
| A-1858 | Cl | $CH_3$ | $CF_3$ | F | H |
| A-1859 | $CH_3$ | $CH_3$ | $CF_3$ | F | H |
| A-1860 | $CH_2CH_3$ | $CH_3$ | $CF_3$ | F | H |
| A-1862 | H | $CH_3$ | $SCHF_2$ | F | H |
| A-1862 | F | $CH_3$ | $SCHF_2$ | F | H |
| A-1863 | Cl | $CH_3$ | $SCHF_2$ | F | H |
| A-1864 | $CH_3$ | $CH_3$ | $SCHF_2$ | F | H |
| A-2865 | $CH_2CH_3$ | $CH_3$ | $SCHF_2$ | F | H |
| A-1866 | H | $CH_3$ | $SCF_3$ | F | H |
| A-1867 | F | $CH_3$ | $SCF_3$ | F | H |
| A-1868 | Cl | $CH_3$ | $SCF_3$ | F | H |
| A-1869 | $CH_3$ | $CH_3$ | $SCF_3$ | F | H |
| A-1870 | $CH_2CH_3$ | $CH_3$ | $SCF_3$ | F | H |
| A-1871 | H | $CH_3$ | $OCHF_2$ | F | H |
| A-1872 | F | $CH_3$ | $OCHF_2$ | F | H |
| A-1873 | Cl | $CH_3$ | $OCHF_2$ | F | H |
| A-1874 | $CH_3$ | $CH_3$ | $OCHF_2$ | F | H |

Tabelle A (fortgesetzt)

| Nr. | $R^1$ | $R^2$ | $R^{11}$ | $R^{12}$ | $R^{13}$ |
|---|---|---|---|---|---|
| A-1875 | $CH_2CH_3$ | $CH_3$ | $OCHF_2$ | F | H |
| A-1876 | H | $CH_3$ | $OCF_3$ | F | H |
| A-1877 | F | $CH_3$ | $OCF_3$ | F | H |
| A-1878 | Cl | $CH_3$ | $OCF_3$ | F | H |
| A-1879 | $CH_3$ | $CH_3$ | $OCF_3$ | F | H |
| A-1880 | $CH_2CH_3$ | $CH_3$ | $OCF_3$ | F | H |
| A-1881 | H | $CH_3$ | F | Cl | H |
| A-1882 | F | $CH_3$ | F | Cl | H |
| A-1883 | Cl | $CH_3$ | F | Cl | H |
| A-1884 | $CH_3$ | $CH_3$ | F | Cl | H |
| A-1885 | $CH_2CH_3$ | $CH_3$ | F | Cl | H |
| A-1886 | H | $CH_3$ | Cl | Cl | H |
| A-1887 | F | $CH_3$ | Cl | Cl | H |
| A-1888 | Cl | $CH_3$ | Cl | Cl | H |
| A-1889 | $CH_3$ | $CH_3$ | Cl | Cl | H |
| A-1890 | $CH_2CH_3$ | $CH_3$ | Cl | Cl | H |
| A-1891 | H | $CH_3$ | $CHF_2$ | Cl | H |
| A-1892 | F | $CH_3$ | $CHF_2$ | Cl | H |
| A-1893 | Cl | $CH_3$ | $CHF_2$ | Cl | H |
| A-1894 | $CH_3$ | $CH_3$ | $CHF_2$ | Cl | H |
| A-1895 | $CH_2CH_3$ | $CH_3$ | $CHF_2$ | Cl | H |
| A-1896 | H | $CH_3$ | $CF_3$ | Cl | H |
| A-1897 | F | $CH_3$ | $CF_3$ | Cl | H |
| A-1898 | Cl | $CH_3$ | $CF_3$ | Cl | H |
| A-1899 | $CH_3$ | $CH_3$ | $CF_3$ | Cl | H |
| A-1900 | $CH_2CH_3$ | $CH_3$ | $CF_3$ | Cl | H |
| A-1901 | H | $CH_3$ | $SCHF_2$ | Cl | H |
| A-1902 | F | $CH_3$ | $SCHF_2$ | Cl | H |
| A-1903 | Cl | $CH_3$ | $SCHF_2$ | Cl | H |
| A-1904 | $CH_3$ | $CH_3$ | $SCHF_2$ | Cl | H |
| A-1905 | $CH_2CH_3$ | $CH_3$ | $SCHF_2$ | Cl | H |
| A-1906 | H | $CH_3$ | $SCF_3$ | Cl | H |
| A-1907 | F | $CH_3$ | $SCF_3$ | Cl | H |
| A-1908 | Cl | $CH_3$ | $SCF_3$ | Cl | H |
| A-1909 | $CH_3$ | $CH_3$ | $SCF_3$ | Cl | H |
| A-1910 | $CH_2CH_3$ | $CH_3$ | $SCF_3$ | Cl | H |
| A-1911 | H | $CH_3$ | $OCHF_2$ | Cl | H |
| A-1912 | F | $CH_3$ | $OCHF_2$ | Cl | H |

Tabelle A (fortgesetzt)

| Nr. | $R^1$ | $R^2$ | $R^{11}$ | $R^{12}$ | $R^{13}$ |
|---|---|---|---|---|---|
| A-1913 | Cl | $CH_3$ | $OCHF_2$ | Cl | H |
| A-1914 | $CH_3$ | $CH_3$ | $OCHF_2$ | Cl | H |
| A-1915 | $CH_2CH_3$ | $CH_3$ | $OCHF_2$ | Cl | H |
| A-1916 | H | $CH_3$ | $OCF_3$ | Cl | H |
| A-1917 | F | $CH_3$ | $OCF_3$ | Cl | H |
| A-1918 | C1 | $CH_3$ | $OCF_3$ | Cl | H |
| A-1919 | $CH_3$ | $CH_3$ | $OCF_3$ | Cl | H |
| A-1920 | $CH_2CH_3$ | $CH_3$ | $OCF_3$ | Cl | H |
| A-1921 | H | $CH_3$ | F | $CHF_2$ | H |
| A-1922 | F | $CH_3$ | F | $CHF_2$ | H |
| A-1923 | C1 | $CH_3$ | F | $CHF_2$ | H |
| A-1924 | $CH_3$ | $CH_3$ | F | $CHF_2$ | H |
| A-1925 | $CH_2CH_3$ | $CH_3$ | F | $CHF_2$ | H |
| A-1926 | H | $CH_3$ | Cl | $CHF_2$ | H |
| A-1927 | F | $CH_3$ | Cl | $CHF_2$ | H |
| A-1928 | C1 | $CH_3$ | Cl | $CHF_2$ | H |
| A-1929 | $CH_3$ | $CH_3$ | Cl | $CHF_2$ | H |
| A-1930 | $CH_2CH_3$ | $CH_3$ | Cl | $CHF_2$ | H |
| A-1931 | H | $CH_3$ | $CHF_2$ | $CHF_2$ | H |
| A-1932 | F | $CH_3$ | $CHF_2$ | $CHF_2$ | H |
| A-1933 | Cl | $CH_3$ | $CHF_2$ | $CHF_2$ | H |
| A-1934 | $CH_3$ | $CH_3$ | $CHF_2$ | $CHF_2$ | H |
| A-1935 | $CH_2CH_3$ | $CH_3$ | $CHF_2$ | $CHF_2$ | H |
| A-1936 | H | $CH_3$ | $CF_3$ | $CHF_2$ | H |
| A-1937 | F | $CH_3$ | $CF_3$ | $CHF_2$ | H |
| A-1938 | Cl | $CH_3$ | $CF_3$ | $CHF_2$ | H |
| A-1939 | $CH_3$ | $CH_3$ | $CF_3$ | $CHF_2$ | H |
| A-1940 | $CH_2CH_3$ | $CH_3$ | $CF_3$ | $CHF_2$ | H |
| A-1941 | H | $CH_3$ | $SCHF_2$ | $CHF_2$ | H |
| A-1942 | F | $CH_3$ | $SCHF_2$ | $CHF_2$ | H |
| A-1943 | Cl | $CH_3$ | $SCHF_2$ | $CHF_2$ | H |
| A-1944 | $CH_3$ | $CH_3$ | $SCHF_2$ | $CHF_2$ | H |
| A-1945 | $CH_2CH_3$ | $CH_3$ | $SCHF_2$ | $CHF_2$ | H |
| A-1946 | H | $CH_3$ | $SCF_3$ | $CHF_2$ | H |
| A-1947 | F | $CH_3$ | $SCF_3$ | $CHF_2$ | H |
| A-1948 | Cl | $CH_3$ | $SCF_3$ | $CHF_2$ | H |
| A-1949 | $CH_3$ | $CH_3$ | $SCF_3$ | $CHF_2$ | H |
| A-1950 | $CH_2CH_3$ | $CH_3$ | $SCF_3$ | $CHF_2$ | H |

Tabelle A (fortgesetzt)

| Nr. | $R^1$ | $R^2$ | $R^{11}$ | $R^{12}$ | $R^{13}$ |
|---|---|---|---|---|---|
| A-1951 | H | $CH_3$ | $OCHF_2$ | $CHF_2$ | H |
| A-1952 | F | $CH_3$ | $OCHF_2$ | $CHF_2$ | H |
| A-1953 | Cl | $CH_3$ | $OCHF_2$ | $CHF_2$ | H |
| A-1954 | $CH_3$ | $CH_3$ | $OCHF_2$ | $CHF_2$ | H |
| A-1955 | $CH_2CH_3$ | $CH_3$ | $OCHF_2$ | $CHF_2$ | H |
| A-1956 | H | $CH_3$ | $OCF_3$ | $CHF_2$ | H |
| A-1957 | F | $CH_3$ | $OCF_3$ | $CHF_2$ | H |
| A-1958 | Cl | $CH_3$ | $OCF_3$ | $CHF_2$ | H |
| A-1959 | $CH_3$ | $CH_3$ | $OCF_3$ | $CHF_2$ | H |
| A-1960 | $CH_2CH_3$ | $CH_3$ | $OCF_3$ | $CHF_2$ | H |
| A-1961 | H | $CH_3$ | F | $CF_3$ | H |
| A-1962 | F | $CH_3$ | F | $CF_3$ | H |
| A-1963 | Cl | $CH_3$ | F | $CF_3$ | H |
| A-1964 | $CH_3$ | $CH_3$ | F | $CF_3$ | H |
| A-1965 | $CH_2CH_3$ | $CH_3$ | F | $CF_3$ | H |
| A-1966 | H | $CH_3$ | Cl | $CF_3$ | H |
| A-1967 | F | $CH_3$ | Cl | $CF_3$ | H |
| A-1968 | Cl | $CH_3$ | Cl | $CF_3$ | H |
| A-1969 | $CH_3$ | $CH_3$ | Cl | $CF_3$ | H |
| A-1970 | $CH_2CH_3$ | $CH_3$ | Cl | $CF_3$ | H |
| A-1971 | H | $CH_3$ | $CHF_2$ | $CF_3$ | H |
| A-1972 | F | $CH_3$ | $CHF_2$ | $CF_3$ | H |
| A-1973 | Cl | $CH_3$ | $CHF_2$ | $CF_3$ | H |
| A-1974 | $CH_3$ | $CH_3$ | $CHF_2$ | $CF_3$ | H |
| A-1975 | $CH_2CH_3$ | $CH_3$ | $CHF_2$ | $CF_3$ | H |
| A-1976 | H | $CH_3$ | $CF_3$ | $CF_3$ | H |
| A-1977 | F | $CH_3$ | $CF_3$ | $CF_3$ | H |
| A-2978 | Cl | $CH_3$ | $CF_3$ | $CF_3$ | H |
| A-1979 | $CH_3$ | $CH_3$ | $CF_3$ | $CF_3$ | H |
| A-1980 | $CH_2CH_3$ | $CH_3$ | $CF_3$ | $CF_3$ | H |
| A-1981 | H | $CH_3$ | $SCHF_2$ | $CF_3$ | H |
| A-1982 | F | $CH_3$ | $SCHF_2$ | $CF_3$ | H |
| A-1983 | Cl | $CH_3$ | $SCHF_2$ | $CF_3$ | H |
| A-1984 | $CH_3$ | $CH_3$ | $SCHF_2$ | $CF_3$ | H |
| A-1985 | $CH_2CH_3$ | $CH_3$ | $SCHF_2$ | $CF_3$ | H |
| A-1986 | H | $CH_3$ | $SCF_3$ | $CF_3$ | H |
| A-1987 | F | $CH_3$ | $SCF_3$ | $CF_3$ | H |
| A-1988 | Cl | $CH_3$ | $SCF_3$ | $CF_3$ | H |

Tabelle A (fortgesetzt)

| Nr. | $R^1$ | $R^2$ | $R^{11}$ | $R^{12}$ | $R^{13}$ |
|---|---|---|---|---|---|
| A-1989 | $CH_3$ | $CH_3$ | $SCF_3$ | $CF_3$ | H |
| A-1990 | $CH_2CH_3$ | $CH_3$ | $SCF_3$ | $CF_3$ | H |
| A-1991 | H | $CH_3$ | $OCHF_2$ | $CF_3$ | H |
| A-1992 | F | $CH_3$ | $OCHF_2$ | $CF_3$ | H |
| A-1993 | Cl | $CH_3$ | $OCHF_2$ | $CF_3$ | H |
| A-1994 | $CH_3$ | $CH_3$ | $OCHF_2$ | $CF_3$ | H |
| A-1995 | $CH_2CH_3$ | $CH_3$ | $OCHF_2$ | $CF_3$ | H |
| A-1996 | H | $CH_3$ | $OCF_3$ | $CF_3$ | H |
| A-1997 | F | $CH_3$ | $OCF_3$ | $CF_3$ | H |
| A-1998 | Cl | $CH_3$ | $OCF_3$ | $CF_3$ | H |
| A-1999 | $CH_3$ | $CH_3$ | $OCF_3$ | $CF_3$ | H |
| A-2000 | $CH_2CH_3$ | $CH_3$ | $OCF_3$ | $CF_3$ | H |
| A-2001 | H | $CH_3$ | F | H | F |
| A-2002 | F | $CH_3$ | F | H | F |
| A-2003 | Cl | $CH_3$ | F | H | F |
| A-2004 | $CH_3$ | $CH_3$ | F | H | F |
| A-2005 | $CH_2CH_3$ | $CH_3$ | F | H | F |
| A-2006 | H | $CH_3$ | Cl | H | F |
| A-2007 | F | $CH_3$ | Cl | H | F |
| A-2008 | Cl | $CH_3$ | Cl | H | F |
| A-2009 | $CH_3$ | $CH_3$ | Cl | H | F |
| A-2010 | $CH_2CH_3$ | $CH_3$ | Cl | H | F |
| A-2011 | H | $CH_3$ | $CHF_2$ | H | F |
| A-2012 | F | $CH_3$ | $CHF_2$ | H | F |
| A-2013 | Cl | $CH_3$ | $CHF_2$ | H | F |
| A-2014 | $CH_3$ | $CH_3$ | $CHF_2$ | H | F |
| A-2015 | $CH_2CH_3$ | $CH_3$ | $CHF_2$ | H | F |
| A-2016 | H | $CH_3$ | $CF_3$ | H | F |
| A-2017 | F | $CH_3$ | $CF_3$ | H | F |
| A-2018 | Cl | $CH_3$ | $CF_3$ | H | F |
| A-2019 | $CH_3$ | $CH_3$ | $CF_3$ | H | F |
| A-2020 | $CH_2CH_3$ | $CH_3$ | $CF_3$ | H | F |
| A-2021 | H | $CH_3$ | $SCHF_2$ | H | F |
| A-2022 | F | $CH_3$ | $SCHF_2$ | H | F |
| A-2023 | Cl | $CH_3$ | $SCHF_2$ | H | F |
| A-2024 | $CH_3$ | $CH_3$ | $SCHF_2$ | H | F |
| A-2025 | $CH_2CH_3$ | $CH_3$ | $SCHF_2$ | H | F |
| A-2026 | H | $CH_3$ | $SCF_3$ | H | F |

Tabelle A (fortgesetzt)

| Nr. | $R^1$ | $R^2$ | $R^{11}$ | $R^{12}$ | $R^{13}$ |
|---|---|---|---|---|---|
| A-2027 | F | $CH_3$ | $SCF_3$ | H | F |
| A-2028 | Cl | $CH_3$ | $SCF_3$ | H | F |
| A-2029 | $CH_3$ | $CH_3$ | $SCF_3$ | H | F |
| A-2030 | $CH_2CH_3$ | $CH_3$ | $SCF_3$ | H | F |
| A-2031 | H | $CH_3$ | $OCHF_2$ | H | F |
| A-2032 | F | $CH_3$ | $OCHF_2$ | H | F |
| A-2033 | Cl | $CH_3$ | $OCHF_2$ | H | F |
| A-2034 | $CH_3$ | $CH_3$ | $OCHF_2$ | H | F |
| A-2035 | $CH_2CH_3$ | $CH_3$ | $OCHF_2$ | H | F |
| A-2036 | H | $CH_3$ | $OCF_3$ | H | F |
| A-2037 | F | $CH_3$ | $OCF_3$ | H | F |
| A-2038 | Cl | $CH_3$ | $OCF_3$ | H | F |
| A-2039 | $CH_3$ | $CH_3$ | $OCF_3$ | H | F |
| A-2040 | $CH_2CH_3$ | $CH_3$ | $OCF_3$ | H | F |
| A-2041 | H | $CH_3$ | F | F | F |
| A-2042 | F | $CH_3$ | F | F | F |
| A-2043 | Cl | $CH_3$ | F | F | F |
| A-2044 | $CH_3$ | $CH_3$ | F | F | F |
| A-2045 | $CH_2CH_3$ | $CH_3$ | F | F | F |
| A-2046 | H | $CH_3$ | Cl | F | F |
| A-2047 | F | $CH_3$ | Cl | F | F |
| A-2048 | Cl | $CH_3$ | Cl | F | F |
| A-2049 | $CH_3$ | $CH_3$ | Cl | F | F |
| A-2050 | $CH_2CH_3$ | $CH_3$ | Cl | F | F |
| A-2051 | H | $CH_3$ | $CHF_2$ | F | F |
| A-2052 | F | $CH_3$ | $CHF_2$ | F | F |
| A-2053 | Cl | $CH_3$ | $CHF_2$ | F | F |
| A-2054 | $CH_3$ | $CH_3$ | $CHF_2$ | F | F |
| A-2055 | $CH_2CH_3$ | $CH_3$ | $CHF_2$ | F | F |
| A-2056 | H | $CH_3$ | $CF_3$ | F | F |
| A-2057 | F | $CH_3$ | $CF_3$ | F | F |
| A-2058 | Cl | $CH_3$ | $CF_3$ | F | F |
| A-2059 | $CH_3$ | $CH_3$ | $CF_3$ | F | F |
| A-2060 | $CH_2CH_3$ | $CH_3$ | $CF_3$ | F | F |
| A-2061 | H | $CH_3$ | $SCHF_2$ | F | F |
| A-2062 | F | $CH_3$ | $SCHF_2$ | F | F |
| A-2063 | Cl | $CH_3$ | $SCHF_2$ | F | F |
| A-2064 | $CH_3$ | $CH_3$ | $SCHF_2$ | F | F |

Tabelle A (fortgesetzt)

| Nr. | $R^1$ | $R^2$ | $R^{11}$ | $R^{12}$ | $R^{13}$ |
|---|---|---|---|---|---|
| A-2065 | $CH_2CH_3$ | $CH_3$ | $SCHF_2$ | F | F |
| A-2066 | H | $CH_3$ | $SCF_3$ | F | F |
| A-2067 | F | $CH_3$ | $SCF_3$ | F | F |
| A-2068 | Cl | $CH_3$ | $SCF_3$ | F | F |
| A-2069 | $CH_3$ | $CH_3$ | $SCF_3$ | F | F |
| A-2070 | $CH_2CH_3$ | $CH_3$ | $SCF_3$ | F | F |
| A-2071 | H | $CH_3$ | $OCHF_2$ | F | F |
| A-2072 | F | $CH_3$ | $OCHF_2$ | F | F |
| A-2073 | Cl | $CH_3$ | $OCHF_2$ | F | F |
| A-2074 | $CH_3$ | $CH_3$ | $OCHF_2$ | F | F |
| A-2075 | $CH_2CH_3$ | $CH_3$ | $OCHF_2$ | F | F |
| A-2076 | H | $CH_3$ | $OCF_3$ | F | F |
| A-2077 | F | $CH_3$ | $OCF_3$ | F | F |
| A-2078 | Cl | $CH_3$ | $OCF_3$ | F | F |
| A-2079 | $CH_3$ | $CH_3$ | $OCF_3$ | F | F |
| A-2080 | $CH_2CH_3$ | $CH_3$ | $OCF_3$ | F | F |
| A-2081 | H | $CH_3$ | F | Cl | F |
| A-2082 | F | $CH_3$ | F | Cl | F |
| A-2083 | Cl | $CH_3$ | F | Cl | F |
| A-2084 | $CH_3$ | $CH_3$ | F | Cl | F |
| A-2085 | $CH_2CH_3$ | $CH_3$ | F | Cl | F |
| A-2086 | H | $CH_3$ | Cl | Cl | F |
| A-2087 | F | $CH_3$ | Cl | Cl | F |
| A-2088 | Cl | $CH_3$ | Cl | Cl | F |
| A-2089 | $CH_3$ | $CH_3$ | Cl | Cl | F |
| A-2090 | $CH_2CH_3$ | $CH_3$ | Cl | Cl | F |
| A-2091 | H | $CH_3$ | $CHF_2$ | Cl | F |
| A-2092 | F | $CH_3$ | $CHF_2$ | Cl | F |
| A-2093 | Cl | $CH_3$ | $CHF_2$ | Cl | F |
| A-2094 | $CH_3$ | $CH_3$ | $CHF_2$ | Cl | F |
| A-2095 | $CH_2CH_3$ | $CH_3$ | $CHF_2$ | Cl | F |
| A-2096 | H | $CH_3$ | $CF_3$ | Cl | F |
| A-2097 | F | $CH_3$ | $CF_3$ | Cl | F |
| A-2098 | Cl | $CH_3$ | $CF_3$ | Cl | F |
| A-2099 | $CH_3$ | $CH_3$ | $CF_3$ | Cl | F |
| A-2100 | $CH_2CH_3$ | $CH_3$ | $CF_3$ | Cl | F |
| A-2101 | H | $CH_3$ | $SCHF_2$ | Cl | F |
| A-2102 | F | $CH_3$ | $SCHF_2$ | Cl | F |

Tabelle A (fortgesetzt)

| Nr. | $R^1$ | $R^2$ | $R^{11}$ | $R^{12}$ | $R^{13}$ |
|---|---|---|---|---|---|
| A-2103 | Cl | $CH_3$ | $SCHF_2$ | Cl | F |
| A-2104 | $CH_3$ | $CH_3$ | $SCHF_2$ | Cl | F |
| A-2105 | $CH_2CH_3$ | $CH_3$ | $SCHF_2$ | Cl | F |
| A-2106 | H | $CH_3$ | $SCF_3$ | Cl | F |
| A-2107 | F | $CH_3$ | $SCF_3$ | Cl | F |
| A-2108 | Cl | $CH_3$ | $SCF_3$ | Cl | F |
| A-2109 | $CH_3$ | $CH_3$ | $SCF_3$ | Cl | F |
| A-2110 | $CH_2CH_3$ | $CH_3C$ | $SCF_3$ | Cl | F |
| A-2111 | H | $CH_3C$ | $OCHF_2$ | Cl | F |
| A-2112 | F | $CH_3$ | $OCHF_2$ | Cl | F |
| A-2113 | Cl | $CH_3$ | $OCHF_2$ | Cl | F |
| A-2114 | $CH_3$ | $CH_3C$ | $OCHF_2$ | Cl | F |
| A-2115 | $CH_2CH_3$ | $CH_3C$ | $OCHF_2$ | Cl | F |
| A-2116 | H | $CH_3$ | $OCF_3$ | Cl | F |
| A-2117 | F | $CH_3$ | $OCF_3$ | Cl | F |
| A-2118 | Cl | $CH_3$ | $OCF_3$ | Cl | F |
| A-2119 | $CH_3$ | $CH_3$ | $OCF_3$ | Cl | F |
| A-2120 | $CH_2CH_3$ | $CH_3$ | $OCF_3$ | Cl | F |
| A-2121 | H | $CH_3$ | F | $CHF_2$ | F |
| A-2122 | F | $CH_3$ | F | $CHF_2$ | F |
| A-2123 | Cl | $CH_3$ | F | $CHF_2$ | F |
| A-2124 | $CH_3$ | $CH_3$ | F | $CHF_2$ | F |
| A-2125 | $CH_2CH_3$ | $CH_3$ | F | $CHF_2$ | F |
| A-2126 | H | $CH_3$ | Cl | $CHF_2$ | F |
| A-2127 | F | $CH_3$ | Cl | $CHF_2$ | F |
| A-2128 | Cl | $CH_3$ | Cl | $CHF_2$ | F |
| A-2129 | $CH_3$ | $CH_3$ | Cl | $CHF_2$ | F |
| A-2130 | $CH_2CH_3$ | $CH_3$ | Cl | $CHF_2$ | F |
| A-2131 | H | $CH_3$ | $CHF_2$ | $CHF_2$ | F |
| A-2132 | F | $CH_3$ | $CHF_2$ | $CHF_2$ | F |
| A-2133 | Cl | $CH_3$ | $CHF_2$ | $CHF_2$ | F |
| A-2134 | $CH_3$ | $CH_3$ | $CHF_2$ | $CHF_2$ | F |
| A-2135 | $CH_2CH_3$ | $CH_3$ | $CHF_2$ | $CHF_2$ | F |
| A-2136 | H | $CH_3$ | $CF_3$ | $CHF_2$ | F |
| A-2137 | F | $CH_3$ | $CF_3$ | $CHF_2$ | F |
| A-2138 | Cl | $CH_3$ | $CF_3$ | $CHF_2$ | F |
| A-2139 | $CH_3$ | $CH_3$ | $CF_3$ | $CHF_2$ | F |
| A-2140 | $CH_2CH_3$ | $CH_3$ | $CF_3$ | $CHF_2$ | F |

Tabelle A (fortgesetzt)

| Nr. | $R^1$ | $R^2$ | $R^{11}$ | $R^{12}$ | $R^{13}$ |
|---|---|---|---|---|---|
| A-2141 | H | $CH_3$ | $SCHF_2$ | $CHF_2$ | F |
| A-2142 | F | $CH_3$ | $SCHF_2$ | $CHF_2$ | F |
| A-2143 | Cl | $CH_3$ | $SCHF_2$ | $CHF_2$ | F |
| A-2144 | $CH_3$ | $CH_3$ | $SCHF_2$ | $CHF_2$ | F |
| A-2145 | $CH_2CH_3$ | $CH_3$ | $SCHF_2$ | $CHF_2$ | F |
| A-2146 | H | $CH_3$ | $SCF_3$ | $CHF_2$ | F |
| A-2147 | F | $CH_3$ | $SCF_3$ | $CHF_2$ | F |
| A-2148 | Cl | $CH_3$ | $SCF_3$ | $CHF_2$ | F |
| A-2149 | $CH_3$ | $CH_3$ | $SCF_3$ | $CHF_2$ | F |
| A-2150 | $CH_2CH_3$ | $CH_3$ | $SCF_3$ | $CHF_2$ | F |
| A-2151 | H | $CH_3$ | $OCHF_2$ | $CHF_2$ | F |
| A-2152 | F | $CH_3$ | $OCHF_2$ | $CHF_2$ | F |
| A-2153 | Cl | $CH_3$ | $OCHF_2$ | $CHF_2$ | F |
| A-2154 | $CH_3$ | $CH_3$ | $OCHF_2$ | $CHF_2$ | F |
| A-2155 | $CH_2CH_3$ | $CH_3$ | $OCHF_2$ | $CHF_2$ | F |
| A-2156 | H | $CH_3$ | $OCF_3$ | $CHF_2$ | F |
| A-2157 | F | $CH_3$ | $OCF_3$ | $CHF_2$ | F |
| A-2158 | Cl | $CH_3$ | $OCF_3$ | $CHF_2$ | F |
| A-2159 | $CH_3$ | $CH_3$ | $OCF_3$ | $CHF_2$ | F |
| A-2160 | $CH_2CH_3$ | $CH_3$ | $OCF_3$ | $CHF_2$ | F |
| A-2161 | H | $CH_3$ | F | $CF_3$ | F |
| A-2162 | F | $CH_3$ | F | $CF_3$ | F |
| A-2163 | Cl | $CH_3$ | F | $CF_3$ | F |
| A-2164 | $CH_3$ | $CH_3$ | F | $CF_3$ | F |
| A-2165 | $CH_2CH_3$ | $CH_3$ | F | $CF_3$ | F |
| A-2166 | H | $CH_3$ | Cl | $CF_3$ | F |
| A-2167 | F | $CH_3$ | Cl | $CF_3$ | F |
| A-2168 | Cl | $CH_3$ | Cl | $CF_3$ | F |
| A-2169 | $CH_3$ | $CH_3$ | Cl | $CF_3$ | F |
| A-2170 | $CH_2CH_3$ | $CH_3$ | Cl | $CF_3$ | F |
| A-2171 | H | $CH_3$ | $CHF_2$ | $CF_3$ | F |
| A-2172 | F | $CH_3$ | $CHF_2$ | $CF_3$ | F |
| A-2173 | Cl | $CH_3$ | $CHF_2$ | $CF_3$ | F |
| A-2174 | $CH_3$ | $CH_3$ | $CHF_2$ | $CF_3$ | F |
| A-2175 | $CH_2CH_3$ | $CH_3$ | $CHF_2$ | $CF_3$ | F |
| A-2176 | H | $CH_3$ | $CF_3$ | $CF_3$ | F |
| A-2177 | F | $CH_3$ | $CF_3$ | $CF_3$ | F |
| A-2178 | Cl | $CH_3$ | $CF_3$ | $CF_3$ | F |

Tabelle A (fortgesetzt)

| Nr. | $R^1$ | $R^2$ | $R^{11}$ | $R^{12}$ | $R^{13}$ |
|---|---|---|---|---|---|
| A-2179 | $CH_3$ | $CH_3$ | $CF_3$ | $CF_3$ | F |
| A-2180 | $CH_2CH_3$ | $CH_3$ | $CF_3$ | $CF_3$ | F |
| A-2181 | H | $CH_3$ | $SCHF_2$ | $CF_3$ | F |
| A-2182 | F | $CH_3$ | $SCHF_2$ | $CF_3$ | F |
| A-2183 | Cl | $CH_3$ | $SCHF_2$ | $CF_3$ | F |
| A-2184 | $CH_3$ | $CH_3$ | $SCHF_2$ | $CF_3$ | F |
| A-2185 | $CH_2CH_3$ | $CH_3$ | $SCHF_2$ | $CF_3$ | F |
| A-2186 | H | $CH_3$ | $SCF_3$ | $CF_3$ | F |
| A-2187 | F | $CH_3$ | $SCF_3$ | $CF_3$ | F |
| A-2188 | Cl | $CH_3$ | $SCF_3$ | $CF_3$ | F |
| A-2189 | $CH_3$ | $CH_3$ | $SCF_3$ | $CF_3$ | F |
| A-2190 | $CH_2CH_3$ | $CH_3$ | $SCF_3$ | $CF_3$ | F |
| A-2191 | H | $CH_3$ | $OCHF_2$ | $CF_3$ | F |
| A-2192 | F | $CH_3$ | $OCHF_2$ | $CF_3$ | F |
| A-2193 | Cl | $CH_3$ | $OCHF_2$ | $CF_3$ | F |
| A-2194 | $CH_3$ | $CH_3$ | $OCHF_2$ | $CF_3$ | F |
| A-2195 | $CH_2CH_3$ | $CH_3$ | $OCHF_2$ | $CF_3$ | F |
| A-2196 | H | $CH_3$ | $OCF_3$ | $CF_3$ | F |
| A-2197 | F | $CH_3$ | $OCF_3$ | $CF_3$ | F |
| A-2198 | Cl | $CH_3$ | $OCF_3$ | $CF_3$ | F |
| A-2199 | $CH_3$ | $CH_3$ | $OCF_3$ | $CF_3$ | F |
| A-2200 | $CH_2CH_3$ | $CH_3$ | $OCF_3$ | $CF_3$ | F |
| A-2201 | H | $CH_3$ | F | H | Cl |
| A-2202 | F | $CH_3$ | F | H | Cl |
| A-2203 | Cl | $CH_3$ | F | H | Cl |
| A-2204 | $CH_3$ | $CH_3$ | F | H | Cl |
| A-2205 | $CH_2CH_3$ | $CH_3$ | F | H | Cl |
| A-2206 | H | $CH_3$ | Cl | H | Cl |
| A-2207 | F | $CH_3$ | Cl | H | Cl |
| A-2208 | Cl | $CH_3$ | Cl | H | Cl |
| A-2209 | $CH_3$ | $CH_3$ | Cl | H | Cl |
| A-2210 | $CH_2CH_3$ | $CH_3$ | Cl | H | Cl |
| A-2211 | H | $CH_3$ | $CHF_2$ | H | Cl |
| A-2212 | F | $CH_3$ | $CHF_2$ | H | Cl |
| A-2213 | Cl | $CH_3$ | $CHF_2$ | H | Cl |
| A-2214 | $CH_3$ | $CH_3$ | $CHF_2$ | H | Cl |
| A-2215 | $CH_2CH_3$ | $CH_3$ | $CHF_2$ | H | Cl |
| A-2216 | H | $CH_3$ | $CF_3$ | H | Cl |

Tabelle A (fortgesetzt)

| Nr. | $R^1$ | $R^2$ | $R^{11}$ | $R^{12}$ | $R^{13}$ |
|---|---|---|---|---|---|
| A-2217 | F | $CH_3$ | $CF_3$ | H | Cl |
| A-2218 | Cl | $CH_3$ | $CF_3$ | H | Cl |
| A-2219 | $CH_3$ | $CH_3$ | $CF_3$ | H | Cl |
| A-2220 | $CH_2CH_3$ | $CH_3$ | $CF_3$ | H | Cl |
| A-2221 | H | $CH_3$ | $SCHF_2$ | H | Cl |
| A-2222 | F | $CH_3$ | $SCHF_2$ | H | Cl |
| A-2223 | Cl | $CH_3$ | $SCHF_2$ | H | Cl |
| A-2224 | $CH_3$ | $CH_3$ | $SCHF_2$ | H | Cl |
| A-2225 | $CH_2CH_3$ | $CH_3$ | $SCHF_2$ | H | Cl |
| A-2226 | H | $CH_3$ | $SCF_3$ | H | Cl |
| A-2227 | F | $CH_3$ | $SCF_3$ | H | Cl |
| A-2228 | Cl | $CH_3$ | $SCF_3$ | H | Cl |
| A-2229 | $CH_3$ | $CH_3$ | $SCF_3$ | H | Cl |
| A-2230 | $CH_2CH_3$ | $CH_3$ | $SCF_3$ | H | Cl |
| A-2231 | H | $CH_3$ | $OCHF_2$ | H | Cl |
| A-2232 | F | $CH_3$ | $OCHF_2$ | H | Cl |
| A-2233 | Cl | $CH_3$ | $OCHF_2$ | H | Cl |
| A-2234 | $CH_3$ | $CH_3$ | $OCHF_2$ | H | Cl |
| A-2235 | $CH_2CH_3$ | $CH_3$ | $OCHF_2$ | H | Cl |
| A-2236 | H | $CH_3$ | $OCF_3$ | H | Cl |
| A-2237 | F | $CH_3$ | $OCF_3$ | H | Cl |
| A-2238 | Cl | $CH_3$ | $OCF_3$ | H | Cl |
| A-2239 | $CH_3$ | $CH_3$ | $OCF_3$ | H | Cl |
| A-2240 | $CH_2CH_3$ | $CH_3$ | $OCF_3$ | H | Cl |
| A-2241 | H | $CH_3$ | F | F | Cl |
| A-2242 | F | $CH_3$ | F | F | Cl |
| A-2243 | Cl | $CH_3$ | F | F | Cl |
| A-2244 | $CH_3$ | $CH_3$ | F | F | Cl |
| A-2245 | $CH_2CH_3$ | $CH_3$ | F | F | Cl |
| A-2246 | H | $CH_3$ | Cl | F | Cl |
| A-2247 | F | $CH_3$ | Cl | F | Cl |
| A-2248 | Cl | $CH_3$ | Cl | F | Cl |
| A-2249 | $CH_3$ | $CH_3$ | Cl | F | Cl |
| A-2250 | $CH_2CH_3$ | $CH_3$ | Cl | F | Cl |
| A-2251 | H | $CH_3$ | $CHF_2$ | F | Cl |
| A-2252 | F | $CH_3$ | $CHF_2$ | F | Cl |
| A-2253 | Cl | $CH_3$ | $CHF_2$ | F | Cl |
| A-2254 | $CH_3$ | $CH_3$ | $CHF_2$ | F | Cl |

Tabelle A (fortgesetzt)

| Nr. | $R^1$ | $R^2$ | $R^{11}$ | $R^{12}$ | $R^{13}$ |
|---|---|---|---|---|---|
| A-2255 | $CH_2CH_3$ | $CH_3$ | $CHF_2$ | F | Cl |
| A-2256 | H | $CH_3$ | $CF_3$ | F | Cl |
| A-2257 | F | $CH_3$ | $CF_3$ | F | Cl |
| A-2258 | Cl | $CH_3$ | $CF_3$ | F | Cl |
| A-2259 | $CH_3$ | $CH_3$ | $CF_3$ | F | Cl |
| A-2260 | $CH_2CH_3$ | $CH_3$ | $CF_3$ | F | Cl |
| A-2261 | H | $CH_3$ | $SCHF_2$ | F | Cl |
| A-2262 | F | $CH_3$ | $SCHF_2$ | F | Cl |
| A-2263 | Cl | $CH_3$ | $SCHF_2$ | F | Cl |
| A-2264 | $CH_3$ | $CH_3$ | $SCHF_2$ | F | Cl |
| A-2265 | $CH_2CH_3$ | $CH_3$ | $SCHF_2$ | F | Cl |
| A-2266 | H | $CH_3$ | $SCF_3$ | F | Cl |
| A-2267 | F | $CH_3$ | $SCF_3$ | F | Cl |
| A-2268 | Cl | $CH_3$ | $SCF_3$ | F | Cl |
| A-2269 | $CH_3$ | $CH_3$ | $SCF_3$ | F | Cl |
| A-2270 | $CH_2CH_3$ | $CH_3$ | $SCF_3$ | F | Cl |
| A-2271 | H | $CH_3$ | $OCHF_2$ | F | Cl |
| A-2272 | F | $CH_3$ | $OCHF_2$ | F | Cl |
| A-2273 | Cl | $CH_3$ | $OCHF_2$ | F | Cl |
| A-2274 | $CH_3$ | $CH_3$ | $OCHF_2$ | F | Cl |
| A-2275 | $CH_2CH_3$ | $CH_3$ | $OCHF_2$ | F | Cl |
| A-2276 | H | $CH_3$ | $OCF_3$ | F | Cl |
| A-2277 | F | $CH_3$ | $OCF_3$ | F | Cl |
| A-2278 | Cl | $CH_3$ | $OCF_3$ | F | Cl |
| A-2279 | $CH_3$ | $CH_3$ | $OCF_3$ | F | Cl |
| A-2280 | $CH_2CH_3$ | $CH_3$ | $OCF_3$ | F | Cl |
| A-2281 | H | $CH_3$ | F | C1 | Cl |
| A-2282 | F | $CH_3$ | F | Cl | Cl |
| A-2283 | Cl | $CH_3$ | F | Cl | Cl |
| A-2284 | $CH_3$ | $CH_3$ | F | C1 | Cl |
| A-2285 | $CH_2CH_3$ | $CH_3$ | F | Cl | Cl |
| A-2286 | H | $CH_3$ | Cl | Cl | Cl |
| A-2287 | F | $CH_3$ | Cl | Cl | Cl |
| A-2288 | Cl | $CH_3$ | Cl | Cl | Cl |
| A-2289 | $CH_3$ | $CH_3$ | Cl | Cl | Cl |
| A-2290 | $CH_2CH_3$ | $CH_3$ | Cl | Cl | Cl |
| A-2291 | H | $CH_3$ | $CHF_2$ | Cl | Cl |
| A-2292 | F | $CH_3$ | $CHF_2$ | Cl | Cl |

Tabelle A (fortgesetzt)

| Nr. | $R^1$ | $R^2$ | $R^{11}$ | $R^{12}$ | $R^{13}$ |
|---|---|---|---|---|---|
| A-2293 | Cl | $CH_3$ | $CHF_2$ | Cl | Cl |
| A-2294 | $CH_3$ | $CH_3$ | $CHF_2$ | Cl | Cl |
| A-2295 | $CH_2CH_3$ | $CH_3$ | $CHF_2$ | Cl | Cl |
| A-2296 | H | $CH_3$ | $CF_3$ | Cl | Cl |
| A-2297 | F | $CH_3$ | $CF_3$ | Cl | Cl |
| A-2298 | Cl | $CH_3$ | $CF_3$ | Cl | Cl |
| A-2299 | $CH_3$ | $CH_3$ | $CF_3$ | Cl | Cl |
| A-2300 | $CH_2CH_3$ | $CH_3$ | $CF_3$ | Cl | Cl |
| A-2301 | H | $CH_3$ | $SCHF_2$ | Cl | Cl |
| A-2302 | F | $CH_3$ | $SCHF_2$ | Cl | Cl |
| A-2303 | Cl | $CH_3$ | $SCHF_2$ | Cl | Cl |
| A-2304 | $CH_3$ | $CH_3$ | $SCHF_2$ | Cl | Cl |
| A-2305 | $CH_2CH_3$ | $CH_3$ | $SCHF_2$ | Cl | Cl |
| A-2306 | H | $CH_3$ | $SCF_3$ | Cl | Cl |
| A-2307 | F | $CH_3$ | $SCF_3$ | Cl | Cl |
| A-2308 | Cl | $CH_3$ | $SCF_3$ | Cl | Cl |
| A-2309 | $CH_3$ | $CH_3$ | $SCF_3$ | Cl | Cl |
| A-2310 | $CH_2CH_3$ | $CH_3$ | $SCF_3$ | Cl | Cl |
| A-2311 | H | $CH_3$ | $OCHF_2$ | Cl | Cl |
| A-2312 | F | $CH_3$ | $OCHF_2$ | Cl | Cl |
| A-2313 | Cl | $CH_3$ | $OCHF_2$ | Cl | Cl |
| A-2314 | $CH_3$ | $CH_3$ | $OCHF_2$ | Cl | Cl |
| A-2315 | $CH_2CH_3$ | $CH_3$ | $OCHF_2$ | Cl | Cl |
| A-2316 | H | $CH_3$ | $OCF_3$ | Cl | Cl |
| A-2317 | F | $CH_3$ | $OCF_3$ | Cl | Cl |
| A-2318 | Cl | $CH_3$ | $OCF_3$ | Cl | Cl |
| A-2319 | $CH_3$ | $CH_3$ | $OCF_3$ | Cl | Cl |
| A-2320 | $CH_2CH_3$ | $CH_3$ | $OCF_3$ | Cl | Cl |
| A-2321 | H | $CH_3$ | F | $CHF_2$ | Cl |
| A-2322 | F | $CH_3$ | F | $CHF_2$ | Cl |
| A-2323 | Cl | $CH_3$ | F | $CHF_2$ | Cl |
| A-2324 | $CH_3$ | $CH_3$ | F | $CHF_2$ | Cl |
| A-2325 | $CH_2CH_3$ | $CH_3$ | F | $CHF_2$ | Cl |
| A-2326 | H | $CH_3$ | Cl | $CHF_2$ | Cl |
| A-2327 | F | $CH_3$ | Cl | $CHF_2$ | Cl |
| A-2328 | Cl | $CH_3$ | Cl | $CHF_2$ | Cl |
| A-2329 | $CH_3$ | $CH_3$ | Cl | $CHF_2$ | Cl |
| A-2330 | $CH_2CH_3$ | $CH_3$ | Cl | $CHF_2$ | Cl |

Tabelle A (fortgesetzt)

| Nr. | $R^1$ | $R^2$ | $R^{11}$ | $R^{12}$ | $R^{13}$ |
|---|---|---|---|---|---|
| A-2331 | H | $CH_3$ | $CHF_2$ | $CHF_2$ | Cl |
| A-2332 | F | $CH_3$ | $CHF_2$ | $CHF_2$ | Cl |
| A-2333 | Cl | $CH_3$ | $CHF_2$ | $CHF_2$ | Cl |
| A-2334 | $CH_3$ | $CH_3$ | $CHF_2$ | $CHF_2$ | Cl |
| A-2335 | $CH_2CH_3$ | $CH_3$ | $CHF_2$ | $CHF_2$ | Cl |
| A-2336 | H | $CH_3$ | $CF_3$ | $CHF_2$ | Cl |
| A-2337 | F | $CH_3$ | $CF_3$ | $CHF_2$ | Cl |
| A-2338 | Cl | $CH_3$ | $CF_3$ | $CHF_2$ | Cl |
| A-2339 | $CH_3$ | $CH_3$ | $CF_3$ | $CHF_2$ | Cl |
| A-2340 | $CH_2CH_3$ | $CH_3$ | $CF_3$ | $CHF_2$ | Cl |
| A-2341 | H | $CH_3$ | $SCHF_2$ | $CHF_2$ | Cl |
| A-2342 | F | $CH_3$ | $SCHF_2$ | $CHF_2$ | Cl |
| A-2343 | Cl | $CH_3$ | $SCHF_2$ | $CHF_2$ | Cl |
| A-2344 | $CH_3$ | $CH_3$ | $SCHF_2$ | $CHF_2$ | Cl |
| A-2345 | $CH_2CH_3$ | $CH_3$ | $SCHF_2$ | $CHF_2$ | Cl |
| A-2346 | H | $CH_3$ | $SCF_3$ | $CHF_2$ | Cl |
| A-2347 | F | $CH_3$ | $SCF_3$ | $CHF_2$ | Cl |
| A-2348 | Cl | $CH_3$ | $SCF_3$ | $CHF_2$ | Cl |
| A-2349 | $CH_3$ | $CH_3$ | $SCF_3$ | $CHF_2$ | Cl |
| A-2350 | $CH_2CH_3$ | $CH_3$ | $SCF_3$ | $CHF_2$ | Cl |
| A-2351 | H | $CH_3$ | $OCHF_2$ | $CHF_2$ | Cl |
| A-2352 | F | $CH_3$ | $OCHF_2$ | $CHF_2$ | Cl |
| A-2353 | Cl | $CH_3$ | $OCHF_2$ | $CHF_2$ | Cl |
| A-2354 | $CH_3$ | $CH_3$ | $OCHF_2$ | $CHF_2$ | Cl |
| A-2355 | $CH_2CH_3$ | $CH_3$ | $OCHF_2$ | $CHF_2$ | Cl |
| A-2356 | H | $CH_3$ | $OCF_3$ | $CHF_2$ | Cl |
| A-2357 | F | $CH_3$ | $OCF_3$ | $CHF_2$ | Cl |
| A-2358 | Cl | $CH_3$ | $OCF_3$ | $CHF_2$ | Cl |
| A-2359 | $CH_3$ | $CH_3$ | $OCF_3$ | $CHF_2$ | Cl |
| A-2360 | $CH_2CH_3$ | $CH_3$ | $OCF_3$ | $CHF_2$ | Cl |
| A-2361 | H | $CH_3$ | F | $CF_3$ | Cl |
| A-2362 | F | $CH_3$ | F | $CF_3$ | Cl |
| A-2363 | Cl | $CH_3$ | F | $CF_3$ | Cl |
| A-2364 | $CH_3$ | $CH_3$ | F | $CF_3$ | Cl |
| A-2365 | $CH_2CH_3$ | $CH_3$ | F | $CF_3$ | Cl |
| A-2366 | H | $CH_3$ | Cl | $CF_3$ | Cl |
| A-2367 | F | $CH_3$ | Cl | $CF_3$ | Cl |
| A-2368 | Cl | $CH_3$ | Cl | $CF_3$ | Cl |

Tabelle A (fortgesetzt)

| Nr. | $R^1$ | $R^2$ | $R^{11}$ | $R^{12}$ | $R^{13}$ |
|---|---|---|---|---|---|
| A-2369 | $CH_3$ | $CH_3$ | Cl | $CF_3$ | Cl |
| A-2370 | $CH_2CH_3$ | $CH_3$ | Cl | $CF_3$ | Cl |
| A-2371 | H | $CH_3$ | $CHF_2$ | $CF_3$ | Cl |
| A-2372 | F | $CH_3$ | $CHF_2$ | $CF_3$ | Cl |
| A-2373 | Cl | $CH_3$ | $CHF_2$ | $CF_3$ | Cl |
| A-2374 | $CH_3$ | $CH_3$ | $CHF_2$ | $CF_3$ | Cl |
| A-2375 | $CH_2CH_3$ | $CH_3$ | $CHF_2$ | $CF_3$ | Cl |
| A-2376 | H | $CH_3$ | $CF_3$ | $CF_3$ | Cl |
| A-2377 | F | $CH_3$ | $CF_3$ | $CF_3$ | Cl |
| A-2378 | Cl | $CH_3$ | $CF_3$ | $CF_3$ | Cl |
| A-2379 | $CH_3$ | $CH_3$ | $CF_3$ | $CF_3$ | Cl |
| A-2380 | $CH_2CH_3$ | $CH_3$ | $CF_3$ | $CF_3$ | Cl |
| A-2381 | H | $CH_3$ | $SCHF_2$ | $CF_3$ | Cl |
| A-2382 | F | $CH_3$ | $SCHF_2$ | $CF_3$ | Cl |
| A-2383 | Cl | $CH_3$ | $SCHF_2$ | $CF_3$ | Cl |
| A-2384 | $CH_3$ | $CH_3$ | $SCHF_2$ | $CF_3$ | Cl |
| A-2385 | $CH_2CH_3$ | $CH_3$ | $SCHF_2$ | $CF_3$ | Cl |
| A-2386 | H | $CH_3$ | $SCF_3$ | $CF_3$ | Cl |
| A-2387 | F | $CH_3$ | $SCF_3$ | $CF_3$ | Cl |
| A-2388 | Cl | $CH_3$ | $SCF_3$ | $CF_3$ | Cl |
| A-2389 | $CH_3$ | $CH_3$ | $SCF_3$ | $CF_3$ | Cl |
| A-2390 | $CH_2CH_3$ | $CH_3$ | $SCF_3$ | $CF_3$ | Cl |
| A-2391 | H | $CH_3$ | $OCHF_2$ | $CF_3$ | Cl |
| A-2392 | F | $CH_3$ | $OCHF_2$ | $CF_3$ | Cl |
| A-2393 | Cl | $CH_3$ | $OCHF_2$ | $CF_3$ | Cl |
| A-2394 | $CH_3$ | $CH_3$ | $OCHF_2$ | $CF_3$ | Cl |
| A-2395 | $CH_2CH_3$ | $CH_3$ | $OCHF_2$ | $CF_3$ | Cl |
| A-2396 | H | $CH_3$ | $OCF_3$ | $CF_3$ | Cl |
| A-2397 | F | $CH_3$ | $OCF_3$ | $CF_3$ | Cl |
| A-2398 | Cl | $CH_3$ | $OCF_3$ | $CF_3$ | Cl |
| A-2399 | $CH_3$ | $CH_3$ | $OCF_3$ | $CF_3$ | Cl |
| A-2400 | $CH_2CH_3$ | $CH_3$ | $OCF_3$ | $CF_3$ | Cl |

Ganz besonders bevorzugt sind im Hinblick auf ihre Verwendung sind die Verbindungen I'' ($R^2$, $R^3$, $R^4$, $R^5$, $R^6$, $R^9$, $R^{10}$, $R^{14}$ und $R^{15}$ stehen für Wasserstoff und $R^8$ für Methyl)

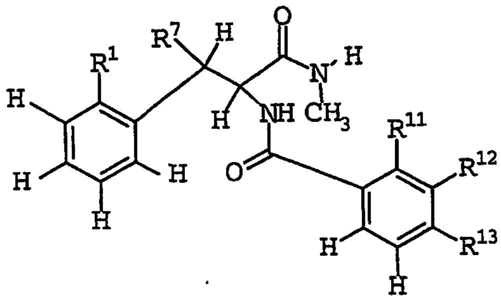

I''

und worin

$R^1$ für Wasserstoff, Fluor oder Methyl;

$R^7$ für Wasserstoff, Methyl oder Ethyl;

$R^{11}$ für Chlor;

$R^{12}$ für Trifluormethyl,

$R^{13}$ für Wasserstoff
stehen.

Ebenfalls ganz besonders bevorzugt sind im Hinblick auf ihre Verwendung sind die Verbindungen I'' worin

$R^1$ für Wasserstoff, Fluor oder Methyl;

$R^7$ für Wasserstoff, Methyl oder Ethyl;

$R^{11}$ für Trifluormethyl;

$R^{12}$ für Wasserstoff

$R^{13}$ für Flour
stehen.

Wie eingangs erwähnt, sind die S-Enantiomere bzw. S-Diastereomere in Bezug auf das $\alpha$-Kohlenstoffatom der in den Tabellen 1 bis 96 aufgeführten Verbindungen bevorzugt.

Die substituierten Phenylalaninderivate der Formel I sind auf verschiedene Weise erhältlich, beispielsweise über Festphasensynthese nach den Verfahren 1 oder 2:

Verfahren 1:

A) Verknüpfung des Phenylalaninderivates mit einem Trägerharz

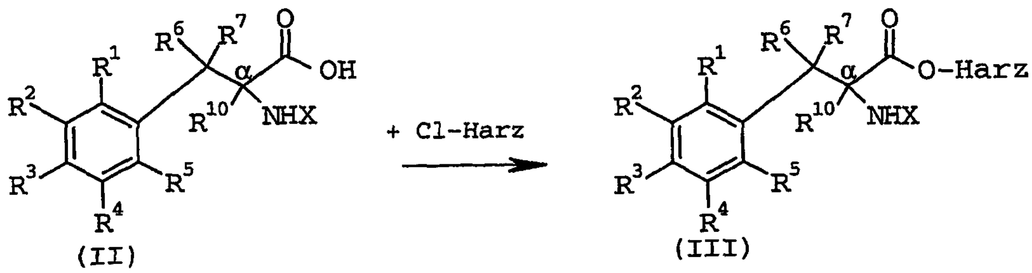


Schema 1

Die Verknüpfung von Aminosäurederivaten mit einem Trägerharz ist bekannt und beispielsweise in Barlos K. et al., Int J Pept Protein Res, 37 (1991) S. 513; Barlos K. et al., Int J Pept Protein Res, 47 (1991) S. 148; Barlos K. et al., Tetrahedron Lett., 30 (1989) S.3943; Barlos K. et al., Tetrahedron Lett., 32 (1991) S.471; Chhabra S.R. et al., Tetrahedron Lett., 39 (1998) S.1603 beschrieben. Ein an der Stickstofffunktion mit einer Schutzgruppe X, zum Beispiel mit einer 9-Fluorenylmethoxycarbonyl-(FMOC)-Schutzgruppe, einer Phenylmethoxycarbonylgruppe (Cbz), Nitrobenzolsulfenyl- (Nps) -gruppe einer 1,1-Dimethylethoxycarbonylgruppe (Boc) geschütztes Phenylalaninderivat II wird in einer Veresterung mit einem Hydroxygruppen tragenden Harz verbunden (s. Schema 1). Die Herstellung der Verbindungen II ist bekannt und erfolgt in Analogie zu bekannten Methoden, wie sie beispielsweise in Barlos K. et al., Int J Pept Protein Res, 37 (1991) S. 513; Barlos K. et al., Int J Pept Protein Res, 47 (1991) S. 148; Barlos K. et al., Tetrahedron Lett., 30 (1989) S.3943; Barlos K. et al., Tetrahedron Lett., 32 (1991) S.471; Chhabra S.R. et al., Tetrahedron Lett., 39 (1998) S.1603 beschrieben sind. Weiterhin ist eine Vielzahl der Verbindungen II kommerziell erhältlich. Hierbei erfolgt die Veresterungsreaktion bevorzugt in Gegenwart einer Base, wobei das Verhältniss von Base zu Verbindung II in etwa 2:1 beträgt. Beispiele für geeignete Basen sind hierbei Amine wie Ethyldiisopropylamin, Triethylamin oder N-methylmorpholin. Geeignete Harze sind beispielsweise-Harze auf Polystyrolbasis mit Wang oder Trityl-Linkern. Die Reaktion läuft in der Regel in einem inerten organischen Lösungsmittel , z.B. in einem aromatischen Kohlenwasserstoff wie Benzol oder Toluol oder in einem chlorierten Kohlenwasserstoff wie Dichlormethan oder einem aprotisch dipolaren organischen Lösungsmitteln wie Dimethylformamid (DMF), Essigsäuredimethylamid (DMA) oder N-Methylpyrrolidon (NMP) oder einem Ether wie Methyl-t-butylether, Dieethylether oder Tetrahydrofuran (THF). Die Reaktion kann bei Temperaturen von 0°C bis zum Siedepunkt des Reaktionsgemisches, vorzugsweise bei Raumtemperatur durchgeführt werden.

B) Abspalten der Schutzgruppe X

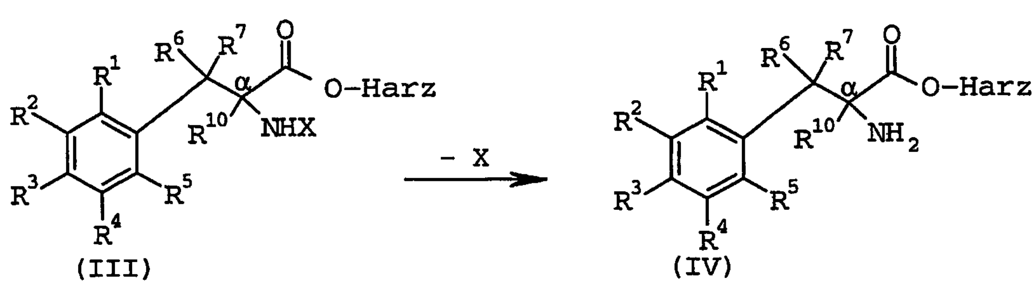


Schema 2

Das Abspalten der Schutzgruppe X (s. Schema 2) erfolgt in Schritt B in Analogie zu bekannten Methoden,

im Falle einer FMOC-Schutzgruppe über Zugabe einer Base wie z.B. Piperidin oder 1,5-Diazabicyclo[4.3.0]non-5-en in einem aprotisch dipolaren organischen Lösungsmittel wie Dimethylformamid (DMF), Essigsäuredimethylamid (DMA) oder N-Methylpyrrolidon (NMP) im Verhältniss 1:1 bis 1:5, wodurch Verbindungen IV erhalten werden. Die Reaktion kann bei Temperaturen von 0°C bis zum Siedepunkt des Reaktionsgemisches, vorzugsweise bei Raumtemperatur durchgeführt werden.

C) N-Acylierung

Die in Schritt C erfolgende N-Acylierung kann a) mittels einer substituierten Benzoesäure V (Verfahrensvariante C.1) oder b) mit einem Benzoesäurederivat beispielsweise mittels eines substituierten Benzoesäurehalogenids VI (Verfahrensvariante C.2) in Analogie zu bekannten Verfahren erfolgen, wie sie beispielsweise in Neustadt B.R. et al., Tetrahedron Lett. 39 (1998) S. 5317 beschrieben sind.

C.1) N-Acylierung mittels einer substituierten Benzoesäure

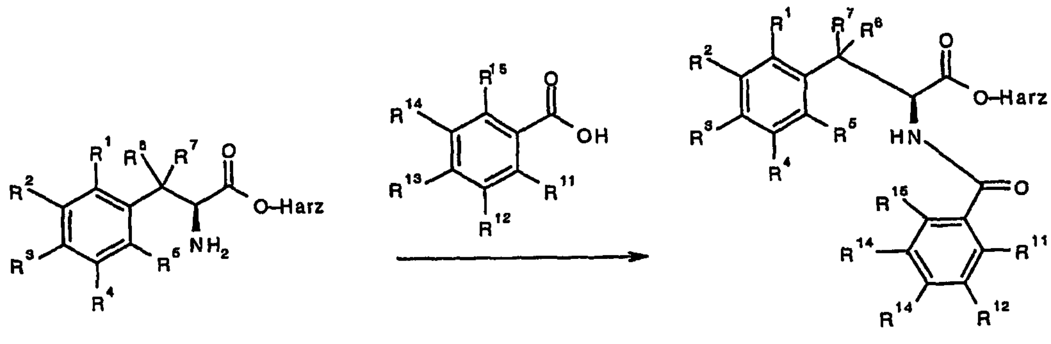

IV V VIII

Schema 3

Die Verbindungen V können mit Verbindungen IV zu den Verbindungen VIII umgesetzt werden (s. Schema 3) beispielsweie über Aktivierung der Carboxylgruppe von V mit elektrophilen Reagentien wie z.B. Dicyclohexylcarbodiimid (DCC) oder Diisopropylcarbodiimid (DIC) in Gegenwart einer katalytischen Menge einer organischen Base wie z.B. 4-Dimethylaminopyridin oder Pyridin. Gegebenenfalls kann eine weitere Aktivierung der Reaktion durch Verwendung von 1-Hydroxybenzotriazol erreicht werden. Die Reaktion erfolgt bis zur vollständigen Umsetzung über einen Zeitraum von 4-12h bei Temperaturen von 0°C bis zum Siedepunkt des Reaktionsgemisches, vorzugsweise bei Raumtemperatur in einem inerten organischen Lösungsmittel wie z.B. einem aromatischen Kohlenwasserstoff wie Benzol oder Toluol oder in einem chlorierten Kohlenwasserstoff wie Dichlormethan oder organischen Lösungsmitteln wie Dimethylformamid (DMF), Essigsäuredimethylamid (DMA) oder N-Methylpyrrolidon (NMP), Methyl-t-butylether, Diethylether oder Tetrahydrofuran (THF). Die Herstellung von Verbindungen V kann in Analogie zu bekannten Verfahren erfolgen, wie sie beispielsweise in Houben-Weyl, "Methoden der organischen Chemie, 4. Auflage, Herausgeg. J. Talbe, New York 1985, S.193-585 beschrieben sind. Des weiteren ist eine Vielzahl der Verbindungen V auch kommerziell erhältlich.

C.2)N-Acylierung mittels einer substituierten Benzoesäurehalogenides

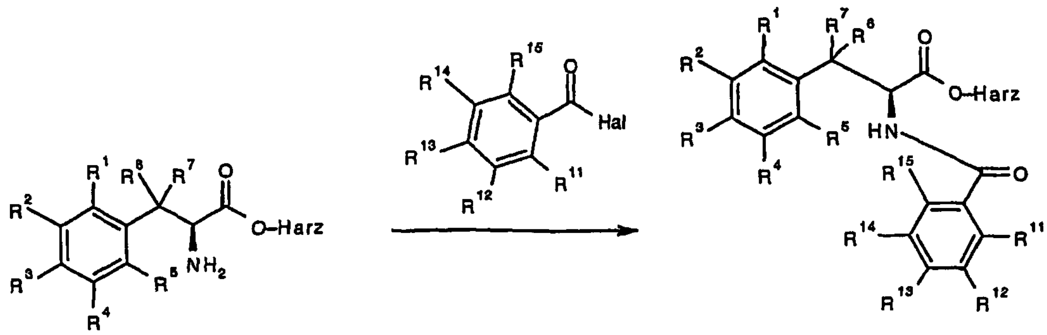

IV VI VIII

Schema 4

Zur Herstellung von Verbindung VIII kann Verbindung IV über Zugabe einer organische Base wie Triethylamin, N-Methylmorpholin oder Diisopropylethylamin (DIPEA) oder auch Pyridin gegebenenfals in Gegenwart einer katalytischen Menge 4-Dimehtylaminopyridin mit einem substituierten Benzoesäurehalogenid VI umgesetzt werden (s. Schema 4). Die Reaktion findet bei Temperaturen von 0°C bis zum Siedepunkt des Reaktionsgemisches, vorzugsweise bei Raumtemperatur in einem inerten organischen Lösungsmittel statt wie z.B. einem aromatischen Kohlenwasserstoff wie Benzol oder Toluol oder in einem chlorierten Kohlenwasserstoff wie Dichlormethan oder organischen Lösungsmitteln wie Dimethylformamid (DMF), Essigsäuredimethylamid (DMA), N-Methylpyrrolidon (NMP), Methyl-t-butylether, Dieethylether oder Tetrahydrofuran (THF).Die Herstellung von Verbindungen VI kann in Analogie zu bekannten Verfahren erfolgen, wie sie beispielsweise in Houben-Weyl, "Methoden der organischen Chemie, 4. Auflage, Herausgeg. J. Talbe, S.587-615 beschrieben sind. Des weiteren ist eine Vielzahl der Verbindungen VI auch kommerziell erhältlich.

Im Anschluß wird die am Harz gebundene derivatisierte Aminosäure mittels einer Säure wie Trifluoressigsäure oder Essigsäure in einem polaren Lösungsmittel wie 2,2,2-Trifluorethanol, Dichlormethan oder Gemischen aus den vorstehend genannten Lösungsmitteln gegebenenfalls in Gegenwart von Wasser vom Harz abgespalten. Beispielsweise können Gemische aus 2,2,2-Trifluorethanol / Essigsäure / Dichlormethan eingesetzt werden.

D) Umsetzung des N-substituierten Phenylalaninderivates zu Verbindung I

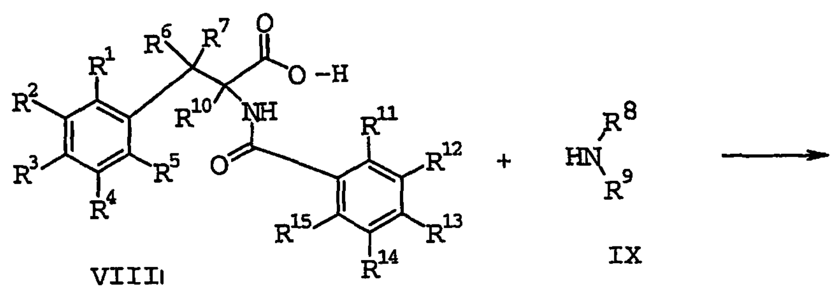

VIIIı IX I

Schema 5

Die Umsetzung der Verbindung VIII zu den Phenylalaninderivaten der Formel I erfolgt in Analogie zu in der Literatur bekannten Verfahren, wie sie beispielsweise in Guan et al., J. Comb. Chem. 2 (2000) S. 297 beschrieben sind. So kann die Umsetzung der derivatisierten Aminosäure zum erfindungsgemäßen Amid I durch Zugabe eines Amins der Formel IX (s. Schema 5) in Gegenwart einer harzgebundenen Kondensationsmittels wie z.B. polystyrolgebundenes Dicyclohexylcarbodiimid bei Temperaturen von 0°C bis zum Siedepunkt des Reaktionsgemisches, vorzugsweise bei Raumtemperatur in einem inerten aprotisch dipolaren organischen Lösungsmittel wie Dimethylformamid (DMF), Essigsäuredimethylamid (DMA) oder N-Methylpyrrolidon (NMP) versetzt. Amine der Formel IX können in Analogie zu dem Fachmann bekannten Methoden synthetisiert werden. Eine Vielzahl der Amine IX ist zudem kommerziell erhältlich.

Verfahren 2

Verfahren 2 beschreibt die Herstellung von Verbindungen I, in denen $R^9$ = Wasserstoff ist.

A Reduktive Aminierung eines Polymer-Harzes x

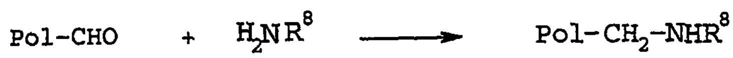

X XI

Schema 6

Die Reduktive Aminierung eines polymergebundenen Aldehyds erfolgt in Analogie zu bekannten Methoden wie sie beispielsweise in Fivush et al., Tetrahedron Lett, 38 (1997), S. 7151, del Fresno et al., Tetrahedron Lett, 39 (1998) S. 2639 sowie Bilodeau et al., J Org Chem, 63(1998) p. 2800 beschrieben sind.

Ein geeignetes Polymer-Harz, z.B. ein 4-(4-Formyl-3-methoxyphenoxy)butyryl-aminomethylpolystyrol-Harz (Pol-CHO) X wird mit einem Amin IX in Gegenwart eines Reduktionsmittels wie Natriumcyanoborhydrid oder auch Natriumtrisacetoxyborhydrid ggf. unter Zusatz von Essigsäure, Mehtanol oder Ethanol in einem organischen Lösungsmittel wie Dimethylformamid (DMF), Essigsäuredimethylamid (DMA) oder N-Methylpyrrolidon (NMP) umgesetzt, wobei ein aminiertes Harz XI erhalten wird (s. Schema 6). Die Reaktion erfolgt bis zur vollständigen Umsetzung über einen Zeitraum von 12-24h bei Temperaturen von 0°C bis zum Siedepunkt des Reaktionsgemisches, vorzugsweise bei Temperaturen von 40-60°C.

B N-Acylierung mittels eines substituierten Phenylalaninderivates

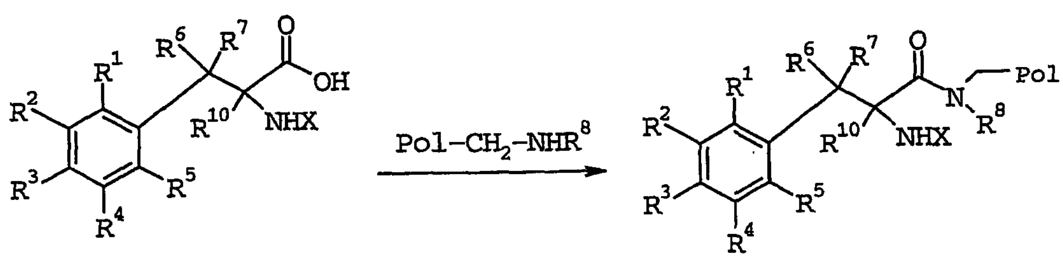


II XII

Schema 7

Die Verbindungen XI können mit einem an der Stickstofffunktion mit einer Schutzgruppe X, zum Beispiel mit einer 9-Fluorenylmethoxycarbonyl-(FMOC)-Schutzgruppe, einer Phenylmethoxycarbonylgruppe (Cbz), Nitrobenzolsulfenyl- (Nps) -gruppe einer 1,1-Dimethylethoxycarbonylgruppe (Boc) geschütztem Phenylalaninderivat II zu den Verbindungen XII umgesetzt werden. Dies kann beispielsweie über Aktivierung der Carboxylgruppe von II mit elektrophilen Reagentien wie z.B. Benzotriazol-1-yl-oxy-tris-pyrrolidino-phosphonium-hexafluorophosphat (PyBOP) oder auch unter Zuhilfenahme von Kondensationsmitteln wie Dicyclohexylcarbodiimid (DCC) oder Diisopropylcarbodiimid und Zugabe einer katalytischen Menge einer organischen Base wie z.B. N-Methylmorpholin oder 4-Dimethylaminopyridin erfolgen. Die Reaktion erfolgt bis zur vollständigen Umsetzung über einen Zeitraum von 12-24h bei Temperaturen von 0°C bis zum Siedepunkt des Reaktionsgemisches, vorzugsweise bei Raumtemperatur in einem inerten organischen Lösungsmittel wie z.B. einem aromatischen Kohlenwasserstoff wie Benzol oder Toluol oder in einem chlorierten Kohlenwasserstoff wie Dichlormethan oder organischen Lösungsmitteln wie Dimethylformamid (DMF), Essigsäuredimethylamid

(DMA), N-Methylpyrrolidon (NMP), Methyl-t-butylether, Dieethylether oder Tetrahydrofuran (THF).

C) Abspalten der Schutzgruppe X

Das Abspalten der Schutzgruppe X erfolgt in Analogie zu Schritt B von Verfahren 1, wobei Verbindungen XIII

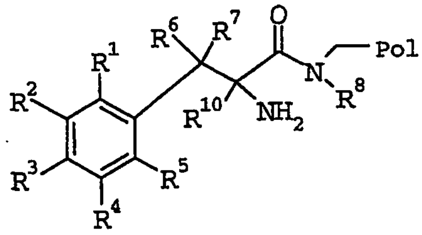

XIII

erhalten werden.

D) N-Acylierung

Die im Anschluss stattfindende N-Acylierung zu den Verbindungen I kann analog wie in Schritt C.1 bzw. C.2 des Verfahrens 1 beschrieb a) mittels einer substituierten Benzoesäure V oder mit einem Benzoesäurederivat beispielsweise mittels eines substituierten Benzoesäurehalogenides VI erfolgen, wobei die Verbindungen XIV

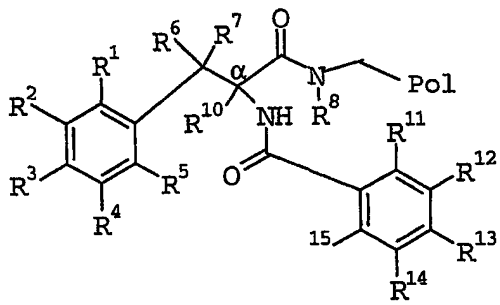

XIV

erhalten werden.

Im Anschluß wird die am Harz gebundene derivatisierte Aminosäure mittels einer Säure wie Trifluoressigsäure oder Essigsäure in einem polaren Lösungsmittel wie 2,2,2-Trifluorethanol, Dichlormethan oder Gemischen aus den vorstehend genannten Lösungsmitteln ggf. in Gegenwart von Wasser vom Harz abgespalten. Beispielsweise können Gemische aus 2,2,2-Trifluorethanol / Essigsäure / Dichlormethan eingesetzt werden, wobei die Verbindungen I erhalten werden, in denen $R^9$ = Wasserstoff ist.

Weiterhin ist es möglich, Verbindungen I in flüssiger Phase herzustellen.

Verfahren 3

A) Aminierung

Hierbei wird zunächst ein an der Stickstofffunktion mit einer Schutzgruppe X, zum Beispiel mit einer 9-Fluorenylmethoxycarbonyl-(FMOC)-Schutzgruppe, einer Phenylmethoxycarbonylgruppe (Cbz), Nitrobenzolsulfenyl- (Nps) -gruppe einer 1,1-Dimethylethoxycarbonylgruppe (Boc) geschütztes Phenylalaninderivat II mit einem Amin IX in Gegenwart eines geeigneten Kondensationsmittels wie z.B. Dicyclohexylcarbodiimid oder Diisopropylcarbodiimid zu den Verbindungen XV

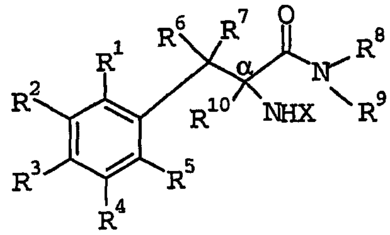

XV

umgesetzt. Gegebenenfalls kann eine weitere Aktivierung der Reaktion durch Verwendung von 1-Hydroxybenzotriazol erreicht werden. Die Reaktion erfolgt bis zur vollständigen Umsetzung über einen Zeitraum von 4-12h bei Temperaturen von 0°C bis zum Siedepunkt des Reaktionsgemisches, vorzugsweise bei Raumtemperatur in einem inerten organischen Lösungsmittel wie z.B. einem aromatischen Kohlenwasserstoff wie Benzol oder Toluol oder in einem chlorierten Kohlenwasserstoff wie Dichlormethan oder organischen Lösungsmitteln wie Dimethylformamid (DMF), Methyl-t-butylether, Diethylether oder Tetrahydrofuran (THF). Die Reaktion erfolgt in Analogie zu bekannten Methoden wie sie beispielsweise in Bouygues et al., Med. Chem. 33 (1998) 445-450 beschrieben sind.

B) Abspalten der Schutzgruppe X

Das Abspalten der Schutzgruppe X erfolgt in Abhängigkeit der verwendeten Schutzgruppe unter basichen, sauren oder reduktiven Bedingungen beispielsweise für die Fmoc-Schutzgruppe in Analogie zu Schritt B von Verfahren 1, wobei Verbindungen XVI

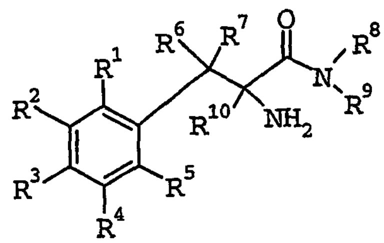

XVI

erhalten werden.

C) N-Acylierung

Die im Anschluss stattfindende N-Acylierung zu den Verbindungen I kann analog wie in Schritt C.1 bzw. C.2 des Verfahrens 1 beschrieben a) mittels einer substituierten Benzoesäure V oder mit einem Benzoesäurederivat beispielsweise mittels eines substituierten Benzoesäurehalogenides VI erfolgen.

Verfahren 4

Die Herstellung substituierter Phenylalaninderivate I, in welchen $R^{10}$ = Wasserstoff ist, kann auch in Analogie zur "Malonestersynthese" unter Verwendung eines Aminomalonsäureesters wie Aminomalonsäurediethylester erfolgen.

Schritt A)

Hierbei wird zunächst das Salz (z.B. das Chlorid) eines Amoniummalonsäureesters

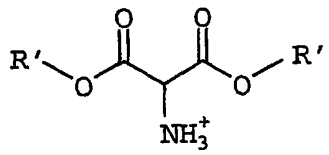

worin R' für einen niedermolekularen organischen Rest steht, beipsielsweise ein $C_1$-C4-Alkylrest; hierin sind leicht zugängliche, kostengünstige Verbindungen bevorzugt wie beispielsweise Dieethylaminomalonsäurester oder Dimethylaminomalonsäurester
mit einer substituierten Benzoesäure, z.B. einem substitutierten Benzoesäurehalogenid VI in Gegenwart einer Base wie Ethyldiisopropylamin, Triethylamin oder N-methylmorpholin umgesetzt, wobei Verbindungen XVII

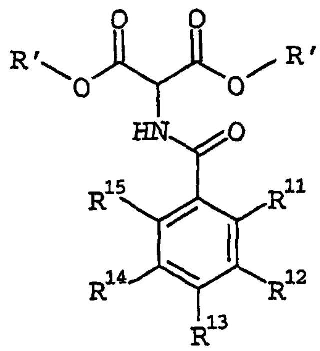

XVII

erhalten werden. Die Reaktion erfolgt bis zur vollständigen Umsetzung über einen Zeitraum von 4-12h bei Temperaturen von -15°C bis zum Siedepunkt des Reaktionsgemisches, vorzugsweise bei 0°C in einem inerten organischen Lösungsmittel statt wie z.B. einem aromatischen Kohlenwasserstoff wie Benzol oder Toluol oder in einem chlorierten Kohlenwasserstoff wie Dichlormethan oder organischen Lösungsmitteln wie Dimethylformamid (DMF), Methyl-t-butylether, Dieethylether oder Tetrahydrofuran (THF).

Schritt B)

Das in Schritt A) erhaltene Produkt wird mit einem mit einer Abgangsgruppe z versehenen Benzylderivat XVIII

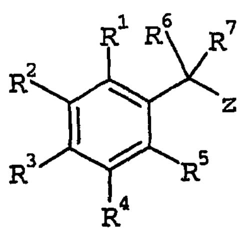

XVIII

zu den Diestern XIX

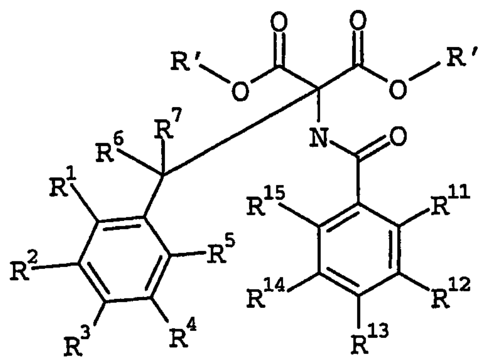

XIX

umgesetzt in einem organischen Lösungsmittel wie z.B. einem cylischen Ether Tetrahydrofuran (THF) oder Dioxan in Gegenwart einer Base wie Kalium-tert.-butylat, Natriumethanolat, Kaliumcarbonat, Natriumcarbonat. Geeignete Abgangsgruppen z sind beispielsweise Halogenid- oder Organosulfonylgruppen. Die Reaktion erfolgt bis zur vollständigen Umsetzung über einen Zeitraum von 4-12h bei Temperaturen von 0°C bis zum Siedepunkt des Reaktionsgemisches, vorzugsweise bei 80°C.

Schritt C

Die Decarboxylierung und Verseifung des Diesters XIX zu den Verbindungen XX

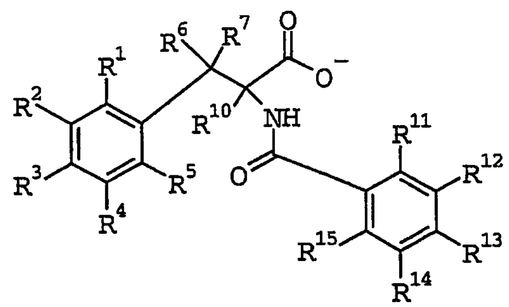

XX

erfolgt in Gegenwart einer Base und Wasser, zB. Natronlauge oder Kalilauge in einem der in Schritt B genannten organischen Lösungsmittel. Im Anschluß erfolgt Neutralisation bis zu einem pH-Wert unter 7, vorzugsweise 1 bis 2 mit einer starken Mineralsäure wie z.B. Salzsäure.

Schritt D

Die Umsetzung der Säure von XX mit einem Amin IX in Gegenwart von harzgebundenen Dicyclohexylcarbodiimid (DCC) erfolgt in Analogie zu den in Verfahren 1 Schritt D beschriebenen Reaktionsbedingungen.

Verfahren 5

Alternativ können die erfindungsgemäßen Verbindungen der Formel 1 auch dadurch erhalten werden, dass man das Benzylderivat XVIII über ein Alkylierungsmittel XXI zu den Verbindungen XXII umsetzt. Die Methoden hierzu sind dem Fachmann bekannt (s. z.B 0 Donnell et al. Aldrichimica Acta Vol. 34 No. 1 2001 Seite 3 bis 15) bekannt.

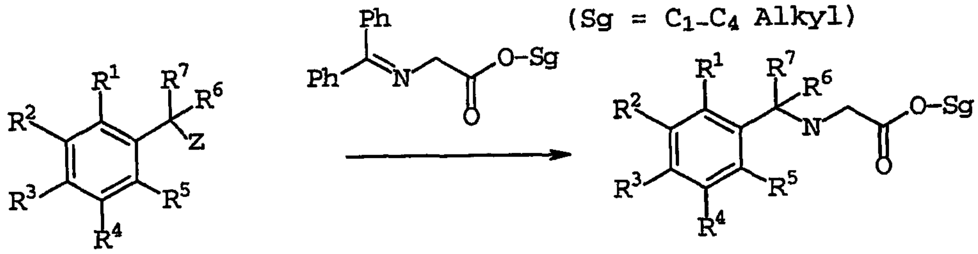


XXIII XXI XXII

Schema 8

Die weitere Umsetzung zu XXIII kann in Analogie zu den in Verfahren 1, Schritt C.1 bzw. Schritt C.2 beschriebenen Methoden durch Umsetzung der Verbindung XXII mit den Benzylderivaten V oder VI zu Verbindung XXIII durchgeführt werden.

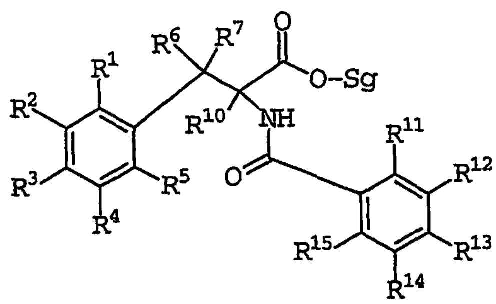

XXIII

Die abschliessende Umsetzung von XXIII zu den Verbindungen I kann mittles des Amins IX erfolgen. Methoden hierzu können z.B. der DE 3917880 oder J. het. Chem. 1991 28 33 ff. entnommen werden.

Die Verbindungen I und deren landwirtschaftlich brauchbaren Salze eignen sich - sowohl als Isomerengemische als auch in Form der reinen Isomeren - als Herbizide. Die I enthaltenden herbiziden Mittel bekämpfen Pflanzenwuchs auf Nichtkülturflächen sehr gut, besonders bei hohen Aufwandmengen. In Kulturen wie Weizen, Reis, Mais, Soja und Baumwolle wirken sie gegen Unkräuter und Schadgräser, ohne die Kulturpflanzen nennenswert zu schädigen. Dieser Effekt tritt vor allem bei niedrigen Aufwandmengen auf.

In Abhängigkeit von der jeweiligen Applikationsmethode können die Verbindungen I bzw. sie enthaltenden herbiziden Mittel noch in einer weiteren Zahl von Kulturpflanzen zur Beseitigung unerwünschter Pflanzen eingesetzt werden. In Betracht kommen beispielsweise folgende Kulturen:

Allium cepa, Ananas comosus, Arachis hypogaea, Asparagus officinalis, Beta vulgaris spp. altissima. Beta vulgaris spp. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesea, Glycine max, Gossypium hirsutum, (Gossypium arboreum, Gossypium herbaceum, Gossypium vitifolium), Helianthus annuus, Hevea brasiliensis, Hordeum vulgare, aumulus lupulus, Ipomoea batatas, Juglans regia, Lens culinaris, Linum usitatissimum, Lycopersicon lycopersicum, Malus spp., Manihot esculenta, Medicago sativa, Musa spp., Nicotiana tabacum (N.rustica), Olea europaea, Oryza sativa , Phaseolus lunatus. Phaseolus vulgaris, Picea abies, Pinus spp.. Pisum sativum, Prunus avium, Prunus persica, Pyrus communis, Ribes sylvestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera und zea mays.

Darüber hinaus können die Verbindungen I. auch in Kulturen, die durch Züchtung einschließlich gentechnischer Methoden gegen die Wirkung von Herbiziden tolerant sind; verwandt werden.

Des weiteren eignen sich die Verbindungen der Formel I auch zur Regulation des Wachstums von Pflanzen von Pflanzen.

Die Verbindungen I bzw. die sie enthaltenden Mittel können beispielsweise in Form von direkt versprühbaren wäßrigen Lösungen, Pulvern, Suspensionen, auch hochprozentigen wäßrigen, öligen oder sonstigen Suspensionen

oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feinste Verteilung der erfindungsgemäßen Wirkstoffe gewährleisten.

Als inerte Hilfsstoffe kommen im Wesentlichen in Betracht: Mineralölfraktionen von mittlerem bis hohem Siedepunkt wie Kerosin und Dieselöl, ferner Kohlenteeröle sowie Öle pflanzlichen oder tierischen Ursprungs, aliphatische, cyclische und aromatische Kohlenwasserstoffe, z.B. Paraffine, Tetrahydronaphthalin, alkylierte Naphthaline und deren Derivate, alkylierte Benzole und deren Derivate, Alkohole wie Methanol, Ethanol, Propanol, Butanol und Cyclohexanol, Ketone wie Cyclohexanon, stark polare Lösungsmittel, z.B. Amine wie N-Methylpyrrolidon und Wasser.

Wäßrige Anwendungsformen können aus Emulsionskonzentraten, Suspensionen, Pasten, netzbaren Pulvern oder wasserdispergierbaren Granulaten durch Zusatz von Wasser bereitet werden. Zur Herstellung von Emulsionen, Pasten oder Öldispersionen können die Phenylalaninderivate als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe (Adjuvantien) kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanolen sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Konzentrationen der Wirkstoffe I in den anwendungsfertigen Zubereitungen können in weiten Bereichen variiert werden. Im allgemeinen enthalten die Formulierungen etwa von 0,001 bis 98 Gew.%, vorzugsweise 0,01 bis 95 Gew.%, mindestens eines Wirkstoffs. Die Wirkstoffe werden dabei in einer Reinheit von 90% bis 100%, vorzugsweise 95% bis 100% (nach NMR-Spektrum) eingesetzt.

Die erfindungsgemäßen Verbindungen I können beispielsweise wie folgt formuliert werden:

I. 20 Gewichtsteile der Verbindung Nr. I-19 werden in einer Mischung gelöst, die aus 80 Gewichtsteilen alkyliertem Benzol, 10 Gewichtsteilen des Anlagerungsproduktes von 8 bis 10 Mol Ethylenoxid an 1 Mol Ölsäure-N-monoethanolamid, 5 Gewichtsteilen Calciumsalz der Dodecylbenzolsulfonsäure und 5 Gewichtsteilen des Anlagerungsproduktes von 40 Mol Ethylenoxid an 1 Mol Ricinusöl besteht. Durch Ausgießen und feines Verteilen der Lösung in 100 000 Gewichtsteilen Wasser erhält man eine wäßrige Dispersion, die 0,02 Gew.-% des Wirkstoffs enthält.

II. 20 Gewichtsteile der Verbindung Nr. I-24 werden in einer Mischung gelöst, die aus 40 Gewichtsteilen Cyclohexanon, 30 Gewichtsteilen Isobutanol, 20 Gewichtsteilen des Anlagerungsproduktes von 7 Mol Ethylenoxid an 1 Mol Isooctylphenol und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gew.-% des Wirkstoffs enthält.

III. 20 Gewichtsteile des Wirkstoffs Nr. I-25 werden in einer Mischung gelöst, die aus 25 Gewichtsteilen Cyclohexanon, 65 Gewichtsteilen einer Mineralölfraktion vom Siedepunkt 210 bis 280°C und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gew.-% des Wirkstoffs enthält.

IV. 20 Gewichtsteile des Wirkstoffs Nr. I-32 werden mit 3 Gewichtsteilen des Natriumsalzes der Diisobutylnaphthalinsulfonsäure, 17 Gewichtsteilen des Natriumsalzes einer Ligninsulfonsäure aus einer Sulfit-Ablauge und 60

Gewichtsteilen pulverförmigem Kieselsäuregel gut vermischt und in einer Hammermühle vermahlen. Durch feines Verteilen der Mischung in 20 000 Gewichtsteilen Wasser enthält man eine Spritzbrühe, die 0,1 Gew.-% des Wirkstoffs enthält.

V. 3 Gewichtsteile des Wirkstoffs Nr. I-49 werden mit 97 Gewichtsteilen feinteiligem Kaolin vermischt. Man erhält auf diese Weise ein Stäubemittel, das 3 Gew.-% des Wirkstoffs enthält.

VI. 20 Gewichtsteile des Wirkstoffs Nr. I-44 werden mit 2 Gewichtsteilen Calciumsalz der Dodecylbenzolsulfonsäure, 8 Gewichtsteilen Fettalkohol-polyglykolether, 2 Gewichtsteilen Natriumsalz eines Phenol-Harnstoff-Formaldehyd-Kondensates und 68 Gewichtsteilen eines paraffinischen Mineralöls innig vermischt. Man erhält eine stabile ölige Dispersion.

VII. 1 Gewichtsteil der Verbindung Nr. I-26 wird in einer Mischung gelöst, die aus 70 Gewichtsteilen Cyclohexanon, 20 Gewichtsteilen ethoxyliertem Isooctylphenol und 10 Gewichtsteilen ethoxyliertem Rizinusöl besteht. Man erhält ein stabiles Emulsionskonzentrat.

VIII. 1 Gewichtsteil der Verbindung Nr.I-3 wird in einer Mischung gelöst, die aus 80 Gewichtsteilen Cyclohexanon und 20 Gewichtsteilen Wettol® EM 31 (nicht ionischer Emulgator auf der Basis von ethoxyliertem Ricinusöl). Man erhält ein stabiles Emulsionskonzentrat.

Die Applikation der Wirkstoffe I bzw. der herbiziden Mittel kann im Vorauflauf- oder im Nachauflaufverfahren erfolgen. Sind die Wirkstoffe für gewisse Kulturpflanzen weniger verträglich, so können Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die Applikation der wachstumsregulierenden Mittel kann im Vorauflauf- oder im Nachauflaufverfahren erfolgen.

Die Aufwandmengen an wachstumsregulierenden Mittel der Formel I betragen bei wachstumsregulatorischer Anwendung je nach Jahreszeit, Bekämpfungsziel, Zielpflanzen und Wachstumsstadium 0,001 bis 5,0, vorzugsweise 0,01 bis 1,0 kg/ha aktive Substanz (a.S.):

Die Verbindungen der Formel I können praktisch alle Entwicklungsstadien einer Pflanze verschiedenartig beeinflussen und werden deshalb als Wachstumsregulatoren eingesetzt. Die Wirkungsvielfalt der Pflanzenwachstumsregulatoren hängt ab vor allem

a) von der Pflanzenart und -Sorte;
b) von dem Zeitpunkt der Applikation, bezogen auf das Entwicklungsstadium der Pflanze und von der Jahreszeit;
c) von dem Applikationsort und -verfahren z.B. (Samenbeize, Bodenbehandlung, Blattapplikation oder Stamminjektion bei Bäumen
d) von klimatischen Faktoren, z.B. Temperatur, Niederschlagsmenge, außerdem auch Tageslänge und Lichtintensität;
e) von der Bodenbeschaffenheit (einschließlich Düngung),
f) von der Formulierung bzw. Anwendungsform des wachstumsregulierenden Mittels der Formel I und schließlich
g) von den angewendeten Konzentrationen der aktiven Substanz.

Aus der Reihe der verschiedenartigen Anwendungsmöglichkeiten der Verbindung I als Wachstumsregulator im Pflanzenanbau, in der Landwirtschaft und im Gartenbau, werden einige nachstehend erwähnt.

A. Mit den erfindungsgemäß verwendbaren Verbindungen läßt sich das vegetative Wachstum der Pflanzen stark hemmen, was sich insbesondere in einer Reduzierung des Längenwachstums äußert. Die behandelten Pflanzen weisen demgemäß einen gedrungenen Wuchs auf; außerdem ist eine dunklere Blattfärbung zu beobachten. Als vorteilhaft für die Praxis erweist eine verminderte Intensität des Wachstums von Gräsern an Straßenrändern, Hekken, Kanalböschungen und auf Rasenflächen wie Park-, Sport- und Obstanlagen, Zierrasen und Flugplätzen, so daß der Arbeits- und kostenaufwendige Rasenschnitt reduziert werden kann.

Von wirtschaftlichem Interesse ist auch die Erhöhung der Standfestigkeit von lageranfälligen Kulturen wie Getreide, Mais, Sonnenblumen und Soja. Die dabei verursachte Halmverkürzung und Halmverstärkung verringern oder beseitigen die Gefahr des "Lagerns" (des Umknickens) von Pflanzen unter ungünstigen Witterungsbedingungen vor der Ernte.

Wichtig ist auch die Anwendung von Wachstumsregulatoren zur Hemmung des Längenwachstums und zur

zeitlichen Veränderung des Reifeverlaufs bei Baumwolle. Damit wird ein vollständig mechanisiertes Beernten dieser wichtigen Kulturpflanze ermöglicht.

Bei Obst- und anderen Bäumen lassen sich mit den Wachstumsregulatoren Schnittkosten einsparen. Außerdem kann die Alternanz von Obstbäumen durch Wachstumsregulatoren gebrochen werden.

Durch Anwendung von Wachstumsregulatoren kann auch die seitliche Verzweigung der Pflanzen vermehrt oder gehemmt werden. Daran besteht Interesse, wenn z.B. bei Tabakpflanzen die Ausbildung von Seitentrieben (Geiztrieben) zugunsten des Blattwachstums gehemmt werden soll.

Mit Wachstumsregulatoren läßt sich beispielsweise bei Winterraps auch die Frostresistenz erheblich erhöhen. Dabei werden einerseits das Längenwachstum und die Entwicklung einer zu üppigen (und dadurch besonders frostanfälligen) Blatt- bzw. Pflanzenmasse gehemmt. Andererseits werden die jungen Rapspflanzen nach der Aussaat und vor dem Einsetzen der Winterfröste trotz günstiger Wachstumsbe-dingungen im vegetativen Entwicklungsstadium zurückgehalten. Dadurch wird auch die Frostgefährdung solcher Pflanzen beseitigt, die zum vorzeitigen Abbau der Blühhemmung und zum Übergang in die generativen Phase neigen. Auch bei anderen Kulturen, z.B. Wintergetreide ist es vorteilhaft, wenn die Bestände durch Behandlung mit erfindungsgemäßen Verbindungen im Herbst zwar gut bestockt werden, aber nicht zu üppig in den Winter hineingehen. Dadurch kann der erhöhten Frostempfindlichkeit und -wegen der relativ geringen Blatt- bzw. Pflanzenmasse - dem Befall mit verschiedenen Krankheiten (z.B. Pilzkrankheit) vorgebeugt werden. Die Hemmung des vegetativen Wachstums ermöglicht außerdem bei vielen Kulturpflanzen eine dichtere Bepflanzung des Bodens, so daß ein Mehrertrag bezogen auf die Bodenfläche erzielt werden kann.

B. Mit den Verbindungen der Formel I lassen sich Mehrerträge sowohl an Pflanzenteilen als auch an Pflanzeninhaltsstoffen erzielen. So ist es beispielsweise möglich, das Wachstum größerer Mengen an Knospen, Blüten, Blättern, Früchten, Samenkörnern, Wurzeln und Knollen zu induzieren, den Gehalt an Zucker in Zuckerrüben, Zuckerrohr sowie Zitrusfrüchten zu erhöhen, den Proteingehalt in Getreide oder Soja zu steigern oder Gummibäume zum vermehrten Latexfluß zu stimulieren. Dabei können die Verbindungen der Formel I Ertragssteigerungen durch Eingriffe in den pflanzlichen Stoffwechsel bzw. durch Förderung oder Hemmung des vegetativen und/oder des generativen Wachstums verursachen.

C. Mit Pflanzenwachstumsregulatoren lassen sich schließlich sowohl eine Verkürzung bzw. Verlängerung der Entwicklungsstadien als auch eine Beschleunigung bzw. Verzögerung der Reife der geernteten Pflanzenteile vor oder nach der Ernte erreichen.
Von wirtschaftlichem Interesse ist beispielsweise die Ernteerleichterung, die durch das zeitlich konzentrierte Abfallen oder Vermindern der Haftfestigkeit am Baum bei Zitrusfrüchten, Oliven oder bei anderen Arten und Sorten von Kern-, Stein- und Schalenobst ermöglicht wird. Derselbe Mechanismus, das heißt die Förderung der Ausbildung von Trenngewebe zwischen Frucht- bzw. Blatt- und Sproßteil der Pflanze ist auch für ein gut kontrollierbares Entblättern von Nutzpflanzen wie beispielsweise Baumwolle wesentlich.

D. Mit den Verbindungen der Formel I kann weiterhin der Wasserverbrauch von Pflanzen reduziert werden. Dies ist besonders wichtig für landwirtschaftliche Nutzflächen, die unter einem hohen Kostenaufwand künstlich bewässert werden müssen, z.B. in ariden oder semiariden Gebieten. Durch den Einsatz der erfindungsgemäßen Substanzen läßt sich die Intensität der Bewässerung reduzieren und damit eine kostengünstigere Bewirtschaftung durchführen. Unter dem Einfluß von den Verbindungen der Formel I kommt es zu einer besseren Ausnutzung des vorhandenen Wassers, weil u.a.

- die Öffnungsweite der Stomata reduziert wird
- eine dickere Epidermis und Cuticula ausgebildet werden
- die Durchwurzelurig des Bodens verbessert wird und
- das Mikroklima im Pflanzeribestand durch einen kompakteren Wuchs günstig beeinflußt wird.

Die erfindungsgemäß als Wachstumsregulatoren zu verwendenden Verbindungen der Formel I können den Kulturpflanzen sowohl vom Samen her (als Saatgutbeizmittel) als auch über den Boden, d.h. durch die Wurzel sowie -besonders bevorzugt - durch Spritzung über das Blatt zugeführt werden.

Zur Verbreiterung des Wirkungsspektrums und zur Erzielung synergistischer Effekte können die Phenylalaninderivate der Formel I mit zahlreichen Vertretern anderer herbizider oder wachstumsregulierender Wirkstoffgruppen gemischt und gemeinsam ausgebracht werden. Beispielsweise kommen als Mischungspartner 1,2,4-Thiadiazole, 1,3,4-Thiadiazole, Amide, Aminophosphorsäure und deren Derivate, Aminotriazole, Anilide, Aryloxy/Hetaryloxyalkansäure und deren Derivate, Benzoesäure und deren Derivate, Benzothiadiazinone, 2-(Aroyl/Hetaroyl)-1,3-cyclohexandione, Hetaryl-Aryl-Ketone, Benzylisoxazolidinone, Meta-$CF_3$-phenylderivate, Carbamate, Chinolincarbonsäure und

deren Derivate, Chloracetanilide, Cyclohexenonoximetherderivate, Diazine, Dichlorpropionsäure und deren Derivate, Dihydrobenzofurane, Dihydrofuran-3-one, Dinitroaniline, Dinitrophenole, Diphenylether, Dipyridyle, Halogencarbonsäuren und deren Derivate, Harnstoffe, 3-Phenyluracile, Imidazole, Imidazolinone, N-Phenyl-3,4,5,6-tetrahydrophthalimide, Oxadiazole, Oxirane, Phenole, Aryloxy- oder Heteroaryloxyphenoxypropionsäureester, Phenylessigsäure und deren Derivate, Phenylpropionsäure und deren Derivate, Pyrazole, Phenylpyrazole, Pyridazine, Pyridincarbonsäure und deren Derivate, Pyrimidylether, Sulfonamide, Sulfonylharnstoffe, Triazine, Triazinone, Triazolinone, Triazolcarboxamide, Uracile in Betracht.

Außerdem kann es von Nutzen sein, die Verbindungen der Formel I allein oder in Kombination mit anderen Herbiziden auch noch mit weiteren Pflanzenschutzmitteln gemischt, gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- und Spurenelementmängeln eingesetzt werden. Es können auch nichtphytotoxische Öle und Ölkonzentrate zugesetzt werden.

Die Aufwandmengen an Wirkstoff betragen je nach Bekämpfungsziel, Jahreszeit, Zielpflanzen und Wachstumsstadium 0,001 bis 3,0, vorzugsweise 0,01 bis 1,0 kg/ha aktive Substanz (a. S.)

Herstellungsbeispiele

Herstellung der Verbindung I-44

A Reduktive Aminierung eines Polymer-Harzes

20g 4-(4-Formyl-3-methoxyphenoxy)butyryl-aminomethylpolystyrol-Harz wurde in 200ml Dimethylformamid und 2ml Essigsäure (2 ml) vorgelegt, mit 49ml Methylamin, 10,7ml Trimethylorthoformiat und 6,2g Natriumcyanoborhydrid versetzt und 18 Stunden bei 50°C geschüttelt. Nach dem Abkühlen auf Raumtemperatur wurde das Harz abfiltriert, mit je 100 ml Dimethylformamid (2x), Methanol (1x), Tetrahydrofuran (3x) und Dichlormethan (3x) gewaschen und bei Raumtemperatur getrocknet.

B N-Acylierung mittels eines substituierten Phenylalaninderivates

5g des in Schritt A hergestellten Harzes wurde in 50ml Dichlormethan/Dimethylformamid 1:1 vorgelegt, mit 4,4g Fmoc-2-Fluor-Phenylalanin und 5,6g Benzotriazol-1-yl-oxy-tris-pyrrolidino-phosphonium-hexafluorophosphat (PyBOP) versetzt und 5 min bei Raumtemp. geschüttelt. Danach gab man 1,9ml N-Methylmorpholin dazu und ließ 18 Stunden bei Raumtemperatur schütteln. Nach dem Abfiltrieren wurde mit je 20 ml Dimethylformamid (5x) gewaschen.

C) Abspalten der Schutzgruppe X

Zur Abspaltung der Fmoc-Schutzgruppe wurde das Harz in 50 ml Dimethylformamid/Piperidin 1:1 suspendiert und 1 h bei Raumtemperatur geschüttelt. Anschließend wurde abfiltriert und mit je 20 ml Dimethylformamid (2x), Methanol (1x), Tetrahydrofuran (3x) und Dichlormethan (3x) gewaschen. Das Harz wurde bei Raumtemperatur getrocknet.

D) N-Acylierung

250mg des Harz aus Schritt C wurde mit 133mg 2,4-Dichlor-3-(difluormethyl)benzoesäure und 286mg Benzotriazol-1-yl-oxy-tris-pyrrolidino-phosphonium-hexafluorophosphat (PyBOP) in Dichlormethan/Dimethylformamid 1:1 (2.5 ml) vorgelegt. Nach 5 Minuten Schütteln gab man 97µl N-Methylmorpholin dazu und ließ 18 h bei Raumtemp. schütteln Anschließend wurde abfiltriert und mit je 3 ml Dimethylformamid (2x), Methanol (1x), Tetrahydrofuran (3x) und Dichlormethan (3x) gewaschen. Zur Abspaltung des Produkts vom festen Träger wurde das Harz mit ca. 2ml Trifluoressigsäure/Dichlormethan 1:3 versetzt. Nach 30 min schütteln wurde filtriert und das Filtrat für die weitere Verwendung eingeengt.

*) 2,4-Dichlor-3-(difluormethyl)benzoesäure wurde wie folgt hergestellt: Umsetzung von 1,3-Dichlor-2-methylbenzol mit Acetylchlorid mit nachfolgender Oxidation zum 1,3-Dichlor-2-methylbenzoesäure, Umsetzung der Benzoesäure zum Methylester, anschließender Bromierung der an Position 2 befindlichen Methlygruppierung, Oxidation der bromierten Methylgruppierung zum entsprechenden Aldeyd, Fluorierung des hierbei entstandenen Produktes mit Diethylaminoschwefeltrifluorid und anschließender Verseifung des enstandenen 2,4-Dichlor-2-difluormethylbenzoesäuremethylester zur 2,4-Dichlor-3-(difluormethyl)benzoesäure.
Ausbeute: 48%

Herstellung der Verbindung I-32 nach Verfahren 4

Schritt A

Zu 5,29g Aminomalonsäurediethylester-Hydrochlorid in 100ml Dichlormethan wurden 13,8ml Triethylamin hinzugegeben. Die erhaltene Suspension wurde unter Eiskühlung mit Trifluormethylbenzoylchlorid versetzt und bei Raumtemperatur über Nacht geschüttelt. Im Anschluss wurde die Mischung mit 50ml Wasser ausgeschüttelt, die organische Phase abgetrennt und über Magnesiumsulfat getrocknet.

Schritt B

1,27g des in Schritt A entstandenen Esters wurden in 20ml Dioxan mit 0,8g Methansulfonsäure-1-(2-fluorphenyl)ethylester *) und 0,673g Kalium-tert.-butylat versetzt und bei 80°C unter Schütteln über Nacht inkubiert. Anschließend erfolgte bei Raumtemperatur die Zugabe von Wasser gefolgt von anschließender Extraktion mit Dichlormethan und abschließenden Trocknen über Magnesiumsulfat.

*)Methansulfonsäure-1-(2-fluorphenyl)ethylester wurde aus 12-(2-Fluor-phenly)-ethanol über Umsetzung mit Methansulfonsäureanhydrid hergestellt.

Schritt C

0.8g des in Schritt B enstandene Diesters wurden in 10ml Dioxan mit 1ml konzentrierter ca. 45-Gew.%iger Natronlauge versetzt und bei 80°C unter Rühren über Nacht inkubiert. Anschließend erfolgte bei Raumtemperatur die Zugabe von Wasser. Nach Zugabe von Salzsäure bis zu einem pH-Wert von 2 wurde mit Essigester extrahiert und die organische Phase abgetrennt und eingeengt.

Schritt D

0.75 g der in Schritt C entstandene Säure wurden in 8ml Dichlormethan mit 3,58g polymergebundenen DCC und 0,315g Methylamin (40vol.-% in Wasser) versetzt, bei Raumtemperatur über Nacht geschüttelt und vom Harz über Filtration getrennt.

Die in der nachstehenden Tabelle I aufgeführten Verbindungen wurden unter entsprechender Abwandlung des vorstehend genannten Verfahrens hergestellt. Die für die Synthese der Verbindungen benötigten Verbindungen II wurden von der Firma Fluka und der Firma Advanced Chem Tech, die substituierten Benzoesäuern V bzw. substituierten Benzoesäurechloride VI von der Firma Aldrich und ABCR und die Amine IX von von der Firma Aldrich bezogen.

Die so erhaltenen Phenylalaninderivate der Formel I, mit $R^4$, $R^5$, $R^6$, $R^8$, $R^{14}$ und $R^{15}$ = Wasserstoff, $R^9$ = Methyl wie unten stehend abgebildet

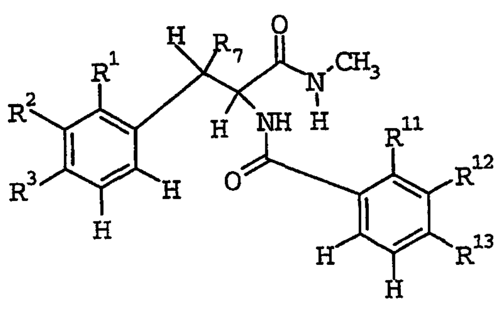

sind in der Tabelle I mit physikalischen Daten, Massensignal (M+) aufgeführt. Die Messungen erfolgten über über LC-MS (HP-1100, Fa. Agilent) unter folgenden Bedingungen:

LC-MS-Bedingungen:

Puffer A (iso-Propanol 0.05% Trifluoressigsäure)
Puffer B (Wasser 0.05% Trifluoressigsäure)
Flußrate: 1,2ml/min
Injektionsvolumen: 2µl

Fragmentarspannung: 20V, Ionisation positiv
Massenbereich (m/z): 130-700
Säule: Merck ROD-Säule (50 x 4,6mm)

$N_2$-Detektion:

(Methode UV-MS-$N_2$)
Injektionsvolumen: 5µl
Fragmentarspannung: 20V, Ionisation positiv
Massenbereich (m/z): 130-700

Herstellung der Verbindung II-15 nach Verfahren 5

Herstellung des Vorproduktes 1-(2-Fluorphenyl)-1-bromypropan

Stufe 1

10.0 g (0.081 mol) 2 F-benzaldehyd wurden in 150 ml THF bei -20 °C mit 100 ml einer 1 M Lösung von Ethylmagnesiumbromid in THF versetzt, 1.5 h unter Rühren inkubiert und mit 100 ml gesätiggter $NH_4Cl$-Lösung tropfenweise versetzt. Nach Sättigung mit NaCl wurde die org. Phase abgetrennt, die wässrige Phase mit Essigester extrahiert und die vereinigten org. Phasen eingeengt.
Signale im 1H-NMR ($CDCl_3$): 7.6-7.0 (m, 4 H), 5.0 (t, 1 H), 2.0 Br.s. 1 H), 1.8 (m, 2 H), 1.0 (t, 3 H)
Ausbeute: 11.2 g als ca. 70 %-iges Rohprodukt, das ohne weitere Reinigung in Stufe 2 eingesetzt wurde%

Stufe 2

11.2 g des in Stufe 1 erhaltenen 1-(2-Fluorphenyl)-1-brompropans wurden in 150 ml $CH_2Cl_2$ gelöst, bei 0°C mit 90 ml einer 1 M Lösung von BBr3 in $CH_2Cl_2$ versetzt und nach 1 h bei 0° C auf Eiswasser gegeben. Nach Abtrennung der organischen Phase wurde die wässrige Phase mit $CH_2Cl_2$ extrahiert und die vereinigten organischen Phasen eingeengt.
Signale im 1H-NMR (CDC13): 7.4-7.0 (m, 4 H), 5.3 (m, 1 H), 2.3 (m, 1 H), 2.1 (m, 1 H), 1.0 (t, 3 H)
Ausbeute: 14.2 g der Titelverbindung, die als ca 85 %-iges Rohprodukt weiter umgesetzt wurde

Herstellung von Nα-(2-Trifluormethyl-4-fluorbenzoyl)-2-(1-methyl-1-(2-fluorphenyl))-glycin-N-methylamid (Verbindung II-15)

Stufe 1

8.61 g Diphenylmethylidenglycinethylester, 7.0 g 1-(1-Bromopropyl)-2-fluorbenzol, 13,6 g (0.1 mol) K2CO3 und 1.06 g (0.003 mol) Tetrabutylammoniumbromid wurden in 200ml Acetonitril für 43 h am Rückfluss gerührt, abgekühlt und abfiltriert. Nach Einengen wurde das Fitrat in 150 ml THF gelöst und mit 150 ml 10 %-iger Citronensäure bis zum vollständigen Umsatz gerührt. Nach Entfernung des THF wurde mit MTBE (Methyl-tertbutylether) extrahiert, die wässrige Phase mit $K_2CO_3$ gesättigt und das Produkt mit 3 mal 100 ml Essigester extrahiert. Trocknen und Einengen ergab 4.92.4 g Rohprodukt, das ohne weitere Reinigung in die nächste Stufe eingesetzt wurde.

Stufe 2

2.4 g des 2-(1-Methyl-1-(2-(-fluorphenyl))glyinethylesters aus Stufe 1 wurden in 100 ml Methylenchlorid gelöst, mit 3.48 g NEt3 versetzt und bei 0°C mit 1.27 g (0.01 mol) 2-Trifluormethyl-4-F-Benzoylchlorid tropfenweise versetzt. Nach 16h Rühren bei Raumtemperatur wurde mit 200 ml Essigester verdünnt, mit je 100 ml IN HCl und Wasser gewaschen und die org. Phase im Vakuum entfernt. Die chromatographische Auftrennung an Kieselgel (Laufmittel Cyclohexan/Essigester 8/1) ergabt 0.7 g des reinen Diastereomeren A von Nα-(2-Trifluormethyl-4-fluorbenzoyl)-2-(1-methyl-1-(2-fluorphenyl))-glycinethylester, 0.22 g eines 1:1 Gemisches der beiden Diastereomeren A und B des Nα-(2-Trifluormethyl-4-fluorbenzoyl)-2-(1-methyl-1-(2-tluorphenyl))-glycinethylesters sowie 0.6 g des Diastereomeren B des Nα-(2-Trifluormethyl-4-fluorbenzoyl)-2-(1-methyl-1-(2-fluorphenyl))-glycinethylesters. Die Diastereomeren A und B wurden getrennt spektroskopisch charakterisiert und dann alle drei Fraktionen für die weitere Umsetzung in Stufe 3 zu 1.55 g eines 1:1 Diastereomerengemisches vereinigt.
Signale im 1H-NMR ($CDCl_3$) von Diastereomer A (Nα-(2-Trifluormethyl-4-fluorbenzoyl)-2-(1-methyl-1-(2-fluorphenyl))-glycinethylester): 7.5-7.0 (m, 7 H), 6.1 (br. d 1H), 5.1 (m, 1 H), 4.3 (m, 2 H), 3.5 (m, 1 H9, 2.1-2.0 (m, 2 H), 1.3 (t, 3 H), 1.0 (t, 3 H).
Signale im 1H-NMR ($CDCl_3$): von Diastereomer B (Nα-(2-Trifluormethyl-4-fluorbenzoyl)-2-(1-methyl-1-(2-fluorphenyl))-glycinethylester): 7.6 -7.0 (m, 7 H), 6.3 (br. d, 1 H), 5.1 (m, 1 H), 4.1 (m, 2 H), 3.3 (m, 1 H), 2.0 (mc 2 H), 1.1 (t, 3 H), 0.8 (t, 3 H).

Stufe 3

1.5 g des enstandenen Diastereomerengemisches aus Stufe 2 wurden in 100 ml Ethanol gelöst. Im Anschluß wurde die Lösung bis zur Sättigung mit gasförmigen Methylamin versetzt. Nach 4 tägigen Rühren bei Raumtemperatur wurde das Gemisch eingeengt und mit 200ml MTBE versetzt. Der entstandene Feststoff wurde abfiltriert und getrocknet. Das entstandene Produkt war ein 1:1 Gemisch der Diastereomeren der Verbindung II-15.
Ausbeute: 0.261 g
Schmelzpunkt: 201-202°C
Signale im 1H-NMR (d6-DMSO): 9.0 (br. d, 1 H), 8.7 (d, 1 H), 8.2 (d, 1 H), 7.8-7.1 (m, 14 H), 6.8 (m, 1 H), 4.9 (m, 1 H), 4.8 (m, 1 H), 3.3 (m, 2 H), 1. 9 (m, 1 H), 1. 6 (m, 3 H) 2.6 (d, 3 H), 2.4 (d, 3 H), 0.8 (m, 6 H).
Die in der nachstehenden Tabelle II aufgeführten Verbindungen wurden unter entsprechender Abwandlung des vorstehend genannten Verfahrens hergestellt. Die für die Synthese der Verbindungen benötigten Ausgangsverbindungen wurden von der Firma Fluka und der Firma Advanced Chem Tech, die substituierten Benzoesäuern V bzw. substituierten Benzoesäurechloride VI von der Firma Aldrich und ABCR und die Amine IX von von der Firma Aldrich bezogen.
Die so erhaltenen Phenylalaninderivate der Formel I, mit $R^9$, $R^{10}$, $R^{14}$ und $R^{15}$ = Wasserstoff wie unten stehend abgebildet

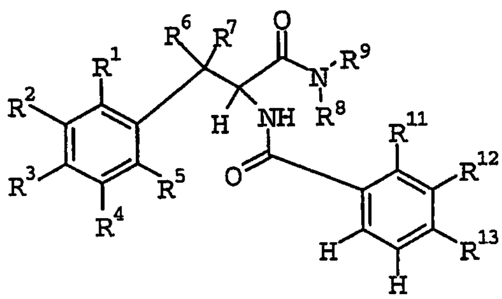

sind in der Tabelle II mit Angabe des Schmelzpunktes bzw. mit physikalischen Daten (Massensignal (M+) sowie LC-MS Messungen nach Bedingungen a oder i).

LC-MS-Bedingung a:

Puffer A (Acetonitril, 0.1% Trifluoressigsäure)
Puffer B (Wasser, 0.1% Trifluoressigsäure)
Flußrate: 1,8ml/min
Temperatur: 80°C
Injektionsvolumen: 2µl
Fragmentarspannung: 80V, Ionisation positiv
Massenbereich (m/z): 100-700
Säule: Merck ROD-Säule (50 x 4,6mm)

LC-MS-Bedingung i:

Puffer A (iso-Propanol, 0.05% Trifluoressigsäure)
Puffer B (Wasser 0.05% Trifluoressigsäure)
Flußrate: 1,5ml/min
Injektionsvolumen: 2µl
Temperatur: 40°C
Fragmentarspannung: 20V, Ionisation positiv

Massenbereich (m/z): 130-700
Säule: Merck ROD-Säule (50 x 4,6mm)

Tabelle I

| Nr. | $R^1$ | $R^2$ | $R^3$ | $R^7$ | $R^{11}$ | $R^{12}$ | $R^{13}$ | $R^{14}$ | Konfiguration | M+ |
|---|---|---|---|---|---|---|---|---|---|---|
| I-1 | F | H | H | H | F | H | H | H | Racemat | 319 |
| I-2 | F | H | H | H | Cl | Cl | H | H | Racemat | 369 |
| I-3 | F | H | H | H | $CF_3$ | H | H | H | Racemat | 369 |
| I-4 | H | F | H | H | F | H | H | H | Racemat | 319 |
| I-5 | H | F | H | H | Cl | Cl | H | H | Racemat | 370 |
| I-6 | H | F | H | H | Br | H | H | H | Racemat | 380 |
| I-7 | H | F | H | H | $CF_3$ | H | H | H | Racemat | 369 |
| I-8 | H | Cl | H | H | F | H | H | H | Racemat | 335 |
| I-9 | H | Cl | H | H | Cl | Cl | H | H | Racemat | 386 |
| I-10 | H | Cl | H | H | Br | H | H | H | Racemat | 396 |
| I-11 | H | Cl | H | H | $CF_3$ | H | H | H | Racemat | 384 |
| I-12 | Cl | H | H | H | F | H | H | H | Racemat | 335 |
| I-13 | Cl | H | H | H | Cl | Cl | H | H | Racemat | 386 |
| I-14 | Cl | H | H | H | Br | H | H | H | Racemat | 396 |
| I-15 | Cl | H | H | H | $CF_3$ | H H | H | H | Racemat | 385 |
| I-16 | $CH_3$ | H | H | H | F | H | H | H | Racemat | 315 |
| I-17 | $CH_3$ | H | H | H | Cl | Cl | H | H | Racemat | 366 |
| I-18 | $CH_3$ | H | H | H | Br | H | H | H | Racemat | 376 |
| I-19 | $CH_3$ | H | H | H | $CF_3$ | H | H | H | S | 365 |
| 1-20 | H | $CH_3$ | H | H | F | H | H | H | Racemat | 315 |
| I-21 | H | $CH_3$ | H | H | Cl | Cl | H | H | Racemat | 366 |
| I-22 | H | $CH_3$ | H | H | Br | H | H | H | Racemat | 376 |
| I-23 | H | $CH_3$ | H | H | $CF_3$ | H | H | H | Racemat | 365 |
| I-24 | H | F | H | H | $CF_3$ | F | H | H | S | 387 |
| I-25 | H | F | H | H | $CF_3$ | H | H | F | S | 387 |
| I-26 | H | H | H | H | $CF_3$ | H | H | H | S | 351 |
| I-27 | H | H | H | H | Cl | Cl | H | H | Racemat | 352 |
| I-28 | $CH_3$ | H | H | H | $CF_3$ | H | H | H | Racemat | 365 |
| I-29 | $CH_3$ | H | H | H | Cl | Cl | H | H | Racemat | 366 |
| I-30 | F | H | H | H | $CF_3$ | H | H | H | R | 369 |
| I-31 | F | H | H | H | Cl | Cl | H | H | R | 370 |
| I-32 | F | H | H | $CH_3$ | $CF_3$ | H | H | H | Diastereomer | 383 |
| I-33 | $CH_3$ | H | H | H | Cl | $CF_3$ | H | H | Racemat | 399 |
| I-34 | $CH_3$ | H | H | H | $CF_3$ | H | F | H | Racemat | 383 |
| I-35 | $CH_3$ | H | H | H | $CF_3$ | F | H | H | Racemat | 383 |

Tabelle I (fortgesetzt)

| Nr. | $R^1$ | $R^2$ | $R^3$ | $R^7$ | $R^{11}$ | $R^{12}$ | $R^{13}$ | $R^{14}$ | Konfiguration | M+ |
|---|---|---|---|---|---|---|---|---|---|---|
| I-36 | H | H | F | H | $CF_3$ | H | H | H | Racemat | 369 |
| I-37 | H | H | Cl | H | $CF_3$ | H | H | H | Racemat | 385 |
| I-38 | H | H | F | H | Cl | Cl | H | H | Racemat | 370 |
| I-39 | H | H | Cl | H | Cl | Cl | H | H | Racemat | 386 |
| I-40 | F | H | H | H | Cl | $CF_3$ | H | H | S | 403 |
| I-41 | F | H | H | H | Cl | H | $NO_2$ | H | S | 380 |
| I-42 | F | H | H | H | Cl | H | $SO_2CH_3$ | H | S | 413 |
| I-43 | F | H | H | H | Cl | CN | $OCH_3$ | H | S | 390 |
| I-44 | F | H | H | H | Cl | $CHF_2$ | Cl | H | S | 420 |
| I-45 | F | H | H | H | Cl | $CH_3$ | $NO_2$ | H | S | 394 |
| I-46 | $CH_3$ | H | H | H | Cl | H | $NO_2$ | H | S | 376 |
| I-47 | $CH_3$ | H | H | H | Cl | H | $SO_2CH_3$ | H | S | 409 |
| I-48 | $CH_3$ | H | H | H | Cl | CN | $OCH_3$ | H | S | 386 |
| I-49 | $CH_3$ | H | H | H | Cl | $CHF_2$ | Cl | H | S | 416 |
| I-50 | $CH_3$ | H | H | H | Cl | $CH_3$ | $NO_2$ | H | S | 390 |
| I-51 | $CH_3$ | H | H | H | $CF_3$ | H | F | H | S | 383 |
| I-52 | $CH_3$ | H | H | H | Cl | $CF_3$ | H | H | S | 399 |
| I-53 | $CH_3$ | H | H | H | $CF_3$ | F | H | H | S | 383 |
| I-54 | F | H | H | H | $CF_3$ | H | H | H | S | 369 |
| I-55 | F | H | H | H | Cl | Cl | H | H | S | 370 |
| I-56 | F | H | H | H | Cl | H | Cl | H | S | 370 |
| I-57 | F | H | H | H | Cl | H | F | H | S | 353 |
| I-58 | $CF_3$ | H | H | H | $CF_3$ | H | H | H | S | 419 |
| I-59 | $CF_3$ | H | H | H | Cl | Cl | H | H | S | 419 |
| I-60 | $CH_3$ | H | H | H | Cl | H | Cl | H | S | 365 |
| I-61 | $CH_3$ | H | H | H | Cl | H | F | H | S | 349 |

Tabelle II

| Nr. | $R^1$ | $R^2$ | $R^3$ | $R^4$ | $R^5$ | $R^6$ | $R^7$ | $R^8$ | $R^9$ | $R^{11}$ | $R^{12}$ | $R^{13}$ | M+H+ | LC-MS Bed. | Schmp. [°C] |
|---|---|---|---|---|---|---|---|---|---|---|---|---|---|---|---|
| II-1 | F | $OCH_3$ | H | H | H | H | H | $CH_3$ | H | $CF_3$ | H | F | | | 208-209 |
| II-2 | H | H | H | $CF_3$ | H | H | H | $CH_3$ | H | $CF_3$ | H | F | | | 219-220 |
| II-3 | F | H | H | H | H | $CH_3$ | H | $CH_3$ | H | $CF_3$ | H | H | | | 192-193 |
| II-4 | F | H | H | H | H | H | $CH_3$ | $CH_3$ | H | $CF_3$ | H | H | | | 231-132 |
| II-5 | $CH_2CH_3$ | H | H | H | H | H | H | $CH_3$ | H | $CF_3$ | H | F | | | 198-199 |
| II-6 | F | H | H | H | H | $CH_3$ | H | $CH_3$ | H | $CF_3$ | H | F | | | 203-204 |
| II-7 | F | H | H | H | H | H | $CH_3$ | $CH_3$ | H | $CF_3$ | H | F | | | 213-215 |
| II-8 | $CH_3$ | H | H | H | H | $CH_3$ | H | $CH_3$ | H | $CF_3$ | H | H | | | 214-215 |
| II-9 | $CH_3$ | H | H | H | H | H | $CH_3$ | $CH_3$ | H | $CF_3$ | H | H | | | 260 |
| II-10 | $CH_3$ | H | H | H | H | $CH_3$ | H | $CH_3$ | H | $CF_3$ | H | F | | | 200-201 |
| II-11 | F | H | H | H | H | $(CH_2)_3CH_3$ | H | $CH_3$ | H | $CF_3$ | H | H | | | 204 |
| II-12 | F | H | H | H | H | $(CH_2)_2CH_3$ | H | $CH_3$ | H | $CF_3$ | H | F | | | 206-210 |
| II-13 | $CH_3$ | H | H | H | H | $(CH_2)_2CH_3$ | H | $CH_3$ | H | $CF_3$ | H | F | | | 235-237 |
| II-14 | $CH_3$ | H | H | H | H | $CH_2CH_3$ | H | $CH_3$ | H | $CF_3$ | H | F | | | 220-222 |
| II-15 | F | H | H | H | H | $CH_2CH_3$ | H | $CH_3$ | H | $CF_3$ | H | F | | | 201-202 |
| II-16 | F | H | H | H | H | $CH_2CH_3$ | H | $CH_3$ | H | $CF_3$ | H | H | | | 195-196 |
| II-17 | $CH_3$ | H | H | H | H | $CH_2CH_3$ | H | $CH_3$ | H | $CF_3$ | H | H | | | 228-230 |
| II-18 | $CH_3$ | H | H | H | $CH_3$ | H | H | $CH_3$ | H | $CF_3$ | H | H | | | 224 |

| Nr. | $R^1$ | $R^2$ | $R^3$ | $R^4$ | $R^5$ | $R^6$ | $R^7$ | $R^8$ | $R^9$ | $R^{11}$ | $R^{12}$ | $R^{13}$ | M+H+ | LC-MS Bed. | Schmp. [°C] |
|---|---|---|---|---|---|---|---|---|---|---|---|---|---|---|---|
| II-19 | Br | H | H | H | H | H | H | $CH_3$ | H | $CF_3$ | H | H | 430,2 | a | |
| II-20 | Cl | Cl | H | H | Cl | H | H | $CH_3$ | H | $CF_3$ | H | H | 454,1 | a | |
| II-21 | F | H | H | H | H | $(CH_2)_3CH_3$ | H | $CH_3$ | H | $CF_3$ | H | F | | | 198-200 |
| II-22 | F | H | H | H | H | $(CH_2)_3CH_3$ | H | $CH_3$ | H | $CF_3$ | H | F | | | 215-218 |
| II-23 | F | H | H | H | Cl | H | H | $CH_3$ | H | $CF_3$ | H | H | | | 205-207 |
| II-24 | F | H | H | H | Cl | H | H | $CH_3$ | H | $CF_3$ | H | F | | | 215-216 |
| II-25 | H | H | H | H | H | $CH_2CH_3$ | H | $CH_3$ | H | $CF_3$ | H | H | | | 205-206 |
| II-26 | OH | H | H | H | H | H | H | $CH_3$ | H | $CF_3$ | H | F | | | 215-216 |
| II-27 | $CF_3$ | H | F | H | H | H | H | $CH_3$ | H | $CF_3$ | H | F | | | 210-211 |
| II-28 | Cl | Cl | $OCH_3$ | H | H | H | H | $CH_3$ | H | $CF_3$ | H | F | | | 253-254 |
| II-29 | Cl | Cl | $OCH_3$ | H | H | H | H | $CH_3$ | H | $CF_3$ | H | H | | | 236-237 |
| II-30 | F | H | Cl | H | H | H | H | $CH_3$ | H | $CF_3$ | H | F | | | 209-210 |
| II-31 | F | H | Cl | H | H | H | H | $CH_3$ | H | $CF_3$ | H | H | | | 220-221 |
| II-32 | $OCH_3$ | H | $OCH_3$ | H | H | H | H | $CH_3$ | H | $CF_3$ | H | H | | | 229-230 |
| II-33 | $OCH_3$ | H | H | $OCH_3$ | H | H | H | $CH_3$ | H | $CF_3$ | H | F | | | 226-227 |
| II-34 | Et | H | H | H | H | H | H | $CH_3$ | H | $CF_3$ | H | F | | | 188-190 |
| II-35 | $OCH_3$ | H | H | H | H | H | H | $CH_3$ | H | $CF_3$ | H | H | | | 216-217 |
| II-36 | $OCH_3$ | H | H | H | H | H | H | $CH_3$ | H | $CF_3$ | H | F | | | 196-197 |
| II-37 | $NO_2$ | H | H | H | Cl | H | H | $CH_3$ | H | $CF_3$ | H | F | | | 203-204 |
| II-38 | $NO_2$ | H | H | H | Cl | H | H | $CH_3$ | H | $CF_3$ | H | H | | | 212-214 |
| II-39 | H | $CF_3$ | H | $CF_3$ | H | H | H | $CH_3$ | H | $CF_3$ | H | H | 487,1 | a | |

| Nr. | $R^1$ | $R^2$ | $R^3$ | $R^4$ | $R^5$ | $R^6$ | $R^7$ | $R^8$ | $R^9$ | $R^{11}$ | $R^{12}$ | $R^{13}$ | M+H+ | LC-MS Bed. | Schmp. [°C] |
|---|---|---|---|---|---|---|---|---|---|---|---|---|---|---|---|
| II-40 | H | $CH_3$ | H | $CH_3$ | H | H | H | $CH_3$ | H | $CF_3$ | H | H | 379,1 | a | |
| II-41 | F | F | H | H | H | H | H | $CH_3$ | H | $CF_3$ | H | H | 387,1 | a | |
| II-42 | H | H | H | H | H | H | H | $CH_2C(CH)_2$ | H | $CF_3$ | H | F | 393,1 | a | |
| II-43 | H | H | H | H | H | H | H | $CH_2CH(CH_3)_2$ | H | $CF_3$ | H | F | 395,0 | a | |
| II-44 | H | H | H | H | H | H | H | $CH_2CH(CH_3)_2$ | H | $CF_3$ | H | H | 375,1 | a | |
| II-45 | H | H | H | H | H | H | H | $CH_2CH(CH_3)_2$ | H | $CF_3$ | H | H | 377,1 | a | |
| II-46 | F | H | H | F | Cl | H | H | $CH_3$ | H | $CF_3$ | H | H | 421,0 | a | |
| II-47 | H | $CF_3$ | H | F | H | H | H | $CH_3$ | H | $CF_3$ | H | H | 437,1 | a | |
| II-48 | $SCF_3$ | H | H | H | H | H | H | $CH_3$ | H | $CF_3$ | H | H | 451,1 | a | |
| II-49 | H | Br | H | H | H | H | H | $CH_3$ | H | $CF_3$ | H | H | 429,0 | a | |
| II-50 | H | F | H | F | H | H | H | $CH_3$ | H | $CF_3$ | H | H | 387,1 | a | |
| II-51 | F | H | H | Cl | H | H | H | $CH_3$ | H | $CF_3$ | H | H | 403,1 | a | |
| II-52 | F | H | H | $CF_3$ | H | H | H | $CH_3$ | H | $CF_3$ | H | H | 437,1 | a | |
| II-53 | Br | H | H | F | H | H | H | $CH_3$ | H | $CF_3$ | H | H | 449,0 | a | |
| II-54 | H | $OCHF_2$ | H | H | H | H | H | $CH_3$ | H | $CF_3$ | H | H | 417,1 | a | |
| II-55 | F | Cl | H | $CF_3$ | H | H | H | $CH_3$ | H | $CF_3$ | H | H | 471,0 | a | |
| II-56 | F | $CH_3$ | H | H | F | H | H | $CH_3$ | H | $CF_3$ | H | H | 401,1 | a | |
| II-57 | F | F | H | F | H | H | H | $CH_3$ | H | $CF_3$ | H | H | 405,1 | a | |
| II-58 | Cl | H | H | $CF_3$ | H | H | H | $CH_3$ | H | $CF_3$ | H | H | 453,0 | a | |
| II-59 | H | $SCF_3$ | H | H | H | H | H | $CH_3$ | H | $CF_3$ | H | H | 451,0 | a | |
| II-60 | F | H | H | F | H | H | H | $CH_3$ | H | $CF_3$ | H | H | 387,1 | a | |
| II-61 | $NO_2$ | H | H | $CH_3$ | H | H | H | $CH_3$ | H | $CF_3$ | H | H | 410,1 | a | |

| Nr. | $R^1$ | $R^2$ | $R^3$ | $R^4$ | $R^5$ | $R^6$ | $R^7$ | $R^8$ | $R^9$ | $R^{11}$ | $R^{12}$ | $R^{13}$ | M+H+ | LC-MS Bed. | Schmp. [°C] |
|---|---|---|---|---|---|---|---|---|---|---|---|---|---|---|---|
| II-62 | F | Cl | H | H | H | H | H | $CH_3$ | H | $CF_3$ | H | H | 403,1 | a | |
| II-63 | Cl | H | H | H | Cl | H | H | $CH_3$ | H | $CF_3$ | H | H | 419,0 | a | |
| II-64 | H | $OCH_3$ | H | H | H | H | H | $CH_3$ | H | $CF_3$ | H | H | 381,1 | a | |
| II-65 | H | $OCF_3$ | H | H | H | H | H | $CH_3$ | H | $CF_3$ | H | H | 435,1 | a | |
| II-66 | Cl | $CF_3$ | H | H | H | H | H | $CH_3$ | H | $CF_3$ | H | H | 453,1 | a | |
| II-67 | $NO_2$ | Cl | H | H | H | H | H | $CH_3$ | H | $CF_3$ | H | H | 430,0 | a | |
| II-68 | $NO_2$ | H | H | H | H | H | H | $CH_3$ | H | $CF_3$ | H | H | 396,1 | a | |
| II-69 | H | $OCH_3$ | H | $OCH_3$ | H | H . | H | $CH_3$ | H | $CF_3$ | H | H | 411,1 | a | |
| II-70 | Cl | $CH(CH_3)_2$ | H | H | H | H | H | $CH_3$ | H | $CF_3$ | H | H | 427,1 | a | |
| II-71 | $CH_3$ | H | H | $NO_2$ | H | H | H | $CH_3$ | H | $CF_3$ | H | H | 410,1 | a | |
| II-72 | F | H | H | H | F | H | H | $CH_3$ | H | $CF_3$ | H | H | | | 200-201 |
| II-73 | Cl | $OCH_3$ | H | $OCH_3$ | Cl | H | H | $CH_3$ | H | $CF_3$ | H | H | | | 229-230 |
| II-74 | Cl | $OCH_3$ | H | $OCH_3$ | H | H | H | $CH_3$ | H | $CF_3$ | H | H | | | 220-221 |
| II-75 | CN | H | H | H | H | H | H | $CH_3$ | H | $CF_3$ | H | H | | | 232-233 |
| II-76 | $OCHF_2$ | H | H | H | H | H | H | $CH_3$ | H | $CF_3$ | H | H | | | 187-188 |
| II-77 | $CH_3$ | $CF_3$ | H | H | H | H | H | $CH_3$ | H | $CF_3$ | H | F | 451,4 | i | |
| II-78 | F | $CH_3$ | H | H | H | H | H | $CH_3$ | H | $CF_3$ | H | F | 401,4 | i | |
| II-79 | $CH_3$ | H | H | $CH_3$ | H | H | H | $CH_3$ | H | $CF_3$ | H | F | 397,4 | i | |
| II-80 | H | $CH_3$ | H | H | H | H | H | $CH_3$ | H | $CF_3$ | H | F | 383,4 | i | |
| II-81 | F | $CF_3$ | H | H | H | H | H | $CH_3$ | H | $CF_3$ | H | F | 455,4 | i | |
| II-82 | $CH(CH_3)_2$ | H | H | H | H | H | H | $CH_3$ | H | $CF_3$ | H | F | 411,4 | i | |
| II-83 | $CF_3$ | H | H | H | H | H | H | $CH_3$ | H | $CF_3$. | H | F | 455,4 | i | |

| Nr. | $R^1$ | $R^2$ | $R^3$ | $R^4$ | $R^5$ | $R^6$ | $R^7$ | $R^8$ | $R^9$ | $R^{11}$ | $R^{12}$ | $R^{13}$ | M+H+ | LC-MS Bed. | Schmp. [°C] |
|---|---|---|---|---|---|---|---|---|---|---|---|---|---|---|---|
| II-84 | $CH_3$ | $CH_3$ | H | $CH_3$ | $CH_3$ | H | H | $CH_3$ | H | $CF_3$ | H | F | 425,4 | i | |
| II-85 | $CH_3$ | H | H | H | $CH_3$ | H | H | $CH_3$ | H | $CF_3$ | H | F | 397,4 | i | |
| II-86 | $CH_3$ | H | H | F | H | H | H | $CH_3$ | H | $CF_3$ | H | F | 401,4 | i | |
| II-87 | $CH_3$ | Cl | H | H | H | H | H | $CH_3$ | H | $CF_3$ | H | H | | | 223-224 |
| II-88 | $CH_3$ | H | H | $CH_3$ | H | H | H | $CH_3$ | H | $CF_3$ | H | H | 379,4 | i | |
| II-89 | F | $CH_3$ | H | H | H | H | H | $CH_3$ | H | $CF_3$ | H | H | 437,4 | i | |
| II-90 | H | H | H | H | H | H | H | $CH_3$ | H | $CF_3$ | H | H | 365,1 | a | |
| II-91 | H | H | H | H | H | H | H | $CH_3$ | H | $CF_3$ | H | F | 369,1 | a | |
| II-92 | H | H | H | F | H | H | H | OH | H | $CF_3$ | H | H | 320,1 | a | |
| II-93 | H | H | H | F | H | H | H | $OCH_3$ | H | $CF_3$ | H | H | 320,1 | a | |
| II-94 | H | H | H | H | H | H | H | OH | $CH_3$ | $CF_3$ | H | F | 338,1 | a | |
| II-95 | H | H | H | F | H | H | H | $OCH_3$ | H | $CF_3$ | H | F | 338,1 | a | |
| II-96 | F | H | H | F | H | H | H | OH | H | $CF_3$ | H | F | 352,0 | a | |
| II-97 | H | H | H | F | H | H | H | $OCH_3$ | H | $CF_3$ | H | H | 320,0 | a | |
| II-98 | H | H | H | F | H | H | H | OH | H | $CF_3$ | H | F | 338,0 | a | |
| II-99 | F | H | H | F | H | H | H | OH | H | $CF_3$ | H | F | 358,1 | a | |
| II-100 | F | H | H | F | H | H | H | $CH_3$ | H | $CF_3$ | H | F | 389,0 | a | |
| II-101 | H | F | H | H | H | H | H | $CH_3$ | H | F | H | H | 305,1 | a | |
| II-102 | H | H | H | H | H | H | H | $CH_3$ | H | F | $CF_3$ | H | 369,1 | a | |
| II-103 | H | H | H | H | H | H | H | $CH_3$ | H | F | F | H | 319,1 | a | |
| II-104 | $CH_3$ | H | H | H | H | H | H | $CH_3$ | H | Cl | Cl | H | 352,1 | a | |
| II-105 | F | H | H | H | H | H | H | $CH_3$ | H | Cl | Cl | H | 356,1 | a | |

| Nr. | $R^1$ | $R^2$ | $R^3$ | $R^4$ | $R^5$ | $R^6$ | $R^7$ | $R^8$ | $R^9$ | $R^{11}$ | $R^{12}$ | $R^{13}$ | M+H+ | LC-MS Bed. | Schmp. [°C] |
|---|---|---|---|---|---|---|---|---|---|---|---|---|---|---|---|
| II-106 | H | H | H | H | H | H | H | $CH_3$ | H | Cl | Cl | H | 352,1 | a | |
| II-107 | $CH_3$ | H | H | F | H | H | H | $CH_3$ | H | Cl | $CF_3$ | H | 398,81 | a | |
| II-108 | F | H | H | H | H | H | H | $CH_3$ | H | Cl | H | Cl | 370,0 | a | |
| II-109 | F | H | H | F | H | H | H | $CH_3$ | H | Cl | Cl | F | 353,0 | a | |
| II-110 | H | H | H | H | H | H | H | $CH_3$ | H | Cl | H | Cl | 352,1 | a | |
| II-111 | $CH_3$ | H | H | H | H | H | H | $CH_3$ | H | $SO_2CH_3$ | H | H | 375,1 | a | |
| II-112 | $CH_3$ | H | H | H | H | H | H | $CH_3$ | H | $SO_2CHF_2$ | H | H | 379,0 | a | |
| II-113 | $CH_3$ | H | H | H | H | $CH_3$ | H | $CH_3$ | H | Cl | $CF_3$ | H | 413.84 | a | |

Anwendungsbeispiele zur herbiziden Wirkung

Die herbizide Wirkung der Phenylalaninderivate der Formel I ließ sich durch Gewächshausversuche zeigen:
Als Kulturgefäße dienten Plastiktöpfe mit lehmigem Sand mit etwa 3,0 % Humus als Substrat. Die Samen der Testpflanzen wurden nach Arten getrennt eingesät.
Bei Vorauflaufbehandlung wurden die in Wasser suspendierten oder emulgierten Wirkstoffe direkt nach Einsaat mittels fein verteilender Düsen aufgebracht. Die Gefäße wurden leicht beregnet, um Keimung und Wachstum zu fördern, und anschließend mit durchsichtigen Plastikhauben abgedeckt, bis die Pflanzen angewachsen waren. Diese Abdeckung bewirkt ein gleichmäßiges Keimen der Testpflanzen, sofern dies nicht durch die Wirkstoffe beeinträchtigt wurde.
Zum Zweck der Nachauflaufbehandlung wurden die Testpflanzen je nach Wuchsform erst bis zu einer Wuchshöhe von 3 bis 15 cm angezogen und dann mit den in Wasser suspendierten oder emulgierten Wirkstoffen behandelt. Die Testpflanzen wurden dafür entweder direkt gesät und in den gleichen Gefäßen aufgezogen oder sie wurden erst als Keimpflanzen getrennt angezogen und einige Tage vor der Behandlung in die Versuchsgefäße verpflanzt. Die Aufwandmenge für die Nachauflaufbehandlung betrug 0,095, 0,5 bzw. 1,91 kg a.S. /ha
Die Pflanzen wurden artenspezifisch bei Temperaturen von 10-25°C bzw. 20-35°C gehalten. Die Versuchsperiode erstreckte sich über 2 bis 4 Wochen. Während dieser Zeit wurden die Pflanzen gepflegt, und ihre Reaktion auf die einzelnen Behandlungen wurde ausgewertet.
Bewertet wurde nach einer Skala von 0 bis 100. Dabei bedeutet 100 kein Aufgang der Pflanzen bzw. völlige Zerstörung zumindest der oberirdischen Teile und 0 keine Schädigung oder normaler Wachstumsverlauf.
Die in den Gewächshausversuchen verwendeten Pflanzen setzten sich aus folgenden Arten zusammen:

| Lateinischer Name | Deutscher Name | Englischer Name |
|---|---|---|
| Abutilon theophrasti | Chinesicher Hanf | velvetleaf |
| Setaria italica | Kolbenhirse | foxtail millet |
| Sinapis alba | Weißer Senf | white mustard |
| Chenopodium album | Weißer Gänsefuß | common lambsquarters |
| Setaria faberia | Große Borstenhirse | giant foxtail |
| Galium aperine | Klettenlabkraut | catchweed |
| Polygonum persicaria | Flohknöterich | ladysthumb |

Abutilon theophrasti und Setaria italica werden von Verbindung I-19 im Nachauflauf bei Aufwandmengen von 0,5 kg/ha a. S. sehr gut bekämpft.
Abutilon theophrasti und Sinapis alba werden von Verbindung I-24 im Nachauflauf bei Aufwandmengen von 0,5 kg/ha a. S. sehr gut bekämpft.
Abutilon theophrasti, Setaria italica und Sinapis alba werden von Verbindung I-25 im Nachauflauf bei Aufwandmengen von 0,5 kg/ha a. S. sehr gut bekämpft.
Setaria italica und Sinapis alba werden von Verbindung I-32 im Nachauflauf bei Aufwandmengen von 0,095 kg/ha a. S. sehr gut bekämpft.
Abutilon theophrasti, Setaria italica und Sinapis alba werden von Verbindung I-49 im Nachauflauf bei Aufwandmengen von 1,91 kg/ha a. S. sehr gut bekämpft.
Abutilon theophrasti, Setaria italica und Sinapis alba werden von Verbindung I-49 im Nachauflauf bei Aufwandmengen von 3,0 kg/ha a. S. sehr gut bekämpft.
Abutilon theophrasti und Chenopodium album werden von Verbindung I-51 im Nachauflauf bei Aufwandmengen von 1,0 kg/ha a. S. sehr gut bekämpft.
Abutilon theophrasti, Setaria italica und Sinapis alba werden von Verbindung I-53 im Nachauflauf bei Aufwandmengen von 0,5 kg/ha a. S. sehr gut bekämpft.
Abutilon theophrasti und Sinapis alba werden von Verbindung II-91 im Nachauflauf bei Aufwandmengen von 2,0 kg/ha a. S. sehr gut bekämpft.
Setaria faberia und Chenopodium album werden von Verbindung II-87 im Nachauflauf bei Aufwandmengen von 1,0 kg/ha a. S. sehr gut bekämpft.
Abutilon theophrasti, Setaria italica und Sinapis alba werden von Verbindung II-94 im Nachauflauf bei Aufwandmengen von 3,0 kg/ha a. S. sehr gut bekämpft.
Abutilon theophrasti, Setaria italica und Sinapis alba werden von Verbindung II-111 im Nachauflauf bei Aufwandmengen von 1,0 kg/ha a. S. sehr gut bekämpft.

Abutilon theophrasti, Setaria italica und Sinapis alba werden von Verbindung II-112 im Nachauflauf bei Aufwandmengen von 1,0 kg/ha a. S. sehr gut bekämpft.

Abutilon theophrasti, Setaria italica und Sinapis alba werden von Verbindung II-15 im Nachauflauf bei Aufwandmengen von 0,5 kg/ha a. S. sehr gut bekämpft.

Chenopodium album, Galium aperine und Polygonum persicaria werden von Verbindung II-10 im Nachauflauf bei Aufwandmengen von 1,0 kg/ha a. S. sehr gut bekämpft.

Abutilon theophrasti und Chenopodium album werden von Verbindung II-7 im Nachauflauf bei Aufwandmengen von 1,0 kg/ha a. S. sehr gut bekämpft.

Anwendungsbeispiele zu wachstumsregulatorischen Wirkung

Die wachstumsregulatorische Wirkung der Phenylalaninderivate der Formel I ließ sich durch Gewächshausversuche zeigen:

Als Kulturgefäße dienten Plastiktöpfe mit lehmigem Sand mit etwa 3,0 % Humus als Substrat. Die Samen der Testpflanzen wurden nach Arten getrennt eingesät.

Bei Vorauflaufbehandlung wurden die in Wasser suspendierten oder emulgierten Wirkstoffe direkt nach Einsaat mittels fein verteilender Düsen aufgebracht. Die Gefäße wurden leicht beregnet, um Keimung und Wachstum zu fördern, und anschließend mit durchsichtigen Plastikhauben abgedeckt, bis die Pflanzen angewachsen waren. Diese Abdeckung bewirkt ein gleichmäßiges Keimen der Testpflanzen, sofern dies nicht durch die Wirkstoffe beeinträchtigt wurde.

Zum Zweck der Nachauflaufbehandlung wurden die Testpflanzen je nach Wuchsform erst bis zu einer Wuchshöhe von 3 bis 15 cm angezogen und dann mit den in Wasser suspendierten oder emulgierten Wirkstoffen behandelt. Die Testpflanzen wurden dafür entweder direkt gesät und in den gleichen Gefäßen aufgezogen oder sie wurden erst als Keimpflanzen getrennt angezogen und einige Tage vor der Behandlung in die Versuchsgefäße verpflanzt. Die Aufwandmenge für die Nachauflaufbehandlung betrug 0,5 kg a.S. /ha

Die Pflanzen wurden artenspezifisch bei Temperaturen von 10-25°C bzw. 20-35°C gehalten. Die Versuchsperiode erstreckte sich über 2 bis 4 Wochen. Während dieser Zeit wurden die Pflanzen gepflegt, und ihre Reaktion auf die einzelnen Behandlungen wurde ausgewertet.

Die beobachtete wachstumsregulierende Wirkung wurde bei Versuchsende durch die Messung der Wuchshöhe belegt. Die so gewonnenen Meßwerte wurden zur Wuchshöhe von nicht behandelten Pflanzen in Relation gesetzt.

Bei Nachauflaufanwendung von 500 g/ha zeigte die Verbindung II-92 bei Zea mays L. 14 Tage nach Applikation einen signifikanten Einfluss auf das Längenwachstum (s. Tab. III)

Tabelle III

| Verbindung | Höhe in cm | Pflanze |
|---|---|---|
| II-92 | 31-33 | Zea mays L. |
| Unbehandelt | 40-42 | Zea mays L. |

## Patentansprüche

**1.** Phenylalaninderivate der Formel I

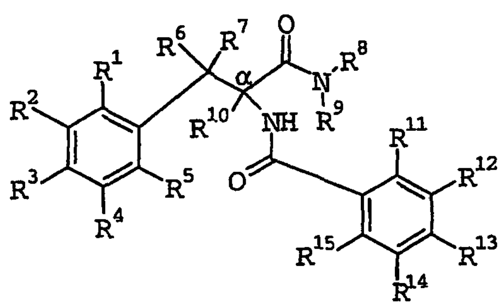

(I)

worin

$R^1$, $R^2$, $R^4$, $R^5$, $R^{13}$ und $R^{15}$ unabhängig voneinander für Wasserstoff, Halogen, Hydroxy, Mercapto, Nitro, Cyano, $C_1$-$C_6$-Alkyl, $C_2$-$C_6$-Alkenyl, $C_2$-$C_6$-Alkinyl, $C_1$-$C_6$-Alkoxy, $C_3$-$C_6$-Alkenyloxy, $C_3$-$C_6$-Alkinyloxy, $C_1$-$C_6$-Alkylthio, $C_3$-$C_6$-Alkenylthio, $C_3$-$C_6$-Alkinylthio, $C_1$-$C_6$-Alkylsulfinyl, $C_3$-$C_6$-Alkenylsulfinyl, $C_3$-$C_6$-Alkinylsulfinyl, $C_1$-$C_6$-Alkylsulfonyl, $C_3$-$C_6$-Alkenylsulfonyl, $C_3$-$C_6$-Alkinylsulfonyl, $C_1$-$C_6$-Halogenalkyl, $C_2$-$C_6$-Halogenalkenyl, $C_2$-$C_6$-Halogenalkinyl, $C_1$-$C_6$-Halogenalkoxy, $C_3$-$C_6$-Halogenalkenyloxy, $C_3$-$C_6$-Halogenalkinyloxy, $C_1$-$C_6$-Halogenalkylthio, $C_3$-$C_6$-Halogenalkenylthio, $C_3$-$C_6$-Halogen-alkinylthio, $C_1$-$C_6$-Halogenalkylsulfinyl, $C_3$-$C_6$-Halogenalkenylsulfinyl, $C_3$-$C_6$-Halogenalkinylsulfinyl, $C_1$-$C_6$-Halogen-alkylsulfonyl, $C_3$-$C_6$-Halogenalkenylsulfonyl, $C_3$-$C_6$-Halogenalkinylsulfonyl, Formyl, $C_1$-$C_6$-Alkylcarbonyloxy, $C_1$-$C_6$-Alkoxy-$C_1$-$C_4$-alkyl, $C_3$-$C_6$-Alkenyloxy-$C_1$-$C_4$-alkyl, $C_3$-$C_4$-Alkinyloxy-$C_1$-$C_4$-alkyl, $C_1$-$C_6$-Alkylthio-$C_1$-$C_4$-alkyl, $C_3$-$C_6$-Alkenylthio-$C_1$-$C_4$-alkyl, $C_3$-$C_4$-Alkinylthio-$C_1$-$C_4$-alkyl, $C_1$-$C_6$-Alkylcarbonyl-$C_1$-$C_4$-alkyl, $C_1$-$C_6$-Alkylcarbonyloxy-$C_1$-$C_4$-alkyl, $C_1$-$C_6$-Alkoxycarbonyl-$C_1$-$C_4$-alkyl, $C_1$-$C_6$-Alkoxy-$C_1$-$C_4$-alkoxy, $C_3$-$C_6$-Alkenyloxy-$C_1$-$C_4$-alkoxy, $C_3$-$C_4$-Alkinyloxy-$C_1$-$C_4$-alkoxy, $C_1$-$C_6$-Alkylthio-$C_1$-$C_4$-alkoxy, $C_3$-$C_6$-Alkenylthio-$C_1$-$C_4$-alkoxy, $C_3$-$C_6$-Alkinylthio$C_1$-$C_4$-alkoxy, $C_1$-$C_6$-Alkylcarbonyl-$C_1$-$C_4$-alkoxy, $C_1$-$C_6$-Alkylcarbonyloxy-$C_1$-$C_4$-alkoxy, $C_1$-$C_6$-Alkoxycarbonyl-$C_1$-$C_4$-alkoxy oder CO-$R^{16}$;

$R^3$ für Wasserstoff, Halogen, Mercapto, $C_1$-$C_6$-Alkyl, $C_2$-$C_6$-Alkenyl, $C_2$-$C_6$-Alkinyl, $C_1$-$C_6$-Alkylthio, $C_3$-$C_6$-Alkenylthio, $C_3$-$C_6$-Alkinylthio, $C_1$-$C_6$-Alkylsulfinyl, $C_3$-$C_6$-Alkenylsulfinyl, $C_3$-$C_6$-Alkinylsulfinyl, $C_1$-$C_6$-Alkylsulfonyl, $C_3$-$C_6$-Alkenylsulfonyl, $C_3$-$C_6$-Alkinylsulfonyl, $C_1$-$C_6$-Halogenalkyl, $C_2$-$C_6$-Halogenalkenyl, $C_2$-$C_6$-Halogenalkinyl, $C_1$-$C_6$-Halogenalkylthio, $C_3$-$C_6$-Halogenalkenylthio, $C_3$-$C_6$-Halogenalkinylthio, $C_1$-$C_6$-Halogenalkylsulfinyl, $C_3$-$C_6$-Halogenalkenylsulfinyl, $C_3$-$C_6$-Halogenalkinylsulfinyl, $C_1$-$C_6$-Halogenalkylsulfonyl, $C_3$-$C_6$-Halogenalkenylsulfonyl, $C_3$-$C_6$-Halogenalkinylsulfonyl, $C_1$-$C_6$-Alkoxy-$C_1$-$C_4$-alkyl, $C_3$-$C_6$-Alkenyloxy-$C_1$-$C_4$-alkyl, $C_3$-$C_4$-Alkinyloxy-$C_1$-$C_4$-alkyl, $C_1$-$C_6$-Alkylthio-$C_1$-$C_4$-alkyl, $C_3$-$C_6$-Alkenylthio-$C_1$-$C_4$-alkyl, $C_3$-$C_6$-Alkinylthio-$C_1$-$C_4$-alkyl, $C_1$-$C_6$-Alkylcarbonyl-$C_1$-$C_4$-alkyl, $C_1$-$C_6$-Alkylcarbonyloxy-$C_1$-$C_4$-alkyl, $C_1$-$C_6$-Alkyloxycarbonyl-$C_1$-$C_4$-alkyl oder CO-$R^{16}$;

$R^6$ für Wasserstoff, $C_1$-$C_6$-Alkyl, $C_2$-$C_6$-Alkenyl oder $C_2$-$C_6$-Alkinyl;

$R^7$ für Wasserstoff, Halogen, $C_1$-$C_6$-Alkyl, $C_2$-$C_6$-Alkenyl, $C_2$-$C_6$-Alkinyl, $C_1$-$C_6$-Halogenalkyl, $C_2$-$C_6$-Halogenalkenyl oder $C_2$-$C_6$-Halogenalkinyl;

$R^8$ für Methyl, Ethyl, $C_1$-$C_6$-Alkoxy oder Hydroxy;

$R^9$ für Wasserstoff, $C_1$-$C_6$-Alkyl;

$R^{10}$ für Wasserstoff, $C_1$-$C_6$-Alkyl, $C_1$-$C_6$-Alkoxycarbonyl oder $C_1$-$C_6$-Halogenalkoxylcarbonyl;

$R^{11}$ für Halogen, Mercapto, Nitro, Cyano, $C_1$-$C_6$-Alkyl, $C_2$-$C_6$-Alkenyl, $C_2$-$C_6$-Alkinyl, $C_1$-$C_6$-Alkoxy, $C_3$-$C_6$-Alkenyloxy, $C_3$-$C_6$-Alkinyloxy, $C_1$-$C_6$-Alkylthio, $C_3$-$C_6$-Alkenylthio, $C_3$-$C_6$-Alkinylthio, $C_1$-$C_6$-Alkylsulfinyl, $C_3$-$C_6$-Alkenylsulfinyl, $C_3$-$C_6$-Alkinylsulfinyl, $C_1$-$C_6$-Alkylsulfonyl, $C_3$-$C_6$-Alkenylsulfonyl, $C_3$-$C_6$-Alkinylsulfonyl, $C_1$-$C_6$-Halogenalkyl, $C_2$-$C_6$-Halogenalkenyl, $C_2$-$C_6$-Halogenalkinyl, $C_1$-$C_6$-Halogenalkoxy, $C_3$-$C_6$-Halogenalkenyloxy, $C_3$-$C_6$-Halogenalkinyloxy, $C_1$-$C_6$-Halogenalkylthio, $C_3$-$C_6$-Halogenalkenylthio, $C_3$-$C_6$-Halogenalkinylthio, $C_1$-$C_6$-Halogenalkylsulfinyl, $C_3$-$C_6$-Halogenalkenylsulfinyl, $C_3$-$C_6$-Halogenalkinylsulfinyl, $C_1$-$C_6$-Halogenalkylsulfonyl, $C_3$-$C_6$-Halogenalkenylsulfonyl, $C_3$-$C_6$-Halogenalkinylsulfonyl, Formyl, $C_1$-$C_6$-Alkylcarbonyloxy, $C_1$-$C_6$-Alkoxy-$C_1$-$C_4$-alkyl, $C_2$-$C_6$-Alkenyloxy-$C_1$-$C_4$-alkyl, $C_3$-$C_4$-Alkinyloxy-$C_1$-$C_4$-alkyl, $C_1$-$C_6$-Alkylthio-$C_1$-$C_4$-alkyl, $C_2$-$C_6$-Alkenylthio-$C_1$-$C_4$-alkyl, $C_3$-$C_4$-Alkinylthio-$C_1$-$C_4$-alkyl, $C_1$-$C_6$-Alkylcarbo-

nyl-$C_1$-$C_4$-alkyl, $C_1$-$C_6$-Alkylcarbonyl-oxy-$C_1$-$C_4$-alkyl, $C_1$-$C_6$-Alkyloxycarbonyl-$C_1$-$C_4$-alkyl, $C_1$-$C_6$-Alkoxy-$C_1$-$C_4$-alkoxy, $C_3$-$C_6$-Alkenyloxy-$C_1$-$C_4$-alkoxy, $C_3$-$C_4$-Alkinyloxy-$C_1$-$C_4$-alkoxy, $C_1$-$C_6$-Alkylthio-$C_1$-$C_4$-alkoxy, $C_3$-$C_6$-Alkenylthio-$C_1$-$C_4$-alkoxy, $C_3$-$C_6$-Alkinylthio-$C_1$-$C_4$-alkoxy, $C_1$-$C_6$-Alkylcarbonyl-$C_1$-$C_4$-alkoxy, $C_1$-$C_6$-Alkylcarbonyloxy-$C_1$-$C_4$-alkoxy, $C_1$-$C_6$-Alkyloxycarbonyl-$C_1$-$C_4$-alkoxy oder CO-$R^{16}$;

$R^{12}$ und $R^{14}$ unabhängig voneinander für Wasserstoff, Halogen, Hydroxy, Mercapto, Cyano, $C_1$-$C_6$-Alkyl, $C_2$-$C_6$-Alkenyl, $C_2$-$C_6$-Alkinyl, $C_1$-$C_6$-Alkoxy, $C_3$-$C_6$-Alkenyloxy, $C_3$-$C_6$-Alkinyloxy, $C_1$-$C_6$-Alkylthio, $C_3$-$C_6$-Alkenylthio, $C_3$-$C_6$-Alkinylthio, $C_1$-$C_6$-Alkylsulfinyl, $C_3$-$C_6$-Alkenylsulfinyl, $C_3$-$C_6$-Alkinylsulfinyl, $C_1$-$C_6$-Alkylsulfonyl, $C_3$-$C_6$-Alkenylsulfonyl, $C_3$-$C_6$-Alkinylsulfonyl, $C_1$-$C_6$-Halogenalkyl, $C_3$-$C_6$-Halogenalkenyl, $C_2$-$C_6$-Halogenalkinyl, $C_1$-$C_6$-Halogenalkoxy, $C_3$-$C_6$-Halogenalkenyloxy, $C_3$-$C_6$-Halogenalkinyloxy, $C_1$-$C_6$-Halogenalkylthio, $C_2$-$C_6$-Halogenalkenylthio, $C_3$-$C_6$-Halogenalkinylthio, $C_1$-$C_6$-Halogenalkylsulfinyl, $C_3$-$C_6$-Halogenalkenylsulfinyl, $C_3$-$C_6$-Halogenalkinylsulfinyl, $C_1$-$C_6$-Halogenalkylsulfonyl, $C_3$-$C_6$-Halogenalkenylsulfonyl, $C_3$-$C_6$-Halogenalkinylsulfonyl, Formyl, $C_1$-$C_6$-Alkylcarbonyloxy, $C_1$-$C_6$-Alkoxy-$C_1$-$C_4$-alkyl, $C_3$-$C_6$-Alkenyloxy-$C_1$-$C_4$-alkyl, $C_3$-$C_4$-Alkinyloxy-$C_1$-$C_4$-alkyl, $C_1$-$C_6$-Alkylthio-$C_1$-$C_4$-alkyl, $C_3$-$C_6$-Alkenylthio-$C_1$-$C_4$-alkyl, $C_3$-$C_4$-Alkinylthio-$C_1$-$C_4$-alkyl, $C_1$-$C_6$-Alkylcarbonyl-$C_1$-$C_4$-alkyl, $C_1$-$C_6$-Alkylcarbonyloxy-$C_1$-$C_4$-alkyl, $C_1$-$C_6$-Alkyloxycarbonyl-$C_1$-$C_4$-alkyl, $C_1$-$C_6$-Alkoxy-$C_1$-$C_4$-alkoxy, $C_3$-$C_6$-Alkenyloxy-$C_1$-$C_4$-alkoxy, $C_3$-$C_4$-Alkinyloxy-$C_1$-$C_4$-alkoxy, $C_1$-$C_6$-Alkylthio-$C_1$-$C_4$-alkoxy, $C_3$-$C_6$-Alkenylthio-$C_1$-$C_4$-alkoxy, $C_3$-$C_6$-Alkinylthio-$C_1$-$C_4$-alkoxy, $C_1$-$C_6$-Alkylcarbonyl-$C_1$-$C_4$-alkoxy, $C_1$-$C_6$-Alkylcarbonyloxy-$C_1$-$C_4$-alkoxy, $C_1$-$C_6$-Alkyloxycarbonyl-$C_1$-$C_4$-alkoxy oder CO-$R^{16}$; und

$R^{16}$ für Wasserstoff, Hydroxy, $C_1$-$C_6$-Alkyl, $C_2$-$C_6$-Alkenyl, $C_2$-$C_6$-Alkinyl, $C_1$-$C_6$-Halogenalkyl, $C_2$-$C_6$-Halogenalkenyl, $C_2$-$C_6$-Halogenalkinyl, $C_1$-$C_6$-Alkoxy, $C_3$-$C_6$-Alkenyloxy, $C_3$-$C_6$-Alkinyloxy, $C_1$-$C_6$-Halogenalkoxy, $C_1$-$C_6$-Alkyl-amino oder Di-($C_1$-$C_6$-alkyl)amino;
stehen,

oder

$R^7$ gemeinsam mit $R^{10}$ eine $C_3$-$C_4$ Alkylen- oder Alkenylenkette bildet, wobei die $C_3$-$C_4$ Alkylen- oder Alkenylenkette 1-3 Substituenten aus der Gruppe bestehend aus Halogen, Nitro oder Cyano tragen kann und/oder ein Kohlenstoffatom der $C_3$-$C_4$ Alkylenkette durch ein Heteroatom ausgewählt aus der Gruppe bestehend aus Sauerstoff, Schwefel oder Stickstoff und/oder durch eine Carbonylgruppe ersetzt sein kann.

**2.** Phenylalaninderivate der Formel I nach Anspruch 1, worin

$R^1$ für Wasserstoff, Halogen, Nitro, Cyano, $C_1$-$C_6$-Alkyl, $C_2$-$C_6$-Alkenyl, $C_2$-$C_6$-Alkinyl, $C_1$-$C_6$-Alkoxy, $C_3$-$C_6$-Alkenyloxy, $C_3$-$C_6$-Alkinyloxy, $C_1$-$C_6$-Alkylthio, $C_3$-$C_6$-Alkenylthio, $C_3$-$C_6$-Alkinylthio, $C_1$-$C_6$-Alkylsulfinyl, $C_3$-$C_6$-Alkenylsulfinyl, $C_3$-$C_6$-Alkinylsulfinyl, $C_1$-$C_6$-Alkylsulfonyl, $C_3$-$C_6$-Alkenylsulfonyl, $C_3$-$C_6$-Alkinylsulfonyl, $C_1$-$C_6$-Halogenalkyl, $C_1$-$C_6$-Halogenalkoxy, $C_3$-$C_6$-Halogenalkenyloxy, $C_1$-$C_6$-Halogenalkylthio, $C_3$-$C_6$-Halogenalkenylthio, $C_1$-$C_6$-Halogenalkylsulfinyl, $C_3$-$C_6$-Halogenalkenylsulfinyl, $C_1$-$C_6$-Halogenalkylsulfonyl oder $C_3$-$C_6$-Halogenalkenylsulfonyl;

$R^2$ für Wasserstoff, Halogen, Nitro, Cyano, $C_1$-$C_6$-Alkyl, $C_2$-$C_6$-Alkinyl, $C_1$-$C_6$-Alkoxy, $C_3$-$C_6$-Alkenyloxy, $C_3$-$C_6$-Alkinyloxy, $C_1$-$C_6$-Halogenalkyl, $C_1$-$C_6$-Halogenalkoxy, $C_3$-$C_6$-Halogenalkenyloxy oder $C_3$-$C_6$-Halogenalkinyloxy;

$R^3$ für Wasserstoff, Halogen, $C_1$-$C_6$-Alkyl oder $C_1$-$C_6$-Halogenalkyl;

$R^4$ für Wasserstoff, Halogen, Nitro, Cyano, $C_1$-$C_6$-Alkyl, $C_1$-$C_6$-Alkoxy, $C_3$-$C_6$-Alkenyloxy, $C_3$-$C_6$-Alkinyloxy, $C_1$-$C_6$-Halogenalkyl oder $C_1$-$C_6$-Halogenalkoxy;

$R^5$ für Wasserstoff, Halogen, Nitro, Cyano, $C_1$-$C_6$-Alkyl, $C_2$-$C_6$-Alkenyl, $C_2$-$C_6$-Alkinyl, $C_1$-$C_6$-Alkoxy,

$C_3$-$C_6$-Alkenyloxy, $C_3$-$C_6$-Alkinyloxy, $C_1$-$C_6$-Halogenalkyl, $C_1$-$C_6$-Halogenalkoxy oder $C_3$-$C_6$-Halogenalkenyloxy; und

$R^6$ für Wasserstoff oder $C_1$-$C_6$-Alkyl;

$R^7$ für Wasserstoff, Halogen, $C_1$-$C_6$-Alkyl, $C_2$-$C_6$-Alkenyl, $C_2$-$C_6$-Alkinyl oder $C_1$-$C_6$-Halogenalkyl;

$R^8$ für Methyl, Ethyl, Hydroxy oder Methoxy;

$R^9$ für Wasserstoff oder Methyl;

$R^{10}$ für Wasserstoff, $C_1$-$C_6$-Alkyl, $C_1$-$C_6$-Alkoxycarbonyl oder $C_1$-$C_4$-Halogenalkoxylcarbonyl;

$R^{11}$ für Halogen, Nitro, Cyano, $C_1$-$C_6$-Alkyl, $C_1$-$C_6$-Alkoxy, $C_1$-$C_6$-Alkylthio, $C_3$-$C_6$-Alkenylthio, $C_3$-$C_6$-Alkinylthio, $C_1$-$C_6$-Alkylsulfinyl, $C_3$-$C_6$-Alkenylsulfinyl, $C_3$-$C_6$-Alkinylsulfinyl, $C_1$-$C_6$-Alkylsulfonyl, $C_3$-$C_6$-Alkenylsulfonyl, $C_3$-$C_6$-Alkinylsulfonyl, $C_1$-$C_6$-Halogenalkyl, $C_1$-$C_6$-Halogenalkoxy, $C_1$-$C_6$-Halogenalkylthio, $C_3$-$C_6$-Halogenalkenylthio, $C_1$-$C_6$-Halogenalkylsulfinyl, $C_3$-$C_6$-Halogenalkenylsulfinyl, $C_1$-$C_6$-Halogenalkylsulfonyl, $C_3$-$C_6$-Halogenalkenylsulfonyl oder CO-$R^{16}$;

$R^{13}$ für Wasserstoff, Halogen, Nitro, Cyano, $C_1$-$C_6$-Alkyl, $C_1$-$C_6$-Alkoxy, $C_1$-$C_6$-Alkylthio, $C_3$-$C_6$-Alkenylthio, $C_3$-$C_6$-Alkinylthio, $C_1$-$C_6$-Alkylsulfinyl, $C_3$-$C_6$-Alkenylsulfinyl, $C_3$-$C_6$-Alkinylsulfinyl, $C_1$-$C_6$-Alkylsulfonyl, $C_3$-$C_6$-Alkenylsulfonyl, $C_3$-$C_6$-Alkinylsulfonyl, $C_1$-$C_6$-Halogenalkyl, $C_1$-$C_6$-Halogenalkoxy, $C_1$-$C_6$-Halogenalkylthio, $C_3$-$C_6$-Halogenalkenylthio, $C_1$-$C_6$-Halogenalkylsulfinyl, $C_3$-$C_6$-Halogenalkenylsulfinyl, $C_1$-$C_6$-Halogenalkylsulfonyl, $C_3$-$C_6$-Halogenalkenylsulfonyl oder CO-$R^{16}$;

$R^{12}$ und $R^{14}$ unabhängig voneinander für Wasserstoff, Halogen, Cyano, $C_1$-$C_6$-Alkyl, $C_1$-$C_6$-Alkoxy, $C_1$-$C_6$-Alkylthio, $C_3$-$C_6$-Alkenylthio, $C_3$-$C_6$-Alkinylthio, $C_1$-$C_6$-Alkylsulfinyl, $C_3$-$C_6$-Alkenylsulfinyl, $C_3$-$C_6$-Alkinylsulfinyl, $C_1$-$C_6$-Alkylsulfonyl, $C_3$-$C_6$-Alkenylsulfonyl, $C_3$-$C_6$-Alkinylsulfonyl, $C_1$-$C_6$-Halogenalkyl, $C_1$-$C_6$-Halogenalkoxy, $C_1$-$C_6$-Halogenalkylthio, $C_3$-$C_6$-Halo-genalkenylthio, $C_1$-$C_6$-Halogenalkylsulfinyl, $C_3$-$C_6$-Halogen-alkenylsulfinyl, $C_1$-$C_6$-Halogenalkylsulfonyl, $C_3$-$C_6$-Halo-genalkenylsulfonyl oder CO-$R^{16}$;

$R^{15}$ für Wasserstoff, Halogen, $C_1$-$C_6$-Alkyl oder $C_1$-$C_6$-Halogenalkyl;

$R^{16}$ für Wasserstoff, Hydroxy, $C_1$-$C_6$-Alkyl, $C_1$-$C_6$-Halogenalkyl, $C_1$-$C_6$-Alkoxy, $C_1$-$C_6$-Halogenalkoxy, $C_1$-$C_6$-Alkyl-amino oder Di-($C_1$-$C_6$-alkyl)amino;

stehen, sowie deren landwirtschaftlich brauchbare Salze.

**3.** Phenylalaninderivate der Formel I nach den Ansprüchen 1 oder 2, worin

$R^1$ für Wasserstoff, Halogen, Cyano, $C_1$-$C_6$-Alkyl, $C_1$-$C_6$-Alkylthio, $C_1$-$C_6$-Alkylsulfinyl oder $C_1$-$C_6$-Alkylsulfonyl;

$R^2$ für Wasserstoff, Halogen, Cyano, $C_1$-$C_6$-Halogenalkyl oder $C_1$-$C_6$-Alkyl;

$R^3$ für Wasserstoff, $C_1$-$C_6$-Alkyl oder Halogen;

$R^4$ für Wasserstoff, Halogen, $C_1$-$C_6$-Alkyl oder $C_1$-$C_6$-Halogenalkyl;

$R^5$ für Wasserstoff, Halogen, $C_1$-$C_6$-Alkyl oder $C_1$-$C_6$-Halogenalkyl;

$R^6$ für Wasserstoff oder $C_1$-$C_6$-Alkyl;

$R^7$ für Wasserstoff, $C_1$-$C_6$-Alkyl, $C_2$-$C_6$-Alkenyl oder $C_2$-$C_6$-Alkinyl;

$R^8$ für Methyl, Hydroxy oder Methoxy;

| | |
|---|---|
| $R^9$ | für Wasserstoff oder Methyl; |
| $R^{10}$ | für Wasserstoff; und |
| $R^{11}$ | für Halogen, Cyano, $C_1$-$C_6$-Alkyl, $C_1$-$C_6$-Alkylthio, $C_1$-$C_6$-Alkylsulfinyl, $C_1$-$C_6$-Alkylsulfonyl, $C_1$-$C_6$-Halogenalkyl, $C_1$-$C_6$-Halogenalkoxy, $C_1$-$C_6$-Halogenalkylthio $C_1$-$C_6$-Alkylsulfonyl oder $C_1$-$C_6$-Alkylsulfinyl. |
| $R^{12}$, $R^{13}$ und $R^{14}$ | unabhängig voneinander für Wasserstoff, Halogen, Cyano, $C_1$-$C_6$-Alkyl, $C_1$-$C_6$-Alkoxy, $C_1$-$C_6$-Alkylthio, $C_1$-$C_6$-Alkylsulfinyl, $C_1$-$C_6$-Alkylsulfonyl, $C_1$-$C_6$-Halogenalkyl, $C_1$-$C_6$-Halogenalkoxy oder $C_1$-$C_6$-Halogenalkylthio; und |
| $R^{15}$ | für Wasserstoff |

stehen.

4. Phenylalaninderivate der Formel I nach den Ansprüchen 1, 2 oder 3, worin

| | |
|---|---|
| $R^1$, $R^2$, $R^3$ , $R^5$ | jeweils unabhängig voneinander für Wasserstoff, Fluor, Chlor, Methyl oder Ethyl; |
| $R^4$, $R^6$, $R^{10}$, $R^{14}$ und $R^{15}$ | für Wasserstoff; |
| $R^7$ | für Wasserstoff, Methyl oder Ethyl; |
| $R^8$ | für Methoxy, Methyl oder Hydroxy; |
| $R^9$ | für Wasserstoff;<br>für Methyl, wenn $R^8$ für Hydroxy steht; |
| $R^{11}$ | Fluor, Chlor, Halogenmethyl wie Fluormethyl, Difluormethyl, Trifluormethyl, Halogenmethoxy wie Fluormethoxy, Difluormethoxy, Trifluormethoxy, Halothioalkyl wie Fluorthiomethyl, Difluorthiomethyl, Trifluorthiomethyl, Methylsulfinyl oder Methylsulfonyl; |
| $R^{12}$ | für Wasserstoff, Cyano, Methyl, Fluor, Chlor, Halogenmethyl wie Fluormethyl, Difluormethyl, Trifluormethyl, Halogenmethoxy wie Fluormethoxy, Difluormethoxy, Trifluormethoxy, Halogenthioalkyl wie Fluorthiomethyl, Difluorthiomethyl, Trifluorthiomethyl; |
| $R^{13}$ | für Wasserstoff, Fluor, Chlor |

stehen.

5. Verfahren zur Herstellung der Phenylalaninderivate der Formel I gemäß den Ansprüchen 1 bis 4, **dadurch gekennzeichnet, dass** man

(A) ein an der Aminofunktion durch eine Schutzgruppe X geschütztes Phenylalaninderivat der Formel II

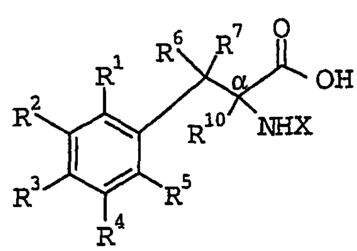

(II)

mit einem Trägerharz verknüpft;

(B) durch Zugabe einer Base die Schutzgruppe X abspaltet,

(C) und die so erhaltenen Verbindungen am Stickstoff acyliert und

(D) die am Stickstoff acylierten Verbindungen unter Zugabe von Säure vom festen Träger abgespaltet und im Anschluß durch Zugabe eines Kondensationsmittels mit einem Amin IX

$$R^8\text{-NH-}R^9 \quad (IX)$$

zu den Phenylalaninderivaten I gemäß den Ansprüchen 1 bis 3 umsetzt.

**6.** Verfahren zur Herstellung der Phenylalaninderivate der Formel I gemäß den Ansprüchen 1 bis 4, worin $R^9$ = Wasserstoff ist, **dadurch gekennzeichnet, dass** man

(A) ein Polymer-Harz X

$$\text{Pol-CHO} \quad (X)$$

mit einem Amin XI

$$H^2NR^8 \quad (XI)$$

in Gegenwart eines Reduktionsmittels umsetzt;

(B) das in Schritt A erhaltene aminierte Harz XII

$$\text{Pol-}CH_2\text{-NHR}^8 \quad (XII)$$

mit einem Phenylalaninderivat der Formel II gemäß Anspruch 4 acyliert;

(C) durch Zugabe einer Base die Schutzgruppe X abspaltet;

(D) und die so erhaltenen Verbindungen XIII

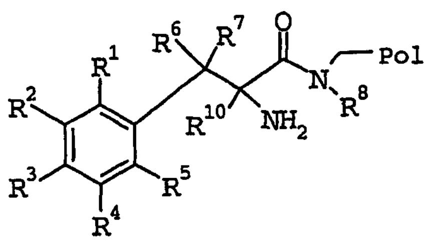

(XIII)

zu den Verbindungen XIV

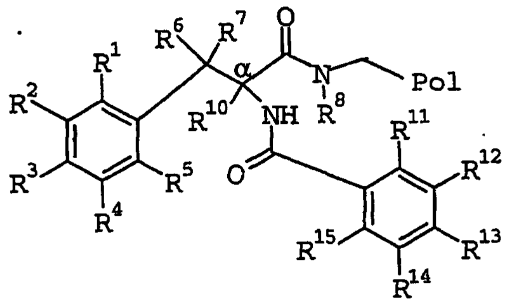

(XIV)

acyliert, die im Anschluß unter Zugabe von Säure vom festen Träger abgespalten werden, wobei die Verbindungen I erhalten werden.

**7.** Verfahren zur Herstellung der Phenylalaninderivate der Formel I gemäß den Ansprüchen 1 bis 4 **dadurch gekennzeichnet, dass** man

(A) ein an der Aminofunktion durch eine Schutzgruppe X geschütztes Phenylalaninderivat der Formel II gemäß Anspruch 4 mit einem Amin IX

$$HNR^8R^9 \quad (IX)$$

in einem inerten aprotisch dipolaren organischen Lösungsmittel zu den Verbindungen XV

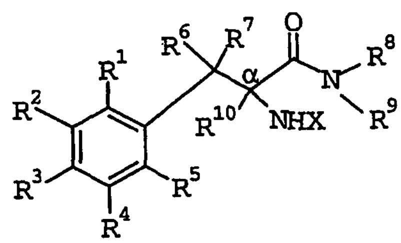

(XV)

umsetzt,

(B) die Schutzgruppe X abspaltet, und

(C) die in Schritt B erhaltenen Verbindungen zu den Verbindungen I acyliert.

**8.** Verfahren zur Herstellung der Phenylalaninderivate der Formel I, worin $R^9$ = Wasserstoff ist, gemäß den Ansprüchen 1 bis 4 **dadurch gekennzeichnet, dass** man

(A) ein Aminomalonsäureesterderivat XVII

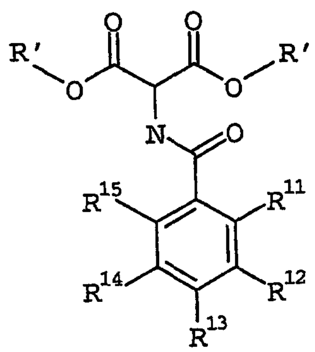

(XVII)

worin R' für einen niedermolekularen organischen Rest steht; mit einem Benzylderivat XVIII

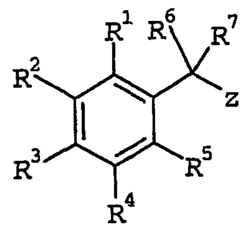

XVIII

zu den Diestern XIX

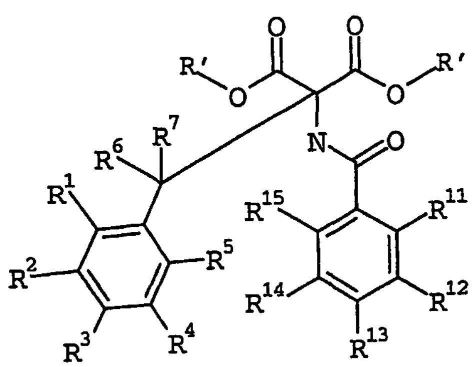

XIX

umsetzt,

(B) die Diester XIX decarboxyliret und verseift und anschließend mit einem Amin IX

$$HNR^8R^9 \quad (IX)$$

in einem inerten aprotisch dipolaren organischen Lösungsmittel unter Einsatz eines Kondensationsmittels zu den Verbindungen I umsetzt.

**9.** Verfahren zur Herstellung der Phenylalaninderivate der Formel I gemäß den Ansprüchen 1 bis 4, **dadurch gekennzeichnet, dass** man

(A) das Benzylderivat XVIII über ein Alkylierungsmittel XXI

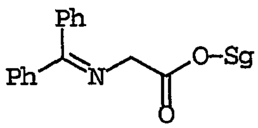

XXI

zu den Verbindungen XXII

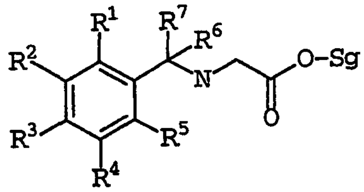

XXII

umsetzt;

(B) und die so erhaltenen Verbindungen am Stickstoff acyliert und

(C) die am Stickstoff acylierten Verbindungen durch Zugabe eines Kondensationsmittels mit einem Amin IX

$$R^8\text{-NH-}R^9 \qquad \text{(IX)}$$

zu den Phenylalaninderivaten I gemäß den Ansprüchen 1 bis 3 umsetzt.

**10.** Mittel, enthaltend wenigstens ein Phenylalaninderivat der Formel I oder ein landwirtschaftlich brauchbares Salz eines Phenylalaninderivates der Formel I gemäß den Ansprüchen 1 bis 4 und übliche Hilfsmittel.

**11.** Zur Bekämpfung von unerwünschtem Pflanzenwuchs geeignetes Mittel, enthaltend einen festen oder flüssigen Trägerstoff und wenigstens ein Phenylalaninderivat der Formel I oder ein landwirtschaftlich brauchbares Salz eines Phenylalaninderivates der Formel I gemäß den Ansprüchen 1 bis 4.

**12.** Verwendung der Verbindungen I gemäß den Ansprüchen 1 bis 4 zur Herstellung eines zur Bekämpfung von unerwünschtem Pflanzenwuchs geeigneten Mittels.

**13.** Verfahren zur Bekämpfung von unerwünschtem Pflanzenwuchs, **dadurch gekennzeichnet, daß** man eine herbizid wirksame Menge mindestens eines Phenylalaninderivates der Formel I oder eines landwirtschaftlich brauchbaren Salzes eines Phenylalaninderivates der Formel I gemäß den Ansprüchen 1 bis 4, auf Pflanzen, deren Lebensraum und/oder auf Samen einwirken läßt.

**14.** Mittel zur Regulierung des Pflanzenwachstums, enthaltend eine wachstumsregulatorisch wirksame Menge mindestens eines substituierten Phenylalaninderivates der Formel I oder eines landwirtschaftlich brauchbaren Salzes von I, gemäß den Ansprüchen 1 bis 4 und mindestens einen inerten flüssigen und/oder festen Trägerstoff sowie gewünschtenfalls mindestens einen oberflächenaktiven Stoff.

**15.** Verfahren zur Herstellung von Mitteln zur Regulierung des Pflanzenwachstums, **dadurch gekennzeichnet, daß** man eine wachstumsregulatorisch wirksame Menge mindestens eines substituierten Phenylalaninderivates der Formel I oder eines landwirtschaftlich brauchbaren Salzes von I, gemäß den Ansprüchen 1 bis 4, mit mindestens einem inerten flüssigen und/oder festen Trägerstoff sowie gewünschtenfalls mindestens einem oberflächenaktiven

Stoff mischt.

**16.** Verfahren zur Regulierung des Pflanzenwachstums, **dadurch gekennzeichnet, daß** man eine wachstumsregulatorisch wirksame Menge mindestens eines eines substituierten Phenylalaninderivates der Formel I oder eines landwirtschaftlich brauchbaren Salzes von I, gemäß den Ansprüchen 1 bis 4, auf Pflanzen einwirken läßt.

## Claims

**1.** A phenylalanine derivative of the formula I

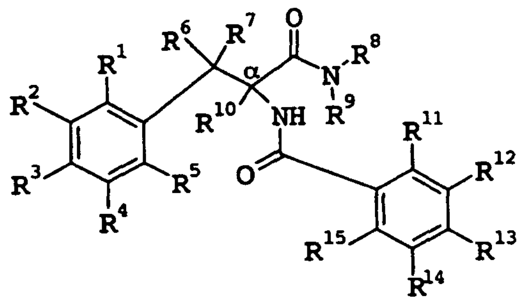

(I)

in which

| | |
|---|---|
| $R^1$, $R^2$, $R^4$, $R^5$, $R^{13}$ and $R^{15}$ | independently of one another are hydrogen, halogen, hydroxyl, mercapto, nitro, cyano, $C_1$-$C_6$-alkyl, $C_2$-$C_6$-alkenyl, $C_2$-$C_6$-alkynyl, $C_1$-$C_6$-alkoxy, $C_3$-$C_6$-alkenyloxy, $C_3$-$C_6$-alkynyloxy, $C_1$-$C_6$-alkylthio, $C_3$-$C_6$-alkenylthio, $C_3$-$C_6$-alkynylthio, $C_1$-$C_6$-alkylsulfinyl, $C_3$-$C_6$-alkenylsulfinyl, $C_3$-$C_6$-alkynylsulfinyl, $C_1$-$C_6$-alkylsulfonyl, $C_3$-$C_6$-alkenylsulfonyl, $C_3$-$C_6$-alkynylsulfonyl, $C_1$-$C_6$-haloalkyl, $C_2$-$C_6$-haloalkenyl, $C_2$-$C_6$-haloalkynyl, $C_1$-$C_6$-haloalkoxy, $C_3$-$C_6$-haloalkenyloxy, $C_3$-$C_6$-haloalkynyloxy, $C_1$-$C_6$-haloalkylthio, $C_3$-$C_6$-haloalkenylthio, $C_3$-$C_6$-haloalkynylthio, $C_1$-$C_6$-haloalkylsulfinyl, $C_3$-$C_6$-haloalkenylsulfinyl, $C_3$-$C_6$-haloalkynylsulfinyl, $C_1$-$C_6$-haloalkylsulfonyl, $C_3$-$C_6$-haloalkenylsulfonyl, $C_3$-$C_6$-haloalkynylsulfonyl, formyl, $C_1$-$C_6$-alkylcarbonyloxy, $C_1$-$C_6$-alkoxy-$C_1$-$C_4$-alkyl, $C_3$-$C_6$-alkenyloxy-$C_1$-$C_4$-alkyl, $C_3$-$C_4$-alkynyloxy-$C_1$-$C_4$-alkyl, $C_1$-$C_6$-alkylthio-$C_1$-$C_4$-alkyl, $C_3$-$C_6$-alkenylthio-$C_1$-$C_4$-alkyl, $C_3$-$C_4$-alkynylthio-$C_1$-$C_4$-alkyl, $C_1$-$C_6$-alkylcarbonyl-$C_1$-$C_4$-alkyl, $C_1$-$C_6$-alkylcarbonyloxy-$C_1$-$C_4$-alkyl, $C_1$-$C_6$-alkoxycarbonyl-$C_1$-$C_4$-alkyl, $C_1$-$C_6$-alkoxy-$C_1$-$C_4$-alkoxy, $C_3$-$C_6$-alkenyloxy-$C_1$-$C_4$-alkoxy, $C_3$-$C_4$-alkynyloxy-$C_1$-$C_4$-alkoxy, $C_1$-$C_6$-alkylthio-$C_1$-$C_4$-alkoxy, $C_3$-$C_6$-alkenylthio-$C_1$-$C_4$-alkoxy, $C_3$-$C_6$-alkynylthio-$C_1$-$C_4$-alkoxy, $C_1$-$C_6$-alkylcarbonyl-$C_1$-$C_4$-alkoxy, $C_1$-$C_6$-alkylcarbonyloxy-$C_1$-$C_4$-alkoxy, $C_1$-$C_6$-alkoxycarbonyl-$C_1$-$C_4$-alkoxy or CO-$R^{16}$; |
| $R^3$ | is hydrogen, halogen, mercapto, $C_1$-$C_6$-alkyl, $C_2$-$C_6$-alkenyl, $C_2$-$C_6$-alkynyl, $C_1$-$C_6$-alkylthio, $C_3$-$C_6$-alkenylthio, $C_3$-$C_6$-alkynylthio, $C_1$-$C_6$-alkylsulfinyl, $C_3$-$C_6$-alkenylsulfinyl, $C_3$-$C_6$-alkynylsulfinyl, $C_1$-$C_6$-alkylsulfonyl, $C_3$-$C_6$-alkenylsulfonyl, $C_3$-$C_6$-alkynylsulfonyl, $C_1$-$C_6$-haloalkyl, $C_2$-$C_6$-haloalkenyl, $C_2$-$C_6$-haloalkinyl, $C_1$-$C_6$-haloalkylthio, $C_3$-$C_6$-haloalkenylthio, $C_3$-$C_6$-haloalkynylthio, $C_1$-$C_6$-haloalkylsulfinyl, $C_3$-$C_6$-halo-alkenylsulfinyl, $C_3$-$C_6$-haloalkynylsulfinyl, $C_1$-$C_6$-haloalkylsulfonyl, $C_3$-$C_6$-haloalkenylsulfonyl, $C_3$-$C_6$-haloalkynylsulfonyl, $C_1$-$C_6$-alkoxy-$C_1$-$C_4$-alkyl, $C_3$-$C_6$-alkenyloxy-$C_1$-$C_4$-alkyl, $C_3$-$C_4$-alkynyloxy-$C_1$-$C_4$-alkyl, $C_1$-$C_6$-alkylthio-$C_1$-$C_4$-alkyl, $C_3$-$C_6$-alkenylthio-$C_1$-$C_4$-alkyl, $C_3$-$C_6$-alkynylthio-$C_1$-$C_4$-alkyl, $C_1$-$C_6$-alkylcarbonyl-$C_1$-$C_4$-alkyl, $C_1$-$C_6$-alkylcarbonyloxy-$C_1$-$C_4$-alkyl, $C_1$-$C_6$-alkyloxycarbonyl-$C_1$-$C_4$-alkyl or CO-$R^{16}$; |
| $R^6$ | is hydrogen, $C_1$-$C_6$-alkyl, $C_2$-$C_6$-alkenyl or $C_2$-$C_6$-alkynyl; |
| $R^7$ | is hydrogen, halogen, $C_1$-$C_6$-alkyl, $C_2$-$C_6$-alkenyl, $C_2$-$C_6$-alkynyl, $C_1$-$C_6$-haloalkyl, |

$C_2$-$C_6$-haloalkenyl or $C_2$-$C_6$-haloalkynyl;

$R^8$ is methyl, ethyl, $C_1$-$C_6$-alkoxy or hydroxyl;

$R^9$ is hydrogen or $C_1$-$C_6$-alkyl;

$R^{10}$ is hydrogen, $C_1$-$C_6$-alkyl, $C_1$-$C_6$-alkoxycarbonyl or $C_1$-$C_6$-haloalkoxylcarbonyl;

$R^{11}$ is halogen, mercapto, nitro, cyano, $C_1$-$C_6$-alkyl, $C_2$-$C_6$-alkenyl, $C_2$-$C_6$-alkynyl, $C_1$-$C_6$-alkoxy, $C_3$-$C_6$-alkenyloxy, $C_3$-$C_6$-alkynyloxy, $C_1$-$C_6$-alkylthio, $C_3$-$C_6$-alkenylthio, $C_3$-$C_6$-alkynylthio, $C_1$-$C_6$-alkylsulfinyl, $C_3$-$C_6$-alkenylsulfinyl, $C_3$-$C_6$-alkynylsulfinyl, $C_1$-$C_6$-alkylsulfonyl, $C_3$-$C_6$-alkenylsulfonyl, $C_3$-$C_6$-alkynylsulfonyl, $C_1$-$C_6$-haloalkyl, $C_2$-$C_6$-haloalkenyl, $C_2$-$C_6$-haloalkynyl, $C_1$-$C_6$-haloalkoxy, $C_3$-$C_6$-haloalkenyloxy, $C_3$-$C_6$-haloalkynyloxy, $C_1$-$C_6$-haloalkylthio, $C_3$-$C_6$-haloalkenylthio, $C_3$-$C_6$-haloalkynylthio, $C_1$-$C_6$-haloalkylsulfinyl, $C_3$-$C_6$-haloalkenylsulfinyl, $C_3$-$C_6$-haloalkynylsulfinyl, $C_1$-$C_6$-haloalkylsulfonyl, $C_3$-$C_6$-haloalkenylsulfonyl, $C_3$-$C_6$-haloalkynylsulfonyl, formyl, $C_1$-$C_6$-alkylcarbonyloxy, $C_1$-$C_6$-alkoxy-$C_1$-$C_4$-alkyl, $C_2$-$C_6$-alkenyloxy-$C_1$-$C_4$-alkyl, $C_3$-$C_4$-alkynyloxy-$C_1$-$C_4$-alkyl, $C_1$-$C_6$-alkylthio-$C_1$-$C_4$-alkyl, $C_2$-$C_6$-alkenylthio-$C_1$-$C_4$-alkyl, $C_3$-$C_4$-alkynylthio-$C_1$-$C_4$-alkyl, $C_1$-$C_6$-alkylcarbonyl-$C_1$-$C_4$-alkyl, $C_1$-$C_6$-alkylcarbonyloxy-$C_1$-$C_4$-alkyl, $C_1$-$C_6$-alkyloxycarbonyl-$C_1$-$C_4$-alkyl, $C_1$-$C_6$-alkoxy-$C_1$-$C_4$-alkoxy, $C_3$-$C_6$-alkenyloxy-$C_1$-$C_4$-alkoxy, $C_3$-$C_4$-alkynyloxy-$C_1$-$C_4$-alkoxy, $C_1$-$C_6$-alkylthio-$C_1$-$C_4$-alkoxy, $C_3$-$C_6$-alkenylthio-$C_1$-$C_4$-alkoxy, $C_3$-$C_6$-alkynylthio-$C_1$-$C_4$-alkoxy, $C_1$-$C_6$-alkylcarbonyl-$C_1$-$C_4$-alkoxy, $C_1$-$C_6$-alkylcarbonyloxy-$C_1$-$C_4$-alkoxy, $C_1$-$C_6$-alkyloxycarbonyl-$C_1$-$C_4$-alkoxy or CO-$R^{16}$;

$R^{12}$ and $R^{14}$ independently of one another are hydrogen, halogen, hydroxyl, mercapto, cyano, $C_1$-$C_6$-alkyl, $C_2$-$C_6$-alkenyl, $C_2$-$C_6$-alkynyl, $C_1$-$C_6$-alkoxy, $C_3$-$C_6$-alkenyloxy, $C_3$-$C_6$-alkynyloxy, $C_1$-$C_6$-alkylthio, $C_3$-$C_6$-alkenylthio, $C_3$-$C_6$-alkynylthio, $C_1$-$C_6$-alkylsulfinyl, $C_3$-$C_6$-alkenylsulfinyl, $C_3$-$C_6$-alkynylsulfinyl, $C_1$-$C_6$-alkylsulfonyl, $C_3$-$C_6$-alkenylsulfonyl, $C_3$-$C_6$-alkynylsulfonyl, $C_1$-$C_6$-haloalkyl, $C_3$-$C_6$-haloalkenyl, $C_2$-$C_6$-haloalkynyl, $C_1$-$C_6$-haloalkoxy, $C_3$-$C_6$-haloalkenyloxy, $C_3$-$C_6$-haloalkynyloxy, $C_1$-$C_6$-haloalkylthio, $C_2$-$C_6$-haloalkenylthio, $C_3$-$C_6$-haloalkynylthio, $C_1$-$C_6$-haloalkylsulfinyl, $C_3$-$C_6$-haloalkenylsulfinyl, $C_3$-$C_6$-haloalkynylsulfinyl, $C_1$-$C_6$-haloalkylsulfonyl, $C_3$-$C_6$-haloalkenylsulfonyl, $C_3$-$C_6$-haloalkynylsulfonyl, formyl, $C_1$-$C_6$-alkylcarbonyloxy, $C_1$-$C_6$-alkoxy-$C_1$-$C_4$-alkyl, $C_3$-$C_6$-alkenyloxy-$C_1$-$C_4$-alkyl, $C_3$-$C_4$-alkynyloxy-$C_1$-$C_4$-alkyl, $C_1$-$C_6$-alkylthio-$C_1$-$C_4$-alkyl, $C_3$-$C_6$-alkenylthio-$C_1$-$C_4$-alkyl, $C_3$-$C_4$-alkynylthio-$C_1$-$C_4$-alkyl, $C_1$-$C_6$-alkylcarbonyl-$C_1$-$C_4$-alkyl, $C_1$-$C_6$-alkylcarbonyloxy-$C_1$-$C_4$-alkyl, $C_1$-$C_6$-alkyloxycarbonyl-$C_1$-$C_4$-alkyl, $C_1$-$C_6$-alkoxy-$C_1$-$C_4$-alkoxy, $C_3$-$C_6$-alkenyloxy-$C_1$-$C_4$-alkoxy, $C_3$-$C_4$-alkynyloxy-$C_1$-$C_4$-alkoxy, $C_1$-$C_6$-alkylthio-$C_1$-$C_4$-alkoxy, $C_3$-$C_6$-alkenylthio-$C_1$-$C_4$-alkoxy, $C_3$-$C_6$-alkynylthio-$C_1$-$C_4$-alkoxy, $C_1$-$C_6$-alkylcarbonyl-$C_1$-$C_4$-alkoxy, $C_1$-$C_6$-alkylcarbonyloxy-$C_1$-$C_4$-alkoxy, $C_1$-$C_6$-alkyloxycarbonyl-$C_1$-$C_4$-alkoxy or CO-$R^{16}$; and

$R^{16}$ is hydrogen, hydroxyl, $C_1$-$C_6$-alkyl, $C_2$-$C_6$-alkenyl, $C_2$-$C_6$-alkynyl, $C_1$-$C_6$-haloalkyl, $C_2$-$C_6$-haloalkenyl, $C_2$-$C_6$-haloalkynyl, $C_1$-$C_6$-alkoxy, $C_3$-$C_6$-alkenyloxy, $C_3$-$C_6$-alkynyloxy, $C_1$-$C_6$-haloalkoxy, $C_1$-$C_6$-alkylamino or di($C_1$-$C_6$-alkyl)amino;

or

$R^7$ together with $R^{10}$ forms a $C_3$-$C_4$-alkylene or -alkenylene chain, where the $C_3$-$C_4$-alkylene or -alkenylene chain may carry 1-3 substituents from the group consisting of halogen, nitro or cyano and/or one carbon atom of the $C_3$-$C_4$-alkylene chain may be replaced by a heteroatom selected from the group consisting of oxygen, sulfur and nitrogen and/or by a carbonyl group.

**2.** A phenylalanine derivative of the formula I as claimed in claim 1, in which

$R^1$ is hydrogen, halogen, nitro, cyano, $C_1$-$C_6$-alkyl, $C_2$-$C_6$-alkenyl, $C_2$-$C_6$-alkynyl, $C_1$-$C_6$-alkoxy,

$C_3$-$C_6$-alkenyloxy, $C_3$-$C_6$-alkynyloxy, $C_1$-$C_6$-alkylthio, $C_3$-$C_6$-alkenylthio, $C_3$-$C_6$-alkynylthio, $C_1$-$C_6$-alkylsulfinyl, $C_3$-$C_6$-alkenylsulfinyl, $C_3$-$C_6$-alkynylsulfinyl, $C_1$-$C_6$-alkylsulfonyl, $C_3$-$C_6$-alkenylsulfonyl, $C_3$-$C_6$-alkynylsulfonyl, $C_1$-$C_6$-haloalkyl, $C_1$-$C_6$-haloalkoxy, $C_3$-$C_6$-haloalkenyloxy, $C_1$-$C_6$-haloalkylthio, $C_3$-$C_6$-haloalkenylthio, $C_1$-$C_6$-haloalkylsulfinyl, $C_3$-$C_6$-haloalkenylsulfinyl, $C_1$-$C_6$-haloalkylsulfonyl or $C_3$-$C_6$-haloalkenylsulfonyl;

$R^2$ is hydrogen, halogen, nitro, cyano, $C_1$-$C_6$-alkyl, $C_2$-$C_6$-alkynyl, $C_1$-$C_6$-alkoxy, $C_3$-$C_6$-alkenyloxy, $C_3$-$C_6$-alkynyloxy, $C_1$-$C_6$-haloalkyl, $C_1$-$C_6$-haloalkoxy, $C_3$-$C_6$-haloalkenyloxy or $C_3$-$C_6$-haloalkynyloxy;

$R^3$ is hydrogen, halogen, $C_1$-$C_6$-alkyl or $C_1$-$C_6$-haloalkyl;

$R^4$ is hydrogen, halogen, nitro, cyano, $C_1$-$C_6$-alkyl, $C_1$-$C_6$-alkoxy, $C_3$-$C_6$-alkenyloxy, $C_3$-$C_6$-alkynyloxy, $C_1$-$C_6$-haloalkyl or $C_1$-$C_6$-haloalkoxy;

$R^5$ is hydrogen, halogen, nitro, cyano, $C_1$-$C_6$-alkyl, $C_2$-$C_6$-alkenyl, $C_2$-$C_6$-alkynyl, $C_1$-$C_6$-alkoxy, $C_3$-$C_6$-alkenyloxy, $C_3$-$C_6$-alkynyloxy, $C_1$-$C_6$-haloalkyl, $C_1$-$C_6$-haloalkoxy or $C_3$-$C_6$-haloalkenyloxy; and

$R^6$ is hydrogen or $C_1$-$C_6$-alkyl;

$R^7$ is hydrogen, halogen, $C_1$-$C_6$-alkyl, $C_2$-$C_6$-alkenyl, $C_2$-$C_6$-alkynyl or $C_1$-$C_6$-haloalkyl;

$R^8$ is methyl, ethyl, hydroxyl or methoxy;

$R^9$ is hydrogen or methyl;

$R^{10}$ is hydrogen, $C_1$-$C_6$-alkyl, $C_1$-$C_6$-alkoxycarbonyl or $C_1$-$C_4$-haloalkoxycarbonyl;

$R^{11}$ is halogen, nitro, cyano, $C_1$-$C_6$-alkyl, $C_1$-$C_6$-alkoxy, $C_1$-$C_6$-alkylthio, $C_3$-$C_6$-alkenylthio, $C_3$-$C_6$-alkynylthio, $C_1$-$C_6$-alkylsulfinyl, $C_3$-$C_6$-alkenylsulfinyl, $C_3$-$C_6$-alkynylsulfinyl, $C_1$-$C_6$-alkylsulfonyl, $C_3$-$C_6$-alkenylsulfonyl, $C_3$-$C_6$-alkynylsulfonyl, $C_1$-$C_6$-haloalkyl, $C_1$-$C_6$-haloalkoxy, $C_1$-$C_6$-haloalkylthio, $C_3$-$C_6$-haloalkenylthio, $C_1$-$C_6$-haloalkylsulfinyl, $C_3$-$C_6$-haloalkenylsulfinyl, $C_1$-$C_6$-haloalkylsulfonyl, $C_3$-$C_6$-haloalkenylsulfonyl or CO-$R^{16}$;

$R^{13}$ is hydrogen, halogen, nitro, cyano, $C_1$-$C_6$-alkyl, $C_1$-$C_6$-alkoxy, $C_1$-$C_6$-alkylthio, $C_3$-$C_6$-alkenylthio, $C_3$-$C_6$-alkynylthio, $C_1$-$C_6$-alkylsulfinyl, $C_3$-$C_6$-alkenylsulfinyl, $C_3$-$C_6$-alkynylsulfinyl, $C_1$-$C_6$-alkylsulfonyl, $C_3$-$C_6$-alkenylsulfonyl, $C_3$-$C_6$-alkynylsulfonyl, $C_1$-$C_6$-haloalkyl, $C_1$-$C_6$-haloalkoxy, $C_1$-$C_6$-haloalkylthio, $C_3$-$C_6$-haloalkenylthio, $C_1$-$C_6$-haloalkylsulfinyl, $C_3$-$C_6$-haloalkenylsulfinyl, $C_1$-$C_6$-haloalkylsulfonyl, $C_3$-$C_6$-haloalkenylsulfonyl or CO-$R^{16}$;

$R^{12}$ and $R^{14}$ independently of one another are hydrogen, halogen, cyano, $C_1$-$C_6$-alkyl, $C_1$-$C_6$-alkoxy, $C_1$-$C_6$-alkylthio, $C_3$-$C_6$-alkenylthio, $C_3$-$C_6$-alkynylthio, $C_1$-$C_6$-alkylsulfinyl, $C_3$-$C_6$-alkenylsulfinyl, $C_3$-$C_6$-alkynylsulfinyl, $C_1$-$C_6$-alkylsulfonyl, $C_3$-$C_6$-alkenylsulfonyl, $C_3$-$C_6$-alkynylsulfonyl, $C_1$-$C_6$-haloalkyl, $C_1$-$C_6$-haloalkoxy, $C_1$-$C_6$-haloalkylthio, $C_3$-$C_6$-haloalkenylthio, $C_1$-$C_6$-haloalkylsulfinyl, $C_3$-$C_6$-haloalkenylsulfinyl, $C_1$-$C_6$-haloalkylsulfonyl, $C_3$-$C_6$-haloalkenylsulfonyl or CO-$R^{16}$;

$R^{15}$ is hydrogen, halogen, $C_1$-$C_6$-alkyl or $C_1$-$C_6$-haloalkyl;

$R^{16}$ is hydrogen, hydroxyl, $C_1$-$C_6$-alkyl, $C_1$-$C_6$-haloalkyl, $C_1$-$C_6$-alkoxy, $C_1$-$C_6$-haloalkoxy, $C_1$-$C_6$-alkylamino or di($C_1$-$C_6$-alkyl)amino;

and its agriculturally useful salts.

**3.** A phenylalanine derivative of the formula I as claimed in claim 1 or 2 in which

$R^1$ is hydrogen, halogen, cyano, $C_1$-$C_6$-alkyl, $C_1$-$C_6$-alkylthio, $C_1$-$C_6$-alkylsulfinyl or $C_1$-$C_6$-alkylsulfonyl;

| | |
|---|---|
| $R^2$ | is hydrogen, halogen, cyano, $C_1$-$C_6$-haloalkyl or $C_1$-$C_6$-alkyl; |
| $R^3$ | is hydrogen, $C_1$-$C_6$-alkyl or halogen; |
| $R^4$ | is hydrogen, halogen, $C_1$-$C_6$-alkyl or $C_1$-$C_6$-haloalkyl; |
| $R^5$ | is hydrogen, halogen, $C_1$-$C_6$-alkyl or $C_1$-$C_6$-haloalkyl; |
| $R^6$ | is hydrogen or $C_1$-$C_6$-alkyl; |
| $R^7$ | is hydrogen, $C_1$-$C_6$-alkyl, $C_2$-$C_6$-alkenyl or $C_2$-$C_6$-alkynyl; |
| $R^8$ | is methyl, hydroxyl or methoxy; |
| $R^9$ | is hydrogen or methyl; |
| $R^{10}$ | is hydrogen; and |
| $R^{11}$ | is halogen, cyano, $C_1$-$C_6$-alkyl, $C_1$-$C_6$-alkylthio, $C_1$-$C_6$-alkylsulfinyl, $C_1$-$C_6$-alkylsulfonyl, $C_1$-$C_6$-haloalkyl, $C_1$-$C_6$-haloalkoxy, $C_1$-$C_6$-haloalkylthio, $C_1$-$C_6$-alkylsulfonyl or $C_1$-$C_6$-alkylsulfinyl; |
| $R^{12}$, $R^{13}$ and $R^{14}$ | independently of one another are hydrogen, halogen, cyano, $C_1$-$C_6$-alkyl, $C_1$-$C_6$-alkoxy, $C_1$-$C_6$-alkylthio, $C_1$-$C_6$-alkylsulfinyl, $C_1$-$C_6$-alkylsulfonyl, $C_1$-$C_6$-haloalkyl, $C_1$-$C_6$-haloalkoxy or $C_1$-$C_6$-haloalkylthio; and |
| $R^{15}$ | is hydrogen. |

**4.** A phenylalanine derivative of the formula I as claimed in any of claims 1, 2 or 3 in which

| | |
|---|---|
| $R^1$, $R^2$, $R^3$, $R^5$ | in each case independently of one another are hydrogen, fluorine, chlorine, methyl or ethyl; |
| $R^4$, $R^6$, $R^{10}$, $R^{14}$ and $R^{15}$ | are hydrogen; |
| $R^7$ | is hydrogen, methyl or ethyl; |
| $R^8$ | is methoxy, methyl or hydroxyl; |
| $R^9$ | is hydrogen;<br>is methyl if $R^8$ is hydroxyl; |
| $R^{11}$ | is fluorine, chlorine, halomethyl such as fluoromethyl, difluoromethyl, trifluoromethyl, halomethoxy, such as fluoromethoxy, difluoromethoxy, trifluoromethoxy, halothioalkyl, such as fluorothiomethyl, difluorothiomethyl, trifluorothiomethyl, methylsulfinyl or methylsulfonyl; |
| $R^{12}$ | is hydrogen, cyano, methyl, fluorine, chlorine, halomethyl, such as fluoromethyl, difluoromethyl, trifluoromethyl, halomethoxy, such as fluoromethoxy, difluoromethoxy, trifluoromethoxy, halothioalkyl, such as fluorothiomethyl, difluorothiomethyl, trifluorothiomethyl; |
| $R^{13}$ | is hydrogen, fluorine, chlorine. |

**5.** A process for preparing the phenylalanine derivatives of the formula I as claimed in any of claims 1 to 4, which comprises

(A) linking a phenylalanine derivative of the formula II

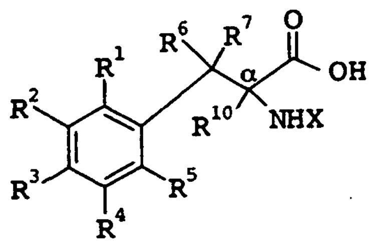

(II)

which is protected at the amino function by a protective group X to a support resin;

(B) removing the protective group X by addition of a base,

(C) acylating the resulting compounds at the nitrogen
and

(D) cleaving the compounds acylated at the nitrogen from the solid support by addition of an acid, followed by addition of a condensing agent with an amine IX

$$R^8\text{-NH-}R^9 \qquad (IX)$$

to give the phenylalanine derivatives I as claimed in any of claims 1 to 3.

**6.** A process for preparing the phenylalanine derivatives of the formula I as claimed in any of claims 1 to 4 in which $R^9$ = hydrogen, which comprises

(A) reacting a polymer resin X

$$\text{Pol-CHO} \qquad (X)$$

with an amine XI

$$H^2NR^8 \qquad (XI)$$

in the presence of a reducing agent;

(B) reacting the aminated resin XII

$$\text{Pol-}CH_2\text{-NHR}^8 \qquad (XII)$$

obtained in step A with a phenylalanine derivative of the formula II as set forth in claim 4;

(C) removing the protective group X by addition of a base;

(D) and acylating the resulting compounds XIII

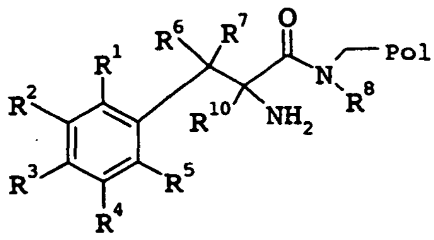

(XIII)

to give the compounds XIV

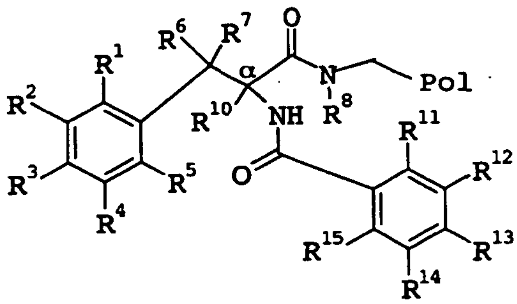

(XIV)

which are subsequently, by addition of an acid, cleaved from the solid support, giving the compounds I.

**7.** A process for preparing the phenylalanine derivatives of the formula I as claimed in any of claims 1 to 4, which comprises

(A) reacting a phenylalanine derivative of the formula II as set forth in claim 4, which is protected at the amino function by a protective group X, with an amine IX

$$HNR^8R^9 \quad (IX)$$

in an inert aprotic dipolar organic solvent to give the compounds XV

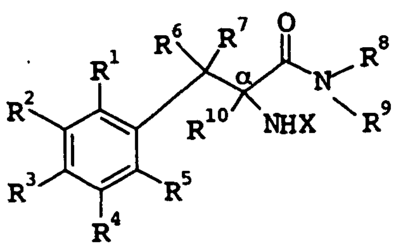

(XV)

(B) removing the protective group X, and

(C) acylating the compounds obtained in step B to give the compounds I.

**8.** A process for preparing the phenylalanine derivatives of the formula I in which $R^9$ = hydrogen as claimed in any of claims 1 to 4, which comprises

(A) reacting an aminomalonic acid ester derivative XVII

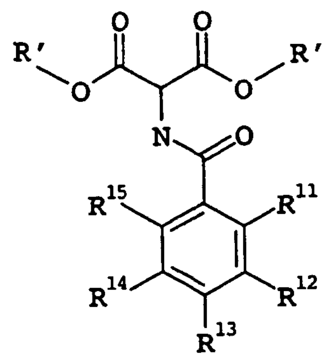

(XVII)

in which R' is a low-molecular-weight organic radical with a benzyl derivative XVIII

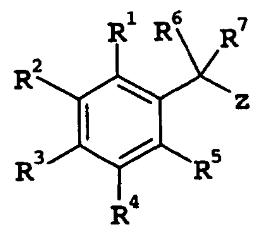

XVIII

to give the diesters XIX

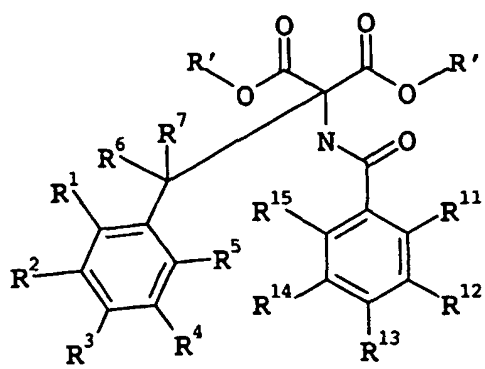

XIX

(B) decarboxylating and hydrolyzing the diester XIX, followed by reaction with an amine IX

$$HNR^8R^9 \quad (IX)$$

in an inert aprotic dipolar organic solvent using a condensing agent, to give the compounds I.

**9.** A process for preparing the phenylalanine derivatives of the formula I as claimed in any of claims 1 to 4, which comprises

(A) reacting the benzyl derivative XVIII with an alkylating agent XXI

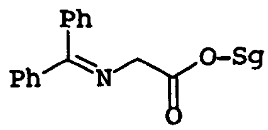

XXI

to give the compounds XXII

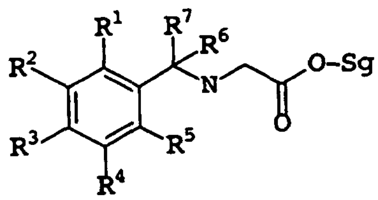

XXII

(B) and acylating the resulting compounds at the nitrogen and

(C) reacting the nitrogen-acylated compounds by addition of a condensing agent with an amine IX

$$R^8\text{-NH-}R^9 \quad (IX)$$

to give the phenylalanine derivatives I as claimed in any of claims 1 to 3.

**10.** A composition which comprises at least one phenylalanine derivative of the formula I or an agriculturally useful salt of a phenylalanine derivative of the formula I as claimed in any of claims 1 to 4 and customary auxiliaries.

**11.** A composition suitable for controlling undesirable vegetation, which composition comprises a solid or liquid carrier and at least one phenylalanine derivative of the formula I or an agriculturally useful salt of a phenylalanine derivative of the formula I as claimed in any of claims 1 to 4.

**12.** The use of the compounds I as claimed in any of claims 1 to 4 for preparing a composition suitable for controlling undesirable vegetation.

**13.** A method for controlling undesirable vegetation, which comprises allowing a herbicidally effective amount of at least one phenylalanine derivative of the formula I or an agriculturally useful salt of a phenylalanine derivative of the formula I as claimed in any of claims 1 to 4 to act on plants, their habitat and/or on seed.

**14.** A composition for regulating plant growth, comprising a growth-regulating amount of at least one substituted phenylalanine derivative of the formula I or an agriculturally useful salt of I as claimed in any of claims 1 to 4 and at least one inert liquid and/or solid carrier and, if desired, at least one surfactant.

**15.** A process for preparing compositions for regulating plant growth, which comprises mixing a growth-regulating amount of at least one substituted phenylalanine derivative of the formula I or an agriculturally useful salt of I as claimed in any of claims 1 to 4 with at least one inert liquid and/or solid carrier and, if desired, at least one surfactant.

**16.** A method for regulating plant growth, which comprises allowing a growth-regulating amount of at least one substituted phenylalanine derivative of the formula I or an agriculturally useful salt of I as claimed in any of claims 1 to 4 to act on plants.

## Revendications

1. Dérivés de phénylalanine de la formule I :

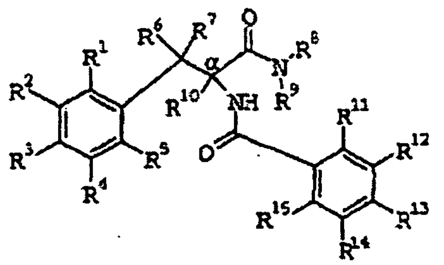

(I)

dans laquelle
$R^1$, $R^2$, $R^4$, $R^5$, $R^{13}$ et $R^{15}$ représentent indépendamment les uns des autres de l'hydrogène, un halogène ou un groupe hydroxy, mercapto, nitro, cyano, $C_1$-$C_6$-alkyle, $C_2$-$C_6$-alcényle, $C_2$-$C_6$-alcynyle, $C_1$-$C_6$-alcoxy, $C_3$-$C_6$-alcényloxy, $C_3$-$C_6$-alcynyloxy, $C_1$-$C_6$-alkylthio, $C_3$-$C_6$-alcénylthio, $C_3$-$C_6$-alcynylthio, $C_1$-$C_6$-alkylsulfinyle, $C_3$-$C_6$-alcénylsulfinyle, $C_3$-$C_6$-alcynylsulfinyle, $C_1$-$C_6$-alkylsulfonyle, $C_3$-$C_6$-alcénylsulfonyle, $C_3$-$C_6$-alcynylsulfonyle, $C_1$-$C_6$-halogénoalkyle, $C_2$-$C_6$-halogénoalcényle, $C_2$-$C_6$-halogénoalcynyle, $C_1$-$C_6$-halogénoalcoxy, $C_3$-$C_6$-halogénoalcényloxy, $C_3$-$C_6$-halogénoalcynyloxy, $C_1$-$C_6$-halogénoalkylthio, $C_3$-$C_6$-halogénoalcénylthio, $C_3$-$C_6$-halogénoalcynylthio, $C_1$-$C_6$-halogénoalkylsulfinyle, $C_3$-$C_6$-halogénoalcénylsulfinyle, $C_3$-$C_6$-halogénoalcynylsulfinyle, $C_1$-$C_6$-halogénoalkylsulfonyle, $C_3$-$C_6$-halogénoalcénylsulfonyle, $C_3$-$C_6$-halogénoalcynylsulfonyle, formyle, $C_1$-$C_6$-alkylcarbonyloxy,

$C_1$-$C_6$-alcoxy-$C_1$-$C_4$-alkyle, $C_3$-$C_6$-alcényloxy-$C_1$-$C_4$-alkyle, $C_3$-$C_4$-alcynyloxy-$C_1$-$C_4$-alkyle, $C_1$-$C_6$-alkylthio-$C_1$-$C_4$-alkyle, $C_3$-$C_6$-alcénylthio-$C_1$-$C_4$-alkyle, $C_3$-$C_4$-alcynylthio-$C_1$-$C_4$-alkyle, $C_1$-$C_6$-alkylcarbonyl-$C_1$-$C_4$-alkyle, $C_1$-$C_6$-alkylcarbonyloxy-$C_1$-$C_4$-alkyle, $C_1$-$C_6$-alcoxycarbonyl-$C_1$-$C_4$-alkyle, $C_1$-$C_6$-alcoxy-$C_1$-$C_4$-alcoxy, $C_3$-$C_6$-alcényloxy-$C_1$-$C_4$-alcoxy, $C_3$-$C_4$-alcynyloxy-$C_1$-$C_4$-alcoxy, $C_1$-$C_6$-alkylthio-$C_1$-$C_4$-alcoxy, $C_3$-$C_6$-alcénylthio-$C_1$-$C_4$-alcoxy, $C_3$-$C_6$-alcynylthio-$C_1$-$C_4$-alcoxy, $C_1$-$C_6$-alkylcarbonyl-$C_1$-$C_4$-alcoxy, $C_1$-$C_6$-alkylcarbonyloxy-$C_1$-$C_4$-alcoxy, $C_1$-$C_6$-alcoxycarbonyl-$C_1$-$C_4$-alcoxy ou CO-$R^{16}$,
$R^3$ représente de l'hydrogène, un halogène ou un groupe mercapto, $C_1$-$C_6$-alkyle, $C_2$-$C_6$-alcényle, $C_2$-$C_6$-alcynyle, $C_1$-$C_6$-alkylthio, $C_3$-$C_6$-alcénylthio, $C_3$-$C_6$-alcynylthio, $C_1$-$C_6$-alkylsulfinyle, $C_3$-$C_6$-alcénylsulfinyle, $C_3$-$C_6$-alcynylsulfinyle, $C_1$-$C_6$-alkylsulfonyle, $C_3$-$C_6$-alcénylsulfonyle, $C_3$-$C_6$-alcynylsulfonyle, $C_1$-$C_6$-halogénoalkyle, $C_2$-$C_6$-halogénoalcényle, $C_2$-$C_6$-halogénoalcynyle, $C_1$-$C_6$-halogénoalkylthio, $C_3$-$C_6$-halogénoalcénylthio, $C_3$-$C_6$-halogénoalcynylthio, $C_1$-$C_6$-halogénoalkylsulfinyle, $C_3$-$C_6$-halogénoalcénylsulfinyle, $C_3$-$C_6$-halogénoalcynylsulfinyle, $C_1$-$C_6$-halogénoalkylsulfonyle, $C_3$-$C_6$-halogénoalcénylsulfonyle, $C_3$-$C_6$-halogénoalcynylsulfonyle,

$C_1$-$C_6$-alcoxy-$C_1$-$C_4$-alkyle, $C_3$-$C_6$-alcényloxy-$C_1$-$C_4$-alkyle, $C_3$-$C_4$-alcynyloxy-$C_1$-$C_4$-alkyle, $C_1$-$C_6$-alkylthio-$C_1$-$C_4$-alkyle, $C_3$-$C_6$-alcénylthio-$C_1$-$C_4$-alkyle, $C_3$-$C_6$-alcynylthio-$C_1$-$C_4$-alkyle, $C_1$-$C_6$-alkylcarbonyl-$C_1$-$C_4$-alkyle, $C_1$-$C_6$-alkylcarbonyloxy-$C_1$-$C_4$-alkyle, $C_1$-$C_6$-alkyloxycarbonyl-$C_1$-$C_4$-alkyle ou CO-$R^{16}$;
$R^6$ représente de l'hydrogène ou un groupe $C_1$-$C_6$-alkyle, $C_2$-$C_6$-alcényle ou $C_2$-$C_6$-alcynyle,
$R^7$ représente de l'hydrogène, un halogène ou un groupe $C_1$-$C_6$-alkyle, $C_2$-$C_6$-alcényle, $C_2$-$C_6$-alcynyle, $C_1$-$C_6$-halogénoalkyle, $C_2$-$C_6$-halogénoalcényle ou $C_2$-$C_6$-halogénoalcynyle,
$R^8$ représente un groupe méthyle, éthyle, $C_1$-$C_6$-alcoxy ou hydroxy,
$R^9$ représente de l'hydrogène ou un groupe $C_1$-$C_6$-alkyle,
$R^{10}$ représente de l'hydrogène ou un groupe $C_1$-$C_6$-alkyle, $C_1$-$C_6$-alcoxycarbonyle ou $C_1$-$C_6$-halogénoalcoxycarbonyle,
$R^{11}$ représente de l'halogène ou un groupe mercapto, nitro, cyano, $C_1$-$C_6$-alkyle, $C_2$-$C_6$-alcényle, $C_2$-$C_6$-alcynyle, $C_1$-$C_6$-alcoxy, $C_3$-$C_6$-alcényloxy, $C_3$-$C_6$-alcynyloxy, $C_1$-$C_6$-alkylthio, $C_3$-$C_6$-alcénylthio, $C_3$-$C_6$-alcynylthio, $C_1$-$C_6$-alkylsulfinyle, $C_3$-$C_6$-alcénylsulfinyle, $C_3$-$C_6$-alcynylsulfinyle, $C_1$-$C_6$-alkylsulfonyle, $C_3$-$C_6$-alcénylsulfonyle, $C_3$-$C_6$-alcynylsulfonyle, $C_1$-$C_6$-halogénoalkyle, $C_2$-$C_6$-halogénoalcényle, $C_2$-$C_6$-halogénoalcynyle, $C_1$-$C_6$-halogénoalcoxy, $C_3$-$C_6$-halogénoalcényloxy, $C_3$-$C_6$-halogénoalcynyloxy, $C_1$-$C_6$-halogénoalkylthio, $C_3$-$C_6$-halogénoalcénylthio, $C_3$-$C_6$-halogénoalcynylthio, $C_1$-$C_6$-halogénoalkylsulfinyle, $C_3$-$C_6$-halogénoalcénylsulfinyle, $C_3$-$C_6$-halogénoalcynylsulfinyle, $C_1$-$C_6$-halogénoalkylsulfonyle, $C_3$-$C_6$-halogénoalcénylsulfonyle, $C_3$-$C_6$-halogénoalcynylsulfonyle,

formyle, $C_1$-$C_6$-alkylcarbonyloxy, $C_1$-$C_6$-alcoxy-$C_1$-$C_4$-alkyle, $C_2$-$C_6$-alcényloxy-$C_1$-$C_4$-alkyle, $C_3$-$C_4$-alcynyloxy-$C_1$-$C_4$-alkyle, $C_1$-$C_6$-alkylthio-$C_1$-$C_4$-alkyle, $C_2$-$C_6$-alcénylthio-$C_1$-$C_4$-alkyle, $C_3$-$C_4$-alcynylthio-$C_1$-$C_4$-alkyle, $C_1$-$C_6$-alkylcarbonyl-$C_1$-$C_4$-alkyle, $C_1$-$C_6$-alkylcarbonyloxy-$C_1$-$C_4$-alkyle, $C_1$-$C_6$-alkyloxycarbonyl-$C_1$-$C_4$-alkyle, $C_1$-$C_6$-alcoxy-$C_1$-$C_4$-alcoxy, $C_3$-$C_6$-alcényloxy-$C_1$-$C_4$-alcoxy, $C_3$-$C_4$-alcynyloxy-$C_1$-$C_4$-alcoxy, $C_1$-$C_6$-alkyl-

thio-$C_1$-$C_4$-alcoxy, $C_3$-$C_6$-alcénylthio-$C_1$-$C_4$-alcoxy, $C_3$-$C_6$-alcynylthio-$C_1$-$C_4$-alcoxy, $C_1$-$C_6$-alkylcarbonyl-$C_1$-$C_4$-alcoxy, $C_1$-$C_6$-alkylcarbonyloxy-$C_1$-$C_4$-alcoxy, $C_1$-$C_6$-alkyloxycarbonyl-$C_1$-$C_4$-alcoxy ou CO-$R^{16}$,

$R^{12}$ et $R^{14}$ représentent indépendamment l'un de l'autre de l'hydrogène, un halogène ou un groupe hydroxy, mercapto, cyano, $C_1$-$C_6$-alkyle, $C_2$-$C_6$-alcényle, $C_2$-$C_6$-alcynyle, $C_1$-$C_6$-alcoxy, $C_3$-$C_6$-alcényloxy, $C_3$-$C_6$-alcynyloxy, $C_1$-$C_6$-alkylthio, $C_3$-$C_6$-alcénylthio, $C_3$-$C_6$-alcynylthio, $C_1$-$C_6$-alkylsulfinyle, $C_3$-$C_6$-alcénylsulfinyle, $C_3$-$C_6$-alcynylsulfinyle, $C_1$-$C_6$-alkylsulfonyle, $C_3$-$C_6$-alcénylsulfonyle, $C_3$-$C_6$-alcynylsulfonyle, $C_1$-$C_6$-halogénoalkyle, $C_3$-$C_6$-halogénoalcényle, $C_2$-$C_6$-halogénoalcynyle, $C_1$-$C_6$-halogénoalcoxy, $C_3$-$C_6$-halogénoalcényloxy, $C_3$-$C_6$-halogénoalcynyloxy, $C_1$-$C_6$-halogénoalkylthio, $C_2$-$C_6$-halogénoalcénylthio, $C_3$-$C_6$-halogénoalcynylthio, $C_1$-$C_6$-halogénoalkylsulfinyle, $C_3$-$C_6$-halogénoalcénylsulfinyle, $C_3$-$C_6$-halogénoalcynylsulfinyle, $C_1$-$C_6$-halogénoalkylsulfonyle, $C_3$-$C_6$-halogénoalcénylsulfonyle, $C_3$-$C_6$-halogénoalcynylsulfonyle,

formyle, $C_1$-$C_6$-alkylcarbonyloxy, $C_1$-$C_6$-alcoxy-$C_1$-$C_4$-alkyle, $C_3$-$C_6$-alcényloxy-$C_1$-$C_4$-alkyle, $C_3$-$C_4$-alcynyloxy-$C_1$-$C_4$-alkyle, $C_1$-$C_6$-alkylthio-$C_1$-$C_4$-alkyle, $C_3$-$C_6$-alcénylthio-$C_1$-$C_4$-alkyle, $C_3$-$C_4$-alcynylthio-$C_1$-$C_4$-alkyle, $C_1$-$C_6$-alkylcarbonyl-$C_1$-$C_4$-alkyle, $C_1$-$C_6$-alkylcarbonyloxy-$C_1$-$C_4$-alkyle, $C_1$-$C_6$-alkyloxycarbonyl-$C_1$-$C_4$-alkyle, $C_1$-$C_6$-alcoxy-$C_1$-$C_4$-alcoxy, $C_3$-$C_6$-alcényloxy-$C_1$-$C_4$-alcoxy, $C_3$-$C_4$-alcynyloxy-$C_1$-$C_4$-alcoxy, $C_1$-$C_6$-alkylthio-$C_1$-$C_4$-alcoxy, $C_3$-$C_6$-alcénylthio-$C_1$-$C_4$-alcoxy, $C_3$-$C_6$-alcynylthio-$C_1$-$C_4$-alcoxy, $C_1$-$C_6$-alkylcarbonyl-$C_1$-$C_4$-alcoxy, $C_1$-$C_6$-alkylcarbonyloxy-$C_1$-$C_4$-alcoxy, $C_1$-$C_6$-alkyloxycarbonyl-$C_1$-$C_4$-alcoxy ou CO-$R^{16}$, et

$R^{16}$ représente de l'hydrogène ou un groupe hydroxy, $C_1$-$C_6$-alkyle, $C_2$-$C_6$-alcényle, $C_2$-$C_6$-alcynyle, $C_1$-$C_6$-halogénoalkyle, $C_2$-$C_6$-halogénoalcényle, $C_2$-$C_6$-halogénoalcynyle, $C_1$-$C_6$-alcoxy, $C_3$-$C_6$-alcényloxy, $C_3$-$C_6$-alcynyloxy, $C_1$-$C_6$-halogénoalcoxy, $C_1$-$C_6$-alkylamino ou di-($C_1$-$C_6$-alkyl)-amino,

ou

$R^7$ forme conjointement à $R^{10}$ une chaîne alcénylène ou alkylène en $C_3$-$C_4$, la chaîne alcénylène ou alkylène en $C_3$-$C_4$ pouvant porter 1 à 3 substituants du groupe constitué par de l'halogène, du nitro ou du cyano et/ou un atome de carbone de la chaîne alkylène en $C_3$-$C_4$ pouvant être remplacé par un hétéroatome choisi parmi le groupe constitué de l'oxygène, du soufre ou de l'azote et/ou par un groupe carbonyle.

**2.** Dérivés de phénylalanine de la formule I suivant la revendication 1, dans lesquels

$R^1$ représente de l'hydrogène, un halogène ou un groupe nitro, cyano, $C_1$-$C_6$-alkyle, $C_2$-$C_6$-alcényle, $C_2$-$C_6$-alcynyle, $C_1$-$C_6$-alcoxy, $C_3$-$C_6$-alcényloxy, $C_3$-$C_6$-alcynyloxy, $C_1$-$C_6$-alkylthio, $C_3$-$C_6$-alcénylthio, $C_3$-$C_6$-alcynylthio, $C_1$-$C_6$-alkylsulfinyle, $C_3$-$C_6$-alcénylsulfinyle, $C_3$-$C_6$-alcynylsulfinyle, $C_1$-$C_6$-alkylsulfonyle, $C_3$-$C_6$-alcénylsulfonyle, $C_3$-$C_6$-alcynylsulfonyle, $C_1$-$C_6$-halogénoalkyle, $C_1$-$C_6$-halogénoalcoxy, $C_3$-$C_6$-halogénoalcényloxy, $C_1$-$C_6$-halogénoalkylthio, $C_3$-$C_6$-halogénoalcénylthio, $C_1$-$C_6$-halogénoalkylsulfinyle, $C_3$-$C_6$-halogénoalcénylsulfinyle, $C_1$-$C_6$-halogénoalkylsulfonyle ou $C_3$-$C_6$-halogénoalcénylsulfonyle, $R^2$ représente de l'hydrogène, un halogène ou un groupe nitro, cyano, $C_1$-$C_6$-alkyle, $C_2$-$C_6$-alcynyle, $C_1$-$C_6$-alcoxy, $C_3$-$C_6$-alcényloxy, $C_3$-$C_6$-alcynyloxy, $C_1$-$C_6$-halogénoalkyle, $C_1$-$C_6$-halogénoalcoxy, $C_3$-$C_6$-halogénoalcényloxy ou $C_3$-$C_6$-halogénoalcynyloxy,

$R^3$ représente de l'hydrogène, un halogène ou un groupe $C_1$-$C_6$-alkyle ou $C_1$-$C_6$-halogénoalkyle,

$R^4$ représente de l'hydrogène, un halogène ou un groupe nitro, cyano, $C_1$-$C_6$-alkyle, $C_1$-$C_6$-alcoxy, $C_3$-$C_6$-alcényloxy, $C_3$-$C_6$-alcynyloxy, $C_1$-$C_6$-halogénoalkyle ou $C_1$-$C_6$-halogénoalcoxy,

$R^5$ représente de l'hydrogène, un halogène ou un groupe nitro, cyano, $C_1$-$C_6$-alkyle, $C_2$-$C_6$-alcényle, $C_2$-$C_6$-alcynyle, $C_1$-$C_6$-alcoxy, $C_3$-$C_6$-alcényloxy, $C_3$-$C_6$-alcynyloxy, $C_1$-$C_6$-halogénoalkyle, $C_1$-$C_6$-halogénoalcoxy, ou $C_3$-$C_6$-halogénoalcényloxy, et

$R^6$ représente de l'hydrogène ou un groupe $C_1$-$C_6$-alkyle,

$R^7$ représente de l'hydrogène, un halogène ou un groupe $C_1$-$C_6$-alkyle, $C_2$-$C_6$-alcényle, $C_2$-$C_6$-alcynyle ou $C_1$-$C_6$-halogénoalkyle,

$R^8$ représente du méthyle, de l'éthyle, de l'hydroxy ou du méthoxy,

$R^9$ représente de l'hydrogène ou du méthyle,

$R^{10}$ représente de l'hydrogène ou un groupe $C_1$-$C_6$-alkyle, $C_1$-$C_6$-alcoxycarbonyle ou $C_1$-$C_4$-halogénoalcoxycarbonyle,

$R^{11}$ représente de l'halogène ou un groupe nitro, cyano, $C_1$-$C_6$-alkyle, $C_1$-$C_6$-alcoxy, $C_1$-$C_6$-alkylthio, $C_3$-$C_6$-alcénylthio, $C_3$-$C_6$-alcynylthio, $C_1$-$C_6$-alkylsulfinyle, $C_3$-$C_6$-alcénylsulfinyle, $C_3$-$C_6$-alcynylsulfinyle, $C_1$-$C_6$-alkylsulfonyle, $C_3$-$C_6$-alcénylsulfonyle, $C_3$-$C_6$-alcynylsulfonyle, $C_1$-$C_6$-halogénoalkyle, $C_1$-$C_6$-halogénoalcoxy, $C_1$-$C_6$-halogénoalkylthio, $C_3$-$C_6$-halogénoalcénylthio, $C_1$-$C_6$-halogénoalkylsulfinyle, $C_3$-$C_6$-halogénoalcénylsulfinyle, $C_1$-$C_6$-halogénoalkylsulfonyle, $C_3$-$C_6$-halogénoalcénylsulfonyle ou CO-$R^{16}$,

$R^{13}$ représente de l'hydrogène, un halogène ou un groupe nitro, cyano, $C_1$-$C_6$-alkyle, $C_1$-$C_6$-alcoxy, $C_1$-$C_6$-alkylthio, $C_3$-$C_6$-alcénylthio, $C_3$-$C_6$-alcynylthio, $C_1$-$C_6$-alkylsulfinyle, $C_3$-$C_6$-alcénylsulfinyle, $C_3$-$C_6$-alcynylsulfinyle, $C_1$-$C_6$-alkylsulfonyle, $C_3$-$C_6$-alcénylsulfonyle, $C_3$-$C_6$-alcynylsulfonyle, $C_1$-$C_6$-halogénoalkyle, $C_1$-$C_6$-halogénoalcoxy, $C_1$-$C_6$-halogénoalkylthio, $C_3$-$C_6$-halogénoalcénylthio, $C_1$-$C_6$-halogénoalkylsulfinyle, $C_3$-$C_6$-halogénoalcénylsulfinyle, $C_1$-$C_6$-halogénoalkylsulfonyle, $C_3$-$C_6$-halogénoalcénylsulfonyle ou CO-$R^{16}$,

$R^{12}$ et $R^{14}$ représentent indépendamment l'un de l'autre de l'hydrogène, un halogène ou un groupe cyano, $C_1$-$C_6$-

alkyle, $C_1$-$C_6$-alcoxy, $C_1$-$C_6$-alkylthio, $C_3$-$C_6$-alcénylthio, $C_3$-$C_6$-alcynylthio, $C_1$-$C_6$-alkylsulfinyle, $C_3$-$C_6$-alcénylsulfinyle, $C_3$-$C_6$-alcynylsulfinyle, $C_1$-$C_6$-alkylsulfonyle, $C_3$-$C_6$-alcénylsulfonyle, $C_3$-$C_6$-alcynylsulfonyle, $C_1$-$C_6$-halogénoalkyle, $C_1$-$C_6$-halogénoalcoxy, $C_1$-$C_6$-halogénoalkylthio, $C_3$-$C_6$-halogénoalcénylthio, $C_1$-$C_6$-halogénoalkylsulfinyle, $C_3$-$C_6$-halogénoalcénylsulfinyle, $C_1$-$C_6$-halogénoalkylsulfonyle, $C_3$-$C_6$-halogénoalcénylsulfonyle ou CO-$R^{16}$,
$R^{15}$ représente de l'hydrogène, un halogène ou un groupe $C_1$-$C_6$-alkyle ou $C_1$-$C_6$-halogénoalkyle,
$R^{16}$ représente de l'hydrogène ou un groupe hydroxy, $C_1$-$C_6$-alkyle, $C_1$-$C_6$-halogénoalkyle, $C_1$-$C_6$-alcoxy, $C_1$-$C_6$-halogénoalcoxy, $C_1$-$C_6$-alkylamino ou di-($C_1$-$C_6$-alkyl)-amino,
ainsi que leurs sels utilisables dans l'agriculture.

**3.** Dérivés de phénylalanine de la formule I suivant les revendications 1 ou 2, dans lesquels
$R^1$ représente de l'hydrogène, un halogène ou un groupe cyano, $C_1$-$C_6$-alkyle, $C_1$-$C_6$-alkylthio, $C_1$-$C_6$-alkylsulfinyle ou $C_1$-$C_6$-alkylsulfonyle,
$R^2$ représente de l'hydrogène, un halogène ou un groupe cyano, $C_1$-$C_6$-halogénoalkyle ou $C_1$-$C_6$-alkyle,
$R^3$ représente de l'hydrogène, un groupe $C_1$-$C_6$-alkyle ou de l'halogène,
$R^4$ représente de l'hydrogène, un halogène ou un groupe $C_1$-$C_6$-alkyle ou $C_1$-$C_6$-halogénoalkyle,
$R^5$ représente de l'hydrogène, un halogène ou un groupe $C_1$-$C_6$-alkyle ou $C_1$-$C_6$-halogénoalkyle,
$R^6$ représente de l'hydrogène ou un groupe $C_1$-$C_6$-alkyle,
$R^7$ représente de l'hydrogène ou un groupe $C_1$-$C_6$-alkyle, $C_2$-$C_6$-alcényle ou $C_2$-$C_6$-alcynyle,
$R^8$ représente un groupe méthyle, hydroxy ou méthoxy,
$R^9$ représente de l'hydrogène ou du méthyle,
$R^{10}$ représente de l'hydrogène, et
$R^{11}$ représente un halogène ou un groupe cyano, $C_1$-$C_6$-alkyle, $C_1$-$C_6$-alkylthio, $C_1$-$C_6$-alkylsulfinyle, $C_1$-$C_6$-alkylsulfonyle, $C_1$-$C_6$-halogénoalkyle, $C_1$-$C_6$-halogénoalcoxy, $C_1$-$C_6$-halogénoalkylthio, $C_1$-$C_6$-alkylsulfonyle ou $C_1$-$C_6$-alkylsulfinyle,
$R^{12}$, $R^{13}$ et $R^{14}$ représentent indépendamment l'un de l'autre de l'hydrogène, un halogène ou un groupe cyano, $C_1$-$C_6$-alkyle, $C_1$-$C_6$-alcoxy, $C_1$-$C_6$-alkylthio, $C_1$-$C_6$-alkylsulfinyle, $C_1$-$C_6$-alkylsulfonyle, $C_1$-$C_6$-halogénoalkyle, $C_1$-$C_6$-halogénoalcoxy, $C_1$-$C_6$-halogénoalkylthio, et
$R^{15}$ représente de l'hydrogène.

**4.** Dérivés de phénylalanine de la formule I suivant les revendications 1, 2 ou 3, dans lesquels
$R^1$, $R^2$, $R^3$, $R^5$ représentent chacun, indépendamment les uns des autres, de l'hydrogène, du fluor, du chlore, du méthyle ou de l'éthyle,
$R^4$, $R^6$, $R^{10}$, $R^{14}$ et $R^{15}$ représentent de l'hydrogène,
$R^7$ représente de l'hydrogène, du méthyle ou de l'éthyle,
$R^8$ représente un groupe méthoxy, méthyle ou hydroxy,
$R^9$ représente de l'hydrogène,
du méthyle lorsque $R^8$ représente un hydroxy,
$R^{11}$ représente du fluor, du chlore, un groupe halogénométhyle, tel que du fluorométhyle, du difluorométhyle, du trifluorométhyle, halogénométhoxy, tel que du fluorométhoxy, du difluorométhoxy, du trifluorométhoxy, halogénothioalkyle, tel que du fluorothiométhyle, du difluorothiométhyle, du trifluorothiométhyle, méthylsulfinyle ou méthylsulfonyle,
$R^{12}$ représente de l' hydrogène, du fluor, du chlore ou un groupe cyano, méthyle, halogénométhyle, tel que du fluorométhyle, du difluorométhyle, du trifluorométhyle, halogénométhoxy, tel que du fluorométhoxy, du difluorométhoxy, du trifluorométhoxy, halogénothioalkyle, tel que du fluorothiométhyle, du difluorothiométhyle, du trifluorothiométhyle,
$R^{13}$ représente de l'hydrogène, du fluor ou du chlore.

**5.** Procédé de préparation des dérivés de phénylalanine de la formule I suivant les revendications 1 à 4, **caractérisé en ce que**

(A) on lie un dérivé de phénylalanine de la formule II, protégé sur la fonction amino par un groupe de protection X,

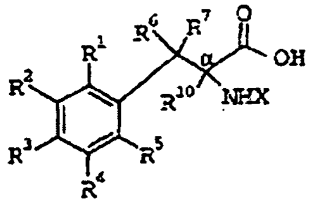

(II)

avec une résine de support,
(B) on sépare le groupe de protection X par addition d'une base,
(C) on acyle les composés ainsi obtenus sur l'azote,
et
(D) on sépare du support solide les composés acylés sur l'azote par addition d'acide et ensuite par addition d'un agent de condensation, on les fait réagir avec une amine IX :

$$R^8\text{-NH-}R^9 \qquad (IX)$$

pour former les dérivés de phénylalanine I suivant les revendications 1 à 3.

**6.** Procédé de préparation des dérivés de phénylalanine de la formule I suivant les revendications 1 à 4, où $R^9$ = hydrogène, **caractérisé en ce que**

(A) on fait réagir une résine de polymère X :

$$\text{Pol-CHO} \qquad (X)$$

avec une amine XI :

$$H^2NR^8 \qquad (XI)$$

en présence d'un réducteur,
(B) on acyle la résine XII aminée, obtenue dans l'étape A,

$$\text{Pol-}CH_2\text{-NHR}^8 \qquad (XII)$$

avec un dérivé de phénylalanine de la formule II suivant la revendication 4,
(C) on sépare le groupe de protection X par addition d'une base, et
(D) on acyle les composés ainsi obtenus XIII :

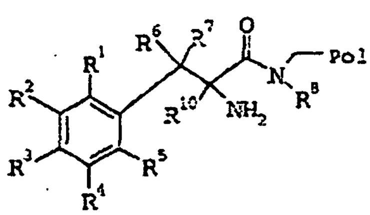

(XIII)

pour former les composés XIV :

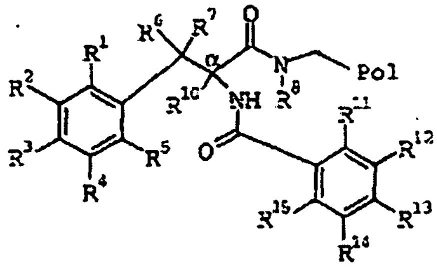

(XIV)

qui par la suite, par addition d'acide, sont séparés du support solide, les composés I étant obtenus.

7. Procédé de préparation des dérivés de phénylalanine de la formule I suivant les revendications 1 à 4, **caractérisé en ce que**

(A) on fait réagir un dérivé de phénylalanine de la formule II suivant la revendication 4, protégé sur la fonction amino par un groupe de protection X, avec une amine IX :

$$HNR^8R^9 \quad (IX)$$

dans un solvant organique dipolaire aprotique inerte pour former les composés XV :

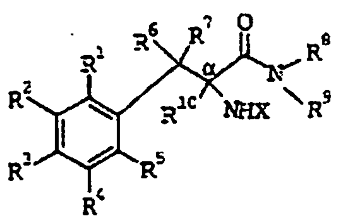

(XV)

(B) on sépare le groupe de protection X, et
(C) on acyle les composés obtenus dans l'étape B en composés I.

8. Procédé de préparation des dérivés de phénylalanine de la formule I, où $R^9$ = hydrogène, suivant les revendications 1 à 4, **caractérisé en ce que**

(A) on fait réagir un dérivé d'ester d'acide aminomalonique XVII :

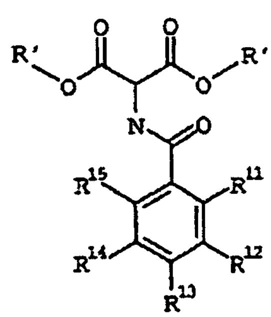

(XVII)

où R' représente un radical organique de faible poids moléculaire,
avec un dérivé benzylique XVIII :

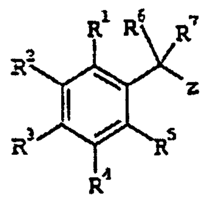

XVIII

pour former les diesters XIX :

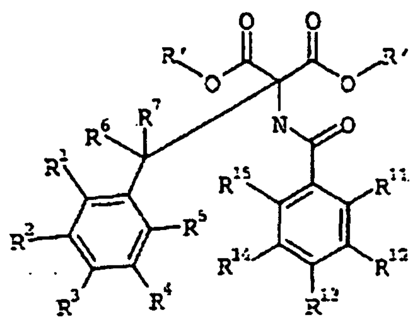

XIX

(B) on décarboxyle et saponifie les diesters XIX et ensuite on les fait réagir avec une amine IX :

$$HNR^8R^9 \quad \text{(IX)}$$

dans un solvant organique dipolaire aprotique inerte, avec mise en oeuvre d'un agent de condensation, pour former les composés I.

**9.** Procédé de préparation des dérivés de phénylalanine de la formule I suivant les revendications 1 à 4, **caractérisé en ce que**

(A) on convertit le dérivé benzylique XVIII par l'intermédiaire d'un agent d'alkylation XXI :

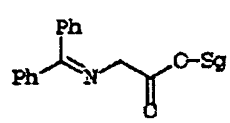

XXI

en composés XXII:

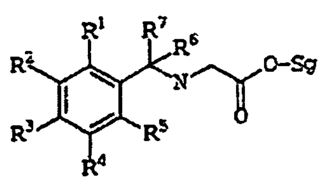

XXII

(B) on acyle les composés ainsi obtenus sur l'azote,
et

(C) on fait réagir les composés acylés sur l'azote, par addition d'un agent de condensation, avec une amine IX :

$$R^8\text{-NH-}R^9 \qquad (IX)$$

pour former les dérivés de phénylalanine I suivant les revendications 1 à 3.

**10.** Produit contenant au moins un dérivé de phénylalanine de la formule I ou un sel utilisable en agriculture d'un dérivé de phénylalanine de la formule I suivant les revendications 1 à 4 et des adjuvants courants.

**11.** Produit approprié pour lutter contre la croissance non souhaitée de plantes, contenant une matière de support solide ou liquide et au moins un dérivé de phénylalanine de la formule I ou un sel utilisable dans l'agriculture d'un dérivé de phénylalanine de la formule I suivant les revendications 1 à 4.

**12.** Utilisation des composés I suivant les revendications 1 à 4, pour la préparation d'un produit approprié pour lutter contre la croissance non souhaitée de plantes.

**13.** Procédé de lutte contre la croissance non souhaitée de plantes, **caractérisé en ce qu'**on fait agir une quantité efficace du point de vue herbicide d'au moins un dérivé de phénylalanine de la formule I ou d'un sel utilisable en agriculture d'un dérivé de phénylalanine de la formule I suivant les revendications 1 à 4, sur des plantes, leur espace de vie et/ou sur des semences.

**14.** Produit de régulation de la croissance de plantes, contenant une quantité efficace du point de vue de la régulation de la croissance d'au moins un dérivé de phénylalanine substitué de la formule I ou d'un sel utilisable dans l'agriculture de formule I, suivant les revendications 1 à 4, et au moins une matière de support liquide et/ou solide inerte ainsi qu'éventuellement au moins une substance tensioactive.

**15.** Procédé de préparation de produits de régulation de la croissance de plantes, **caractérisé en ce qu'**on mélange une quantité efficace du point de vue de la régulation de la croissance d'au moins un dérivé de phénylalanine substitué de la formule I ou d'un sel utilisable en agriculture de formule I, suivant les revendications 1 à 4, avec au moins une matière de support liquide et/ou solide inerte ainsi qu'éventuellement au moins une substance tensioactive.

**16.** Procédé de régulation de la croissance de plantes, **caractérisé en ce qu'**on fait agir sur des plantes une quantité efficace du point de vue de la régulation de la croissance d'au moins un dérivé de phénylalanine substitué de la formule I ou d'un sel utilisable dans l'agriculture de formule I, suivant les revendications 1 à 4.